(19) Europäisches Patentamt
European Patent Office
Office européen des brevets

(11) EP 1 275 662 A1

(12) **EUROPEAN PATENT APPLICATION**
published in accordance with Art. 158(3) EPC

(43) Date of publication:
**15.01.2003 Bulletin 2003/03**

(21) Application number: **01272300.3**

(22) Date of filing: **21.12.2001**

(51) Int Cl.[7]: **C08F 4/02**, C08F 4/60, C08F 10/00

(86) International application number:
**PCT/JP01/11309**

(87) International publication number:
**WO 02/051878 (04.07.2002 Gazette 2002/27)**

(84) Designated Contracting States:
**AT BE CH CY DE DK ES FI FR GB GR IE IT LI LU MC NL PT SE TR**

(30) Priority:
**26.12.2000 JP 2000395776**
**26.12.2000 JP 2000395775**
**27.06.2001 JP 2001194575**
**27.06.2001 JP 2001194576**
**27.09.2001 JP 2001297809**
**27.09.2001 JP 2001297810**
**27.09.2001 JP 2001297812**
**27.09.2001 JP 2001297816**
**27.09.2001 JP 2001297817**
**27.09.2001 JP 2001296466**

(71) Applicant: **Sumitomo Chemical Company, Limited**
**Chuo-ku Osaka 541-8550 (JP)**

(72) Inventors:
- **TAKAOKI, Kazuo**
  **Ichihara-shi, Chiba 299-0125 (JP)**
- **OGANE, Takuya**
  **Sodegaura-shi, Chiba 299-0261 (JP)**
- **OSHIMA, Hideki**
  **Ichihara-shi, Chiba 299-0125 (JP)**
- **FUJIWARA, Yasuki**
  **Ichikawa-shi, Chiba 272-0824 (JP)**
- **YADA, Kenichiro**
  **Sodegaura-shi, Chiba 299-0241 (JP)**
- **TASAKA, Masatada**
  **Ichihara-shi, Chiba 299-0125 (JP)**

(74) Representative: **VOSSIUS & PARTNER**
**Siebertstrasse 4**
**81675 München (DE)**

(54) **MODIFIED PARTICLE, SUPPORT, CATALYST COMPONENT FOR ADDITION POLYMERIZATION, CATALYST FOR ADDITION POLYMERIZATION, AND PROCESS FOR PRODUCING ADDITION POLYMER**

(57) A modified particle obtained by contacting the following (a), the following (b), the following (c) and a particle (d) with one another,

(a): a compound represented by the following general formula [1],

$$M^1L^1{}_m \quad [1],$$

(b): a compound represented by the following general formula [2],

$$R^1{}_{t-1}TH \quad [2],$$

and
(c): a compound represented by the following general formula [3],

$$R^2{}_{t-2}TH_2 \quad [3],$$

in which general formulas [1] to [3], $M^1$ is a typical metal atom of the Group 1, 2, 12, 14 or 15 of the periodic table, m is a valence of $M^1$, $L^1$ is ahydrogen atom, a halogen atom or a hydrocarbon group, when more than one $L^1$ exists, they may be the same or different from one another, $R^1$ is an electron-withdrawing group or an electron-withdrawing group-containing group, when more than one $R^1$ exists, they may be the same or different from one another, $R^2$ is a hydrocarbon group or a halogenated hydrocarbon group, T in each compound is independently of each other a non-metal atom of the Group 15 or 16 of the periodic table, and t is a valence of T in each compound, a carrier comprising said particle, a catalyst component for addition polymerization comprising the same, a catalyst for addition polymerization using said catalyst component, a process for producing an addition polymer using said catalyst.

EP 1 275 662 A1

## Description

Technical Field

The present invention relates to a modified particle useful for a carrier and a catalyst component for addition polymerization, and also relates to a catalyst for addition polymerization obtained using the same and a process for producing an addition polymer. Further, the present invention relates to a typical metal component used for producing the modified particle mentioned above, a process for producing the same, a catalyst component for addition polymerization comprising the same, a catalyst for addition polymerization obtained using the same, and a process for producing an addition polymer.

Background Art

Addition polymers such as polypropylene and polyethylene are superior in their mechanical properties and chemical resistance and additionally superior in balance between their properties and economies, and thereby they are extensively used in various molding fields. As important quality items of a film, which is one of their main applications, there are enumerated appearance such as transparency and mechanical strength. Therefore, from a viewpoint of a quality of the film, it is desired to avoid, for example, occurrence of a fish eye due to a gel, according to which its appearance is remarkably deteriorated and moreover deterioration of strength is caused. On the other hand, at the time of mold-processing to obtain a film, an advanced processability such as low extrusion load and high melting tension is required.

These addition polymers have hitherto been produced by polymerizing an olefin and the like mainly using a conventional solid catalyst (multi-site catalyst) formed from a combination of the 4 Group metal compound such as titanium trichloride and titanium tetrachloride and the 13 Group metal compound typified by an organoaluminum compound.

In recent years, there has been proposed a process for producing an addition polymer comprising the step of polymerizing an olefin and the like using a so-called single site catalyst, which is a combination of a transition metal compound (for example, a metallocene complex and a non-metallocene complex) different from the solid catalyst component so far used, and an aluminoxane and the like. For example, a process comprising the step of using a combination of bis(cyclopentadienyl)zirconium dichloride and methylaluminoxane is reported in JP-A 58-19309. In addition, a combination of such a transition metal compound and a specific boron compound is also reported. For example, a process comprising the step of using bis(cyclopentadienyl)zirconium dimethyl and tri(n-butyl)ammonium tetraxis(pentafluorophenyl)borate is reported in JP-W 1-502036. As known, an addition polymer obtained using such a single site catalyst is generally narrower in its molecular weight distribution than that obtained using the conventional solid catalyst (multi-site catalyst), and in the case of a copolymer, an addition polymer more homogeneous than that obtained using the conventional solid catalyst can be obtained because the comonomers are more homogeneously copolymerized.

While, these known single site catalysts are soluble in a reaction system. Therefore, when these catalysts are applied to polymerization accompanied by the formation of addition polymer particles (for example, slurry polymerization, gas phase polymerization and bulk polymerization), the obtained addition polymer has an amorphous shape, and it is inevitable to result in bulky particles of the addition polymer, mass of the addition polymer or pulverized powders of the addition polymer, or to decrease bulk density of the addition polymer, or it is inevitable that the addition polymer adheres to a wall of a polymerization reactor. Owing to any of these reasons, there has been a problem of poor heat transfer or poor heat removal of the reactor, so that stable operations have been made difficult and productivity has been lowered. JP-A 11-193306 discloses a means to solve such a problem. However, the means disclosed therein is not always sufficient in respect to polymerization activity.

With respect to an $\alpha$-olefin, particularly propylene, there are known production examples of a high stereoregular isotactic propylene polymer using, for example, a metallocene catalyst cross-linked with two of a 1 to 3 substituted $\eta^5$-cyclopentadienyl group (JP No. 2587251, JP No. 2627669 and JP No. 2668732). It is also reported to obtain a syndiotactic propylene polymer using a Cs symmetric metallocene complex, namely a combination of isopropylidene (cyclopentadienyl)(fluorenyl)zirconium dichloride and the like and an aluminum oxy compound (J. Am. Chem. Soc., 1988, 110, 6255). However, it has been difficult to say that a process for producing an $\alpha$-olefin polymer according to the process using these known single site catalyst is sufficiently efficient.

Disclosure of Invention

According to the study of the present inventors, it has been found that one of problems of the addition polymer obtained by using such a single site catalyst is that many fish eyes are apt to appear on a film formed from the addition

polymer.

An object of the present invention is to provide a particle, a carrier and a catalyst component for addition polymerization, which can be used for addition polymerization in combination with a transition metal compound capable of forming a single site catalyst, thereby producing an addition polymer, from which a film having little fish eye and so good appearance can be obtained, a pre-polymerized catalyst component for addition polymerization obtained using said particle, a catalyst for addition polymerization obtained using said particle, and a process for producing an addition polymer using said catalyst for addition polymerization.

Another object of the present invention is to provide a particle, a carrier and a catalyst component for addition polymerization, which are useful for the preparation of a high activity single site catalyst suitably applied for polymerization accompanied by the formation of addition polymer particles (for example, slurry polymerization, gas phase polymerization and bulk polymerization), a high activity catalyst for addition polymerization and a process for producing an addition polymer efficiently.

An additional object of the present invention is to provide a process for producing a stereoregular α-olefin polymer efficiently.

Other objects and advantages of the present invention will be apparent from the following descriptions.

That is, the present invention provides amodified particle obtained by contacting the following (a), the following (b), the following (c) and a particle (d) with one another,

(a): a compound represented by the following general formula [1],

$$M^1L^1_m \qquad [1],$$

(b): a compound represented by the following general formula [2],

$$R^1_{t-1}TH \qquad [2],$$

and

(c): a compound represented by the following general formula [3],

$$R^2_{t-2}TH_2 \qquad [3].$$

(In the above general formulas [1] to [3], $M^1$ is a typical metal atom of the Group 1, 2, 12, 14 or 15 of the periodic table, m is a valence of $M^1$, $L^1$ is a hydrogen atom, a halogen atom or a hydrocarbon group, when more than one $L^1$ exists, they may be the same or different from one another, $R^1$ is an electron-withdrawing group or an electron-withdrawing group-containing group, when more than one $R^1$ exists, they may be the same or different from one another, $R^2$ is a hydrocarbon group or a halogenated hydrocarbon group, T in each compound is independently of each other a non-metal atom of the Group 15 or 16 of the periodic table, and t is a valence of T in each compound.)

The present invention also provides a carrier comprising said particle and a catalyst component for addition polymerization, which comprises said particle.

Further, the present invention provides a catalyst for addition polymerization, which is obtained by contacting the modified particle (A) and a compound (B) of a transition metal of the Groups 3 to 11 or a lanthanoide series with each other, and also provides a catalyst for addition polymerization, which is obtained by contacting the modified particle (A), a compound (B) of a transition metal of the Groups 3 to 11 or a lanthanoide series and an organoaluminum compound (C) with one another.

Still further, the present invention provides a pre-polymerized catalyst component for addition polymerization, which is obtained by pre-polymerizing an olefin in the presence of the catalyst obtained by contacting the modified particle (A) and a compound (B) of a transition metal of the Groups 3 to 11 or a lanthanoide series and optionally an organoaluminum compound (C) with one another, and also provides a catalyst for addition polymerization, which is obtained by contacting said pre-polymerized catalyst component for addition polymerization and the organoaluminum compound (C) with each other.

Additionally, the present invention provides a process for producing a stereoregular α-olefin polymer, which comprises the step of polymerizing an α-olefin in the presence of a catalyst obtained in advance by contacting the above-mentioned modified particle (A), a transition metal compound having a stereoregular polymerization ability of

an α-olefin, which transition metal compound is selected from the above-mentioned transition metal compounds (B), and the organoaluminum compound (C) with one another.
The present invention is explained in more detail as follows.

Best Mode for Carrying out the Invention

Compound (a)

The compound (a) is a compound represented by the following general formula [1].

$$M^1L^1{}_m \qquad [1]$$

The symbol $M^1$ is a typical metal atom of the Group 1, 2, 12, 14 or 15 of the periodic table of the elements (Revised edition of IUPAC Inorganic Chemistry Nomenclature 1989). Specific examples thereof include a lithium atom, a sodium atom, a potassium atom, a rubidium atom, a cesium atom, a beryllium atom, a magnesium atom, a calcium atom, a strontium atom, a barium atom, a zinc atom, a cadmium atom, a mercury atom, a germanium atom, a tin atom, a lead atom, an antimony atom and a bismuth atom. As $M^1$, an atom of the Group 12 is particularly preferred, and a zinc atom is the most preferred.
The symbol m is a valence of $M^1$, and for example, when $M^1$ is'a zinc atom, m is 2.
The symbol $L^1$ is a hydrogen atom, a halogen atom or a hydrocarbon group, and when more than one $L^1$ exists, they may be the same or different from one another. Specific examples of the halogen atom as $L^1$ are a fluorine atom, a chlorine atom, a bromine atom, and an iodine atom. As a hydrocarbon group as $L^1$, an alkyl group, an aryl group or an aralkyl group is preferred.
As the alkyl group stated here, an alkyl group having 1 to 20 carbon atoms is preferred. Examples thereof are a methyl group, an ethyl group, a n-propyl group, an isopropyl group, an-butyl group, a sec-butyl group, a tert-butyl group, an isobutyl group, a n-pentyl group, a neopentyl group, a n-hexyl group, a n-octyl group, a n-decyl group, a n-dodecyl group, a n-pentadecyl group and a n-eicosyl group. More preferred is a methyl group, an ethyl group, an isopropyl group, a tert-butyl group or an isobutyl group. These alkyl groups may be substitutedwith a halogen atom such as a fluorine atom, a chlorine atom, a bromine atom, or an iodine atom. Examples of the alkyl group having 1 to 20 carbon atoms substituted with the halogen atom are a fluoromethyl group, a difluoromethyl group, a trifluoromethyl group, a chloromethyl group, a dichloromethyl group, a trichloromethyl group, a bromomethyl group, a dibromomethyl group, a tribromomethyl group, an iodomethyl group, a diiodomethyl group, a triiodomethyl group, a fluoroethyl group, a difluoroethyl group, a trifluoroethyl group, a tetrafluoroethyl group, a pentafluoroethyl group, a chloroethyl group, a dichloroethyl group, a trichloroethyl group, a tetrachloroethyl group, a pentachloroethyl group, a bromoethyl group, a dibromoethyl group, a tribromoethyl group, a tetrabromoethyl group, a pentabromoethyl group, a perfluoropropyl group, a perfluorobutyl group, a perfluoropentyl group, a perfluorohexyl group, a perfluorooctyl group, a perfluorododecyl group, a perfluoropentadecyl group, a perfluoroeicosyl group, a perchloropropyl group, a perchlorobutyl group, a perchloropentyl group, perchlorohexyl group, a perchlorooctyl group, a perchlorododecyl group, a perchloropentadecyl group, a perchloroeicosyl group, a perbromopropyl group, a perbromobutyl group, a perbromopentyl group, a perbromohexyl group, a perbromooctyl group, a perbromododecyl group, a perbromopentadecyl group and a perbromoeicosyl group.
Further, these alkyl groups may be partially substituted with an alkoxy group such as a methoxy group or an ethoxy group, an aryloxy group such as a phenoxy group, or an aralkyloxy group such as a benzyloxy group.
As the aryl group, an aryl group having 6 to 20 carbon atoms is preferred. Examples thereof are a phenyl group, a 2-tolyl group, a 3-tolyl group, a 4-tolyl group, a 2,3-xylyl group, a 2,4-xylyl group, a 2,5-xylyl group, a 2,6-xylyl group, a 3,4-xylyl group, a 3,5-xylyl group, a 2,3,4-trimethylphenyl group, a 2,3,5-trimethylphenyl group, a 2,3,6-trimethylphenyl group, a 2,4,6-trimethylphenyl group, a 3,4,5-trimethylphenyl group, a 2,3,4,5-tetramethylphenyl group, a 2,3,4,6-tetramethylphenyl group, a 2,3,5,6-tetramethylphenyl group, a pentamethylphenyl group, an ethylphenyl group, a n-propylphenyl group, an isopropylphenyl group, an-butylphenyl group, a sec-butylphenyl group, a tert-butylphenyl group, an isobutylphenyl group, an-pentylphenyl group, a neopentylphenyl group, a n-hexylphenyl group, a n-octylphenyl group, a n-decylphenyl group, a n-dodecylphenyl group, a n-tetradecylphenyl group, a naphthyl group and an anthracenyl group, and more preferred is a phenyl group.
These aryl groups may be partially substituted with a halogen atom such as a fluorine atom, a chlorine atom, a bromine atom or an iodine atom, an alkoxy group such as a methoxy group or an ethoxy group, an aryloxy group such as a phenoxy group, or an aralkyloxy group such as a benzyloxy group.
As the aralkyl group, an aralkyl group having 7 to 20 carbon atoms is preferred. Examples thereof are a benzyl

group, a (2-methylphenyl)methyl group, a (3-methylphenyl)methyl group, a (4-methylphenyl)methyl group, a (2,3-dimethylphenyl)methyl group, a (2,4-dimethylphenyl)methyl group, a (2,5-dimethylphenyl)methyl group, a (2,6-dimethylphenyl)methyl group, a (3,4-dimethylphenyl)methyl group, a (3,5-dimethylphenyl)methyl group, a (2,3,4-timethylphenyl)methyl group, a (2,3,5-timethylphenyl)methyl group, a (2,3,6-timethylphenyl)methyl group, a (3,4,5-timethylphenyl)methyl group, a (2,4,6-timethylphenyl)methyl group, a (2,3,4,5-tetramethylphenyl)methyl group, a (2,3,4,6-tetramethylphenyl)methyl group, a (2,3,5,6-tetramethylphenyl)methyl group, a (pentamethylphenyl)methyl group, an (ethylphenyl)methyl group, a (n-propylphenyl)methyl group, an (isopropylphenyl)methyl group, a (n-butylphenyl)methyl group, a (sec-butylphenyl)methyl group, a (tert-butylphenyl)methyl group, an (isobutylphenyl)methyl group, a (n-pentylphenyl)methyl group, a (neopentylphenyl)methyl group, a (n-hexylphenyl)methyl group, a (n-octylphenyl)methyl group, a (n-decylphenyl)methyl group, a naphthylmethyl group and an anthracenylmethyl group, and more preferred is a benzyl.

These aralkyl groups may be partially substituted with a halogen atom such as a fluorine atom, a chlorine atom, a bromine atom or an iodine atom, an alkoxy group such as a methoxy group or an ethoxy group, an aryloxy group such as a phenoxy group, or an aralkyloxy group such as a benzyloxy group.

As $L^1$, preferred is a hydrogen atom, an alkyl group or an aryl group, more preferred is a hydrogen atom or an alkyl group, and particularly preferable is an alkyl group.

Compounds (b) and (c)

The compound (b) is a compound represented by the general formula [2],

$$R^1_{t-1}TH \qquad [2],$$

and the compound (c) is a compound represented by the following general formula [3],

$$R^2_{t-2}TH_2 \qquad [3].$$

Each T in the general formula [2] or [3] is independently of each other a non-metal atom of Group 15 or Group 16 of the periodic table of elements (Revised edition of IUPAC Inorganic Chemistry Nomenclature 1989). Each T in the general formula [2] or in the general formula [3] may be the same or different from each other. Specific examples of the non-metal atom of the Group 15 are a nitrogen atom and a phosphorous atom, and specific examples of the non-metal atom of the Group 16 are an oxygen atom and a sulfur atom. As T, preferred is a nitrogen atom or an oxygen atom, and more preferred is an oxygen atom.

Each t in the above-mentioned general formula [2] or [3] is a valence of T. For example, when T is an atom of the Group 15, t is 3, and when T is an atom of the Group 16, t is 2.

The symbol $R^1$ in the above-mentioned general formula [2] is an electron-withdrawing group or an electron-withdrawing group-containing group, and when more than one $R^1$ exists, they may be the same or different from one another. As an index of the electron-withdrawing property, there is known a substituent constant $\sigma$ of the Hammet's rule. As the electron-withdrawing group, there is a functional group whose substituent constant $\sigma$ of the Hammet's rule is positive.

Specific examples of the electron-withdrawing group are a fluorine atom, a chlorine atom, a bromine atom, an iodine atom, a cyano group, a nitro group, a carbonyl group, a sulfone group and a phenyl group. Examples of the electron-withdrawing group-containing group are a halogenated alkyl group, a halogenated aryl group, a (halogenated alkyl)aryl group, a cyanated aryl group, a nitrated aryl group, an ester group and an acyl group.

Specific examples of the halogenated alkyl group are a fluoromethyl group, a chloromethyl group, a bromomethyl group, an iodomethyl group, a difluoromethyl group, a dichloromethyl group, a dibromomethyl group, a diiodomethyl group, a trifluoromethyl group, a trichloromethyl group, a tribromomethyl group, a triiodomethyl group, a 2,2,2-trifluoroethyl group, a 2,2,2-trichloroethyl group, a 2,2,2-tribromoethyl group, a 2,2,2-triiodoethyl group, a 2,2,3,3,3-pentafluoropropyl group, a 2,2,3,3,3-pentachloropropyl group, a 2,2,3,3,3-pentabromopropyl group, a 2,2,3,3,3-pentaiodopropyl group, a 2,2,2-trifluoro-1-trifluoromethylethyl group, a 2,2,2-trichloro-1-trichloromethylethyl group, a 2,2,2-tribromo-1-tribromomethylethyl group, a 2,2,2-triiodo-1-triiodomethylethyl group, a 1,1-bis(trifluoromethyl)-2,2,2-trifluoroethyl group, a 1,1-bis(trichloromethyl)-2,2,2-trichloroethyl group, a 1,1-bis(tribromomethyl)-2,2,2-tribromoethyl group and a 1,1-bis(triiodomethyl)-2,2,2-triiodoethyl group.

Specific examples of the halogenated aryl group are a 2-fluorophenyl group, a 3-fluorophenyl group, a 4-fluorophenyl group, a 2,4-difluorophenyl group, a 2,6-difluorophenyl group, a 3,4-difluorophenyl group, a 3,5-difluorophenyl

group, a 2,4,6-trifluorophenyl group, a2,3,5,6-tetrafluorophenyl group, a pentafluorophenyl group, a 2,3,5,6-tetrafluoro-4-trifluoromethylphenyl group, a 2,3,5,6-tetrafluoro-4-pentafluorophenylphenyl group, a perfluoro-1-naphthyl group, a perfluoro-2-naphthyl group, a 2-chlorophenyl group, a 3-chlorophenyl group, a 4-chlorophenyl group, a 2,4-dichlorophenyl group, a 2,6-dichlorophenyl group, a 3,4-dichlorophenyl group, a 3,5-dichlorophenyl group, a 2,4,6-trichlorophenyl group, a 2,3,5,6-tetrachlorophenyl group, a pentachlorophenyl group, a 2,3,5,6-tetrachloro-4-trichloromethylphenyl group, a 2,3,5,6-tetrachloro-4-pentachlorophenylphenyl group, a perchloro-1-naphthyl group, a perchloro-2-naphthyl group, a 2-bromophenyl group, a 3-bromophenyl group, a 4-bromophenyl group, a 2,4-dibromophenyl group, a 2,6-dibromophenyl group, a 3,4-dibromophenyl group, a 3,5-dibromophenyl group, a 2,4,6-tribromophenyl group, a 2,3,5,6-tetrabromophenyl group, a pentabromophenyl group, a 2,3,5,6-tetrabromo-4-tribromomethylphenyl group, a 2,3,5,6-tetrabromo-4-pentabromophenylphenyl group, a perbromo-1-naphthyl group, a perbromo-2-naphthyl group, a 2-iodophenyl group, a 3-iodophenyl group, a 4-iodophenyl group, a 2,4-diiodophenyl group, a 2,6-diiodophenyl group, a 3,4-diiodophenyl group, a 3,5-diiodophenyl group, a 2,4,6-triiodophenyl group, a 2,3,5,6-tetraiodophenyl group, a pentaiodophenyl group, a 2,3,5,6-tetraiodo-4-triiodomethylphenyl group, a 2,3,5,6-tetraiodo-4-pentaiodophenylphenyl group, a periodo-1-naphthyl group and a periodo-2-naphthyl group.

Specific examples of the (halogenated alkyl)aryl group are a 2-(trifluoromethyl)phenyl group, a 3-(trifluoromethyl)phenyl group, a 4-(trifluoromethyl)phenyl group, a 2,6-bis(trifluoromethyl)phenyl group, a 3,5-bis(trifluoromethyl) phenyl group, a 2,4,6-tris(trifluoromethyl)phenyl group and a 3,4,5-tris(trifluoromethyl)phenyl group.

Specific examples of the cyanated aryl group are a 2-cyanophenyl group, a 3-cyanophenyl group and a 4-cyanophenyl group.

Specific examples of the nitrated aryl group are a 2-nitrophenyl group, a 3-nitrophenyl group and a 4-nitrophenyl group.

Specific examples of the ester group are a methoxycarbonyl group, an ethoxycarbonyl group, a n-propoxycarbonyl group, an isopropoxycarbonyl group, a phenoxycarbonyl group, a trifluoromethoxycarbonyl group and a pentafluorophenoxycarbonyl group.

Specific examples of the acyl group are a formyl group, an ethanoyl group, a propanoyl group, a butanoyl group, a trifluoroethanoyl group, a benzoyl group and a pentafluorobenzoyl group.

As $R^1$, preferred is a halogenated hydrocarbon group, and more preferred is a halogenated alkyl group or a halogenated aryl group. Much more preferred is a fluoromethyl group, a difluoromethyl group, a trifluoromethyl group, a 2,2,2-trifluoroethyl group, a 2,2,3,3,3-pentafluoropropyl group, a 2,2,2-trifluoro-1-trifluoromethylethyl group, a 1,1-bis (trifluoromethyl)-2,2,2-trifluoroethyl group, a 2-fluorophenyl group, a 3-fluorophenyl group, a 4-fluorophenyl group, a 2,4-difluorophenyl group, a 2,6-difluorophenyl group, a 3,4-difluorophenyl group, a 3,5-difluorophenyl group, a 2,4,6-trifluorophenyl group, a 2,3,5,6-tetrafluorophenyl group, a pentafluorophenyl group, a 2,3,5,6-tetrafluoro-4-trifluoromethylphenyl group, a 2,3,5,6-tetrafluoro-4-pentafluorophenylphenyl group, a perfluoro-1-naphtyl group, a perfluoro-2-naphtyl group, a chloromethyl group, a dichloromethyl group, a trichloromethyl group, a 2,2,2-trichloroethyl group, a 2,2,3,3,3-pentachloropropyl group, a 2,2,2-trichloro-1-trichloromethylethyl group, a 1,1-bis(trichloromethyl)-2,2,2-trichloroethyl group, a 4-chlorophenyl group, a 2,6-dichlorophenyl group, a 3,5-dichlorophenyl group, a 2,4,6-trichlorophenyl group or a pentachlorophenyl group. Particularly preferred is a fluoroalkyl group or a fluoroaryl group, and the most preferred is a trifluoromethyl group, a 2,2,2-trifluoro-1-trifluoromethylethyl group, a 1,1-bis(trifluoromethyl)-2,2,2-trifluoroethyl group, a 3,5-difluorophenyl group, or a pentafluorophenyl group.

Further, when $R^1$ is an aryl group having an electron-drawing group, as such an aryl group, a group represented by the following general formula [4] is preferred from a viewpoint of increase of activity rather than the viewpoint of the fish eye.

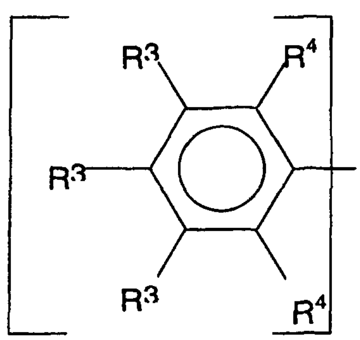

[4]

The symbol $R^3$ is preferably a halogen atom, a halogenated alkyl group, a halogenated aryl group, a cyano group, a cyanated alkyl group, a cyanated ary group, a nitro group, a nitrated alkyl group, a nitrated aryl group or an

ester group. More preferred is a halogen atom, a halogenated alkyl group or a halogenated aryl group. Much more preferred is a fluorine atom, a fluoromethyl group, a difluoromethyl group, a trifluoromethyl group, a 2,2,2-trifluoroethyl group, a 2,2,3,3,3-pentafluoropropyl group, a 2,2,2-trifluoro-1-trifluoromethylethyl group, a 1,1-bis(trifluoromethyl)-2,2,2-trifluoroethyl group, a 2-fluorophenyl group, a 3-fluorophenyl group, a 4-fluorophenyl group, a 2,4-difluorophenyl group, a 2,6-difluorophenyl group, a 3,4-difluorophenyl group, a 3,5-difluorophenyl group, a 2,4,6-trifluorophenyl group, a 2,4,6-trifluorophenyl group, a 2,3,5,6-tetrafluorophenyl group, a pentafluorophenyl group, a 2,3,5,6-tetrafluoro-4-trifluoromethylphenyl group, a 2,3,5,6-tetrafluoro-4-pentafluorophenylphenyl group, a perfluoro-1-naphthyl group, a perfluoro-2-naphthyl group, a chloromethyl group, a dichloromethyl group, a trichloromethyl group, a 2,2,2-trichloroethyl group, a 2,2,3,3,3-pentachloropropyl group, a 2,2,2-trichloro-1-trichloromethylethyl group, a 1,1-bis(trichloromethyl)-2,2,2-trichloroethyl group, a 4-chlorophenyl group, a 2,6-dichlorophenyl group, a 3,5-dichlorophenyl group, a 2,4,6-trichlorophenyl group or a pentachlorophenyl group. Particularly preferred is a fluorine atom, a fluoroalkyl group or a fluoroaryl group, and the most preferred is a fluorine atom.

The symbol $R^4$ is a hydrogen atom or a hydrocarbon group. The hydrocarbon group as $R^4$ is preferably an alkyl group, an aryl group or an aralkyl group, and examples thereof are a hydrogen atom and those similar to the hydrocarbon groups explained as $L^1$ in the above-mentioned general formula [1]. Preferred as $R^4$ is a hydrogen atom, an alkyl group or an aryl group, more preferred is a hydrogen atom or an alkyl group, and particularly preferred is a hydrogen atom.

In the above general formula [3], $R^2$ is a hydrocarbon group or a halogenated hydrocarbon group. The hydrocarbon group in $R^2$ is preferably an alkyl group, an aryl group or an aralkyl group, and the same hydrocarbon group as explained in the general formula [1] as $L^1$ is used. As the halogenated hydrocarbon group as $R^2$, a halogenated alkyl group, a halogenated aryl group and a (halogenated alkyl)aryl group are enumerated, and those enumerated as specific examples of the electron-withdrawing group as $R^1$ in the general formula [2] are used as the halogenated alkyl group, the halogenated aryl group and the (halogenated alkyl)aryl group.

In the above general formula [3], $R^2$ is preferably a halogenatedhydrocarbon group, and more preferably a fluorinated hydrocarbon group.

Specific examples of the compound (a) having a zinc atom as $M^1$ are dialkylzincs such as dimethylzinc, diethylzinc, dipropylzinc, di-n-butylzinc, di-isobutylzinc and di-n-hexylzinc; diarylzincs such as diphenylzinc, dinaphthylzinc and bis (pentafluorophenyl) zinc; dialkenylzincs such as diallylzinc; bis(cyclopentadienyl)zinc; alkylzinc halides such as methylzinc chloride, ethylzinc chloride, propylzinc chloride, n-butylzinc chloride, isobutylzinc chloride, n-hexylzinc chloride, methylzinc bromide, ethylzinc bromide, propylzinc bromide, n-butylzinc bromide, isobutylzinc bromide, n-hexylzinc bromide, methylzinc iodide, ethylzinc iodide, propylzinc iodide, n-butylzinc iodide, isobutylzinc iodide and n-hexylzinc iodide; and zinc halides such as zinc fluoride, zinc chloride, zinc bromide and zinc iodide.

Dialkylzincs are preferred as the compound (a). More preferred is dimethylzinc, diethylzinc, dipropylzinc, di-n-butylzinc, di-isobutylzinc or di-n-hexylzinc, and particularly preferred is dimethylzinc or diethylzinc.

Specific examples of the compound (b) other than that having a group represented by the general formula [4] as $R^1$ are amines such as di(fluoromethyl)amine, di(chloromethyl)amine, di(bromomethyl)amine, di(iodomethyl) amine, bis(difluoromethyl)amine, bis(dichloromethyl)amine, bis(dibromomethyl)amine, bis(diiodomethyl)amine, bis(trifluoromethyl)amine, bis(trichloromethyl)amine, bis(tribromomethyl)amine, bis(triiodomethyl)amine, bis (2,2,2-trifluoroethyl) amine,bis(2,2,2-trichloroethyl)amine, bis(2,2,2-tribromoethyl)amine, bis(2,2,2-triiodoethyl)amine, bis (2,2,3,3,3-pentafluoropropyl)amine, bis(2,2,3,3,3-pentachloropropyl)amine, bis(2,2,3,3,3-pentabromopropyl)amine, bis(2,2,3,3,3-pentaiodopropyl)amine, bis(2,2,2-trifluoro-1-trifluoromethylethyl)amine, bis(2,2,2-trichloro-1-trichloromethylethyl)amine, bis(2,2,2-tribromo-1-tribromomethylethyl)amine, bis(2,2,2-triiodo-1-triiodomethylethyl)amine, bis(1,1-bis(trifluoromethyl)-2,2,2-trifluoroethyl)amine, bis(1,1-bis(trichloromethyl)-2,2,2-trichloroethyl)amine, bis (1,1-bis(tribromomethyl)-2,2,2-tribromoethyl)amine, bis(1,1-bis(triiodomethyl)-2,2,2-triiodoethyl)amine, bis(2-fluorophenyl)amine, bis(3-fluorophenyl)amine, bis(4-fluorophenyl)amine, bis(2-chlorophenyl)amine, bis(3-chlorophenyl) amine, bis(4-chlorophenyl)amine, bis(2-bromophenyl)amine, bis(3-bromophenyl)amine, bis(4-bromophenyl)amine, bis(2-iodophenyl)amine, bis(3-iodophenyl)amine, bis(4-iodophenyl)amine, bis(2,6-difluorophenyl)amine, bis(3,5-difluorophenyl)amine, bis(2,6-dichlorophenyl)amine, bis(3,5-dichlorophenyl)amine, bis(2,6-dibromophenyl)amine, bis (3,5-dibromophenyl)amine, bis(2,6-diiodophenyl)amine, bis(3,5-diiodophenyl)amine, bis(2,4,6-trifluorophenyl)amine, bis(2,4,6-trichlorophenyl)amine, bis(2,4,6-tribromophenyl)amine, bis(2,4,6-triiodophenyl)amine, bis(pentafluorophenyl)amine, bis(pentachlorophenyl)amine, bis(pentabromophenyl)amine, bis(pentaiodophenyl)amine, bis(2-(trifluoromethyl)phenyl)amine, bis(3-(trifluoromethyl)phenyl)amine, bis(4-(trifluoromethyl)phenyl)amine, bis(2,6-di(trifluoromethyl)phenyl)amine, bis(3,5-di(trifluoromethyl)phenyl)amine, bis(2,4,6-tri(trifluoromethyl)phenyl)amine, bis(2-cyanophenyl)amine, (3-cyanophenyl)amine, bis(4-cyanophenyl)amine, bis(2-nitrophenyl)amine, bis(3-nitrophenyl)amine and bis(4-nitrophenyl)amine. In addition, phosphine compounds having a phosphorus atom in place of the nitrogen atom are also exemplified. Such phosphine compounds are those expressed by rewriting the term amine in the above-mentioned specific examples with the term phosphine.

Further specific examples of compound (b) are alcohols such as fluoromethanol, chloromethanol, bromomethanol, iodomethanol, difluoromethanol, dichloromethanol, dibromomethanol, diiodomethanol, trifluoromethanol, trichloromethanol, tribromomethanol, triiodomethanol, 2,2,2-trifluoroethanol, 2,2,2-trichloroethanol, 2,2,2-tribromoethanol, 2,2,2-triiodoethanol, 2,2,3,3,3-pentafluoropropanol, 2,2,3,3,3-pentachloropropanol, 2,2,3,3,3-pentabromopropanol, 2,2,3,3,3-pentaiodopropanol, 2,2,2-trifluoro-1-trifluoromethylethanol, 2,2,2-trichloro-1-trichloromethylethanol, 2,2,2-tribromo-1-tribromomethylethanol, 2,2,2-triiodo-1-triiodomethylethanol, 1,1-bis(trifluoromethyl)-2,2,2-trifluoroethanol, 1,1-bis(trichloromethyl)-2,2,2-trichloroethanol, 1,1-bis(tribromomethyl)-2,2,2-tribromoethanol and 1,1-bis(triiodomethyl)-2,2,2-triiodoethanol. In addition, thiol compounds having a sulfur atom in place of the oxygen atom are also exemplified. Such thiol compounds are those expressed by rewriting the terms methanol, ethanol and propanol in the above-mentioned specific examples with the terms methanethiol, ethanethiol and propanethiol, respectively.

Still further specific examples of the compound (b) are phenols such as 2-fluorophenol, 3-fluorophenol, 4-fluorophenol, 2,4-difluorophenol, 2,6-difluorophenol, 3,4-difluorophenol, 3,5-difluorophenol, 2,4,6-trifluorophenol, 2,3,5,6-tetrafluorophenol, pentafluorophenol, 2,3,5,6-tetrafluoro-4-trifluoromethylphenol, 2,3,5,6-tetrafluoro-4-pentafluorophenol, perfluoro-1-naphthol, perfluoro-2-naphthol, 2-chlorophenol, 3-chlorophenol, 4-chlorophenol, 2,4-dichlorophenol, 2,6-dichlorophenol, 3,4-dichlorophenol, 3,5-dichlorophenol, 2,4,6-trichlorophenol, 2,3,5,6-tetrachlorophenol, pentachlorophenol, 2,3,5,6-tetrachloro-4-trichloromethylphenol, 2,3,5,6-tetrachloro-4-pentachlorophenol, perchloro-1-naphthol, perchloro-2-naphthol, 2-bromophenol, 3-bromophenol, 4-bromophenol, 2,4-dibromophenol, 2,6-dibromophenol, 3,4-dibromophenol, 3,5-dibromophenol, 2,4,6-tribromophenol, 2,3,5,6-tetrabromophenol, pentabromophenol, 2,3,5,6-tetrabromo-4-tribromomethylphenol, 2,3,5,6-tetrabromo-4-pentabromophenol, perbromo-1-naphthol, perbromo-2-naphthol, 2-iodophenol, 3-iodophenol, 4-iodophenol, 2,4-diiodophenol, 2,6-diiodophenol, 3,4-diiodophenol, 3,5-diiodophenol, 2,4,6-triiodophenol, 2,3,5,6-tetraiodophenol, pentaiodophenol, 2,3,5,6-tetraiodo-4-triiodomethylphenol, 2,3,5,6-tetraiodo-4-pentaiodophenol, periodo-1-naphthol, periodo-2-naphthol, 2-(trifluoromethyl)phenol, 3-(trifluoromethyl)phenol, 4-(trifluoromethyl)phenol, 2,6-bis(trifluoromethyl)phenol, 3,5-bis(trifluoromethyl) phenol, 2,4,6-tris(trifluoromethyl)phenol, 2-cyanophenol, 3-cyanophenol, 4-cyanophenol, 2-nitrophenol, 3-nitrophenol and 4-nitrophenol. In addition, thiophenol compounds having a sulfur atom in place of the oxygen atom are also exemplified. Such thiophenol compounds are those expressed by rewriting the term phenol in the above-mentioned specific examples with the term thiophenol.

As the compound (b), preferred are amines such as bis(trifluoromethyl)amine, bis(2,2,2-trifluoromethyl)amine, bis(2,2,3,3,3-pentafluoropropyl)amine, bis(2,2,2-trifluoro-1-trifluoromethylethyl)amine, bis(1,1-bis(trifluoromethyl)-2,2,2-trifluoroethyl)amine or bis(pentafluorophenyl)amine, alcohols such as trifluoromethanol, 2,2,2-trifluoroethanol, 2,2,3,3,3-pentafluoropropanol, 2,2,2-trifluoro-1-trifluoromethylethanol or 1,1-bis(trifluoromethyl)-2,2,2-trifluoroethanol, and phenols such as 2-fluorophenol, 3-fluorophenol, 4-fluorophenol, 2,6-difluorophenol, 3,5-difluorophenol, 2,4,6-trifluorophenol, pentafluorophenol, 2-(trifluoromethyl)phenol, 3-(trifluoromethyl)phenol, 4-(trifluoromethyl)phenol, 2,6-bis(trifluoromethyl)phenol, 3,5-bis(trifluoromethyl)phenol or 2,4,6-tris(trifluoromethyl)phenol.

More preferred as the compound (b) are bis(trifluoromethyl)amine, bis(pentafluorophenyl) amine, trifluoromethanol, 2,2,2-trifluoro-1-trifluoromethylethanol, 1,1-bis(trifluoromethyl)-2,2,2-trifluoroethanol, 2-fluorophenol, 3-fluorophenol, 4-fluorophenol, 2,6-difluorophenol, 3,5-difluorophenol, 2,4,6-trifluorophenol, pentafluorophenol, 4-(trifluoromethyl)phenol, 2,6-bis(trifluoromethyl)phenol and 2,4,6-tris(trifluoromethyl)phenol. Much more preferred are 3,5-difluorophenol, pentafluorophenol and 1,1-bis(trifluoromethyl)-2,2,2-trifluoroethanol.

Specific examples of the compound (b) having a group represented by the above general formula [4] as $R^1$ are phenols such as 3,4,5-trifluorophenol, 3,4,5-tris(trifluoromethyl)phenol, 3,4,5-tris(pentafluorophenyl)phenol, 3,5-difluoro-4-pentafluorophenylphenol, 4,5,6,7,8-pentafluoro-2-naphthol, 3,4,5-trichlorophenol, 3,4,5-tris(trichloromethyl) phenol, 3,4,5-tris(pentachlorophenyl)phenol, 3,5-dichloro-4-pentachlorophenylphenol, 4,5,6,7,8-pentachloro-2-naphthol, 3,4,5-tribromophenol, 3,4,5-tris(tribromomethyl)phenol, 3,4,5-tris(pentabromophenyl)phenol, 3,5-dibromo-4-pentabromophenylphenol, 4,5,6,7,8-pentabromo-2-naphthol, 3,4,5-triiodophenol, 3,4,5-tris(triiodomethyl)phenol, 3,4,5-tris(pentaiodophenyl)phenol, 3,5-diiodo-4-pentaiodophenylphenol, 4,5,6,7,8-pentaiodo-2-naphthol, 3,5-difluoro-4-nitrophenol, 3,5-dichloro-4-nitrophenol, 3,5-dibromo-4-nitrophenol, 3,5-diiodo-4-nitrophenol, 3,5-difluoro-4-cyanophenol, 3,5-dichloro-4-cyanophenol, 3,5-dibromo-4-cyanophenol and 3,5-diiodo-4-cyanoophenol. In addition, thiophenol compounds having a sulfur atom in place of the oxygen atom are also exemplified. Such thiophenol compounds are those expressed by rewriting the term phenol in the above-mentioned specific examples with the term thiophenol. Furthermore, there are also exemplified phenol compounds or thiophenol compounds, whose hydrogen atoms at their 2- and 6-positions (in the case of naphthol, hydrogen atoms at 1- and 3-positions) are substituted with a methyl group, an ethyl group, a n-propyl group, an isopropyl group, a n-butyl group, an isobutyl group or a tert-butyl group.

As amines, there are enumerated bis(3,4,5-trifluorophenyl)amine, bis(3,4,5-tris(trifluoromethyl)phenyl)amine, bis(3,4,5-tris(pentafluorophenyl)phenyl)amine, bis(3,5-difluoro-4-pentafluorophenylphenyl)amine, bis(4,5,6,7,8-pentafluoro-2-naphthyl)amine, bis(3,4,5-trichlorophenyl)amine, bis(3,4,5-tris(trichloromethyl)phenyl)amine, bis(3,4,5-tris(pentachlorophenyl)phenyl)amine, bis(3,5-dichloro-4-pentachlorophenylphenyl)amine, bis(4,5,6,7,8-pentachloro-2-naphthyl)amine, bis(3,4,5-tribromophenyl)amine, bis(3,4,5-tris(tribromomethyl)phenyl)amine, bis(3,4,5-tris(pentabromophenyl)phenyl)amine, bis(3,5-dibromo-4-pentabromophenylphenyl)amine, bis(4,5,6,7,8-pentabromo-2-naphthyl)amine, bis(3,4,5-triiodophenyl)amine, bis(3,4,5-tris(triiodomethyl)phenyl)amine, bis(3,4,5-tris(pentaiodophenyl)phenyl)amine, bis(3,5-diiodo-4-pentaiodophenylphenyl)amine and bis(4,5,6,7,8-pentaiodo-2-naphthyl)amine. In addition, phosphine compounds having a phosphorus atom in place of the nitrogen atom are also exemplified. Such phosphine compounds are those expressed by rewriting the term amine in the above-mentioned specific examples with the term phosphine. Furthermore, there are also exemplified amine compounds or phosphine compounds, whose hydrogen atoms at their 2- and 6-positions (in the case of naphthol, hydrogen atoms at 1- and 3-positions) are substituted with a methyl group, an ethyl group, a n-propyl group, an isopropyl group, a n-butyl group, an isobutyl group or a tert-butyl group.

Preferred as the compound (b) are phenols such as 3,4,5-trifluorophenol, 3,4,5-tris(trifluoromethyl)phenol, 3,4,5-tris(pentafluorophenyl)phenol, 3,5-difluoro-4-pentafluorophenylphenol and 4,5,6,7,8-pentafluoro-2-naphthol,and amines such as bis(3,4,5-trifluorophenyl)amine, bis(3,4,5-tris(trifluoromethyl)phenyl)amine, bis(3,4,5-tris(pentafluorophenyl)phenyl)amine, bis(3,5-difluoro-4-pentafluorophenylphenyl)amine and bis(4,5,6,7,8-pentafluoro-2-naphthyl)amine.

More preferred as the compound (b) are 3,4,5-trifluorophenol, 4,5,6,7,8-pentafluoro-2-naphthol, bis(3,4,5-trifluorophenyl)amine and bis(4,5,6,7,8-pentafluoro-2-naphthyl)amine. Particularly preferred is 3,4,5-trifluorophenol.

Specific examples of the compounds (c) are water, hydrogen sulfide, an alkylamine, an arylamine, an aralkylamine, a halogenated alkylamine, a halogenated arylamine, and a (halogenated alkyl)arylamine. More preferred are water, hydrogen sulfide, methylamine, ethylamine, n-propylamine, isopropylamine, n-butylamine, sec-butylamine, tert-butylamine, isobutylamine, n-pentylamine, neopentylamine, isopentylamine,n-hexylamine, n-octylamine, n-decylamine, n-dodecylamine, n-pentadecylamine, n-eicosylamine, allylamine, cyclopentadienylamine, aniline, 2-tolylamine, 3-tolylamine, 4-tolylamine, 2,3-xylylamine, 2,4-xylylamine, 2,5-xylylamine, 2,6-xylylamine, 3,4-xylylamine, 3,5-xylylamine, 2,3,4-trimethylaniline, 2,3,5-trimethylaniline, 2,3,6-trimethylaniline, 2,4,6-trimethylaniline, 3,4,5-trimethylaniline, 2,3,4,5-tetramethylaniline, 2,3,4,6-tetramethylaniline, 2,3,5,6-tetramethylaniline, pentamethylaniline, ethylaniline, n-propylaniline, isopropylaniline, n-butylaniline, sec-butylaniline, tert-butylaniline, n-pentylaniline, neopentylaniline, n-hexylaniline, n-octylaniline, n-decylaniline, n-dodecylaniline, n-tetradecylaniline, naphthylamine, anthracenylamine, benzylamine, (2-methylphenyl)methylamine, (3-methylphenyl)methylamine, (4-methylphenyl)methylamine, (2,3-dimethylphenyl)methylamine, (2,4-dimethylphenyl)methylamine, (2,5-dimethylphenyl)methylamine, (2,6-dimethylphenyl)methylamine, (3,4-dimethylphenyl)methylamine, (3,5-dimethylphenyl)methylamine, (2,3,4-trimethylphenyl)methylamine, (2,3,5-trimethylphenyl)methylamine, (2,3,6-trimethylphenyl)methylamine, (3,4,5-trimethylphenyl)methylamine, (2,4,6-trimethylphenyl)methylamine, (2,3,4,5-tetramethylphenyl)methylamine, (2,3,4,6-tetramethylphenyl)methylamine, (2,3,5,6-tetramethylphenyl)methylamine, (pentamethylphenyl)methylamine, (ethylphenyl)methylamine, (n-propylphenyl)methylamine, (isopropylphenyl)methylamine, (n-butylphenyl)methylamine,(sec-butylphenyl)methylamine, (tert-butylphenyl)methylamine, (n-pentylphenyl)methylamine,(neopentylphenyl)methylamine, (n-hexylphenyl)methylamine, (n-octylphenyl)methylamine, (n-decylphenyl)methylamine, (n-tetradecylphenyl)methylamine, naphtylmethylamine, anthracenylmethylamine, fluoromethylamine, chloromethylamine, bromomethylamine, iodomethylamine, difluoromethylamine, dichloromethylamine, dibromomethylamine, diiodomethylamine, trifluoromethylamine, trichloromethylamine, tribromomethylamine, triiodomethylamine, 2,2,2-trifluoroethylamine, 2,2,2-trichloroethylamine, 2,2,2-tribromoethylamine, 2,2,2-triiodoethylamine, 2,2,3,3,3-pentafluoropropylamine, 2,2,3,3,3-pentachloropropylamine, 2,2,3,3,3-pentabromopropylamine, 2,2,3,3,3-pentaiodopropylamine, 2,2,2-trifluoro-1-trifluoromethylethylamine, 2,2,2-trichloro-1-trichloromethylethylamine, 2,2,2-tribromo-1-tribromomethylethylamine, 2,2,2-triiodo-1-triiodomethylethylamine, 1,1-bis(trifluoromethyl)-2,2,2-trifluoroethylamine, 1,1-bis(trichloromethyl)-2,2,2-trichloroethylamine, 1,1-bis(tribromomethyl)-2,2,2-tribromoethylamine, 1,1-bis(triiodomethyl)-2,2,2-triiodoethylamine, perfluoropropylamine, perchloropropylamine, perbromopropylamine, perfluorobutylamine, perchlorobutylamine, perbromobutylamine, perfluoropentylamine, perchloropentylamine, perbromopentylamine, perfluorohexylamine, perchlorohexylamine, perbromohexylamine, perfluorooctylamine, perchlorooctylamine, perbromooctylamine, perfluorododecylamine, perchlorododecylamine, perbrododecylamine, perfluoropentadecylamine, perchloropentadecylamine, perbromopentadecylamine, perfluoroeicosylamine, perchloroeicosylamine, perbromoeicosylamine, 2-fluoroaniline, 3-fluoroaniline, 4-fluoroaniline, 2-chloroaniline, 3-chloroaniline, 4-chloroaniline, 2-bromoaniline, 3-bromoaniline, 4-bromoaniline, 2-iodoaniline, 3-iodoaniline, 4-iodoaniline, 2,6-difluoroaniline, 3,5-difluoroaniline, 2,6-dichloroaniline, 3,5-dichloroaniline, 2,6-dibromoaniline, 3,5-dibromoaniline, 2,6-diiodoaniline, 3,5-diiodoaniline, 2,4,6-trifluoroaniline, 2,4,6-trichloroaniline, 2,4,6-tribromoaniline, 2,4,6-triiodoaniline, 3,4,5-trifluoroaniline, 3,4,5-trichloroaniline, 3,4,5-tribromoaniline, 3,4,5-triiodoaniline, pentafluoroaniline, pentachloroaniline, pentabromoaniline, pentaiodoaniline, 2-(trifluoromethyl)aniline, 3-(trifluoromethyl)aniline, 4-(trifluoromethyl)aniline, 2,6-di(trifluoromethyl)aniline, 3,5-di(trifluoromethyl)aniline, 2,4,6-tri(trifluoromethyl)aniline and 3,4,5-tri(trifluoromethyl)aniline.

Preferred as the compound (c) are water, hydrogen sulfide, methylamine, ethylamine, n-propylamine, isopropylamine, n-butylamine, sec-butylamine, tert-butylamine, isobutylamine, n-octylamine, aniline, 2,6-xylylamine, 2,4,6-trimethylaniline, naphthylamine, anthracenylamine, benzylamine, trifluoromethylamine, pentafluoroethylamine, perfluoroproylamine, perfluorobutylamine, perfluoropentylamine, perfluorohexylamine, perfluorooctylamine, perfluorododecylamine, perfluoropentadecylamine, perfluoroeicosylamine, 2-fluoroaniline, 3-fluoroaniline, 4-fluoroaniline, 2,6-difluoroaniline,3,5-difluoroaniline, 2,4,6-trifluoroaniline, 3,4,5-trifluoroaniline, pentafluoroaniline, 2-(trifluoromethyl) aniline, 3-(trifluoromethyl)aniline, 4-(trifluoromethyl)aniline, 2,6-bis(trifluoromethyl)aniline, 3,5-bis(trifluoromethyl)aniline and 2,4,6-tris(trifluoromethyl)aniline. Particularly preferre are water, trifluoromethylamine, perfluorobutylamine, perfluorooctylamine, perfluoropentadecylamine, 2-fluoroaniline, 3-fluoroaniline. 4-fluoroaniline, 2,6-difluoroaniline, 3,5-difluoroaniline, 2,4,6-trifluoroaniline, pentafluoroaniline, 2-(trifluoromethyl)aniline, 3-(trifluoromethyl)aniline, 4-(trifluoromethyl)aniline, 2,6-bis(trifluoromethyl)aniline, 3,5-bis(trifluoromethyl)aniline, 2,4,6-tris(trifluoromethyl)aniline and 3,4,5-tris(trifluoromethyl)aniline. The most preferred are water and pentafluoroaniline.

As the particle (d), that which is generally used as a carrier is preferably used. A porous substance having a uniform particle diameter is preferred and an inorganic substance or an organic polymer is preferably used. An inorganic substance is more preferably used.

From a viewpoint of particle size distribution of a polymer obtained, the particle (d) has a geometric standard deviation of preferably not more than 2.5, more preferably not more than 2.0, and much more preferably not more than 1.7, wherein the geometric standard deviation is based on a volume of a particle diameter of the particle (d).

Examples of the inorganic substance used as the particle (d) are inorganic oxides. It is also permitted to use clay and clay mineral. These inorganic substances may be used in a mixture.

Specific examples of the inorganic oxide include $SiO_2$(silica). $Al_2O_3$, MgO, $ZrO_2$, $TiO_2$, $B_2O_3$, CaO, ZnO, BaO, $ThO_2$ and mixtures thereof such as $SiO_2$(silica)-MgO, $SiO_2$(silica)-$Al_2O_3$, $SiO_2$(silica)-$TiO_2$, $SiO_2$(silica)-$V_2O_5$, $SiO_2$(silica)-$Cr_2O_3$ and $SiO_2$(silica)-$TiO_2$-MgO. Among these inorganic oxides, $SiO_2$(silica) and/or $Al_2O_3$ are/is preferred, and $SiO_2$(silica) is particularly preferred. Incidentally, the above inorganic oxide may contain a small amount of carbonates, sulfates, nitrates and oxide components, such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$ and $Li_2O$.

Examples of the clay or clay mineral are kaolin, bentonite, Kibushi clay, gaerome clay, allophane, hisingerite, pyrophylite, talc, a mica group, a montmorillinite group, vermiculite, a chlorite group, palygorskite, kaolinite, nacrite, dickite and halloycite.

Among these, smectite, montmorillonite, hectorite, raponite and saponite are preferred, and montmorillonite and hectorite are more preferred.

Among these inorganic substances, inorganic oxides are suitably used.

It is preferable that these inorganic substances are dried to contain substantially no water, and those dried by heat-treatment are preferred. The heat-treatment of inorganic substances, whose water content cannot be visually confirmed, is usually carried out at a temperature of from 100 to 1500°C, preferably from 100 to 1000°C, and more preferably from 200 to 800°C. The heating time is not particularly limited, and preferably from 10 minutes to 50 hours, more preferably from 1 hour to 30 hours. Further, during heating, there can be applied a method of passing a dried inert gas (e.g. nitrogen or argon) at a fixed flow rate, or a method of evacuating. The method is not limited thereto.

Further, it is permitted to use a modified inorganic oxide obtained by substituting an active hydrogen of a surface hydroxide group of the inorganic oxide with a various kind of a substituent. In this case, a preferable substituent is a silyl group. More specifically, there are enumerated inorganic oxides treated with a halogenated alkylsilane compound such as trimethylchlorosilane., tert-butyldimethylchlorosilane and dimethyldichlorosilane, and an alkyldisilazane compound such as 1,1,1,3,3,3-hexamethyldisilazane.

An average particle diameter of the inorganic substance is preferably from 5 to 1000 μm, more preferably from 10 to 500 μm, and more preferably from 10 to 100 μm. A pore volume is preferably not less than 0.1 ml/g, and more preferably 0.3 to 10ml/g. The specific surface area is preferably from 10 to 1000 $m^2$/g, and more preferably from 100 to 500 $m^2$/g.

The organic polymer usable as the particle (d) may be any organic polymer, and it is permitted to use a mixture of more than one organic polymer. As the organic polymer, a polymer having an active hydrogen-carrying functional group or a functional group of a non-proton-donating Lewis base is preferred.

The active hydrogen-carrying functional group is not particularly limited as far as it has active hydrogen. Examples thereof are a primary amino group, a secondary amino group, an imino group, an amide group, a hydrazide group, an amidino group, a hydroxy group, a hydroperoxy group, a carboxyl group, a formyl group, a carbamoyl group, a sulfonic acid group, a sulfinic acid group, a sulfenic acid group, a thiol group, a thioformyl group, a pyrrolyl group, an imidazolyl group, a piperidyl group, an indazolyl group and a carbazolyl group. Among them, preferred is a primary amino group, a secondary amino group, an imino group, an amide group, an imide group, a hydroxy group, a formyl group, a carboxyl group, a sulfonic acid group or a thiol group. Particularly preferred is a primary amino group, a secondary amino group, an amide group or a hydroxy group. These groups may be substituted with a halogen atom or a hydrocarbon group having 1 to 20 carbon atoms.

The functional group of a non-proton-donating Lewis base is not particularly limited as far as it is a functional group having a Lewis base portion containing no active hydrogen atom. Specific examples thereof are a pyridyl group, an N-substituted imidazolyl group, an N-substituted indazolyl group, a nitrile group, an azido group, an N-substituted

imino group, an N,N-substituted amino group, an N,N-substituted aminoxy group, an N,N,N-substituted hydrazino group, a nitroso group, a nitro group, a nitroxy group, a furyl group, a carbonyl group, a thiocarbonyl group, an alkoxy group, an alkyloxycarbonyl group, an N,N-substituted carbamoyl group, a thioalkoxy group, a substituted sulfinyl group, a substituted sulfonyl group and a substituted sulfonic acid group. Preferred is a heterocyclic group, and more preferred is an aromatic heterocyclic group having an oxygen atom and/or a nitrogen atom in the ring. Particularly preferred are a pyridyl group, an N-substituted imidazolyl group and an N-substituted indazoyl group, and the most preferred is a pyridyl group. These groups may be substituted with a halogen atom or a hydrocarbon group having 1 to 20 carbon atoms.

An amount of the active hydrogen-carrying functional group or the functional group of a non-proton-donating Lewis base is not particularly limited. It is preferably from 0.01 to 50 mmol/g, and more preferably from 0.1 to 20 mmol/g, in terms of a molar amount of the functional group per g of the organic polymer.

The functional group-carrying organic polymer can be obtained, for example, by homopolymerizing a monomer having the active hydrogen-carrying functional group or the functional group of a non-proton-donating Lewis base and more than one polymerizable unsaturated group , or copolymerizing said monomer and another monomer having a polymerizable unsaturated group. At this time, it is preferred to additionally copolymerize a crosslinking polymerizable monomer having two or more polymerizable unsaturated groups.

Examples of the monomer having the active hydrogen-carrying functional group or the functional group of a non-proton-donating Lewis base and more than one polymerizable unsaturated group are monomers having the above-mentioned active hydrogen-carrying functional group and more than one polymerizable unsaturated group, and monomers having the above-mentioned functional group having a Lewis base portion containing no active hydrogen and more than one polymerizable unsaturated group. Examples of the polymerizable unsaturated group are an alkenyl groups such as a vinyl group and an allyl group, and an alkynyl group such as an ethyne group.

Examples of the monomer having the active hydrogen-carrying functional group and more than one polymerizable unsaturated group are a vinyl group-containing primary amine, a vinyl group-containing secondary amine, a vinyl group-containing amide compound and a vinyl group-containing hydroxy compound. Specific examples thereof are N-(1-ethenyl)amine, N-(2-propenyl)amine, N-(1-ethenyl)-N-methylamine, N-(2-propenyl)-N-methylamine, 1-ethenylamide, 2-propenylamide, N-methyl-(1-ethenyl)amide, N-methyl-(2-propenyl)amide, vinyl alcohol and 2-propen-1-ol and 3-buten-1-ol.

Specific examples of the monomer having the functional group having a Lewis base portion containing no active hydrogen and more than one polymerizable unsaturated group are vinylpyridine, vinyl(N-substituted)imidazole and vinyl(N-substituted)indazole.

The other monomers having apolymerizable unsaturated group include ethylene, $\alpha$-olefins and aromatic vinyl compounds, and specific examples thereof are ethylene, propylene, 1-butane, 1-hexene, 4-methyl-1-pentene and styrene. Preferred is ethylene or styrene. These monomers may be used in a combination of two or more.

As specific examples of the crosslinking polymerizable monomer having two or more polymerizable unsaturated groups, divinylbenzene can be given.

An average particle diameter of the organic polymer is preferably from 5 to 1000 μm, and more preferably from 10 to 500 μm. A pore volume is preferably not less than 0.1 ml/g, and more preferably 0.3 to 10 ml/g. A specific surface area is preferably from 10 to 1000 $m^2$/g, and more preferably from 50 to 500 $m^2$/g.

It is preferable that these organic polymers are dried to contain substantially no water, and those dried by heat-treatment are preferred. The heat-treatment of organic polymers, whose water content cannot be visually confirmed, is usually carried out at a temperature of from 30 to 400°C , preferably from 50 to 200°C, and more preferably from 70 to 150°C. The heating time is not particularly limited, and preferably from 30 minutes to 50 hours, more preferably from 1 hour to 30 hours. Further, during heating, there can be used a method of passing a dried inert gas (e.g. nitrogen or argon) at a fixed flow rate, or a method of evacuating. The method is not limited thereto.

The modified particle in accordance with the present invention is a modified particle obtained by contacting the above-mentioned (a), (b), (c) and (d) with one another. An order for contacting (a), (b), (c) and (d) is not particularly limited, and the following orders are enumerated.

<1> A contact product obtained by contacting a contact product between (a) and (b) with (c) is contacted with (d).
<2> A contact product obtained by contacting a contact product between (a) and (b) with (d) is contacted with (c).
<3> A contact product obtained by contacting a contact product between (a) and (c) with (b) is contacted with (d).
<4> A contact product obtained by contacting a contact product between (a) and (c) with (d) is contacted with (b).
<5> A contact product obtained by contacting a contact product between (a) and (d) with (b) is contacted with (c).
<6> A contact product obtained by contacting a contact product between (a) and (d) with (c) is contacted with (b).
<7> A contact product obtained by contacting a contact product between (b) and (c) with (a) is contacted with (d).
<8> A contact product obtained by contacting a contact product between (b) and (c) with (d) is contacted with (a).
<9> A contact product obtained by contacting a contact product between (b) and (d) with (a) is contacted with (c).

<10> A contact product obtained by contacting a contact product between (b) and (d) with (c) is contacted with (a).
<11> A contact product obtained by contacting a contact product between (c) and (d) with (a) is contacted with (b).
<12> A contact product obtained by contacting a contact product between (c) and (d) with (b) is contacted with (a).

As the contact order, preferred is the above-mentioned <1>, <2>, <3>, <11> or <12>.

It is recommendable to carry out the contact treatment under an inert gas atmosphere. A treating temperature is usually from -100 to 300°C, and preferably from -80 to 200°C. A treating time is usually from 1 minute to 200 hours, and preferably from 10 minutes to 100 hours. It is permitted to carry out such a treatment using a solvent or directly treat the compounds without use of any solvent.

As the solvent, those inert to either respective components to be contacted or the contact products obtained by the contact when used are usually used. In the case where respective components are contacted step by step as described above, there is a case where a certain solvent reacts with, for example, the above-mentioned component (a), but the solvent does not react with a contact product obtained by contacting the component (a) with another component. In such a case, the solvent can be used in a contact operation wherein said contact product is regarded as one component. There are exemplified the following solvents, which should be appropriately distinguished in the applications in such a manner. Examples of solvents usable are non-polar solvents such as aliphatic hydrocarbon solvents and aromatic hydrocarbon solvents and polar solvents such as halide solvents, ether solvents, alcohol solvents, phenol solvents, carbonyl solvents, phosphoric acid derivatives, nitrile solvents, nitro compounds, amine solvents and sulfur compounds. Specific examples thereof are aliphatic hydrocarbon solvents such as butane, pentane, hexane, heptane, octane, 2,2,4-trimethylpentane and cyclohexane, aromatic hydrocarbon solvents such as benzene, toluene and xylene, halide solvents such as dichloromethane, difluoromethane, chloroform, 1,2-dichloroethane, 1,2-dibromoethane, 1,1,2-trichloro-1,2,2-trifluoroethane, tetrachloroethylene, chlorobenzene, bromobenzene and o-dichlorobenzene, ether solvents such as dimethyl ether, diethylether, diisopropyl ether, di-n-butyl ether, methyl-tert-butyl ether, anisole, 1,4-dioxane, 1,2-dimethoxyethane, bis(2-methoxyethyl) ether, tetrahydrofuran and tetrahydropyran, alcohol solvents such as methanol, ethanol, 1-propanol, 2-propanol, 1-butanol, 2-butanol, 2-methyl-1-propanol, 3-methyl-1-butanol, cyclohexanol, benzyl alcohol, ethylene glycol, propylene glycol, 2-methoxy ethanol, 2-ethoxy ethanol, diethylene glycol, triethylene glycol and glycerol, phenol solvents such as phenol and p-cresol, carbonyl solvents such as acetone, ethyl methyl ketone, cyclohexanone, acetic anhydride, ethyl acetate, butyl acetate, ethylene carbonate, propylene carbonate, N,N-dimethylformamide, N,N-dimethylacetamide and N-methyl-2-pyrrolidone, phosphoric acid derivatives such as hexamethylphosphate triamide and triethyl phosphate, nitrile solvents such as acetonitrile, propionitrile, succinonitrile and benzonitrile, nitro compounds such as nitromethane and nitrobenzene, amine solvents such as pyridine, piperidine and morpholine, and sulfur compounds such as dimethylsulfoxide and sulfolane.

In the case where a contact product (e) obtained by contacting (a), (b) and (c) with one another is contacted with the particle (d), namely in the above-mentioned <1>, <3> and <7>, the above-mentioned aliphatic hydrocarbon solvents, aromatic hydrocarbon solvents or ether solvents are preferred as a solvent (s1) used for the production of the contact product (e).

Whereas, a polar solvent is preferred as a solvent (s2) used for contacting the contact product (e) and the particle (d) with each other. There is known an $E_{TN}$ value as an index indicating a polarity of a solvent (C. Reichardt, "Solvents and Solvents Effects in Organic Chemistry", 2nd ed., VCH Verlag (1988)). Particularly preferred is a solvent satisfying $0.8 \geqq E_T^N \geqq 0.1$. Examples of such a solvent are dichloromethane, dichlorodifluoromethanechloroform, 1,2-dichloroethane, 1,2-dibromoethane, 1,1,2-trichloro-1,2,2-trifluoroethane, tetrachloroethylene, chlorobenzene, bromobenzene, o-dichlorobenzene, dimethyl ether, diethyl ether, diisopropyl ether, di-n-butyl ether, methyl tert-butyl ether, anisole, 1,4-dioxane, 1,2-dimethoxyethane, bis(2-methoxyethyl) ether, tetrahydrofuran, tetrahydropyran, methanol, ethanol, 1-propanol, 2-propanol, 1-butanol, 2-butanol, 2-methyl-1-propanol, 3-methyl-1-butanol, cyclohexanol, benzyl alcohol, ethylene glycol, propylene glycol, 2-methoxy ethanol, 2-ethoxy ethanol, diethylene glycol, triethylene glycol, acetone, ethyl methyl ketone, cyclohexanone, acetic anhydride, ethyl acetate, butyl acetate, ethylene carbonate, propylene carbonate, N,N-dimethylformamide, N,N-dimethylacetamide, N-methyl-2-pyrrolidone, hexamethylphosphate triamide, triethyl phosphate, acetonitrile, propionitrile, succinonitrile, benzonitrile, nitromethane, nitrobenzene, ethylenediamine, pyridine, piperidine, morpholine, dimethylsulfoxide and sulfolane.

More preferred as the solvent (s2) are dimethyl ether, diethyl ether, diisopropyl ether, di-n-butyl ether, methyl tert-butyl ether, anisole, 1,4-dioxane, 1,2-dimethoxyethane, bis(2-methoxyethyl) ether, tetrahydrofuran, tetrahydropyran, methanol, ethanol, 1-propanol, 2-propanol, 1-butanol, 2-butanol, 2-methyl-1-propanol, 3-methyl-1-butanol, cyclohexanol, benzyl alcohol, ethylene glycol, propylene glycol, 2-methoxy ethanol, 2-ethoxy ethanol, diethylene glycol and triethylene glycol. Particularly preferred are di-n-butyl ether, methyl tert-butyl ether, 1,4-dioxane, tetrahydrofuran, methanol, ethanol, 1-propanol, 2-propanol, 1-butanol, 2-butanol, 2-methyl-1-propanol, 3-methyl-1-butanol and cyclohexanol. The most preferred are tetrahydrofuran, methanol, ethanol, 1-propanol and 2-propanol.

As the above-mentioned solvent (s2), it is permitted to use a mixed solvent of these polar solvents and hydrocarbon solvents. As the hydrocarbon solvents, the above-exemplified aliphatic hydrocarbon solvents and aromatic

hydrocarbon solvents are used. Specific examples of the mixed solvents of the polar solvents and the hydrocarbon solvents are a hexane/methanol mixed solvent, a hexane/ethanol mixed solvent, a hexane/1-propanol mixed solvent, a hexane/2-propanol mixed solvent, a heptane/methanol mixed solvent, a heptane/ethanol mixed solvent, a heptane/1-propanol mixed solvent, a heptane/2-propanol mixed solvent, a toluene/methanol mixed solvent, a toluene/ethanol mixed solvent, a toluene/1-propanol mixed solvent, a toluene/2-propanol mixed solvent, a xylene/methanol mixed solvent, a xylene/ethanol mixed solvent, a xylene/1-propanol mixed solvent and a xylene/2-propanol mixed solvent. Preferable are a hexane/methanol mixed solvent, a hexane/ethanol mixed solvent, a heptane/methanol mixed solvent, a heptane/ethanol mixed solvent, a toluene/methanol mixed solvent, a toluene/ethanol mixed solvent, a xylene/methanol mixed solvent and a xylene/ethanol mixed solvent. More preferred are a hexane/methanol mixed solvent, a hexane/ethanol mixed solvent, a toluene/methanol mixed solvent and a toluene/ethanol mixed solvent. The most preferred is a toluene/ethanol mixed solvent.

A proportion of ethanol in the toluene/ethanol mixed solvent is preferably from 10 to 50% by volume, and more preferably from 15 to 30% by volume.

In the process wherein the contact product (e) obtained by contacting (a), (b) and (c) with one another is contacted with the particle (d), namely in the above-mentioned <1>, <3> and <7>, it is permitted to use the hydrocarbon solvent as either the solvent (s1) or the solvent (s2). In this regard, it is preferred that a time interval from completion of the contact of (a), (b) and (c) to the contact between the obtained contact product (e) and the particle (d) is shorter. The time interval is preferably from 0 to 5 hours, more preferably from 0 to 3 hours, and the most preferably from 0 to 1 hour. A temperature at which the contact product (e) and the particle (d) are contacted with each other is usually from -100 to 40°C, preferably from -20 to 20°C, and the most preferably from -10 to 10°C.

In the above-mentioned <2>, <5>, <6>, <8>, <9>, <10>, <11> and <12>, either the above-mentioned non-polar solvents or polar solvents can be used. The non-polar solvents are more preferable. Because, it seems that the contact product between (a) and (c) and the contact product obtained by contacting the contact product between (a) and (b) with (c) generally exhibit a low solubility to the non-polar solvent, and therefore, when (d) exists in the reaction system at the time when such contact products are produced, the produced contact products are more steadily precipitated on the surface of (d) rather than exist in the non-polar solvent, so that the contact products are more easily subjected to fixation.

Amounts of respective compounds (a), (b) and (c) mentioned above are not particularly limited. However, it is preferred that y and z substantially satisfy the following expression (1), provided that a molar ratio of the amounts of respective compounds is expressed by (a): (b): (c) = 1: y: z.

$$|m - y - 2z| \leqq 1 \qquad (1)$$

(In the above expression (1), m is a valence of $M^1$.)

In the above expression (1), y is preferably a number of from 0.01 to 1.99, more preferably from 0.10 to 1.80, much more preferably from 0.20 to 1.50, and the most preferably from 0.30 to 1.00. A similarly preferable range of z in the above expression (1) can be determined by m, y and the above expression (1).

In a practical contact treatment of the compounds, it is usual that the amounts used delicately fluctuate even if the compounds are to be used so as to perfectly satisfy the above expression (1), or taking some amounts of unreacted compounds into consideration, the amounts to be used are somewhat increased or decreased. The phrase "substantially satisfy the expression (1) " does not mean that the expression (1) is perfectly satisfied, but it is included to intent to obtain an object product, which will be obtained when contacting respective compounds in a molar ratio satisfying the expression (1).

In preparing the modified particle in accordance with the present invention, it is permitted to appropriately determine a proportion of (d) to (a), provided that a typical metal atom originated from (a) and contained in a particle obtained by contacting (a) and (d) with each other is controlled so as to be preferably not less than 0.1 mmol, and more preferably from 0.5 to 20 mmol, in terms of a mol number of the typical metal atom contained in 1 g of the obtained particle.

After completion of the contact treatment as mentioned above, it is recommendable to apply heating, so that the reaction further proceeds. In heating, it is preferred to use a solvent having a higher boiling point to make the heating temperature much higher. In this regard, it is permitted to substitute the solvent used for the contact treatment with another solvent having a higher boiling point.

As a result of such a contact treatment, at least one of the starting (a), (b), (c) and/or (d) may remain as an unreacted material in the modified particle in accordance with the present invention. However, when it is applied to polymerization accompanied by the formation of addition polymer particles, it is recommendable to apply a washing treatment for removing the unreacted material in advance. A solvent used therefor may be the same as or different from that used at the time of contacting.

After completion of the contact treatment and the washing treatment, the solvent is removed from the product by distillation, and the resulting product is dried under reduced pressure preferably at a temperature of not lower than 25°C for 1 to 24 hours, more preferably at a temperature of from 40 to 200°C for 1 to 24 hours, much more preferably at a temperature of from 60 to 200°C for 1 to 24 hours, particularly preferably at a temperature of from 60 to 160°C for 2 to 18 hours, and the most preferably at a temperature of from 80 to 160°C for 4 to 18 hours.

A specific example of a process for producing the modified particle in accordance with the present invention is explained in more detail as follows, wherein $M^1$ is a zinc atom, the compound (b) is pentafluorophenol, the compound (c) is water and the particle (d) is silica. Ahexane solution of diethylzinc is added to tetrahydrofuran as a solvent, the mixture is cooled to 3°C, pentafluorophenol in an amount equimolar to the diethylzinc is dropped thereto, the resulting mixture is stirred at ambient temperature for 10 minutes to 24 hours, thereafter water in an amount of 0.5 mol per mol of diethylzinc is further added, and the resulting mixture is stirred at ambient temperature for 10 minutes to 24 hours. Thereafter, the solvent is removed by distillation, and the residue is dried under reduced pressure at 120°C for 8 hours. To a solid component obtained through the above-mentioned operations, tetrahydrofuran and silica are added, and the mixture is stirred at 40°C for 2 hours. The resulting solid component is washed with tetrahydrofuran, and dried under reduced pressure at 120°C for 8 hours. Thus, the modified particle in accordance with the present invention can be obtained. Among the modified particles obtained in such a manner, a modified particle which is obtained using a compound (b) having a halogenated hydrocarbon group as $R^1$ in the general formula [2], and which satisfies the following expressions [5] and [6] or [5] and [7], is preferred from a viewpoint of polymerization activity.

$$N/M > 0.9 \qquad [5]$$

(In the expression, N is a substance amount of a halogen atom contained in the modified particle, and M is a substance amount of a typical metal atom $M^1$ contained in the modified particle.)

$$A/B \geqq 0.1 \qquad [6]$$

(In the expression, A is an integral intensity of halo showing a peak at Bragg angle (2θ) 33° to 37° in a diffraction intensity profile obtained by an extended X-ray measurement, and B is an integral intensity of halo showing a peak at Bragg angle (2 θ) 18° to 22° in said diffraction intensity profile.)

$$D/C \geqq 0.5 \qquad [7]$$

(In the expression, C is a peak intensity of the maximum peak present within a range of 1 to 2 nm in a radial distribution function obtained by measuring the modified particle according to an X-ray absorption fine structure analysis, and D is a peak intensity of the maximum peak present within a range of 2.5 to 3.5 nm in said radial distribution function, provided that the radial distribution function is obtained in a manner such that the modified particle is measured according to an X-ray absorption fine structure analysis (XAFS) to obtain X-ray absorption spectra, from which extended X-ray absorption fine structure (EXAFS) spectra of the typical metal atom $M^1$ in a K absorption edge are obtained and processed according to a Fourier transform.)

A detailed explanation is directed to [5], [6] and [7] as follows.

In the above expression [5], M is a substance amount of a typical metal atom $M^1$ of the Group 1, 2, 12, 14 or 15. The M can be found by various means generally used in an analytical chemistry (for example, "Encyclopedia of Experimental Chemistry 15 Analysis 4th edition", edited by Japan Chemical Society, issued by Maruzen Co., Ltd. pages 2 and 3). Among these means, a gravimetric method by chemical analysis and a spectroscopy are preferred. Because of easy operations, a spectroscopy is more preferred. Further, of these, an atomic absorption spectroscopy (AAS analysis) and an inductively coupled plasma-emission spectroscopy (ICP analysis) are particularly preferred for the analysis of trace metal atom.

In the above expression [5], N is a substance amount of a halogen atom contained in the modified particle. The substance amount of a halogen atom can be found according to a gravimetric method, an absorptiometry or an ion electrode method as disclosed in "Encyclopedia of Experimental Chemistry 15 Analysis 4th edition", edited by Japan Chemical Society, issued by Maruzen Co., Ltd. pages 218 to 231.

In the modified particle in accordance with the present invention, as clear from the above expression [5], the halogen atom is so many that the ratio of the substance amount of the halogen atom to the typical metal atom $M^1$ contained in the modified particle exceeds 0.9. The ratio (N/M) is preferably within a range exceeding 0.90.

The extended X-ray measurement in the present invention is carried out under the following conditions using,

for example, vertical rotating anode X-ray generator ultra X18 manufactured by Rigaku International Corporation, as an X-ray diffraction apparatus.

Load: 50kV-100 mA
Focus: line
Scan mode: 2θ/θ (2° /min.)
Measured angle range: 5° to 70°
Slit: divergence slit 1°

receiving slit 0.15 mm
scatter slit 1°

Detector: scintillation counter
Monochromater: graphite

The extended X-ray measurement in the present invention is carried out usually under a condition that a sample to be measured is not exposed to atmosphere.

In a diffraction intensity profile obtained by the extended X-ray measurement, an integral intensity A of halo showing a peak at Bragg angle (2θ) 33° to 37° and an integral intensity B of halo showing a peak at Bragg angle (2θ) 18° to 22° are determined, and its ratio A/B is calculated.

It is conceivable that the halo showing a peak at Bragg angle (2θ) 33° to 37° is a halo based on the contact product of the above-mentioned (a), (b) and (c), and the halo showing a peak at Bragg angle (2θ) 18° to 22° is that based on the particle (d). It is preferred that the above-mentioned integral intensity ratio A/B is above a level, and thereby, the catalyst for addition polymerization obtained using the modified particle increases in its activity. In the present invention, the above-mentioned integral intensity ratio A/B is not less than 0.1, preferably from 0.15 to 1, more preferably from 0.2 to 0.8, and particularly preferably from 0.25 to 0.7.

The above-mentioned expression [7] is an expression formed by the use of an extended X-ray absorption fine structure (EXAFS) analysis. The following explanation is directed to a general X-ray absorption fine structure (XAFS) analysis. A full detail of the principles and analysis methods is given in literature such as "The Spectroscopical Society of Japan Sokuteihou Series 26 , X-ray absorption fine structure, edited by Yasuo Udagawa (1993)".

When a substance is placed on a line of X-ray beams, an X-ray absorbance of the substance can be calculated from both an intensity of an X-ray irradiated to the substance (incoming X-ray intensity: I0) and an intensity of an X-ray transmitted through the substance (transmitted X-ray intensity: It). In the process of measuring X-ray absorption spectra by varying X-ray energy while monitoring increase and decrease of the X-ray absorbance, it can be observed that the X-ray absorbance suddenly rises at certain X-ray energy (absorption edge). The X-ray energy of the absorption edge corresponds to energy required at the time when an inner shell electron of an atom absorbing X-rays (absorption atom) jumps out as a photoelectron. In an atom, there are various kinds of inner shells such as K shell, L shell and M shell, and there are absorption edges corresponding to respective inner shell electrons. The K shell electron exists in an innermost part, and a corresponding absorption edge is called a K absorption edge. In the X-ray absorption spectra, a fine vibration structure appearing at a region of energy higher than said absorption edge by about 30 to 1000 eV is said to be an extended X-ray absorption fine structure (EXAFS). Such a fine vibration structure appearing on the spectra is caused as a result of an interference effect between a wave of the photoelectron discharged from the absorption atom owing to absorption of X-rays and a wave of the returning photoelectron owing to scatter caused by a neighboring atom (scattering atom). Accordingly, as a result of detailed analysis, there can be obtained an information about a local structure in the vicinity of the absorption atom.

A background is deducted from the X-ray absorption spectra, and supposing that the absorption atom is isolated, an absorption coefficient having no vibration structure is further deducted therefrom, thereby obtaining EXAFS spectra. The EXAFS spectra are processed according to a Fourier transform in an appropriate region to obtain a radial distribution function focusing on the absorption atom. By examining the radial distribution function in detail, it is possible to obtain an information about a distance between the absorption atom and the scatter atom and another information about a number of the scatter atom from a position of the maximum value in said function and its intensity, respectively, and as a result, there can be clarified a noticeable structural information in the vicinity of the absorption atom.

A peak intensity of the maximum peak present within a range of from 1 to 2 nm in the radial distribution function is taken as C, and a peak intensity of the maximum peak present within a range of from 2.5 to 3.5 nm therein is taken as D, and its ratio D/C is calculated. It is conceivable that the peak present within a range of from 1 to 2 nm in the radial distribution function is based on the existence of an atom ① bound to the typical metal atom $M^1$, and the peak present within a range of from 2.5 to 3.5 nm in the radial distribution function is based on the existence of an atom ② bound to the atom ① or coordinated to the atom ① . The peak intensity D of the peak based on the existence of the atom

② increases with increase in numbers of the atom ② present in the vicinity of the typical metal atom $M^1$, and this may demonstrate that a structure containing the typical metal atom $M^1$, the atom ① and the atom ② becomes a more orderly structure. It is preferred that the ratio of these peak intensity, D/C, is above a level, and thereby, the catalyst for addition polymerization obtained using the modified particle increases in its activity. In the present invention, the above-mentioned peak intensity ratio D/C is not less than 0.5, preferably from 0.55 to 1.2, and more preferably from 0.6 to 0.9.

Usually, such an XAFS measurement is carried out under a condition that a sample to be measured is not exposed to atmosphere.

While, the modified particle meeting the above-mentioned conditions satisfies the expression (1), and further satisfies,

$$2 \leqq z/y < 3 \qquad (2),$$

wherein y is preferably a number of from 0.20 to 0.42, more preferably a number of from 0.30 to 0.41, and much more preferably a number of from 0.35 to 0.40. The ratio of y to z (z/y) is preferably a number of from 2.2 to 2.8.

Additionally, in the present invention, a typical metal compound component, which is selected from the contact products (e) obtained by contacting the above-mentioned (a), the above-mentioned (b) and the above-mentioned (c) with one another, and which is insoluble in the following solvent (f) is contacted with the above-mentioned particle (d), thereby obtaining a modified particle. The thus obtained modified particle is also preferred from a viewpoint of polymerization activity.

Solvent (f): a mixed solvent or tetrahydrofuran, wherein the mixed solvent is a mixture of tetrahydrofuran and hexane and satisfies the following expression [8],

$$0.5 \geqq VH/(VT + VH) \qquad [8]$$

wherein VT is a volume of tetrahydrofuran, and VH is a volume of hexane.

It is permitted to use those commercially available as hexane and tetrahydrofuran stated here. It is recommendable to use a supernatant liquid of a mixture of said commercially available product and a dehydrating agent such as silica gel and molecular sieve, or a product put on the market as a dehydrated product (for example, that manufactured by Kanto Kagaku.

The contact product (e) is prepared by contacting the above-mentioned component (a), component (b) and component (c) with one another. An order for contacting these components is not particularly limited, and exemplified as follows.

<13> A contact product between (a) and (b) is contacted with (c).
<14> A contact product between (a) and (c) is contacted with (b).
<15> A contact product between (b) and (c) is contacted with (a).

When (d) participates therein, the above orders correspond to the above-mentioned <1>, <3> and <7>, respectively.

As the contacting order, preferred is the above-mentioned <13> or <15>.

The conditions of the contact treatment including treating temperature, treating atmosphere, treating time, presence or absence of a solvent and kind thereof, and using ratios of (a), (b) and (c), are the same as those mentioned above.

Such a typical metal compound component in the present invention can be obtained by contacting the above-mentioned (a), (b) and (c) in the above-mentioned solvent (f) to precipitate an insoluble product.

In the production process, an amount of the solvent (f) (VT + VH) to (a) is usually from 0.5 to 5 liters, preferably from 0.7 to 3 liters, and more preferably from 1.0 to 1.5 liters per substance amount (mol) of (a). When the above-mentioned compounds (a), (b) and (c) are used in respective solutions, solvents used therefor may be the same or different from one another in their compositions, provided that the solvent in the treatment liquid obtained after completion of contacting all compounds satisfies the above-mentioned expression [5].

Further, the above-mentioned typical metal compound component can be obtained in a manner such that the above-mentioned (a), (b) and (c) are contacted with one another in various kinds of the solvent as already mentioned to obtain the contact product (e), the solvent used is removed, successively the contact product (e) is added to the above-mentioned solvent (f), and then a component soluble to the above solvent (f) is removed by filtration or the like.

In this production process, an amount of the solvent (f) (VT + VH) to (e) is usually from 5 to 100 milliliters, preferably from 7 to 50 milliliters, and more preferably from 10 to 20 milliliters per g of the contact product (e).

As the typical metal compound component, among the contact products (e), preferred from a viewpoint of

higher activity is. that insoluble to the following solvent (f1) but soluble to the following solvent (f2).

Solvent (f1) : amixed solvent of tetrahydrofuran and hexane satisfying the following expression [9-1],

$$0.3 \leqq VH/(VT + VH) \leqq 0.5 \qquad [9\text{-}1]$$

wherein VT is a volume of tetrahydrofuran, and VH is a volume of hexane.

Solvent (f2) : a mixed solvent or tetrahydrofuran, wherein the mixed solvent is a mixture of tetrahydrofuran and hexane and satisfies the following expression [9-2],

$$0.3 > VH/(VT + VH) \qquad [9\text{-}2]$$

wherein VT is a volume of tetrahydrofuran, and VH is a volume of hexane.

Such a preferable typical metal compound component can be obtained in a manner such that the above-mentioned (a), (b) and (c) are contacted with one another in various kinds of the solvent as already mentioned to obtain the contact product (e), the solvent used is removed, successively the contact product (e) is added to the above-mentioned solvent (f2), then a component insoluble to the above solvent (f2) is removed by filtration or the like, thereafter a component obtained by removing the above solvent (f2) is added to the above-mentioned solvent (f1), and then a component soluble to the above solvent (f1) is removed by filtration or the like. Here, as an operation carried out after removing the component insoluble to the above-mentioned solvent (f2) by filtration or the like, an operation comprising the steps of adding a fixed amount of hexane to the solution (such as filtrate obtained by filtration), from which the component insoluble to the above-mentioned solvent (f2) has been removed, until the above expression [9-2] is satisfied, and obtaining an insoluble product precipitated by filtration or the like is simple and therefor applicable as a suitable process. In this production process, an amount of the solvent (f1) to the contact product (e) is usually from 2 to 80 milliliters, preferably from 5 to 40 milliliters, and more preferably from 10 to 12 milliliters per g of the contact product (e). An amount of the solvent (f2) is usually from 2 to 80 milliliters, preferably from 5 to 40 milliliters, and more preferably from 9 to 11 milliliters per g of the contact product (e).

The parameter in the present invention, VH/(VT + VH), is an index indicating a polarity of the mixed solvent of hexane and tetrahydrofuran. With respect to the $E_T^N$ values of hexane and tetrahydrofuran, $E_T^N$ (hexane) = 0.009, and $E_T^N$ (tetrahydrofuran) = 0.207, and therefore, the value of VH/(VT +VH) increases with decrease in the polarity of the mixed solvent.

In the present invention, it is permitted to replace the solvent (f), the solvent (f1) and the solvent (f2) used for the above-mentioned processes for producing the typical metal compound component of the present invention with a single solvent or a mixed solvent, which is different from such solvents but has a polarity equal to their $E_T^N$.

By contacting the above-mentioned typical metal compound component and the above-mentioned particle (d) with each other, the modified particle can be obtained. Conditions of the contact treatment are the same as those in the above-mentioned contact treatment of the contact product (e) and the particle (d). By using the thus obtained modified particle, a catalyst having a higher polymerization activity can be obtained.

While, the above-mentioned typical metal compound component is also useful as a catalyst component for addition polymerization (particularly as a catalyst component for olefin polymerization). As the catalyst for addition polymerization obtained using such a typical metal compound component, there are exemplified a catalyst for addition polymerization obtained by contacting the above-mentioned typical metal compound component and a transition metal compound (B) of the Groups 3 to 11 or lanthanoide series with each other, and a catalyst for addition polymerization obtained by contacting the above-mentioned typical metal compound component, a transition metal compound (B) of the Groups 3 to 11 or lanthanoide series and an organoaluminum compound (C) with one another. Of these, the latter is higher in activity and more preferred.

The modified particle in accordance with the present invention is useful as a carrier for supporting the catalyst component for addition polymerization comprising the transition metal compound capable of forming a single site catalyst, which is suitably used for polymerization accompanied by the formation of addition polymer particles. In addition, the modified particle in accordance with the present invention is useful as the catalyst component for addition polymerization (particularly the catalyst component for olefin polymerization). As the catalyst component for addition polymerization in accordance with the present invention, there are exemplified a catalyst for addition polymerization obtained by contacting the above-mentioned modified particle (A) and a transition metal compound (B) of the Groups 3 to 11 or lanthanoide series with each other, and a catalyst for addition polymerization obtained by contacting the above-mentioned modified particle (A), a transition metal compound (B) of the Groups 3 to 11 or lanthanoide series and an organoaluminum compound (C) with one another. Of these, the latter is higher in activity and more preferred.

(B) Transition metal compound of the Groups 3 to 11 or Lanthanoide Series

As the transition metal compound (B) of the Groups 3 to 11 or lanthanoide series used for the catalyst for addition polymerization in accordance with the present invention, a transition metal compound capable of forming a single site catalyst is used. It is not particularly limited as far as it is a transition metal compound of the Groups 3 to 11 or lanthanoide series, and exhibits addition polymerization activity when used in combination with the above-mentioned modified particle (A) (and additionally organoaluminum compound (C)) as a co-catalyst component for activation use. Incidentally, the single site catalyst stated here is conceptually distinguished from a conventional type solid catalyst, and includes not only a narrow sense single site catalyst giving an addition polymer of a narrow molecular weight distribution or a narrow composition distribution in the case of copolymer, but also a catalyst giving an addition polymer of a broad molecular weight distribution or a broad composition distribution in the case of a copolymer, as far as the catalyst is obtained in a preparation manner similar to that of the narrow sense single site catalyst.
As such a transition metal compound (B), preferred is a transition metal compound represented by the following general formula [10] or its μ-oxo type transition metal compound dimer.

$$L^2{}_aM^2X_b \qquad [10]$$

(In the formula, $M^2$ is a transition metal atom of the Groups 3 to 11 or lanthanoide series, $L^2$ is a cyclopentadienyl type anion skeleton-carrying group or a hetero atom-containing group, more than one $L^2$ may be linked directly or through a residual group containing a carbon atom, a silicone atom, a nitrogen atom, an oxygen atom, a sulfur atom or a phosphorus atom, X is a halogen atom, a hydrocarbon group (excluding the cyclopentadienyl type anion skeleton-carrying group) or $-OR^{11}$ ($R^{11}$ is a hydrocarbon group or a halogenated hydrocarbon group, and more than one $R^{11}$ may be the same or different from each other), a is a number satisfying $0 < a \leqq 8$, and b is a number satisfying $0 < b \leqq 8$.)
In the general formula [10], $M^2$ is a transition metal atom of the Groups 3 to 11 of the periodic table (IUPAC 1989) or lanthanoide series. Examples thereof are a scandium atom, an yttrium atom, a titanium atom, a zirconium atom, a hafnium atom, a vanadium atom, a niobium atom, a tantalum atom, a chromium atom, an iron atom, a ruthenium atom, a cobalt atom, a rhodium atom, a nickel atom, a palladium atom, a samarium atom and an ytterbium atom. Preferred as $M^2$ in the general formula [10] is a titanium atom, a zirconium atom, a hafnium atom, a vanadium atom, a chromium atom, an iron atom, a cobalt atom or a nickel atom, and particularly preferred is a titanium atom, a zirconium atom or a hafnium atom.
In the general formula [10], $L^2$ is a cyclopentadienyl type anion skeleton-carrying group or a hetero atom-containing group, and more than one $L^2$ may be the same or different from one another. Further, more than one $L^2$ may be linked directly or through a residual group containing a carbon atom, a silicone atom, a nitrogen atom, an oxygen atom, a sulfur atom or a phosphorus atom.
Examples of the cyclopentadienyl type anion skeleton-carrying group as $L^2$ are $\eta^5$-(substituted) cyclopentadienyl groups, $\eta^5$-(substituted)indenyl groups and $\eta^5$-(substituted) fluorenyl groups. Specific examples thereof are an $\eta^5$-cyclopentadienyl group, an $\eta^5$-methylcyclopentadienyl group, an $\eta^5$-ethylcyclopentadienyl group, an $\eta^5$-n-butylcyclopentadienyl group, an $\eta^5$-tert-butylcyclopentadienyl group, an $\eta^5$-1,2-dimethylcyclopentadienyl group, an $\eta^5$-1,3-dimethylcyclopentadienyl group, an $\eta^5$-1-methyl-2-ethylcyclopentadienyl group, an $\eta^5$-1-methyl-3-ethylcyclopentadienyl group, an $\eta^5$-1-tert-butyl-2-methylcyclopentadienyl group, an $\eta^5$-1-tert-butyl-3-methylcyclopentadienyl group, an $\eta^5$-1-methyl-2-isopropylcyclopentadienyl group, an $\eta^5$-1-methyl-3-isopropylcyclopentadienyl group, an $\eta^5$-1-methyl-2-n-butylcyclopentadienyl group,an $\eta^5$-1-methyl-3-n-butylcyclopentadienyl group, an $\eta^5$-1,2,3-trimethylcyclopentadienyl group, an $\eta^5$-1,2,4-trimethylcyclopentadienyl group, an $\eta^5$-tetramethylcyclopentadienyl group, an $\eta^5$-pentamethylcyclopentadienyl group, an $\eta^5$-indenyl group, an $\eta^5$-4,5,6,7-tetrahydroindenyl group, an $\eta^5$-2-methylindenyl group, an $\eta^5$-3-methylindenyl group, an $\eta^5$-4-methylindenyl group, an $\eta^5$-5-methylindenyl group, an $\eta^5$-6-methylindenyl group, an $\eta^5$-7-methylindenyl group, an $\eta^5$-2-tert-butylindenyl group, an $\eta^5$-3-tert-butylindenyl group, an $\eta^5$-4-tert-butylindenyl group, an $\eta^5$-5-tert-butylindenyl group, an $\eta^5$-6-tert-butylindenyl group, an $\eta^5$-7-tert-butylindenyl group, an $\eta^5$-2,3-dimethylindenyl group, an $\eta^5$-4,7-dimethylindenyl group, an $\eta^5$-2,4,7-trimethylindenyl group, an $\eta^5$-2-methyl-4-isopropylindenyl group, an $\eta^5$-4,5-benzindenyl group, an $\eta^5$-2-methyl-4,5-benzindenyl group, an $\eta^5$-4-phenylindenyl group, an $\eta^5$-2-methyl-5-phenylindenyl group, an $\eta^5$-2-methyl-4-phenylindenyl group, an $\eta^5$-2-methyl-4-naphthylindenyl group, an $\eta^5$-fluorenyl group, an $\eta^5$-2,7-dimethylfluorenyl group, an $\eta^5$-2,7-di-tert-butylfluorenyl group and their substitution compounds.
Incidentally, in the present specification, "$\eta^5$-" in the name of the transition metal compound may be omitted in some cases.
The hetero atom in the hetero atom-containing group includes an oxygen atom, a sulfur atom, a nitrogen atom and a phosphorus atom. Examples of such a group are preferably an alkoxy group, an aryloxy group, a thioalkoxy

group, a thioaryloxy group, an alkylamino group, an arylamino group, an alkylphosphino group, an arylphosphino group, a chelating ligand, and an aromatic or aliphatic heterocyclic group having an oxygen atom, a sulfur atom, a nitrogen atom and/or a phosphorus atom in the ring.

Specific examples of the hetero atom-containing group are a methoxy group, an ethoxy group, a propoxy group, a butoxy group, a phenoxy group, a 2-methylphenoxy group, a 2,6-dimethylphenoxy group, a 2,4,6-trimethylphenoxy group, a 2-ethylphenoxy group, a 4-n-propylphenoxy group, a 2-isopropylphenoxy group, a 2,6-diisopropylphenoxy group, a 4-sec-butylphenoxy group, a 4-tert-butylphenoxy group, a 2,6-di-sec-butylphenoxy group, a 2-tert-butyl-4-methylphenoxy group, a 2,6-di-tert-butylphenoxy group, a 4-methoxyphenoxy group, a 2,6-dimethoxyphenoxy group, a 3,5-dimethoxyphenoxy group, a 2-chlorophenoxy group, a 4-nitrosophenoxy group, a 4-nitrophenoxy group, a 2-aminophenoxy group, a 3-aminophenoxy group, a 4-aminothiophenoxy group, a 2,3,6-trichlorophenoxy group, a 2,4,6-trifluorophenoxy group, a thiomethoxy group, a dimethylamino group, a diethylamino group, a dipropylamino group, a diphenylamino group, an isopropylamino group, a tert-butylamino group, a pyrrolyl group, a dimethylphosphino group, a 2-(2-oxy-1-propyl)phenoxy group, catechol, resorcinol, 4-isopropylcatechol, 3-methoxycatechol, a 1,8-dihydroxynahpthyl group, a 1,2-dihydroxynahpthyl group, a 2,2'-biphenyldiol group, a 1,1'-bi-2-naphthol group, a 2,2'-dihydroxy-6,6'-dimethylbiphenyl group, a 4,4',6,6'-tetra-tert-butyl-2,2'-methylenediphenoxy group and a 4,4',6,6'-tetramethyl-2,2'- isobutylidenediphenoxy group.

Further, as the above-mentioned hetero atom-containing group, there is exemplified a group represented by the following general formula [11].

$$R^{12}{}_{3}P=N- \qquad [11]$$

(In the formula, respective $R^{12}$s are independently of one another a hydrogen atom, a halogen atom or a hydrocarbon group, and may be the same or different from one another, and two or more thereof may be bound with one another and may form a ring.)

Specific examples of $R^{12}$ in the above general formula [11] are a hydrogen atom, a fluorine atom, a chlorine atom, a bromine atom, an iodine atom, a methyl group, an ethyl group, a n-propyl group, an isopropyl group, a n-butyl group, a tert-butyl group, a cyclopropyl group, a cyclobutyl group, a cycloheptyl group, a cyclohexyl group, a phenyl group, a 1-naphthyl group, a 2-naphthyl group and a benzyl group, but are not limited thereto.

Furthermore, as the hetero atom-containing group, there is also exemplified a group represented by the following formula [12].

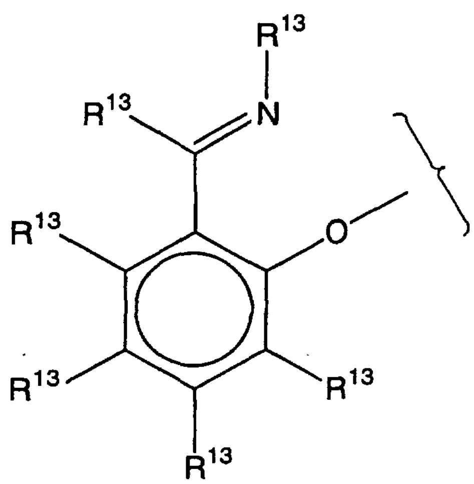

[12]

(In the formula, respective $R^{13}$s are independently of one another a hydrogen atom, a halogen atom, a hydrocarbon group, a halogenated hydrocarbon group, a hydrocarbyloxy group, a silyl group or an amino group, and may be the same or different from one another, and two or more thereof may be bound with one another and may form a ring.)

Specific examples of $R^{13}$ in the general formula [12] are a hydrogen atom, a fluorine atom, a chlorine atom, a bromine atom, an iodine atom, a phenyl group, a 1-naphthyl group, a 2-naphthyl group, a tert-butyl group, a 2,6-dimethylphenyl group, a 2-fluorenyl group, a 2-methylphenyl group, a 4-trifluoropmethylphenyl group, a 4-methoxyphenyl group, a 4-pyridyl group, a cyclohexyl group, a 2-isoprpylphenyl group, a benzyl group, a methyl group, a

triethylsilyl group, a diphenylmethylsilyl group, a 1-methyl-l-phenylethyl group, a 1,1-dimethylpropyl group, a 2-chlorophenyl group and a pentafluorophenyl group, but are not limited thereto.

The above-mentioned chelating ligand means a ligand having more than one coordinating position. Specific examples thereof are acetylacetonate, diimine, oxazoline, bisoxazoline, terpyridine, acylhydrazone, diethylenetriamine, triethylenetetramine, porphyrin, crown ether and cryptate.

Specific examples of the above-mentioned heterocyclic group are a pyridyl group, an N-substituted imidazolyl group and an N-substituted indazolyl group. Preferable is a pyridyl group.

Two cyclopentadienyl type anion skeleton-carrying groups, the cyclopentadienyl type anion skeleton-carrying group and the hetero atom-containing group, or two hetero atom-containing groups may be bound with each other directly or through a residual group containing a carbon atom, a silicone atom, a nitrogen atom, an oxygen atom, a sulfur atom or a phosphorus atom, respectively. As such a residual group, preferred is a divalent residual group in which an atom binding two $L^2$s is a carbon atom, a silicone atom, a nitrogen atom, an oxygen atom, a sulfur atom and/or a phosphorus atom. More preferred is a divalent residual group in which an atom binding two $L^2$s is a carbon atom, a silicone atom, a nitrogen atom, an oxygen atom, a sulfur atom and/or a phosphorus atom, provided that a minimum atom number of the atom binding two $L^2$s is not more than 3 (a case where the atom binding two $L^2$s is single is included). Specific examples thereof are alkylene groups such as a methylene group, an ethylene group and a propylene group, substituted alkylene groups such as a dimethylmethylene group (an isopropylidene group) and a diphenylmethylene group, a silylene group, a substituted silylene group such as a dimethylsilylene group, a diethylsilylene group, a diphenylsilylene group, a tetramethyldisilylene group and a dimethoxysilylene group, and a hetero atom such as a nitrogen atom, an oxygen atom, a sulfur atom and a phosphorus atom. Particularly preferred are a methylene group, an ethylene group, a dimethylmethylene group (an isopropylidene group), a diphenylmethylene group, a dimethylsilylene group, a diethylsilylene group, a diphenylsilylene group and a dimethoxysilylene group.

In the general formula [10], X is a halogen atom, a hydrocarbon group or $OR^{11}$. Particularly, $OR^{11}$ is preferable because of high polymerization activity.

Specific examples of the halogen atom are a fluorine atom, a chlorine atom, a bromine atom and an iodine atom. The hydrocarbon group stated here does not include the cyclopentadiene type anion skeleton-carrying group. Examples of the hydrocarbon group stated here are an alkyl group, an aralkyl group, an aryl group and an alkenyl group. Preferred are an alkyl group having 1 to 20 carbon atoms, an aralkyl group having 7 to 20 carbon atoms, an aryl group having 6 to 20 carbon atoms and an alkenyl group having 3 to 20 carbon atoms.

Examples of the alkyl group having 1 to 20 carbon atoms are a methyl group, an ethyl group, a n-propyl group, an isopropyl group, a n-butyl group, a sec-butyl group, a tert-butyl group, an isobutyl group, a n-pentyl group, a neopentyl group, an amyl group, a n-hexyl group, a n-octyl group, a n-decyl group, a n-dodecyl group, a n-pentadecyl group and a n-eicosyl group. More preferred are a methyl group, an ethyl group, an isopropyl group, a tert-butyl group, an isobutyl group and an amyl group.

All of these alkyl groups may be substituted with a halogen atom such as a fluorine atom, a chlorine atom, a bromine atom or an iodine atom. Examples of the alkyl group having 1 to 10 carbon atoms which is substituted with the halogen atom are a fluoromethyl group, a trifluoromethyl group, a chloromethyl group, a trichloromethyl group, a fluoroethyl group, a pentafluoroethyl group, a perfluoropropyl group, a perfluorobutyl group, a perfluorohexyl group, a perfluorooctyl group, a perchloropropyl group, a perchlorobutyl group and a perbromopropyl group.

Further, all of these alkyl groups may be partially substituted with an alkoxy group such as a methoxy group and an ethoxy group, an aryloxy group such as a phenoxy group or an aralkyloxy group such as a benzyloxy group.

Examples of the aralkyl group having 7 to 20 carbons are a benzyl group, a (2-methylphenyl)methyl group, a (3-methylphenyl)methyl group, a (4-methylphenyl)methyl group, a (2,3-dimethylphenyl)methyl group, a (2,4-dimethylphenyl)methyl group, a (2,5-dimethylphenyl)methyl group, a (2,6-dimethylphenyl)methyl group, a (3,4-dimethylphenyl)methyl group, a (3,5-dimethylphenyl)methyl group, a (2,3,4-timethylphenyl)methyl group, a (2,3,5-timethylphenyl) methyl group, a (2,3,6-timethylphenyl)methyl group, a (3,4,5-timethylphenyl)methyl group, a (2,4,6-timethylphenyl)methyl group, a (2,3,4,5-tetramethylphenyl)methyl group, a (2,3,4,6-tetramethylphenyl)methyl group, a (2,3,5,6-tetramethylphenyl)methyl group, a (pentamethylphenyl)methyl group, an (ethylphenyl) methyl group, a (n-propylphenyl)methyl group, an (isopropylphenyl)methyl group, a (n-butylphenyl)methyl group, a (sec-butylphenyl)methyl group, a (tert-butylphenyl)methyl group, a (n-pentylphenyl)methyl group, a (neopentylphenyl)methyl group, a(n-hexylphenyl)methyl group, a (n-octylphenyl)methyl group, (n-decylphenyl)methyl group, a (n-dodecylphenyl)methyl group, a naphthylmethyl group and an anthracenylmethyl group. More preferred is a benzyl group.

All of these aralkyl groups may be partially substituted with a halogen atom such as a fluorine atom, a chlorine atom, a bromine atom or an iodine atom, an alkoxy group such as a methoxy group or an ethoxy group, an aryloxy group such as a phenoxy group or an aralkyloxy group such as a benzyloxy group.

Examples of the aryl group having 6 to 20 carbon atoms are a phenyl group, a 2-tolyl group, a 3-tolyl group, a 4-tolyl group, a 2,3-xylyl group, a 2,4-xylyl group, a 2,5-xylyl group, a 2,6-xylyl group, a 3,4-xylyl group, a 3,5-xylyl group, a 2,3,4-trimethylphenyl group, a 2,3,5-trimethylphenyl group, a 2,3,6-trimethylphenyl group, a 2,4,6-trimethylphenyl group, a 3,4,5-trimethylphenyl group, a2,3,4,5-tetramethylphenyl group, a2,3,4,6-tetramethylphenyl group, a2,3,5,6-tetramethylphenyl group, a pentamethylphenyl group, an ethylphenyl group, a n-propylphenyl group, an isopropylphenyl group, an-butylphenyl group, a sec-butylphenyl group, a tert-butylphenyl group, a n-pentylphenyl group, a neopentylphenyl group, a n-hexylphenyl group, a n-octylphenyl group, a n-decylphenyl group, a n-dodecylphenyl group, a n-tetradecylphenyl group, a naphthyl group and an anthracenyl group. More preferred is a phenyl group.

All of these aryl groups may be partially substituted with a halogen atom such as a fluorine atom, a chlorine atom, a bromine atom or an iodine atom, an alkoxy group such as a methoxy group or an ethoxy group, an aryloxy group such as a phenoxy group or an aralkyloxy group such as a benzyloxy group.

Examples of the alkenyl group having 3 to 20 carbon atoms are an allyl group, a methallyl group, a crotyl group and a 1,3-diphenyl-2-propenyl group. More preferred are an allyl group and a methallyl group.

When X is a halogen atom or a hydrocarbon group, preferred X are a chlorine atom, a methy group, an ethyl group, a n-propyl group, an isopropyl group, a n-butyl group and a benzyl group.

In the general formula [10], a is a number satisfying $0 < a \leqq 8$, b is a number satisfying $0 < b \leqq 8$, and both are appropriately selected depending upon the valence of $M^2$.

While, $R^{11}$ in the $OR^{11}$ is a hydrocarbon group or a halogenated hydrocarbon group. Examples of the hydrocarbon group are an alkyl group, an aralkyl group and an aryl group. Preferred are an alkyl group having 1 to 20 carbon atoms, an aralkyl group having 7 to 20 carbon atoms and an aryl group having 6 to 20 carbon atoms. Specific examples thereof are the same as those mentioned above. Examples of the halogenated hydrocarbon group are a halogenated alkyl group, a halogenated aryl group and a halogenated aralkyl group. Preferred are a halogenated alkyl group having 1 to 20 carbon atoms, a halogenated aryl group having 6 to 20 carbon atoms and a halogenated aralkyl group having 7 to 20 carbon atoms.

Specific examples of the halogenated alkyl group are a fluoromethyl group, a difluoromethyl group, a trifluoromethyl group, a chloromethyl group, a dichloromethyl group, a trichloromethyl group, a bromomethyl group, a dibromomethyl group, a tribromomethyl group, an iodomethyl group, a diiodomethyl group, a triiodomethyl group, a fluoroethyl group, a difluoroethyl group, a trifluoroethyl group, a tetrafluoroethyl group, a pentafluoroethyl group, a chloroethyl group, a dichloroethyl group, a trichloroethyl group, a tetrachloroethyl group, a pentachloroethyl group, a bromoethyl group, a dibromoethyl group, a tribromoethyl group, a tetrabromoethyl group, a pentabromoethyl group, a perfluoropropyl group, a perfluorobutyl group, a perfluoropentyl group, a perfluorohexyl group, a perfluorooctyl group, a perfluorododecyl group, a perfluoropentadecyl group, a perfluoroeicosyl group, a perchloropropyl group, a perchlorobutyl group, a perchloropentyl group, a perchlorohexyl group, a perchlorooctyl group, a perchlorododecyl group, a perchloropentadecyl group, a perchloroeicosyl group, a perbromopropyl group, a perbromobutyl group, a perbromopentyl group, a perbromohexyl group, a perbromooctyl group, a perbromododecyl group, a perbromopentadecyl group and a perbromoeicosyl group.

Specific examples of the halogenated aryl group are a 2-fluorophenyl group, a 3-fluorophenyl group, a 4-fluorophenyl group, a 2,4-difluorophenyl group, a 2,6-difluorophenyl group, a 3,4-difluorophenyl group, a 3,5-difluorophenyl, a 3,4,5-trifluorophenyl group, a 2,4,6-trifluorophenyl group, a 2,3,5,6-tetrafluorophenyl group, a pentafluorophenyl group, a 2,3,5,6-tetrafluoro-4-trifluoromethylphenyl group, a 2,3,5,6-tetrafluoro-4-pentafluorophenylphenyl group, a perfluoro-1-naphthyl group, a perfluoro-2-naphthyl group, a 2-chlorophenyl group, a 3-chlorophenyl group, a 4-chlorophenyl group, a 2,4-dichlorophenyl group, a 2,6-dichlorophenyl group, a 3,4-dichlorophenyl group, a 3,5-dichlorophenyl, a 2,4,6-trichlororophenyl group, a 2,3,5,6-tetrachlorophenyl group, a pentachlorophenyl group, a 2,3,5,6-tetrachloro-4-trichloromethylphenyl group, a 2,3,5,6-tetrachloro-4-pentachlorophenylphenyl group, a perchloro-1-naphthyl group, a perchloro-2-naphthyl group, a 2-bromophenyl group, a 3-bromophenyl group, a 4-bromophenyl group, a 2,4-dibromophenyl group, a 2,6-dibromophenyl group, a 3,4-dibromophenyl group, a 3,5-dibromophenyl, a 2,4,6-tribromophenyl group, a 2,3,5,6-tetrabromophenyl group, a pentabromophenyl group, a 2,3,5,6-tetrabromo-4-tribromomethylphenyl group, a 2.3,5,6-tetrabromo-4-pentabromophenylphenyl group, a perbromo-1-naphthyl group, a perbromo-2-naphthyl group, a 2-iodophenyl group, a 3-iodophenyl group, a 4 - iodophenyl group, a 2,4-diiodophenyl group, a 2,6-diiodophenyl group, a 3,4-diiodophenyl group, a 3,5-diiodophenyl, a 2,4,6-triiodophenyl group, a 2,3,5,6-tetraiodophenyl group, a pentaiodophenyl group, a 2,3,5,6-tetraiodo-4-triiodomethylphenyl group, a 2,3,5,6-tetraiodo-4-pentaiodophenylphenyl group, a periodo-1-naphthyl group and a periodo-2-naphthyl group.

Examples of the halogenated aralkyl group are a tris(pentafluorophenyl)methyl group and bis(trifluoromethyl) phenylmethyl group.

As $R^{11}$, particularly preferred are a methyl group, an ethyl group, an isopropyl group, a tert-butyl group, an isobutyl group, a trifluoromethyl group, a perfluorobutyl group, a phenyl group, a 2,6-di(tert-butyl)phenyl group, a pentafluorophenyl group, a 2,3,5,6-tetrafluoro-4-pentafluorophenylphenyl group and a benzyl group. As $R^{11}$, particularly preferred are a methyl group, a phenyl group, a 2,6-di(tert-butyl)phenyl group, a pentafluorophenyl group and a benzyl group, and the most preferred is a phenyl group.

In the transition metal compound represented by the general formula [10], specific examples of those having a titanium atom, a zirconium atom or a hafnium metal as the transition metal atom are bis(cyclopentadienyl)titanium

dichloride, bis(methylcyclopentadienyl)titanium dichloride, bis(ethylcyclopentadienyl)titanium dichloride, bis(n-butylcyclopentadienyl)titanium dichloride, bis(tert-butylcyclopentadienyl)titanium dichloride, bis(1,2-dimethylcyclopentadienyl)titanium dichloride, bis(1,3-dimethylcyclopentadienyl)titanium dichloride, bis(1-methyl-2-ethylcyclopentadienyl)titanium dichloride, bis(1-methyl-3-ethylcyclopentadienyl)titanium dichloride, bis(1-methyl-2-n-butylcyclopentadienyl)titanium dichloride, bis(1-methyl-3-n-butylcyclopentadienyl)titanium dichloride, bis(1-methyl-2-isopropylcyclopentadienyl)titanium dichloride, bis(1-methyl-3-isopropylcyclopentadienyl)titanium dichloride, bis(1-tert-butyl-2-methylcyclopentadienyl)titanium dichloride, bis(1-tert-butyl-3-methylcyclopentadienyl)titanium dichloride, bis(1,2,3-trimethylcyclopentadienyl)titanium dichloride, bis(1,2,4-trimethylcyclopentadienyl)titanium dichloride, bis(tetramethylcyclopentadienyl)titanium dichloride, bis(pentamethylcyclopentadienyl)titanium dichloride, bis(indenyl)titanium dichloride, bis (4,5,6,7-tetrahydroindenyl)titanium dichloride, bis(fluorenyl)titanium dichloride, bis(2-phenyindenyl)titanium dichloride, bis[2-(bis-3,5-trifluoromethylphenyl)indenyl]titanium dichloride, bis[2-(4-tert-butylphenyl)indenyl]titanium dichloride, bis[2-(4-trifluoromethylphenyl)indenyl]titanium dichloride, bis[2-(4-methyphenyl)indenyl]titanium dichloride, bis [2-(3,5-dimethylphenyl)indenyl]titanium dichloride, bis[2-(pentafluorophenyl)indenyl]titanium dichloride, cyclopentadienyl(pentamethylcyclopentadienyl)titanium dichloride, cyclopentadienyl(indenyl)titanium dichloride, cyclopentadienyl (fluorenyl)titanium dichloride, indenyl(fluorenyl)titanium dichloride, pentamethylcyclopentadienyl(indenyl)titanium dichloride, pentamethylcyclopentadienyl(fluorenyl)titanium dichloride, cyclopentadienyl(2-phenylindenyl)titanium dichloride, pentamethylcyclopentadienyl(2-phenylindenyl)titanium dichloride, dimethylsilylenebis(cyclopentadienyl)titanium dichloride, dimethylsilylenebis(2-methylcyclopentadienyl)titanium dichloride, dimethylsilylenebis(3-methylcyclopentadienyl) titanium dichloride, dimethylsilylenebis(2-n-butylcyclopentadienyl)titanium dichloride, dimethylsilylenebis(3-n-butylcyclopentadienyl) titanium dichloride, dimethylsilylenebis(2,3-dimethylcyclopentadienyl)titanium dichloride, dimethylsilylenebis(2,4-dimethylcyclopentadienyl) titanium dichloride, dimethylsilylenebis(2,5-dimethylcyclopentadienyl)titanium dichloride, dimethylsilylenebis(3,4-dimethylcyclopentadienyl) titanium dichloride, dimethylsilylenebis(2,3-ethylmethylcyclopentadienyl)titaniu m dichloride, dimethylsilylenebis(2,4-ethylmethylcyclopentadienyl)titaniu m dichloride, dimethylsilylenebis(2,5-ethylmethylcyclopentadienyl)titaniu m dichloride, dimethylsilylenebis (3,5-ethylmethylcyclopentadienyl)titaniu m dichloride, dimethylsilylenebis(2,3,4-trimethylcyclopentadienyl)titaniu m dichloride, dimethylsilylenebis(2,3,5-trimethylcyclopentadienyl)titaniu m dichloride, dimethylsilylenebis(tetramethylcyclopentadienyl)titanium dichioride, dimethylsilylenebis(indenyl) titanium dichioride, dimethylsilylenebis(2-methylindenyl)titanium dichloride, dimethylsilylenebis(2-tert-butylindenyl)titanium dichloride, dimethylsilylenebis(2,3-dimethylindenyl)titanium dichloride, dimethylsilylenebis(2,4,7-trimethylindenyl)titanium dichloride, dimethylsilylenebis(2-methyl-4-isopropylindenyl)titanium dichloride, dimethylsilylenebis(4,5-benzindenyl)titanium dichloride, dimethylsilylenebis (2-methyl-4,5-benzindenyl)titanium dichloride, dimethylsilylenebis(2-phenylindenyl)titanium dichloride, dimethylsilylenebis(4-phenylindenyl)titanium dichloride, dimethylsilylenebis(2-methyl-4-phenylindenyl)titanium dichloride, dimethylsilylenebis(2-methyl-5-phenylindenyl)titanium dichloride, dimethylsilylenebis(2-methyl-4-naphthylindenyl)titanium dichloride, dimethylsilylenebis(4,5,6,7-tetrahydroindenyl)titanium dichloride, dimethylsilylene(cyclopentadienyl) (indenyl)titanium dichloride, dimethylsilylene(methylcyclopentadienyl) (indenyl)titanium dichloride, dimethylsilylene(n-butylcyclopentadienyl)(indenyl)titanium dichloride, dimethylsilylene(tetramethylcyclopentadienyl) (indenyl)titanium dichloride, dimethylsilylene (cyclopentadienyl)(fluorenyl)titanium dichloride, dimethylsilylene(methylcyclopentadienyl) (fluorenyl)titanium dichloride, dimethylsilylene(n-butylcyclopentadienyl)(fluorenyl)titaniu m dichloride, dimethylsilylene (tetramethylcyclopentadienyl) (indenyl)titanium dichloride, dimethylsilylene(indenyl)(fluorenyl)titanium dichloride, dimethylsilylenebis(fluorenyl)titanium dichloride, dimethylsilylene(cyclopentadienyl)(tetramethylcyclopentadie nyl)titanium dichloride, dimethylsilylene(tetramethylcyclopentadienyl) (fluorenyl)titanium dichloride, cyclopentadienyltitanium trichloride, pentamethylcyclopentadienyltitanium trichloride. cyclopentadienyl(dimethylamido)titanium dichloride, cyclopentadienyl(phenoxy)titanium dichloride, cyclopentadienyl(2,6-dimethylphenyl)titanium dichloride, cyclopentadienyl(2,6-diisopropylphenyl)titanium dichloride, cyclopentadienyl(2,6-di-tert-butylphenyl)titanium dichloride, pentamethylcyclopentadienyl(2,6-dimethylphenyl)titanium dichloride. pentamethylcyclopentadienyl(2,6-diisopropylphenyl)titanium dichloride, pentamethylcyclopentadienyl(2,6-tert-butylphenyl)titanium dichloride, indenyl(2,6-diisopropylphenyl) titanium dichloride, fluorenyl(2,6-diisopropylphenyl)titanium dichloride, dimethylsilylene(cyclopentadienyl)(2-phenoxy) titanium dichloride, dimethylsilylene(cyclopentadienyl)(3-methyl-2-phenoxy)titan ium dichloride, dimethylsilylene(cyclopentadienyl)(3,5-dimethyl-2-phenoxy)t itanium dichloride, dimethylsilylene(cyclopentadienyl)(3-tert-butyl-2-phenoxy)t itanium dichloride, dimethylsilylene(cyclopentadienyl)(3-tert-butyl-5-methyl-2-phenoxy)titanium dichloride, dimethylsilylene(cyclopentadienyl)(3,5-di-tert-butyl-2-phen oxy)titanium dichloride, dimethylsilylene(cyclopentadienyl) (5-methyl-3-phenyl-2-phen oxy)titanium dichloride, dimethylsilylene(cyclopentadienyl)(3-tert-butyldimethylsily 1-5-methyl-2-phenoxy)titanium dichloride, dimethylsilylene(cyclopentadienyl)(5-methyl-3-trimethylsily 1-2-phenoxy)titanium dichloride, dimethylsilylene(cyclopentadienyl)(3-tert-butyl-5-methoxy-2 -phenoxy)titanium dichloride, dimethylsilylene (cyclopentadienyl)(3-tert-butyl-5-chloro-2-phenoxy)titanium dichloride, dimethylsilylene(cyclopentadienyl)(3,5-diamyl-2-phenoxy)tit anium dichloride, dimethylsilylene(cyclopentadienyl)(3-phenyl-2-phenoxy)titan ium dichloride, dimethylsilylene(cyclopentadienyl)(1-naphthox-2-yl)titanium dichloride, dimethylsilylene(methylcyclopentadienyl)(2-phenoxy) titanium dichloride, dimethylsilylene(methylcyclopentadienyl)(3-methyl-2-phenoxy )titanium dichloride, dimethylsilylene(methylcyclopentadienyl)(3,5-dimethyl-2-phe noxy)titanium dichloride, dimethylsilylene(methylcyclopentadienyl) (3-tert-butyl-2-phe noxy)titanium dichloride, dimethylsilylene(methylcyclopentadienyl)(3-tert-butyl-5-met hyl-2-phenoxy)titanium dichloride, dimethylsilylene(methylcyclopentadienyl)(3,5-di-tert-butyl-2-phenoxy)titanium dichloride, dimethylsilylene(methylcyclopentadienyl)(5-methyl-3-phenyl-2-phenoxy)titanium dichloride, dimethylsilylene(methylcyclopentadienyl)(3-tert-butyldimeth ylsilyl-5-methyl-2-phenoxy)titanium dichloride, dimethylsilylene(methylcyclopentadienyl)(5-methyl-3-trimeth ylsilyl-2-phenoxy)titanium dichloride, dimethylsilylene(methylcyclopentadienyl)(3-tert-butyl-5-met hoxy-2-phenoxy)titanium dichloride, dimethylsilylene(methylcyclopentadienyl)(3-tert-butyl-5-chl oro-2-phenoxy)titanium dichloride, dimethylsilylene(methylcyclopentadienyl)(3,5-diamyl-2-pheno xy)titanium dichloride, dimethylsilylene(methylcyclopentadienyl)(3-phenyl-2-phenoxy )titanium dichloride, dimethylsilylene(methylcyclopentadienyl)(1-naphthox-2-yl)ti tanium dichloride, dimethylsilylene(n-butylcyclopentadienyl)(2-phenoxy)titaniu m dichloride, dimethylsilylene(n-butylcyclopentadienyl)(3-methyl-2-phenox y)titanium dichloride, dimethylsilylene(n-butylcyclopentadienyl)(3,5-dimethyl-2-ph enoxy)titanium dichloride, dimethylsilylene(n-butylcyclopentadienyl)(3-tert-butyl-2-ph enoxy)titanium dichloride, dimethylsilylene(n-butylcyclopentadienyl)(3-tert-butyl-5-me thyl-2-phenoxy)titanium dichloride, dimethylsilylene(n-butylcyclopentadienyl)(3,5-di-tert-butyl -2-phenoxy)titanium dichloride, dimethylsilylene (n-butylcyclopentadienyl)(5-methyl-3-phenyl -2-phenoxy)titanium dichloride, dimethylsilylene(n-butylcyclopentadienyl)(3-tert-butyldimet hylsilyl-5-methyl-2-phenoxy)titanium dichloride, dimethylsilylene(n-butylcyclopentadienyl) (5-methyl-3-trimet hylsilyl-2-phenoxy)titanium dichloride, dimethylsilylene(n-butylcyclopentadienyl)(3-tert-butyl-5-me thoxy-2-phenoxy)titanium dichloride, dimethylsilylene(n-butylcyclopentadienyl)(3-tert-butyl-5-ch loro-2-phenoxy)titanium dichloride, dimethylsilylene(n-butylcyclopentadienyl)(3,5-diamyl-2-phen oxy)titanium dichloride, dimethylsilylene (n-butylcyclopentadienyl)(3-phenyl-2-phenox y)titanium dichloride, dimethylsilylene(n -butylcyclopentadienyl)(1-naphthox-2-yl)titanium dichloride, dimethylsilylene(tert-butylcyclopentadienyl)(2-phenoxy)tita nium dichloride, dimethylsilylene(tert-butylcyclopentadienyl)(3-methyl-2-phe noxy)titanium dichloride, dimethylsilylene(tert-butylcyclopentadienyl)(3,5-dimethyl-2 -phenoxy)titanium dichloride, dimethylsilylene(tert-butylcyclopentadienyl)(3-tert-butyl-2 -phenoxy)titanium dichloride, dimethylsilylene(tert-butylcyclopentadienyl)(3-tert-butyl-5 -methyl-2-phenoxy)titanium dichloride, dimethylsilylene(tert-butylcyclopentadienyl)(3,5-di-tert-bu tyl-2-phenoxy)titanium dichloride, dimethylsilylene(tert-butylcyclopentadienyl)(5-methyl-3-phe nyl-2-phenoxy)titanium dichloride, dimethylsilylene(tert-butylcyclopentadienyl) (3-tert-butyldi methylsilyl-5-methyl-2-phenoxy)titanium dichloride, dimethylsilylene(tert-butylcyclopentadienyl)(5-methyl-3-tri methylsilyl-2-phenoxy)titanium dichloride, dimethylsilylene(tert-butylcyclopentadienyl)(3-tert-butyl-5 -methoxy-2-phenoxy)titanium dichloride, dimethylsilylene(tert-butylcyclopentadienyl)(3-tert-butyl-5 -chloro-2-phenoxy)titanium dichloride, dimethylsilylene(tert-butylcyclopentadienyl)(3,5-diamyl-2-p henoxy)titanium dichloride, dimethylsilylene (tertmethylcyclopentadienyl)(3-phenyl-2-phe noxy)titanium dichloride, dimethylsilylene(tertmethylcyclopentadienyl) (1-naphthox-2-y l)titanium dichloride, dimethylsilylene(tetramethylcyclopentadienyl)(2-phenoxy)tit anium dichloride, dimethylsilylene(tetramethylcyclopentadienyl)(3-methyl-2-ph enoxy)titanium dichloride, dimethylsilylene(tetramethylcyclopentadienyl)(3,5-dimethyl-2-phenoxy)titanium dichloride, dimethylsilylene(tetramethylcyclopentadienyl)(3-tert-butyl-2-phenoxy)titanium dichloride, dimethylsilylene(tetramethylcyclopentadienyl)(3-tert-butyl-5-methyl-2-phenoxy) titanium dichloride, dimethylsilylene(tetramethylcyclopentadienyl)(3,5-di-tert-b utyl-2-phenoxy)titanium dichloride, dimethylsilylene(tetramethylcyclopentadienyl)(5-methyl-3-ph enyl-2-phenoxy)titanium dichloride, dimethylsilylene(tetramethylcyclopentadienyl)(3-tert-butyld imethylsilyl-5-methyl-2-phenoxy)titanium dichloride, dimethylsilylene(tetramethylcyclopentadienyl)(5-methyl-3-tr imethylsilyl-2-phenoxy)titanium dichloride, dimethylsilylene(tetramethylcyclopentadienyl)(3-tert-butyl-5-methoxy-2-phenoxy)titanium dichloride, dimethylsilylene(tetramethylcyclopentadienyl)(3-tert-butyl-5-chloro-2-phenoxy)titanium dichloride, dimethylsilylene(tetramethylcyclopentadienyl)(3,5-diamyl-2-phenoxy)titanium dichloride, dimethylsilylene(tetramethylcyclopentadienyl)(3-phenyl-2-ph enoxy)titanium dichloride, dimethylsilylene(tetramethylcyclopentadienyl)(1-naphthoxy-2 -yl)titanium dichloride, dimethylsilylene(trimethylsilylcyclopentadienyl)(2-phenoxy) titanium dichloride, dimethylsilylene(trimethylsilylcyclopentadienyl)(3-methyl-2 -phenoxy)titanium dichloride, dimethylsilylene(trimethylsilylcyclopentadienyl)(3,5-dimeth yl-2-phenoxy)titanium dichloride, dimethylsilylene(trimethylsilylcyclopentadienyl)(3-tert-but yl-2-phenoxy)titanium dichloride, dimethylsilylene(trimethylsilylcyclopentadienyl)(3-tert-but yl-5-methyl-2-phenoxy)titanium dichloride, dimethylsilylene(trimethylsilylcyclopentadienyl) (3,5-di-ter t-butyl-2-phenoxy)titanium dichloride, dimethylsilylene(trimethylsilylcyclopentadienyl)(5-methyl-3 -phenyl-2-phenoxy)titanium dichloride, dimethylsilylene(trimethylsilylcyclopentadienyl)(3-tert-but yldimethylsilyl-5-methyl-2-phenoxy)titanium dichloride, dimethylsilylene(trimethylsilylcyclopentadienyl)(5-methyl-3 -trimethylsilyl-2-phenoxy)titanium dichloride, dimethylsilylene(trimethylsilylcyclopentadienyl)(3-tert-but yl-5-methoxy-2-phenoxy)titanium dichloride, dimethylsilylene(trimethylsilylcyclopentadienyl)(3-tert-but yl-5-chloro-2-phenoxy)titanium dichloride, dimethylsilylene(trimethylsilylcyclopentadienyl)(3,5-diamyl -2-phenoxy)titanium dichloride, dimethylsilylene(trimethylsilylcyclopentadienyl)(3-phenyl-2 -phenoxy)titanium dichloride, dimethylsilylene(trimethylsilylcyclopentadienyl)(1-naphthox - 2-yl)titanium dichloride, dimethylsilylene(indenyl)(2-phenoxy)titanium dichloride, dimethylsilylene(indenyl)(3-methyl-2-phenoxy)titanium dichloride, dimethylsilylene(indenyl)(3,5-dimethyl-2-phenoxy)titanium dichloride, dimethylsilylene (indenyl)(3-tert-butyl-2-phenoxy)titanium dichloride, dimethylsilylene(indenyl)(3-tert-butyl-5-methyl-2-phenoxy)t itanium dichloride, dimethylsilylene(indenyl)(3,5-di-tert-butyl-2-phenoxy)titan ium dichloride, dimethylsilylene(indenyl)(5-methyl-3-phenyl-2-phenoxy)titan ium dichloride, dimethylsilylene(indenyl)(3-tert-butyldimethylsilyl-5-methy 1-2-phenoxy)titanium dichloride, dimethylsilylene(indenyl)(5-methyl-3-trimethylsilyl-2-pheno xy)titanium dichloride, dimethylsilylene(indenyl)(3-tert-butyl-5-methoxy-2-phenoxy) titanium dichloride, dimethylsilylene(indenyl)(3-tert-butyl-5-chloro-2-phenoxy)t itanium dichloride, dimethylsilylene(indenyl)(3,5-diamyl-2-phenoxy)titanium dichloride, dimethylsilylene(indenyl)(3-phenyl-2-phenoxy)titanium dichloride, dimethylsilylene(indenyl)(1-naphthox-2-yl)titanium dichloride, dimethylsilylene(fluorenyl)(2-phenoxy)titanium dichloride, dimethylsilylene(fluorenyl)(3-methyl-2-phenoxy)titanium dichloride, dimethylsilylene(fluorenyl)(3,5-dimethyl-2-phenoxy)titanium dichloride, dimethylsilylene(fluorenyl)(3-tert-butyl-2-phenoxy)titanium dichloride, dimethylsilylene(fluorenyl)(3-tert-butyl-5-methyl-2-phenoxy )titanium dichloride, dimethylsilylene(fluorenyl)(3,5-di-tert-butyl-2-phenoxy)tit anium dichloride. dimethylsilylene(fluorenyl)(5-methyl-3-phenyl-2-phenoxy)tit anium dichloride, dimethylsilylene(fluorenyl)(3-tert-butyldimethylsilyl-5-met hyl-2-phenoxy)titanium dichloride, dimethylsilylene(fluorenyl)(5-methyl-3-trimethylsilyl-2-phe noxy)titanium dichloride, dimethylsilylene(fluorenyl)(3-tert-butyl-5-methoxy-2-phenox y)titanium dichloride, dimethylsilylene(fluorenyl)(3-tert-butyl-5-chloro-2-phenoxy )titanium dichloride, dimethylsilylene(fluorenyl)(3,5-diamyl-2-phenoxy)titanium dichloride, dimethylsilylene(fluorenyl)(3-phenyl-2-phenoxy)titanium dichloride, dimethylsilylene(fluorenyl)(1-naphthox-2-yl)titanium dichloride, (tert-butylamido)tetramethylcyclopentadienyl-1,2-ethanediyl titanium dichloride, (methylamido)tetramethylcyclopentadienyl-1,2-ethanediyltita nium dichloride, (ethylamido)tetramethylcyclopentadienyl-1,2-ethanediyltitan ium dichloride, (tert-butylamido)tetramethylcyclopentadienyl-dimethylsilane titanium dichloride, (benzylamido)tetramethylcyclopentadienyl-dimethylsilane titanium dichloride, (phenylphosphido)tetramethylcyclopentadienyl-dimethylsilane titanium dichloride,(tert-butylamido)indenyl-1,2-ethanediyl titanium dichloride, (tert-butylamido)tetrahydroindenyl-1,2-ethanediyl titanium dichloride, (tert-butylamido)fluorenyl-1,2-ethanediyl titanium dichloride, (tert-butylamido)indenyldimethylsilane titanium dichloride, (tert-butylamido)tetrahydroindenyldimethylsilane titanium dichloride, (tert-butylamido)fluorenyldimethylsilane titanium dichloride, (dimethylaminomethyl)tetramethylcyclopentadienyl titanium(III) dichloride, (dimethylaminoethyl)tetramethylcyclopentadienyl titanium(III) dichloride, (dimethylaminopropyl)tetramethylcyclopentadienyl titanium(III) dichloride, (N-pyrrolidinylethyl)tetramethylcyclopentadienyl titanium dichloride, (B-dimethylaminoborabenzene)cyclopentadienyl titanium dichloride, cyclopentadienyl(9-mesitylboraanthracenyl)titanium dichloride, 2,2'-thiobis[4-methyl-6-tert-butylphenoxy]titanium dichloride, 2,2'-thiobis[4-methyl-6-(1-methylethyl)phenoxy]titanium dichloride, 2,2'-thiobis[4,6-dimethylphenoxy]titanium dichloride, 2,2'-thiobis(4-methyl-6-tert-butylphenoxy)titanium dichloride, 2,2'-methylenebis(4-methyl-6-tert-butylphenoxy)titanium dichloride, 2,2'-ethylenebis(4-methyl-6-tert-butylphenoxy)titanium dichloride, 2,2'-sulfinylbis(4-methyl-6-tert-butylphenoxy)titanium dichloride, 2,2'-(4,4',6,6'-tetra-tert-butyl-1,1'-biphenoxy)titanium dichloride, (di-tert-butyl-1,3-propanediamido)titanium dichloride, (dicyclohexyl-1,3-propanediamido)titanium dichloride, [bis(trimethylsilyl)-1,3-propanediamido]titanium dichloride, [bis(tert-butyldimethylsilyl)-1,3-propanediamido]titanium dichloride, [bis(2,6-dimethylphenyl)-1,3-propanediamido]titanium dichloride, [bis(2,6-diisopropylphenyl)-1,3-propanediamido]titanium dichloride, [bis(2,6-di-tert-butylphenyl)-1,3-propanediamido]titanium dichloride, [bis(triisopropylsilyl)naphthalenediamido]titanium dichloride, [bis(trimethylsilyl)naphthalenediamido]titanium dichloride, [bis(tert-butyldimethylsilyl)naphthalenediamido]titanium dichloride, [hydrotris(3,5-dimethylpyrazolyl)borate]titanium trichloride, [hydrotris(3,5-diethylpyrazolyl)borate]titanium trichloride, [hydrotris(3,5-di-tert-butylpyrazolyl)borate]titanium trichloride, [tris(3,5-dimethylpyrazolyl)methyl]titanium trichloride, [tris(3,5-diethylpyrazolyl)methyl]titanium trichloride, [tris(3,5-di-tert-butylpyrazolyl)methyl]titanium trichloride, and those formed by replacing the titanium of these compounds with zirconium or hafnium, those formed by replacing the 2-phenoxy of these compounds with (3-phenyl-2-phenoxy), (3-trimethylsilyl-2-phenoxy) or (3-tert-butyldimethylsilyl-2-phenoxy), those formed by replacing the dimethylsilylene of these compounds with methylene, ethylene, dimethylmethylene (isoprpylidene), diphenylmethylene, diethylsilylene, diphenylsilylene or dimethoxysilylene, those formed by replacing the dichloride of these compounds with difluoride, dibromide, diiodide, dimethyl, diethyl, diisopropyl, diphenyl, dibenzyl, dimethoxide, diethoxide, di-n-propoxide, diisopropoxide, di-n-butoxide, diisobutoxide, di-tert-butoxide, diphenoxide, di(pentafluorophenoxide) or di(2,6-di-tert-butylphenoxide), and those formed by replacing the trichloride with trifluoride, tribromide, triiodide, trimethyl, triethyl, triisopropyl, triphenyl, tribenzyl, trimethoxide, triethoxide, tri-n-propoxide, triisopropoxide, tri-n-butoxide, triisobutoxide, tri-tert-butoxide, triphenoxide, tri(pentafluorophenoxide) or tri(2,6-di-tert-butylphenoxide).

In the transition metal compounds represented by the general formula [10], specific examples of a compound having a nickel atom as a transition metal atom are

2,2'-methylenebis[(4R)-4-phenyl-5,5'-dimethyloxazoline]nick el dibromide, 2,2'-methylenebis[(4R)-4-phenyl-5,5'-diethyloxazoline]nicke 1 dibromide, 2,2'-methylenebis[(4R)-4-phenyl-5,5'-di-n-propyloxazoline]n ickel dibromide, 2,2'-methylenebis[(4R)-4-phenyl-5,5'-diisopropyloxazoline]n ickel dibromide, 2,2'-methylenebis[(4R)-4-phenyl-5,5'-dicyclohexyloxazoline] nickel dibromide, 2,2'-methylenebis[(4R)-4-phenyl-5,5'-dimethoxyoxazoline]nic kel dibromide, 2,2'-methylenebis[(4R)-4-phenyl-5,5'-diethoxyoxazoline]nick el dibromide, 2,2'-methylenebis[(4R)-4-phenyl-5,5'-diphenyloxazoline]nick el dibromide, 2,2'-methylenebis[(4R)-4-methyl-5,5-di-(2-methylphenyl)oxaz oline]nickel dibromide, 2,2'-methylenebis[(4R)-4-methyl-5,5-di-(3-methylphenyl)oxaz oline]nickel dibromide, 2,2'-methylenebis[(4R)-4-methyl-5,5-di-(4-methylphenyl)oxaz oline]nickel dibromide, 2,2'-methylenebis[(4R)-4-methyl-5,5-di-(2-methoxyphenyl)oxa zoline]nickel dibromide, 2,2'-methylenebis[(4R)-4-methyl-5,5-di-(3-methoxyphenyl)oxa zoline]nickel dibromide, 2,2'-methylenebis[(4R)-4-methyl-5,5-di-(4-methoxyphenyl)oxa zoline]nickel dibromide, 2,2'-methylenebis[spiro{(4R)-4-methyloxazoline-5,1'-cyclobu tane}]nickel dibromide, 2,2'-methylenebis[spiro{(4R)-4-methyloxazoline-5,1'-cyclope ntane}]nickel dibromide, 2,2'-methylenebis[spiro{(4R)-4-methyloxazoline-5,1'-cyclohe xane}]nickel dibromide, 2,2'-methylenebis[spiro{(4R)-4-methyloxazoline-5,1'-cyclohe ptane}]nickel dibromide, 2,2'-methylenebis[(4R)-4-isopropyl-5,5-dimethyloxazoline]ni ckel dibromide, 2,2'-methylenebis[(4R)-4-isopropyl-5,5-diethyloxazoline]nic kel dibromide, 2,2'-methylenebis[(4R)-4-isopropyl-5,5-di-n-propyloxazoline ]nickel dibromide, 2,2'-methylenebis[(4R)-4-isopropyl-5,5-diisopropyloxazoline ]nickel dibromide, 2,2'-methylenebis[(4R)-4-isopropyl-5,5-dicyclohexyloxazolin e]nickel dibromide, 2,2'-methylenebis[(4R)-4-isopropyl-5,5-diphenyloxazoline]ni ckel dibromide, 2,2'-methylenebis[(4R)-4-isopropyl-5,5-di-(2-methylphenyl)o xazoline]nickel dibromide, 2,2'-methylenebis[(4R)-4-isopropyl-5,5-di-(3-methylphenyl)o xazoline]nickel dibromide, 2,2'-methylenebis[(4R)-4-isopropyl-5,5-di-(4-methylphenyl)o xazoline]nickel dibromide, 2,2'-methylenebis[(4R)-4-isopropyl-5,5-di-(2-methoxyphenyl) oxazoline]nickel dibromide, 2,2'-methylenebis[(4R)-4-isopropyl-5,5-di-(3-methoxyphenyl) oxazoline]nickel dibromide, 2,2'-methylenebis[(4R)-4-isopropyl-5,5-di-(4-methoxyphenyl) oxazoline]nickel dibromide, 2,2'-methylenebis[spiro{(4R)-4-isopropyloxazoline-5,1'-cycl obutane}]nickel dibromide, 2,2'-methylenebis[spiro{(4R)-4-isopropyloxazoline-5,1'-cycl opentane}]nickel dibromide, 2,2'-methylenebis[spiro{(4R)-4-isopropyloxazoline-5,1'-cycl ohexane}]nickel dibromide, 2,2'-methylenebis[spiro{(4R)-4-isopropyloxazoline-5,1'-cycl oheptane}]nickel dibromide, 2,2'-methylenebis[(4R)-4-isobutyl-5,5-dimethyloxazoline] nic kel dibromide, 2,2'-methylenebis[(4R)-4-isobutyl-5,5-diethyloxazoline]nick el dibromide, 2,2'-methylenebis[(4R)-4-isobutyl-5,5-di-n-propyloxazoline] nickel dibromide, 2,2'-methylenebis[(4R)-4-isobutyl-5,5-diisopropyloxazoline] nickel dibromide, 2,2'-methylenebis[(4R)-4-isobutyl-5,5-dicyclohexyloxazoline ]nickel dibromide, 2,2'-methylenebis[(4R)-4-isobutyl-5,5-diphenyloxazoline]nic kel dibromide, 2,2'-methylenebis[(4R)-4-isobutyl-5,5-di-(2-methylphenyl) ox azoline]nickel dibromide, 2,2'-methylenebis[(4R)-4-isobutyl-5,5-di-(3-methylphenyl)ox azoline]nickel dibromide, 2,2'-methylenebis[(4R)-4-isobutyl-5,5-di-(4-methylphenyl)ox azoline]nickel dibromide, 2,2'-methylenebis[(4R)-4-isobutyl-5,5-di-(2-methoxyphenyl)o xazoline]nickel dibromide, 2,2'-methylenebis[(4R)-4-isobutyl-5,5-di-(3-methoxyphenyl)o xazoline]nickel dibromide, 2,2'-methylenebis[(4R)-4-isobutyl-5,5-di-(4-methoxyphenyl)o xazoline]nickel dibromide, 2,2'-methylenebis(spiro{(4R)-4-isobutyloxazoline-5,1'-cyclo butane}]nickel dibromide, 2,2'-methylenebis [spiro{(4R)-4-isobutyloxazoline-5,1'-cyclo pentane}]nickel dibromide, 2,2'-methylenebis[spiro{(4R)-4-isobutyloxazoline-5,1'-cyclo hexane}]nickel dibromide, 2,2'-methylenebis[spiro{(4R)-4-isobutyloxazoline-5,1'-cyclo heptane}]nickel dibromide, 2,2'-methylenebis[(4R)-4-tert-butyl-5,5-dimethyloxazoline]n ickel dibromide, 2,2'-methylenebis[(4R)-4-tert-butyl-5,5-diethyloxazoline]ni ckel dibromide, 2,2'-methylenebis[(4R)-4-tert-butyl-5,5-di-n-propyloxazolin e]nickel dibromide, 2,2'-methylenebis[(4R)-4-tert-butyl-5,5-diisopropyloxazolin e]nickel dibromide, 2,2'-methylenebis[(4R)-4-tert-butyl-5,5-diphenyloxazoline]n ickel dibromide, 2,2'-methylenebis[(4R)-4-tert-butyl-5,5-dicyclohexyloxazoli ne]nickel dibromide, 2,2'-methylenebis[(4R)-4-tert-butyl-5,5-di-(2-methylphenyl) oxazoline]nickel dibromide, 2,2'-methylenebis[(4R)-4-tert-butyl-5,5-di-(3-methylphenyl) oxazoline]nickel dibromide, 2,2'-methylenebis[(4R)-4-tert-butyl-5,5-di-(4-methylphenyl) oxazoline]nickel dibromide, 2,2'-methylenebis[(4R)-4-tert-butyl-5,5-di-(2-methoxyphenyl )oxazoline]nickel dibromide, 2,2'-methylenebis[(4R)-4-tert-butyl-5,5-di-(3-methoxyphenyl )oxazoline]nickel dibromide, 2,2'-methylenebis[(4R)-4-tert-butyl-5,5-di-(4-methoxyphenyl )oxazoline]nickel dibromide, 2,2'-methylenebis[spiro{(4R)-4-tert-butyloxazoline-5,1'-cyc lobutane}]nickel dibromide, 2,2'-methylenebis[spiro{(4R)-4-tert-butyloxazoline-5,1'-cyc lopentane}]nickel dibromide, 2,2'-methylenebis[spiro{(4R)-4-tert-butyloxazoline-5,1'-cyc lohexane}]nickel dibromide, 2,2'-methylenebis[spiro{(4R)-4-tert-butyloxazoline-5,1'-cyc loheptane}]nickel dibromide, 2,2'-methylenebis[(4R)-4-phenyl-5,5-dimethyloxazoline]nicke l dibromide, 2,2'-methylenebis[(4R)-4-phenyl-5,5-diethyloxazoline]nickel dibromide, 2,2'-methylenebis[(4R)-4-phenyl-5,5-di-n-propyloxazoline]ni ckel dibromide, 2,2'-methylenebis[(4R)-4-phenyl-5,5-diisopropyloxazoline]ni ckel dibromide, 2,2'-methylenebis[(4R)-4-phenyl-5,5-dicyclohexyloxazoline]n ickel dibromide, 2,2'-methylenebis[(4R)-4-phenyl-5,5-diphenyloxazoline]nicke l dibromide, 2,2'-methylenebis[(4R)-4-phenyl-5,5-di-(2-methylphenyl)oxaz oline]nickel dibromide, 2,2'-methylenebis[(4R)-4-phenyl-5,5-di-(3-methylphenyl)oxaz oline]nickel dibromide, 2,2'-methylenebis[(4R)-4-phenyl-5,5-di-(4-methylphenyl)oxaz oline]nickel dibromide, 2,2'-methylenebis[(4R)-4-phenyl-5,5-di-(2-methoxyphenyl)oxa zoline]nickel dibromide, 2,2'-methylenebis[(4R)-4-phenyl-5,5-di-(3-methoxyphenyl)oxa zoline]nickel dibromide, 2,2'-methylenebis[(4R)-4-phenyl-5,5-di-(4-methoxyphenyl)oxa zoline]nickel dibromide, 2,2'-methylenebis[spiro{(4R)-4-phenyloxazoline-5,1'-cyclobu tane}]nickel dibromide, 2,2'-methylenebis[spiro{(4R)-4-phenyloxazoline-5,1'-cyclope ntane}]nickel dibromide, 2,2'-methylenebis[spiro{(4R)-4-phenyloxazoline-5,1'-cyclohe xane}]nickel dibromide, 2,2'-methylenebis[spiro{(4R)-4-phenyloxazoline-5,1'-cyclohe ptane}]nickel dibromide, 2,2'-methylenebis[(4R)-4-benzyl-5,5-dimethyloxazoline]nicke l dibromide, 2,2'-methylenebis[(4R)-4-benzyl-5,5-diethyloxazoline]nickel dibromide, 2,2'-methylenebis[(4R)-4-benzyl-5,5-di-n-propyloxazoline]ni ckel dibromide, 2,2'-methylenebis[(4R)-4-benzyl-5,5-di-isopropyloxazoline]n ickel dibromide, 2,2'-methylenebis[(4R)-4-benzyl-5,5-dicyclohexyloxazoline]n ickel dibromide, 2,2'-methylenebis[(4R)-4-benzyl-5,5-diphenyl]oxazoline]nick el dibromide, 2,2'-methylenebis[(4R)-4-benzyl-5,5-di-(2-methylphenyl)oxaz oline]nickel dibromide, 2,2'-methylenebis[(4R)-4-benzyl-5,5-di-(3-methylphenyl)oxaz oline]nickel dibromide, 2,2'-methylenebis[(4R)-4-benzyl-5,5-di-(4-methylphenyl)oxaz oline]nickel dibromide, 2,2'-methylenebis[(4R)-4-benzyl-5,5-di-(2-methoxyphenyl)oxa zoline]nickel dibromide, 2,2'-methylenebis[(4R)-4-benzyl-5,5-di-(3-methoxyphenyl)oxa zoline]nickel dibromide, 2,2'-methylenebis[(4R)-4-benzyl-5,5-di-(4-methoxyphenyl)oxa zoline]nickel dibromide, 2,2'-methylenebis[spiro{(4R)-4-benzyloxazoline-5,1'-cyclobu tane}]nickel dibromide, 2,2'-methylenebis[spiro{(4R)-4-benzyloxazoline-5,1'-cyclope ntane}]nickel dibromide, 2,2'-methylenebis[spiro{(4R)-4-benzyloxazoline-5,1'-cyclohe xane}]nickel dibromide, 2,2'-methylenebis [spiro{(4R)-4-benzyloxazoline-5,1'-cyclohe ptane}]nickel dibromide, and antidopes of the above-mentioned compounds. Further, there are exemplified those formed by reversing a steric configuration of the asymmetric carbon on one hand oxazoline ring of the above-mentioned bisoxazoline compound, and those formed by replacing the dibromide of said compounds with difluoride, dichloride, diiodide, dimethyl, diethyl, diisopropyl, diphenyl, dibenzyl, dimethoxide, diethoxide, di-n-propoxide, diisopropoxide, di-n-butoxide, diisobutoxide, di-tert-butoxide, diphenoxide, di(pentafluorophenoxide) and di(2,6-di-tert-butylphenoxide).

Further, specific examples of the nickel compound are [hydrotris(3,5-dimethylpyrazolyl)borate]nickel chloride, [hydrotris(3,5-diethylpyrazolyl)borate]nickel chloride, [hydrotris(3,5-di-tert-butylpyrazolyl)borate]nickel chloride, and those formed by replacing the chloride in those compounds with bromide, iodide, methyl, ethyl, allyl, methallyl, methoxide, ethoxide, n-propoxide, isopropoxide, n-butoxide, isobutoxide, tert-butoxide, phenoxide, pentafluorophenoxide and 2,6-di-tert-butylphenoxide.

As the nickel compound, there are enumerated compounds represented by the following structural formula.

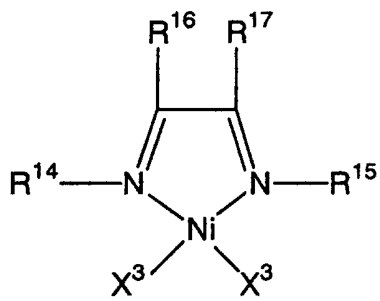

(In the formula, $R^{14}$ and $R^{15}$ are each a 2,6-diisopropylphenyl group, $R^{16}$ and $R^{17}$ are each a hydrogen atom or a methyl group, or $R^{14}$ and $R^{15}$ may be bound to form an acenaphthene group, and $X^3$ is a fluorine atom, a chlorine atom, a bromine atom, an iodine atom, a methyl group, an ethyl group, a n-propyl group, an isopropyl group, a n-butyl group, a phenyl group, a benzyl grop, a methoxy group, an ethoxy group, a n-propoxy group, an isopropoxy group, a n-butoxy group, an isobutoxy group or a phenoxy group.)

Further, there are exemplified those formed by replacing the nickel atom in the above-mentioned nickel compounds with palladium, cobalt, rhodium and ruthenium.

In the transition metal compound represented by the general formula [10], specific examples of a compound having an iron atom as a transition metal atom are 2,6-bis-[1-(2,6-dimethylphenylimino)ethyl]pyridineiron dichloride, 2,6-bis-[1-(2,6-diisopropylphenylimino)ethyl] pyridineiron dichloride, 2,6-bis-[1-(2-tert-butyl-phenylimino)ethyl]pyridineiron dichloride, and those formed by replacing the dichloride thereof with difluoride, dibromide, diiodide, dimethyl, diethyl, dimethoxide, diethoxide, di-n-propoxide, diisopropoxide, di-n-butoxide, diisobutoxide, di-tert-butoxide, diphenoxide, di(pentafluorophenoxide) and di(2,6-di-tert-butylphenoxide).

Further, specific examples of the iron compound are [hydrotris(3,5-dimethylpyrazolyl)borate]iron chloride, [hydrotris(3,5-diethylpyrazolyl)borate]iron chloride, [hydrotris(3,5-di-tert-butylpyrazolyl)borate]iron chloride and those formed by replacing the chloride in these compounds with fluoride, bromide, iodide, methyl, ethyl, allyl, methallyl, methoxide, ethoxide, n-propoxide, isopropoxide, n-butoxide, isobutoxide, tert-butoxide, phenoxide, pentafluorophenoxide and 2,6-di-tert-butylphenoxide.

Furthermore, there are similarly exemplified those formed by replacing the iron in the above-mentioned iron compounds with cobalt and nickel.

Moreover, specific examples of a μ-oxo type transition metal compound of the transition metal compounds represented by the general formula [10] are μ -oxobis[isopropylidene(cyclopentadienyl)(2-phenoxy)titanium chloride], μ-oxobis[isopropylidene(cyclopentadienyl) (3-tert-butyl-5-methyl-2-phenoxy)titanium chloride], μ -oxobis[isopropylidene(methylcyclopentadienyl) (2-phenoxy)titanium chloride], μ-oxobis[isopropylidene (methylcyclopentadienyl)(3-tert-butyl-5-methyl-2-phenoxy)titanium chloride], μ -oxobis[isopropylidene(tetramethylcyclopentadienyl) (2-phenoxy)titanium chloride], μ-oxobis[isopropylidene (tetramethylcyclopentadienyl)(3-tert-butyl-5-methyl-2-pheno xy)titanium chloride], μ -oxobis[dimethylsilylene(cyclopentadienyl) (2-phenoxy)titanium chloride], μ-oxobis[dimethylsilylene (cyclopentadienyl)(3-tert-butyl-5-methyl-2-phenoxy)titanium chloride], μ-oxobis[dimethylsilylene (methylcyclopentadienyl)

(2-phenoxy)titanium chloride], μ -oxobis[dimethylsilylene(methylcyclopentadienyl)(3-tert-but yl-5-methyl-2-phenoxy)titanium chloride], μ -oxobis[dimethylsilylene(tetramethylcyclopentadienyl)(2-phe noxy)titanium chloride] and μ-oxobis [dimethylsilylene (tetramethylcyclopentadienyl)(3-tert-butyl-5-methyl-2-pheno xy)titanium chloride]. In addition, there are exemplified those formed by replacing the chloride in said compounds with fluoride, bromide, iodide, methyl, ethyl, isopropyl, phenyl benzyl, methoxide, ethoxide, n-propoxide, isopropoxide, n-butoxide, isobutoxide, tert-butoxide, phenoxide, pentafluorophenoxide and 2,6-di-tert-butylphenoxide.

Besides the transition metal compound represented by the general formula [10] and its μ-oxo type transition metal compound, whose examples are as mentioned above, examples of a compound used as the transition metal compound (B) are as follows. Examples of a compound having a nickel atom as the transition metal atom are nickel chloride, nickel bromide, nickel iodide, nickel sulfate, nickel nitrate, nickel perchlorate, nickel acetate, nickel trifluoroacetate, nickel cyanide, nickel oxalate, acetylacetonatonickel, bis(allyl)nickel, bis(1,5-cyclooctadiene)nickel, dichloro (1,5-cyclooctadiene)nickel, dichlorobis(acetnitrile)nickel, dichlorobis(benzonitrile)nickel, carbonyltris(triphenylphosphine)nickel, dichlorobis(triethylphosphine)nickel, diacetobis(triphenylphosphine)nickel, tetraxis(triphenylphosphine) nickel, dichloro[1,2-bis(diphenylphosphino)ethane]nickel, bis[1,2-bis(diphenylphosphino)ethane]nickel, dichloro [1,3-bis(diphenylphosphino)propane]nickel, bis[1,3-bis(diphenylphosphino)propane]nickel, tetraaminenickel nitrate, tetraxis(acetonitrile)nickel tetrafluoroborate and nickelphthalocianine.

Similarly, examples of a compound having a vanadium atom as the trasition metal atom are vanadium acetylacetonate, vanadium tetrachloride and vanadium oxytrichloride.

Example of a compound having a samarium atom as the trasition metal atom is bis(pentamethylcyclopentadienyl) samarium methyltetrahydrofuran.

Example of a compound having an ytterbium atom as the trasition metal atom is bis(pentamethylcyclopentadienyl) ytterbium methyltetrahydrofuran.

These transition metal compounds may be used singly or in a combination of two or more thereof.

Among those transition metal compounds exemplifed above, those represented by the general formula [10] are preferred as the transition metal compound (B) used in the present invention. In particular, the transition metal compounds having the 4 Group atom as $M^2$ in the above general formula [10] are preferred, and those having at least one cyclopentadiene type anion skeleton-carrying group as $L^2$ in the general formula [10] are particularly preferred.

Further, in the case where X is $OR^{11}$, the 4 Group transition metal compounds having two cyclopentadiene type anion skeleton-carrying groups as $L^2$, which groups are linked through a residual group containing a carbon atom, a silicon atom, a nitrogen atom, an oxygen atom, a sulfur atom or a phosphorus atom, are preferred from a viewpoint of an improvement of activity. The 4 Group transition metal compounds having two $\eta^5$-(substituted)indenyl groups as $L^2$, which groups are liked through a methylene group, an ethylene group, a dimethylmethylene group, a dimethylsilylene group, a diethylsilylene group or a diphenylsilylene group, are more preferred from a viewpoint of an improvement of activity. A racemic ethylenebis(1-indenyl)zirconium diphenoxide is particularly preferred from a viewpoint of an improvement of activity.

The transition metal compound having $OR^{11}$ as X in the above general formula [10] can be obtained by preparing an $R^{11}OH$ corresponding to the $OR^{11}$, reacting the same with a strong base such as an organolithium compound, and thereafter reacting the obtained compound with a transition metal compound having a chlorine atom in place of $OR^{11}$ in the above general formula [10].

Further, a transition metal compound having a stereoregular polymerization ability of an α-olefin can be selected from the transition metal compound (B) represented by the formula [10]. Thereby, a stereoregular polymerization of an α-olefin can be accomplished.

As the transition metal compound having a stereoregular polymerization ability, preferred is a transition metal compound represented by the following general formula [13] or a transition metal compound represented by the following general formula [14].

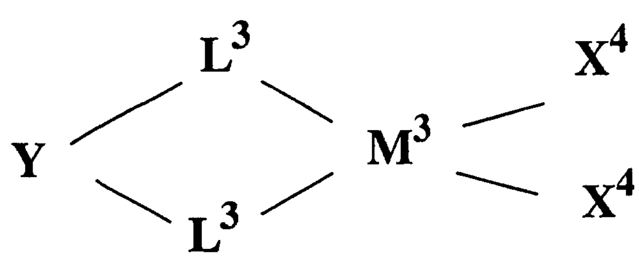

[13]

(In the formula, $M^3$ is a transition metal atom of the Groups 3 to 11 or lanthanoide series, $L^3$ is an $\eta^5$-indenyl group or a substituted $\eta^5$-indenyl group, and both of $L^3$s may be the same or different from each other, Y is a bridging group for linking both of $L^3$s, and both of $X^4$s are independently of each other a hydrogen atom, a halogen atom, an alkyl group, an aralkyl group, an aryl group, a substituted silyl group, an alkoxy group, an aralkyloxy group, an aryloxy group or a heterocyclic group.)

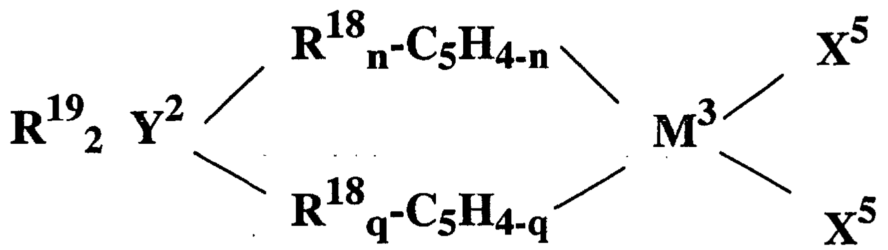

[14]

(In the formula, $M^3$ is a transition metal atom of the Groups 3 to11 or lanthanoide series, $Y^2$ is a silicon atom, a germanium atom or a tin atom, the ($R^{18}_n$-$C_5H_{4-n}$) and ($R^{18}_q$-$C_5H_{4-q}$) are independently of each other a substituted $\eta^5$-cyclopentadienyl group, n and q are independently of each other an integer of 1 to 3, and both of $R^{18}$s may be the same or different from each other and are independently of each other a halogen atom, an alkyl group, an aralkyl group, an aryl group, a substituted silyl group, an alkoxy group, an aralkyloxy group, an aryloxy group or a heterocyclic group, provided that the position and/or kind of each $R^{18}$ in each substituted $\eta^5$-cyclopentadienyl group are (is) selected, so that a symmetry plane containing $M^3$ does not exist, $R^{19}$ and $X^5$ are independently of each other a hydrogen atom, a halogen atom, an alkyl group, an aralkyl group, an aryl group, a substituted silyl group, an alkoxy group, an aralkyloxy group , an aryloxy group or a heterocyclic group, and $R^{19}$ and $X^5$ may be all the same or different from each other.)

The transition metal atom represented by $M^3$ in the above general formulas [13] and [14] is defined as the same as $M^2$ in the above-mentioned general formula [10].

In the general formula [13], $L^3$ is an $\eta^5$-indenyl group or a substituted $\eta^5$-indenyl group, and both of $L^3$s may be the same or different from each other. Specific examples of $L^3$ are an $\eta^5$-indenyl group, an $\eta^5$-methylindenyl group, an $\eta^5$-dimethylindenyl group, an $\eta^5$-n-propylindenyl group, an $\eta^5$-isopropylindenyl group, an $\eta^5$-n-butylindenyl group, an $\eta^5$-tert-butylindenyl group, an $\eta^5$-phenylindenyl group, an $\eta^5$-methylphenylindenyl group, an $\eta^5$-naphtylindenyl group, an $\eta^5$-trimethylsilylindenyl group and an $\eta^5$-tetrahydroindenyl group.

In the above-mentioned general formula [13], Y is a bridging group for linking both of $L^3$s. As the bridging group, there is given a divalent bridging group containing an atom of the Group 14 of the periodic table of elements (IUPAC, inorganic chemical nomenclature, revised edition, 1989). Preferred is a divalent bridging group containing a carbon atom, a silicon atom, a germanium atom or a tin atom. More preferred is a divalent bridging group, whose atom connected with both of $L^3$s is a carbon atom, a silicon atom, a germanium atom and/or a tin atom. Much more preferred is a divalent bridging group, whose atom connected with both of $L^3$s is a carbon atom, a silicon atom, a germanium atom and/or a tin atom, and whose minimum atom number between atoms connected with both of $L^3$s is not more than 3 (the case where the atom connected with both of $L^3$s is single is included). Specific examples thereof are a methylene group, an ethylene group, a propylene group, a dimethylmethylene group (an isopropylidene group), a diphenylmethylene group, a tetramethylethylene group, a silylene group, a dimethylsilylene group, a diethylsilylene group, a diphenylsilylene group, a tetramethyldisilylene group and a dimethoxysilylene group. Particularly preferred are a methylene group, an ethylene group, a dimethylmethylene group (an isopropylidene group), a dimethylsilylene group, a diethylsilylene group and a diphenylsilylene group.

In the above-mentioned general formula [13], both of $X^4$s are independently of each other a hydrogen atom, a halogen atom, an alkyl group, an aralkyl group, an aryl group, a substituted silyl group, an alkoxy group, an aralkyloxy group, an aryloxy group or a heterocyclic group.

Among these, examples of a halogen atom, an alkyl group, an aralkyl group and an aryl group are similar to those of X in the above general formula [10]. While, examples of a substituted silyl group, an alkoxy group, an aralkyloxy group, an aryloxy group and a heterocyclic group are as follows.

The substituted silyl group means a hydrocarbon group-substituted silyl group. Here, as the hydrocarbon group, there are enumerated an alkyl group having 1 to 10 carbon atoms such as a methyl group, an ethyl group, a n-propyl group, an isopropyl group, an-butyl group, a sec-butyl group, a tert-butyl group, an isobutyl group, a n-pentyl group, a n-hexyl group and a cyclohexyl group, and an aryl group such as a phenyl group. As the substituted silyl group having 1 to 20 carbon atoms, there are exemplified a mono-substituted silyl group having 1 to 20 carbon atoms such as a methylsilyl group, an ethylsilyl group and a phenylsilyl group, a di-substituted silyl group having 2 to 20 carbon

atoms such as a dimethylsilyl group, a diethylsilyl group and a diphenylsilyl group, and a tri-substituted silyl group having 3 to 20 carbon atoms such as a trimethylsilyl group, a triethylsilyl group, a tri-n-propylsilyl group, a triisopropylsilyl group, a tri-n-butylsilyl group, a tri-sec-butylsilyl group, a tri-tert-butylsilyl group, a triisobutylsilyl group, a tert-butyldimethylsilyl group, a tri-n-pentylsilyl group, a tri-n-hexylsilyl group, a tricyclohexylsilyl group and a triphenylsilyl group. Preferred are a trimethylsilyl group, a tert-butyldimethylsilyl group and a triphenylsilyl group. Any of the hydrocarbon group appended to these substituted silyl groups may be partially substituted with a halogen atom such as a fluorine atom, a chlorine atom, a bromine atom or an iodine atom, an alkoxy group such as a methoxy group or an ethoxy group, an aryloxy group such as a phenoxy group, and an aralkyloxy group such as a benzyloxy group.

As the alkoxy group, preferred are those having 1 to 20 carbon atoms. Examples thereof are a methoxy group, an ethoxy group, a n-propoxy group, an isopropoxy group, a n-butoxy group, a sec-butoxy group, a tert-butoxy group, a n-pentoxy group, a neopentoxy group, a n-hexoxy group, a n-octoxy group, a n-dodecoxy group, a n-pentadecoxy group and an eicosoxy group, and more preferred are a methoxy group, an ethoxy group, an isopropoxy group and a tert-butoxy group. Any of these alkoxy groups may be partially substituted with a halogen atom such as a fluorine atom, a chlorine atom, a bromine atom or an iodine atom, an alkoxy group such as a methoxy group or an ethoxy group, an aryloxy group such as a phenoxy group, and an aralkyloxy group such as a benzyloxy group.

As the aralkyloxy group, preferred are those having 7 to 20 carbon atoms. Examples thereof are a benzyloxy group, a (2-methylphenyl)methoxy group, a (3 -methylphenyl )methoxy group, a (4-methylphenyl)methoxy group, a (2,3-dimethylphenyl)methoxy group, a (2,4-dimethylphenyl)methoxy group, a (2,5-dimethylphenyl)methoxy group, a (2,6-dimethylphenyl)methoxy group, a (3,4-dimethylphenyl)methoxy group, a (3,5-dimethylphenyl)methoxy group, a (2,3,4-trimethylphenyl)methoxy group, a (2,3,5-trimethylphenyl)methoxy group, a (2,3,6-trimethylphenyl)methoxy group, a (2,4,5-trimethylphenyl)methoxy group, a (2,4,6-trimethylphenyl)methoxy group, a (3,4,5-trimethylphenyl) methoxy group, a (2,3,4,5-tetramethylphenyl)methoxy group, a (2,3,4,6-tetramethylphenyl)methoxy group, a (2,3,5,6-tetramethylphenyl)methoxy group, a (pentamethylphenyl)methoxy group, an (ethylphenyl)methoxy group, a (n-propylphenyl)methoxy group, an (isopropylphenyl)methoxy group, a (n-butylphenyl)methoxy group, a (sec-butylphenyl)methoxy group, a (tert-butylphenyl)methoxy group, a (n-hexylphenyl)methoxy group, a (n-octylphenyl)methoxy group, a (n-decylphenyl)methoxy group, a naphthylmethoxy group and an anthracenylmethoxy group. More preferred is a benzyloxy group.

Any of these aralkyloxy groups may be partially substituted with a halogen atom such as a fluorine atom, a chlorine atom, a bromine atom or an iodine atom, an alkoxy group such as a methoxy group or an ethoxy group, an aryloxy group such as a phenoxy group, and an aralkyloxy group such as a benzyloxy group.

As the aryloxy group, preferred are those having 6 to 20 carbon atoms. Examples thereof are a phenoxy group, a 2-methylphenoxy group, a 3-methylphenoxy group, a 4-methylphenoxy group, a 2,3-dimethylphenoxy group, a 2,4-dimethylphenoxy group, a 2,5-dimethylphenoxy group, a 2,6-dimethylphenoxy group, a 3,4-dimethylphenoxy group, a 3,5-dimethylphenoxy group, a 2-tert-butyl-3-methylphenoxy group, a 2-tert-butyl-4-methylphenoxy group, a 2-tert-butyl-5-methylphenoxy group, a 2-tert-butyl-6-methylphenoxy group, a 2,3,4-trimethylphenoxy group, a 2,3,5-trimethylphenoxy group, a 2,3,6-trimethylphenoxy group, a 2,4,5-trimethylphenoxy group, a 2,4,6-trimethylphenoxy group, a 2-tert-butyl-3,4-dimethylphenoxy group, a 2-tert-butyl-3,5-dimethylphenoxy group, a 2-tert-butyl-3,6-dimethylphenoxy group, a 2,6-di-tert-butyl-3-methylphenoxy group, a 2-tert-butyl-4,5-dimethylphenoxy group, a 2,6-di-tert-butyl-4-methylphenoxy group, a 3,4,5-trimethylphenoxy group, a 2,3,4,5-tetramethylphenoxy group, a 2-tert-butyl-3,4,5-trimethylphenoxy group, a 2,3,4,6-tetramethylphenoxy group, a 2-tert-butyl-3,4,6-trimethylphenoxy group, a 2,6-di-tert-butyl-3,4-dimethylphenoxy group, a 2,3,5,6-tetramethylphenoxy group, a 2-tert-butyl-3,5,6-trimethylphenoxy group, a 2,6-di-tert-butyl-3,5-dimethylphenoxy group, a pentamethylphenoxy group, an ethylphenoxy group, a n-propylphenoxy group, an isopropylphenoxy group, a n-butylphenoxy group, a sec-butylphenoxy group, a tert-butylphenoxy group, a n-hexylphenoxy group, a n-octylphenoxy group, a n-decylphenoxy group, a n-tetradecylphenoxy group, a naphthoxy group and an anthracenoxy group.

Any of these aryloxy groups may be partially substituted with a halogen atom such as a fluorine atom, a chlorine atom, a bromine atom or an iodine atom, an alkoxy group such as a methoxy group or an ethoxy group, an aryloxy group such as a phenoxy group, and an aralkyloxy group such as a benzyloxy group.

The heterocyclic ring group is a group having a heterocyclic ring, preferably a 4 to 8 membered heterocyclic ring, and more preferably a 4 to 8 membered aromatic heterocyclic ring. A hetero atom contained in the heterocyclic ring is preferably a nitrogen atom, an oxygen atom or a sulfur atom. Examples of such a heterocyclic ring group are an indolyl group, a furyl group, a thienyl group, a pyridyl group, a piperidyl group, a quinolyl group and an isoquinolyl group. A more preferred example of the heterocyclic ring group is a furyl group.

Any of these heterocyclic ring groups may be partially substituted with a halogen atom such as a fluorine atom, a chlorine atom, a bromine atom or an iodine atom, an alkoxy group such as a methoxy group or an ethoxy group, an aryloxy group such as a phenoxy group, and an aralkyloxy group such as a benzyloxy group.

A compound in a category of the transitional metal compound having the stereoregular polymerization ability can be selected, for example, from the above-exemplified compounds as a specific example, preferred are those

represented by the general formula [13]. For example, those having a di-substituted silicon atom as the bridging group Y in the general formula [13] are preferred. Specific examples thereof are dimethylsilylenebis(2-methylindenyl)zirconium dichloride, dimethylsilylenebis(2-n-propylindenyl)zirconium dichloride, dimethylsilylenebis(2-n-butylindenyl)zirconium dichloride, dimethylsilylenebis(2-n-hexylindenyl)zirconium dichloride, dimethylsilylenebis(2-isopropylindenyl) zirconium dichloride, dimethylsilylenebis(2-isobutylindenyl)zirconium dichloride, dimethylsilylenebis(2-tert-butylindenyl)zirconium dichloride, dimethylsilylenebis(2-phenylindenyl)zirconium dichloride, dimethylsilylenebis(2-trimethylsilylindenyl)zirconium dichloride, dimethylsilylenebis(2,4-dimethylindenyl)zirconium dichloride, dimethylsilylenebis (2,4,7-trimethylindenyl)zirconium dichloride, dimethylsilylenebis(2-methyl-4-isopropylindenyl) zirconium dichloride, dimethylsilylenebis(2-methyl-4-phenylindenyl)zirconium dichloride, dimethylsilylenebis(2-methyl-4-naphtylindenyl)zirconium dichloride, dimethylsilylenebis(2-methyl-4,5-benzoindenyl)zirconium dichloride, dimethylsilylenebis (4,5,6,7-tetrahydroindenyl)zirconium dichloride, diphenylsilylenebis(2-methylindenyl)zirconium dichloride, diphenylsilylenebis(2-n-propylindenyl)zirconium dichloride, diphenylsilylenebis(2-n-butylindenyl)zirconium dichloride, diphenylsilylenebis(2-n-hexylindenyl)zirconium dichloride, diphenylsilylenebis(2-isopropylindenyl)zirconium dichloride, diphenylsilylenebis(2-isobutylindenyl)zirconium dichloride, diphenylsilylenebis(2-tert-butylindenyl)zirconium dichloride, diphenylsilylenebis(2-phenylindenyl)zirconium dichloride, diphenylsilylenebis(2-trimethylsilylindenyl)zirconium dichloride, diphenylsilylenebis(2,4-dimethylindenyl)zirconium dichloride, diphenylsilylenebis(2,4,7-trimethylindenyl)zirconium dichloride, diphenylsilylenebis(2-methyl-4-isopropylindenyl) zirconium dichloride, diphenylsilylenebis(2-methyl-4-phenylindenyl)zirconium dichloride, diphenylsilylenebis(2-methyl-4-naphtylindenyl)zirconium dichloride, diphenylsilylenebis(2-methyl-4,5-benzoindenyl)zirconium dichloride and diphenylsilylenebis(4,5,6,7-tetrahydroindenyl)zirconium dichloride.

In the general formula [14], ($R^{18}{}_n$-$C_5H_{4-n}$) and ($R^{18}{}_q$-$C_5H_{4-q}$) are each a substituted $\eta^5$-cyclopentadienyl group, and n and q are each an integer from 1 to 3. Both of $R^{18}$s may be the same or different from each other, and are each a halogen atom, an alkyl group, an aralkyl group, an aryl group, a substituted silyl group, an alkoxy group, an aralkyloxy group, an aryloxy group or a heterocyclic group, provided that the position and/or kind of the $R^{18}$ in the substituted $\eta^5$-cyclopentadienyl group are (is) selected, so that a symmetry plane including $M^3$ does not exist.

The halogen atom and the alkyl, aralkyl, aryl, substituted silyl, alkoxy, aralkyloxy, aryloxy and heterocyclic groups stated here are as explained in the general formula [13]. As $R^{18}$, preferred is an alkyl group or a heterocyclic ring group.

Any of n and q is an integer of from 1 to 3.

As examples of the ($R^{18}{}_n$-$C_5H_{4-n}$) and ($R^{18}{}_q$-$C_5H_{4-q}$) having $R^{18}$, in which substituted $\eta^5$-cyclopentadienyl groups the position and/or kind of the $R^{18}$ are (is) selected, so that a symmetry plane including $M^3$ does not exist, there are enumerated a 2-methylcyclopentadienyl group, a 2-ethylcyclopentadienyl group, a 2-n-propylcyclopentadienyl group, a 2-isopropylcyclopentadienyl group, a 2-n-butylcyclopentadienyl group, a 2-isobutylcyclopentadienyl group, a 2-tert-butylcyclopentadienyl group, a 2-n-hexylcyclopentadienyl group, a 3-methylcyclopentadienyl group, a 3-ethylcyclopentadienyl group, a 3-n-propylcyclopentadienyl group, a 3-isopropylcyclopentadienyl group, a 3-n-butylcyclopentadienyl group, a 3-isobutylcyclopentadienyl group, a 3-tert-butylcyclopentadienyl group, a 3-n-hexylcyclopentadienyl group, a 2,3-dimethylcyclopentadienyl group, a 2,3-diethylcyclopentadienyl group, a 2,3-di-n-propylcyclopentadienyl group, a 2,3-diisopropylcyclopentadienyl group, a 2,3-di-n-butylcyclopentadienyl group, a 2,3-diisobutylcyclopentadienyl group, a 2,3-di-tert-butylcyclopentadienyl group, a 2,3-di-n-hexylcyclopentadienyl group, a 2,4-dimethylcyclopentadienyl group, a 2,4-diethylcyclopentadienyl group, a 2,4-di-n-propylcyclopentadienyl group, a 2,4-diisopropylcyclopentadienyl group, a 2,4-di-n-butylcyclopentadienyl group, a 2,4-diisobutylcyclopentadienyl group, a 2,4-di-tert-butylcyclopentadienyl group, a 2,4-di-n-hexylcyclopentadienyl group, a 3,5-dimethylcyclopentadienyl group, a 3,5-diethylcyclopentadienyl group, a 3,5-di-n-propylcyclopentadienyl group, a 3,5-diisopropylcyclopentadienyl group, a 3,5-di-n-butylcyclopentadienyl group, a 3,5-diisobutylcyclopentadienyl group, a 3,5-di-tert-butylcyclopentadienyl group, a 3,5-di-n-hexylcyclopentadienyl group, a 2-ethyl-3-methylcyclopentadienyl group, a 2-methyl-3-ethylcyclopentadienyl group, a 2-methyl-3-n-propylcyclopentadienyl group, a 2-methyl-3-isopropylcyclopentadienyl group, a 2-ethyl-3-isopropylcyclopentadienyl group, a 2-methyl-3-n-butylcyclopentadienyl group, a 2-methyl-3-isobutylcyclopentadienyl group, a 2-methyl-3-tert-butylcyclopentadienyl group, .a 2-methyl-3-n-hexylcyclopentadienyl group, a 2-ethyl-4-methylcyclopentadienyl group, a 2-methyl-4-ethylcyclopentadienyl group, a 2-methyl-4-n-propylcyclopentadienyl group, a 2-methyl-4-isopropylcyclopentadienyl group, a 2-ethyl-4-isopropylcyclopentadienyl group, a 2-methyl-4-n-butylcyclopentadienyl group, a 2-methyl-4-isobutylcyclopentadienyl group, a 2-methyl-4-tert-butylcyclopentadienyl group, a 2-methyl-4-n-hexylcyclopentadienyl group, a 3-ethyl-5-methylcyclopentadienyl group, a 3-methyl-5-ethylcyclopentadienyl group, a 3-methyl-5-n-propylcyclopentadienyl group, a 3-methyl-5-isopropylcyclopentadienyl group, a 3-ethyl-5-isopropylcyclopentadienyl group, a 3-methyl-5-n-butylcyclopentadienyl group, a 3-methyl-5-isobutylcyclopentadienyl group, a 3-methyl-5-tert-butylcyclopentadienyl group, a 3-methyl-5-n-hexylcyclopentadienyl group, a 2,3,5-trimethylcyclopentadienyl group, a 2,4,5-trimethylcyclopentadienyl group, a 2-(2-furyl)-3,5-dimethylcyclopentadienyl group and a 2-(2-furyl)-4,5-dimethylcyclopentadienyl group.

In the above general formula [14], $Y^2$ is a carbon atom, a silicon atom, a germanium atom or a tin atom.

Preferred is a carbon atom or a silicon atom.

In the above general formula [14], $R^{19}$ and $X^5$ are independently of each other a hydrogen atom, a halogen atom, an alkyl group, an aralkyl group, an aryl group, a substituted silyl group, an alkoxy group, an aralkyloxy group, an aryloxy group or a heterocyclic group, and $R^{19}$ and $X^5$ may be the same or different from each other. The halogen atom and the alkyl, aralkyl, aryl, substituted silyl, alkoxy, aralkyloxy, aryloxy and heterocyclic groups stated here are as already explained as $R^{18}$.

As $R^{19}$, preferred is a hydrogen atom or an alkyl group.

As $X^5$, preferred is a halogen atom, an alkyl group, an aralkyl group or an alkoxy group. Examples thereof are similar to those of X in the general formula [10].

As specific examples of the transition metal compound represented by the general formula [14], those corresponding to the general formula [14] are selected from examples of the transition metal compound represented by the above general formula [10]. Of these, preferred are dimethylsilylene(cyclopentadienyl)(3-methylcyclopentadienyl )zirconium dichloride, dimethylsilylene(cyclopentadienyl)(3-tert-butylcyclopentadi enyl)zirconium dichloride, dimethylsilylene(cyclopentadienyl)(2,4-dimethylcyclopentadi enyl)zirconium dichloride, dimethylsilylene(cyclopentadienyl) (2,3,5-trimethylcyclopent adienyl)zirconium dichloride, dimethylsilylene(3-methylcyclopentadienyl)(4-methylcyclopen tadienyl)zirconium dichloride, dimethylsilylene(3-tert-butylcyclopentadienyl)(4-tert-butyl cyclopentadienyl)zirconium dichloride, dimethylsilylene(2,4-dimethylcyclopentadienyl)(3,5-dimethyl cyclopentadienyl)zirconium dichloride, dimethylsilylene(2,3,5-trimethylcyclopentadienyl)(2,4,5-tri methylcyclopentadienyl)zirconium dichloride, methylene (cyclopentadienyl)(3-methylcyclopentadienyl)zircon ium dichloride, methylene(cyclopentadienyl) (3-tert-butylcyclopentadienyl)zirconium dichloride, methylene(cyclopentadienyl) (2,4-dimethylcyclopentadienyl)zirconium dichloride, methylene(cyclopentadienyl)(2,3,5-trimethylcyclopentadienyl )zirconium dichloride, methylene(3-methylcyclopentadienyl) (4-methylcyclopentadienyl)zirconium dichloride, methylene(3-tert-butylcyclopentadienyl)(4-tert-butylcyclope ntadienyl)zirconium dichloride, methylene(2,4-dimethylcyclopentadienyl)(3,5-dimethylcyclope ntadienyl)zirconium dichloride and methylene(2,3,5-trimethylcyclopentadienyl)(2,4,5-trimethylc yclopentadienyl)zirconium dichloride.

In addition, there are exemplified compounds formed by replacing the zirconium atom in the above-mentioned zirconium compounds with a titanium atom or a hafnium atom.

(C) Organoaluminum compound

As the organoaluminum compound of the component(C) used for the catalyst for addition polymerization in accordance with the present invention, a known organoaluminum compound can be used. Preferred is an organoaluminum compound represented by the following general formula [15].

$$R^{20}{}_cAlY^3{}_{3-c} \qquad [15]$$

(In the formula, $R^{20}$ is a hydrocarbon group and all of $R^{20}$ may be the same or different from one another, $Y^3$ is a hydrogen atom, a halogen atom, an alkoxy group, a aralkyloxy group, or an aryloxy group, all of $Y^3$ may be the same or different from one another, and c is a number satisfying $0 < c \leqq 3$.)

In the general formula [15] representing the organoaluminum compound, as $R^{20}$, preferred is a hydrocarbon group having 1 to 24 carbon atoms, and more preferred is an alkyl group having 1 to 24 carbon atoms. Specific examples thereof are a methyl group, an ethyl group, a n-propyl group, a n-butyl group, an isobutyl group, a n-hexyl group, a 2-methylhexyl group and a n-octyl group. Preferred are an ethyl group, a n-butyl group, an isobutyl group, a n-hexyl group and a n-octyl group.

When $Y^3$ is a halogen atom, specific examples thereof are a fluorine atom, a chlorine atom, a bromine atom and an iodine atom, and preferred is a chlorine atom.

When $Y^3$ is an alkoxy group, preferred is an alkoxy group having 1 to 24 carbon atoms. Specific examples thereof are a methoxy group, an ethoxy group, a n-propoxy group, an isopropoxy group, an-butoxy group, a sec-butoxy group, a tert-butoxy group, a n-pentoxy group, a neopentoxy group, a n-hexoxy group, a n-octoxy group, a n-dodecoxy group, a n-pentadecoxy group and a n-eicoxy group, and preferred are a methoxy group, an ethoxy group and a tert-butoxy group.

When $Y^3$ is an aryloxy group, preferred is an aryloxy having 6 to 24 carbon atoms. Specific examples thereof are a phenoxy group, a 2-methylphenoxy group, a 3-methylphenoxy group, a 4-methylphenoxy group, a 2,3-dimethylphenoxy group, a 2,4-dimethylphenoxy group, a 2,5-dimethylphenoxy group, a 2,6-dimethylphenoxy group, a 3,4-dimethylphenoxy group, a 3,5-dimethylphenoxy group, a 2,3,4-trimethylphenoxy group, a 2,3,5-trimethylphenoxy group, a 2,3,6-trimethylphenoxy group, a 2,4,5-trimethylphenoxy group, a 2,4,6-trimethylphenoxy group, a 3,4,5-trimethylphenoxy group, a 2,3,4,5- tetramethylphenoxy group, a 2,3,4,6-tetramethylphenoxy group, a 2,3,5,6-tetramethylphenoxy group, a pentamethylphenoxy group, an ethylphenoxy group, a n-propylphenoxy group, an isopropylphenoxy group, a n-butylphenoxy group, a sec-butylphenoxy group, a tert-butylphenoxy group, a n-hexylphenoxy group, a n-octylphenoxy group, a n-decylphenoxy group, a n-tetradecylphenoxy group, a naphtoxy group and an anthracenoxy group.

When $Y^3$ is an aralkyloxy group, preferred is an aralkyloxy having 7 to 24 carbon atoms. Specific examples thereof are a benzyloxy group, a (2-methylphenyl)methoxy group, a (3-methylphenyl)methoxy group, a (4-methylphenyl)methoxy group, a (2,3-dimethylphenyl)methoxy group, a (2,4-dimethylphenyl)methoxy group, a (2,5-dimethylphenyl)methoxy group, a (2,6-dimethylphenyl)methoxy group, a (3,4-dimethylphenyl)methoxy group, a (3,5-dimethylphenyl)methoxy group, a (2,3,4-trimethylphenyl)methoxy group, a (2,3,5-trimethylphenyl)methoxy group, a (2,3,6-trimethylphenyl)methoxy group, a (2,4,5-trimethylphenyl)methoxy group, a (2,4,6-trimethylphenyl)methoxy group, a (3,4,5-trimethylphenyl)methoxy group, a (2,3,4,5-tetramethylphenyl)methoxy group, a (2,3,5,6-tetramethylphenyl)methoxy group, a (pentamethylphenyl)methoxy group, an (ethylphenyl)methoxy group, a (n-propylphenyl)methoxy group, an (isopropylphenyl)methoxy group, a (n-butylphenyl)methoxy group, a (sec-butylphenyl)methoxy group, a (tert-butylphenyl)methoxy group, a (n-hexylphenyl)methoxy group, a (n-octylphenyl)methoxy group, a (n-decylphenyl)methoxy group, a (n-tetradecylphenyl)methoxy group, a naphthylmethoxy group and an anthracenylmethoxy group. Preferred is a benzyloxy group.

Specific examples of the organoaluminum compound represented by the general formula [15] are trialkylaluminums such as trimethylaluminum, triethylaluminum, tri-n-propylaluminum, tri-n-butylaluminum, triisobutylaluminum, tri-n-hexylaluminum and tri-n-octylaluminum; dialkylaluminum chlorides such as dimethylaluminum chloride, diethylaluminum chloride, di-n-propylaluminum chloride, di-n-butylaluminum chloride, diisobutylaluminum chloride and di-n-hexylaluminum chloride; alkylaluminum dichlorides such as methylaluminum dichloride, ethylaluminum dichloride, n-propylaluminum dichloride, n-butylaluminum dichloride, isobutylaluminum dichloride and n-hexylaluminum dichloride; dialkylaluminum hydrides such as dimethylaluminum hydride, diethylaluminum hydride, di-n-propylaluminum hydride, di-n-butylaluminum hydride, diisobutylaluminum hydride and di-n-hexylaluminum hydride; trialkoxyaluminums such as trimethoxyaluminum, triethoxyaluminum and tri(tert-butoxy)aluminum; alkyldialkoxyaluminums such as methy (dimethoxy)aluminum, methyl(diethoxy)aluminum and methyl(di-tert-butoxy)aluminum; dialkylalkoxyaluminums such as dimethy(methoxy)aluminum, dimethyl(ethoxy)aluminum and dimethyl(tert-butoxy)aluminum; triaryloxyaluminums such as triphenoxyaluminum, tris(2,6-diisopropylphenoxy)aluminum and tris(2,6-diphenylphenoxy)aluminum; alkyldiaryloxyaluminums such as methyl(diphenoxy)aluminum, methylbis(2,6-diisopropylphenoxy)aluminum and methylbis (2,6-diphenylphenoxy)aluminum; and dialkylaryloxyaluminums such as dimethyl(phenpxy)aluminum, dimethyl (2,6-diisopropylphenoxy)aluminum and dimethyl (2,6-diphenylphenoxy)aluminum.

Among these, preferred are trialkylaluminums, more preferred are trimethylaluminum, triethylaluminum, tri-n-butylaluminum, triisobutylaluminum, tri-n-hexylaluminum and tri-n-octylaluminum, and particularly preferred are triisobutylaluminum and tri-n-octylaluminum.

These organoaluminum compounds may be used singly or in combination of two or more.

The component (B) is used in an amount of usually from $1 \times 10^{-6}$ to $1 \times 10^{-3}$ mol, and preferably from $5 \times 10^{-6}$ to $5 \times 10^{-4}$ mol per g of the component (A). The component (C) is used in an amount of preferably from 0.01 to 10,000, more preferably from 0.1 to 5,000, and the most preferably from 1 to 2,000 in terms of a molar ratio (C)/(B), namely in terms of the aluminum atom in the organoaluminum compound of the compound (c) to the transition metal atom in the transition metal compound of the component (B).

As the catalyst for addition polymerization in accordance with the present invention, a reaction product obtained in advance by contacting the component (A) and the component (B) and optionally the component (C) with one another may be used, or these components may be used in a manner of separately feeding in a polymerization reaction apparatus. When the components (A), (B) and (C) are used, optional two components selected therefrom may be contacted in advance with each other, followed by contact of the remaining one component.

When the stereoregular polymerization of $\alpha$-olefin is carried out, it is recommendable to use the catalyst obtained in advance by contacting the component (A), the component (B) and the component (C).

The contact may be conducted in a reactor for catalyst preparation use different from a polymerization reactor, or in a polymerization reactor, in which neither a monomer nor a comonomer is introduced. The contact may be conducted by supplying the component (A), the component (B) and the component (C) at the same time, or one after another in an arbitrary order in the reactor for catalyst preparation use or the polymerization reactor. Conditions of contacting the component (A), the component (B) and the component (C) are not particularly limited, and a contact temperature is preferably from -5 to 90°C, and more preferably from 5 to 40°C.

As a method for supplying the catalyst to a polymerization vessel, there are usually applied a method comprising supplying the catalyst under a water-free condition using an inert gas such as nitrogen or argon, or hydrogen or ethylene, and a method comprising supplying the catalyst in a slurry state obtained by dilution in a solvent. Respective catalyst components may be separately supplied, or before supplying, arbitrarily selected components may be contacted in advance in an arbitrary order.

A method for supplying respective catalyst components to the catalyst preparation reactor or the polymerization reactor is also not particularly limited. There can be applied a method comprising supplying respective components in each solid state, or in a solution, suspension or slurry state obtained using a hydrocarbon solvent, provided that any ingredient capable of de-activating the catalyst components such as water and oxygen has been sufficiently eliminated from the hydrocarbon solvent. Examples of the solvent are aliphatic hydrocarbon solvents such as butane, pentane, heptane and octane, aromatic hydrocarbon solvents such benzene and toluene and halogenated hydrocarbons such as methylene chloride. Preferred are aliphatic hydrocarbons and aromatic hydrocarbons.

When the catalyst components are supplied in their solution, suspension or slurry state, a concentration of the component(A) is usually from 0.01 to 1000 g/l, and preferably from 0.1 to 500 g/l. A concentration of the component (C) is usually from 0.0001 to 100 mol/l, and preferably from 0.01 to 10 mol/l in terms of Al atom. A concentration of the component (B) is usually from 0.0001 to 1000 mmol/l, and preferably from 0.01 to 50 mmol/l in terms of the transition metal atom.

The polymerization process is not particularly limited, and it is permitted to apply a gas phase polymerization carried out in a gaseous monomer or a solution polymerization or slurry polymerization using a solvent. A solvent used for the solution polymerization or the slurry polymerization includes an aliphatic hydrocarbon solvent such as butane, hexane, pentane, heptane and octane, an aromatic hydrocarbon solvent such as benzene and toluene, and a halogenated hydrocarbon solvent such as methylene chloride. Alternatively, it is possible to use an olefin itself as a solvent (bulk polymerization). As the polymerization process, any of a batch polymerization and a continuous polymerization can be applied. It is permitted to carry out the polymerization dividing into two or more steps different from one another in their reaction conditions. A polymerization time can be appropriately determined according to a kind of the desired olefin polymer and a reaction apparatus, and it is permitted to adopt a period of time of from 1 minute to 20 hours.

The present invention can be particularly suitably applied to a polymerization accompanied by the formation of addition polymer particles (for example, a slurry polymerization, a gas phase polymerization and a bulk polymerization).

The slurry polymerization may be carried out in a conventional slurry polymerization manner and condition, but it is not limited thereto. According to a preferred slurry polymerization, a monomer (and a comonomer), a material to be supplied, a diluent and the like are, if desired continuously added, and a continuous type reactor is used, so that a produced polymer is continuously or at least periodically taken out. Further, there can be applied a means using a loop reactor or a means using a stirring reactor. In addition, more than one stirring reactor, which may be different in a reactor or in a reaction condition, may be combined in series, in parallel or in series and parallel.

As the diluent, there can be used an inert diluent (medium) such as paraffin, cycloparaffin and aromatic hydrocarbons. A temperature of the polymerization reactor or a reaction zone is usually from about 0 to about 150°C, and preferably from 30 to 100°C. A pressure can be varied within a range of from about 0.1 to about 10 MPa, and preferably from 0.5 to 5 MPa. It is permitted to apply a pressure, under which a monomer and a comonomer are contacted with each other while maintaining the catalyst in a suspended state, and the medium and at least a part of the monomer and comonomer in a solution phase. Accordingly, the medium, temperature and pressure may be selected so as to produce the addition polymer in a solid particle form and recover it in that form.

A molecular weight of the addition polymer can be controlled by known manners, for example, by controlling a temperature of a reaction zone or introducing hydrogen.

The catalyst components and a monomer (and a comonomer) can be fed into a reactor or a reaction zone in an arbitrary order according to a conventional manner. For example, the catalyst components and a monomer (and a comonomer) are fed into a reaction zone at the same time or one after the other. If desired, the catalyst components and a monomer (and a comonomer) can be subjected to pre-contact in an inert atmosphere before their contact.

The gas phase polymerization may be carried out in a conventional gas phase polymerization manner and condition, but it is not limited thereto. As a gas phase polymerization apparatus, a fluidized bed reactor, preferably a fluidized bed reactor having an expansion can be used. A reaction apparatus equipped with a stirring blade in its reaction zone may also be used without any problem.

Respective components can be fed into a polymerization zone in a water-free state using an inert gas such as nitrogen or argon, or hydrogen or ethylene, or in feeding, respective components can be dissolved or diluted in a solvent to form a solution or a slurry. The catalyst components may be fed independently, or in feeding, arbitrarily selected catalyst components may be contacted in advance with one another in an arbitrary order.

With respect to polymerization conditions, a temperature is lower than that at which the polymer is melted, preferably from 0 to 150°C, and particularly preferably from 30 to 100°C. Furthermore, for the purpose of controlling the melt flow of a final product, it is permitted to add hydrogen as a molecular weight regulator. In addition, it is permitted that an inert gas coexists in the mixed gas during polymerization.

In the present invention, a pre-polymerization as mentioned below may be carried out before carrying out the above-mentioned polymerization (real polymerization).

The pre-polymerization can be carried out by feeding a small amount of an olefin in the presence of the

modified particle (A) and the transition metal compound (B), or further in the presence of the organoaluminum compound (A). It is recommendable to carry out in a slurry state. Examples of a solvent used for formation of the slurry are inert hydrocarbons such as propane, butane, isobutane, pentane, isopentane, hexane, heptane, octane, cyclohexane, benzene and toluene. Further, in forming the slurry, it is permitted to use a liquefied olefin in place of a part or the whole of the inert hydrocarbon.

In the pre-polymerization, an amount of the organoaluminum compound (C) can be determined within a wide range of from 0.5 to 700 mol per mol of the transition metal compound (B). Preferable is from 0.8 to 500 mol per mol thereof, and particularly preferable is from 1 to 200 mol per mol thereof.

An amount of the olefin to be subjected to the pre-polymerization is usually from 0.01 to 1000 g per g of the modified particle, preferably from 0.05 to 500 g per g thereof, and particularly preferably from 0.1 to 200 g per g thereof.

In the pre-polymerization, a slurry concentration is preferably from 0.1 to 50 g-above-mentioned modified particle/l-solvent, and particularly preferably from 0.5 to 20 g-the above-mentioned modified particle/l-solvent. A pre-polymerization temperature is preferably from -20 to 100°C, and particularly preferably from 0 to 80°C. A partial pressure of the olefin in the gas phase during the pre-polymerization is preferably from 0.001 to 2 MPa, and particularly preferably from 0.01 to 1 MPa, excepting an olefin which is liquid under the pressure and temperature conditions of pre-polymerization. Further, a pre-polymerization time is not particularly limited, and usually from 2 minutes to 15 hours.

In carrying out the pre-polymerization, as a process for supplying the above-mentioned modified particle (A), transition metal compound (B), organoaluminum compound (C) and olefin, there can be applied a process comprising the step of contacting the above-mentioned modified particle (A) and the transition metal compound (B), and if desired, the organoaluminum compound (C), and thereafter supplying the olefin, a process comprising the step of contacting the above-mentioned modified particle (A), the transition metal compound (B) and the olefin, and thereafter supplying the organoaluminum compound (C), and a process comprising the step of contacting the organoaluminum compound (C) and the transition metal compound (B) in the presence of the olefin, and thereafter supplying the above-mentioned modified particle (A). At the time when the above-mentioned modified particle (A) and the organoaluminum compound (C) are contacted with each other, it is recommendable that the olefin coexists in advance. Further, as a supply method of the olefin, any of a method comprising supplying the olefin in order while keeping the pre-determined pressure of the polymerization zone, and a method comprising supplying all the pre-determined amount of the olefin in the first place can be applied. It is also permitted to add a chain transfer agent such as hydrogen to regulate a molecular weight of the polymer obtained.

In the present invention, that obtained by the pre-polymerization as mentioned above can be used as a catalyst component or a catalyst. The pre-polymerized catalyst component in accordance with the present invention includes a pre-polymerized catalyst component for addition polymerization obtained by pre-polymerizing an olefin in the presence of the catalyst for addition polymerization obtained by contacting the above-mentioned modified particle (A) and the transition metal compound of the Groups 3 to 11 or lanthanoide series with each other, and a pre-polymerized catalyst component for addition polymerization obtained by pre-polymerizing an olefin in the presence of the catalyst for addition polymerization obtained by contacting the above-mentioned modified particle (A), the transition metal compound of the Groups 3 to 11 or lanthanoide series and the organoaluminum compound (C) with one another. The pre-polymerized catalyst in accordance with the present invention includes a catalyst for addition polymerization obtained by pre-polymerizing an olefin in the presence of the catalyst for addition polymerization obtained by contacting the above-mentioned modified particle (A) and the transition metal compound of the Groups 3 to 11 or lanthanoide series with each other, and a catalyst for addition polymerization obtained by pre-polymerizing an olefin in the presence of the catalyst for addition polymerization obtained by contacting the above-mentioned modified particle (A), the transition metal compound of the Groups 3 to 11 or lanthanoide series and the organoaluminum compound (C) with one another. The catalyst obtained using said pre-polymerized catalyst component for addition polymerization in accordance with the present invention includes a catalyst for addition polymerization obtained by contacting said pre-polymerized catalyst component for addition polymerization and the organoaluminum compound (C) with each other.

Examples of the monomer used in the polymerization are olefins having 2 to 20 carbon atoms, diolefins, cyclic olefins, alkenyl aromatic hydrocarbons and polar monomers. Two or more kinds of the monomer may be used at the same time. It is permitted to use two or more monomers at the same time.

Specific examples thereof are olefins such as ethylene, propylene, 1-butene, 1-pentene, 4-methyl-1-pentene, 5-methyl-1-hexene, 1-hexene, 1-heptene, 1-octene, 1-nonene and 1-decene; diolefins such as 1,5-hexadiene, 1,4-hexadiene, 1,4-pentadiene, 1,7-octadiene, 1,8-nonadiene, 1,9-decadiene, 4-methyl-1,4-hexadiene, 5-methyl-1,4-hexadiene, 7-methyl-1,6-octadiene, 5-ethylidene-2-norbornene, dicyclopentadiene, 5-vinyl-2-norbornene, norbornadiene, 5-methylene-2-norbornene, 1,5-cyclooctadiene, 5,8-endomethylenehexahydronaphthalene, 1,3-butadiene, isoprene, 1,3-hexadinene, 1,3-octadiene, 1,3-cyclooctadiene and 1,3-cyclohexadiene; cyclic olefins such as norbornene, 5-methyl-2-norbornene, 5-ethyl-2-norbornene, 5-butyl-2-norbornene, 5-phenyl-2-norbornene, 5-benzyl-2-norbornene, tetracyclododecene, tricyclodecene, tricycloundecene, pentacyclopentadecene, pentacyclohexadecene, 8-methyltetracyclododecene, 8-ethyltetracyclodecene, 5-acetyl-2-norbornene, 5-acetyloxy-2-norbornene, 5-methoxycarbonyl-2-norbornene, 5-ethoxycarbonyl-2-norbornene, 5-methyl-5-methoxycarbonyl-2-norbornene, 5-cyano-2-norbornene, 8-methoxycarbonyltetracyclododecene, 8-methyl-8-tetracyclododecene and 8-cyanotetracyclododecene; alkenylbenzenes such as styrene, 2-phenylpropylene, 2-phenylbutene and 3-phenylpropylene; alkylstyrenes such as p-methylstyrene, m-methylstyrene, o-methylstyrene, p-ethylstyrene, m-ethylstyrene, o-ethylstyrene, α-methylstyrene, 2,4-dimethylstyrene, 2,5-dimethylstyrene, 3,4-dimethylstyrene, 3,5-dimethylstyrene, 3-methyl-5-ethylstyrene, 1,1-diphenylstyrene, p-tert-butylstyrene and p-sec-butylstyrene; alkenyl aromatic hydrocarbons such as bisalkenylbenzenes including divinylbenzene and alkenylnaphthalenes including 1-vinylnaphthalene; and polar monomers such as α,β-unsaturated carboxylic acids such as acrylic acid, methacrylic acid, fumaric acid, maleic anhydride, itaconic acid, itaconic anhydride and bicyclo(2,2,1)-5-heptene-2,3-dicarboxylic acid and their salts of metals such as sodium, potassium, lithium, zinc, magnesium and calcium, α,β-unsaturated carboxylic acid esters such as methyl acrylate, ethyl acrylate, n-propyl acrylate, isopropyl acrylate, tert-butyl acrylate, 2-ethylhexyl acrylate, methyl methacrylate, ethyl methacrylate, n-propylmethacrylate, isopropylmethacrylate, n-butyl methacrylate and isobutyl methacrylate, unsaturated dicarboxylic acids such as maleic acid and itaconic acid, vinyl esters such as vinyl acetate, vinyl propionate, vinyl caproate, vinyl caprate, vinyl laurate, vinyl stearate and vinyl trifluoroacetate, and unsaturated carboxylic acid glycidyl esters such as glycidyl acrylate, glycidyl methacrylate and monoglycidyl itaconate.

The present invention can be applied to homopolymerization or copolymerization of these monomers. Examples of copolymer-constituting monomers are ethylene-propylene, ethylene-1-butene, ethylene-1-hexene, ethylene-1-octene, propylene-1-butene, ethylene-propylene-butene and ethylene-propylene-1-hexene, but the present invention should not be limited thereto.

Among those mentioned above, α-olefins having 3 to 20 carbon atoms can be used as the monomer for polymerization carried out using the above-mentioned stereoregular catalyst.

Further, copolymerization between said α-olefin and a comonomer copolymerizable with said α-olefin can be suitably carried out. Examples of the comonomer copolymerizable with said α-olefin are ethylene and diolefin compounds as mentioned above.

The stereoregular polymerization is suitable particularly for the production of an isotactic stereoregular α-olefin polymer, more particularly for the production of an isotactic stereoregular propylene polymer.

Specific examples of the isotactic stereoregular propylene polymer are a homopolymer of propylene; a random copolymer of propylene with a comonomer such as ethylene and/or an α-olefin having 4 to 12 carbon atoms in an amount controlled as not to lose crystallinity; and a block copolymer obtained by performing homopolymerization of propylene or copolymerization of propylene with ethylene or an α-olefin having 4 to 12 carbon atoms (referred to as the first part polymerization), and then performing one step or multi-step polymerization of an α-olefin having 3 to 12 carbon atoms with ethylene (referred to as the latter part polymerization). The amount controlled as not to lose crystallinity for the random copolymer varies depending upon a kind of the comonomer. For example, in the case of ethylene, an amount of the repeating unit derived from ethylene in the copolymer is usually not more than 10% by weight, and in the case of other α-olefins such as 1-butene, an amount of the repeating unit derived from the α-olefin in the copolymer is usually not more than 30% by weight, and preferably not more than 10% by weight. In the first part polymerization for the block copolymer, for example, a polymerization amount of ethylene is usually not more than 10% by weight, preferably not more than 3% by weight, and more preferably not more than 0.5% by weight, and a polymerization amount of the α-olefin is usually not more than 15% by weight, and preferably not more than 10% by weight. In the latter part polymerization, a polymerization amount of ethylene is usually from 20 to 80% by weight, and preferably from 30 to 50% by weight.

Specific examples of a combination of a copolymer-constituting monomer are propylene-ethylene, propylene-1-butene, propylene-1-hexene and propylene-1-octene, but the present invention should not be limited thereto.

As an index of the isotactic stereoregularity, an isotactic pentad proportion is used.

It means a proportion of a propylene monomer unit in the middle of a pentad unit isotactic chain in a crystalline polypropylene molecule chain, which is measured using the method disclosed in "Macromolecules", by A. Zambell et al., 6, 925 (1973), namely, using $^{13}C$-NMR. The pentad unit isotactic chain can be rephrased by a chain formed through meso linkage of five propylene monomer units in succession. Attribution of the NMR absorption peak is based on "Macromolecules", 8, 687 (1975), issued after that. As the case may be, the isotactic pentad proportion is abbreviated as "mmmm". An upper limit of a theoretical mmmm value is 1.000.

When the stereoregular polymerization of the α-olefin is carried out, particularly when that of propylene is carried out, the obtained stereoregular α-olefin polymer is preferably that having mmmm of not less than 0.900 (more preferably not less than 0.940, and much more preferably not less than 0.955).

## Example

The present invention is illustrated in more detail with reference to Examples and Comparative Examples, but the present invention is not limited thereto. Measurement values of respective items in Examples were obtained

by the following methods.

(1) A content of a repeating unit derived from the $\alpha$ -olefin in the polymer was obtained as follows. Using an infrared spectrophotometer (FT-IR 7300, manufactured by Japan Spectroscopic Co., Ltd.), characteristic absorption of ethylene and the $\alpha$-olefin were measured to prepare a calibration curve, and the content was obtained using the calibration curve and expressed in terms of a short chain branch number (SCB) per 1000 carbon atoms.
(2) Intrinsic viscosity = [ $\eta$ ] : measured in a tetralin solution at 135°C using Ubbelohde viscometer.(Unit: dl/g)
(3) Melt flow rate = MFR: a melt flow rate value (Unit: g/10 min.) measured according to the method prescribed in JIS K7210-1995, under conditions of 190°C and a load of 21.18 N (2.16 kg).
(4) Swelling ratio = SR: a value obtained by dividing a strand diameter measured at the time of the MFR measurement by an inner diameter of a die, namely 2.095 mm.
(5) Melt flow rate ratio = MFRR: avalue obtained by dividing a melt flow rate value obtained according to the method prescribed in JIS K7210-1995, under conditions of 190°C and a load of 211.82N (21.60 kg) by the melt flow rate (MFR) value obtained under the load of 21.18 N (2.16 kg).

In the above-mentioned melt flow rate measurement, a polymer blended in advance with 1000 ppm of an antioxidant was used.

(6) Molecular weight and molecular weight distribution

It was measured under the conditions described below according to gel permeation chromatography (GPC). A calibration curve was prepared using a standard polystyrene. The molecular weight distribution was represented by a ratio (Mw/Mn) of a weight average molecular weight (Mw) to a number average molecular weight (Mn).

Measurement machine: 150C type, manufactured by Milipore Waters Co.

Column: TSK-GEL GMH-HT 7.5 × 600 × 2 columns
Measurement temperature: 140°C
Solvent: ortho-dichlorobenzene
Measurement concentration: 5mg/5ml
Provisos that; in Examples 6 to 12 and 17, the measurement was carried out using Column: TSK-GEL GMH6-HT 7.5 × 300 × 3 columns, and in Examples 67 to 69, the measurement was carried out under the following column, measurement temperature and measurement concentration conditions.
Column: Shodex AT806-M/S
Measurement temperature: 145°C set up
Measurement concentration: 8mg/8ml o-dichlorobenzene

(7) Elementery analysis

Zn: A sample was put in a sulfuric acid aqueous solution (1 mol/l), a supersonic wave was applied thereto to extract a metal component, and the obtained liquid portion was quantitatively determined according to an IPC emission spectrochemical analysis.
F: A sample was burned in a flask filled with oxygen, thereby producing a combustion gas, the gas was absorbed in a sodium hydroxide aqueous solution (10%), and the resulting solution was quantitatively determined according to an ion selective electrode method.

(8) Film formation of polymer

To 0.030 kg of the polymer powder obtained by polymerization, IRGANOX 1076 (manufactured by Ciba Specialty Chemicals Co., Ltd.) as an antioxidant in an amount corresponding to 1500 ppm and calcium stearate as a neutralizing agent in an amount corresponding to 500 ppm were blended, and the blend was processed under the following molding conditions according to a tubular film process, thereby obtaining a film having a thickness of 15 μm. A degree of production of fish eyes was examined to determine appearance of the film.

Extruder: single screw 20 mmψ, screw rotating speed: 16 rpm, die: 25 mmψ, rip width: 0.7 mm, drawing speed: 5.5 m/min. and temperature: 170°C

(9) Extended X-ray measurement

A sample and a cell attached with a polyimide film (KAPTON, manufactured by DU PONT-TORAY CO.,LTD.) were placed in a nitrogen bag, and after purging with nitrogen, the sample was introduced in the cell. The cell sealed hermetically was taken out and mounted to an X-ray measurement apparatus. The extended X-ray measurement was carried out as follows.

X-ray diffraction apparatus: vertical rotating anode X-ray generator UltraX18 manufactured by Rigaku International Corporation

Load: 50kV-100 mA
Focus: line
Scan mode: 2θ/θ(2° /min.)
Measured angle range: 5° to 70°
Slit: divergence slit 1°
receiving slit 0.15 mm
scatter slit 1°
Detector: scintillation counter
Monochromater: graphite

(10) Measurement method of XAFS

① Preparation of measurement sample

(i) A center portion of a polyester sheet was cut off, and a polyimide film (KAPTON, manufactured by DU PONT-TORAY CO.,LTD.) was attached thereto.
(ii) Another polyester sheet (PET) whose center portion had been similarly cut off was placed thereon.
(iii) A sample was spread over the cut off portion.
(iv) The other polyester sheet (PET) whose center portion had been cut off and attached with a polyimide film (KAPTON, manufactured by DU PONT-TORAY CO.,LTD.) was placed thereon, thereby obtaining a measurement sample.

Among the above-mentioned operations, (iii) and (iv) were carried out under a nitrogen atmosphere.

② Measurement

Measurement of K absorption edge XAFS on a Zn atom in the sample was carried out using a measurement apparatus of XAFS, with the beam line 10B (BL-10B) of the Photon Factory in the National Laboratory for High-Energy Physics. Using an Si (311) channel cut analyzing crystal, an incoming X-ray intensity (I0) and a transmitted X-ray intensity (It) were measured at ambient temperature using a 17 cm ion chamber with use of nitrogen as a detection gas and a 31 cm ion chamber with use of a mixed gas of 50% nitrogen and 50% argon as a detection gas, respectively. At this time, measuring regions, intervals of measuring points and elapsed time per measuring point were set as follows.

In the region between 9160 eV and 9610 ev of an incoming X-ray energy (E), the elapsed time was 1 second at each interval of 6.43 eV (70 measuring points).

In the region between 9610 eV and 9760 ev of an incoming X-ray energy (E), the elapsed time was 1 second at each interval of 1 eV (150 measuring points).

In the region between 9760 eV and 10160 ev of an incoming X-ray energy (E), the elapsed time was 2 seconds at each interval of 2.5 eV (160 measuring points).

In the region between 10160 eV and 10760 ev of an incoming X-ray energy (E), the elapsed time was 2 seconds at each interval of 6 eV (101 measuring points). Incidentally, calibration of the energy was conducted by adjusting an angle of the analyzing crystal to 24.934° at an energy value position (8980.3 eV) of pre-edge peak appeared in the X-ray absorption near edge structure (XANES) spectra on a K absorption edge of ametal copper.

Determination method of EXAFS

The K absorption edge energy E0 on the Zn atom in the sample was found to be 9663 eV. Incidentally, E0 means an energy value at which a first order differential coefficient thereof becomes an absolute maximum in the XANES spectra.

A background determined by applying Victoreen's expression ($A\lambda^3 - B\lambda^4 + C$; λ is a wave length of the incoming X-ray, and A,B and C are an optional constant) to an absorption coefficient of an energy region lower than the absorption edge according to the least-squares method was deducted, and successively an absorbance of a lone atom was estimated according to a weighed Cubic Spline method. Thereby, EXAFS function χ (k) was extracted. Incidentally, k means a photoelectron wave as defined by $0.5123 \times (E-E0)^{1/2}$, wherein a unit of k is $Å^{-1}$.

Finally, the $k^3$-weighed EXAFS function $k^3$ χ (k) was processed according to a Fourier transform within a range of k of from 2.5 $Å^{-1}$ to 15.7 $Å^{-1}$, thereby obtaining a radial distribution function, provided that Hanning function and 0.05 $Å^{-1}$ were used as a window function of the Fourier transform and the window width, respectively.

(11) $^{13}$C-NMR measurement

A solution of 200 mg of the polymer in 3 ml of a mixed solvent of o-dichlorobenzene/deuterated o-dichlorobenzene (o-dichlorobenzene/deuterated o-dichlorobenzene = 4/1 (volume ratio)) was subjected to measurement using JNM-EX270, manufactured by JEOL.

(12) Bulk density

The bulk density was measured according to JIS K-6721-1966.

(13) Melt tension (MT): Using 5 g of a sample, a molten resin strand was extruded through an orifice having a diameter of 2.09 mmϕ and a length of 8 mm at 190°C with a piston having an extrusion speed of 5.5 mm/min. and wound into a roller having a diameter of 50 mm while increasing a rotating speed at a rate of 40 rpm/min., wherein a tension immediately before cutting of the strand was measured to determine the melt tension (MT) (unit = cN).

[Example 1]

(1) Production of contact product (e)

In a 5 l four necked flask purged with nitrogen, 1.48 l of tetrahydrofuran and 1.47 l (2.93 mol) of a hexane solution of diethylzinc (1.99 mol/l) were introduced and cooled to -50°C. To the mixture was dropped a solution prepared by dissolving 269.5 g (1.46 mol) of pentafluorophenol in 500 ml of tetrahydrofuran over 25 minutes. After completion of dropping, the mixture was gradually heated to raise the temperature to ambient temperature and stirred for 3.2 hours. Thereafter, the mixture was heated to 40°C and stirred for 35 minutes. The temperature was lowered to 20°C using an ice bath, and a solution prepared by dissolving 39.85 g (2.21 mol) of $H_2O$ in 200 ml of tetrahydrofuran was dropped thereto over 1.3hours. As a result, the mixture was separated into a yellow transparent liquid product and a yellow gel product. The mixture was stirred for 1 hour at 52°C, and thereafter allowed to stand for 12 hours at ambient temperature. The yellow transparent liquid product and the yellow gel product were separated from each other and placed into different flasks purged with nitrogen, respectively. Both were treated to remove a volatile component by distillation and dried for 12 hours at 120°C and for 8 hours at 130°C. Thereafter, 72% by weight of a solid product obtained from the yellow transparent liquid product and all of a solid product obtained from the yellow gel product were combined and introduced into a 5 l four necked flask purged with nitrogen, and 3 l of tetrahydrofuran was added thereto. The mixture was heated to 50°C, and cooled to ambient temperature and allowed to stand for 3 days. Under reduced pressure, a volatile component was removed by distillation, and thereafter, the residue was dried under reduced pressure for 11 hours at 120°C. As a result, 408 g of a solid product was obtained.

(2) Production of component (A)

In a 5 l four necked flask purged with nitrogen, 408 g of the solid product obtained in the above Example 1 (1) and 3 1 of tetrahydrofuran were introduced and stirred. To the mixture, 288.4 g of silica (Sylopol 948, manufactured by Davison Co., Ltd.; average particle diameter = 61 μm; pore volume =1.61 ml/g; specific surface area = 296 $m^2$/g), which had been heat-treated at 300°C under a nitrogen stream, was added. The mixture was heated to 40°C, stirred for 2 hours and thereafter allowed to stand, thereby precipitating a solid component. At the time when an interface between a layer of the precipitated solid component and an upper layer of a slurry portion appeared, the upper slurry portion was removed. For completing washing, 3 l of tetrahydrofuran was added to the residue, and the mixture was stirred, and thereafter allowed to stand, thereby precipitating a solid component, and then the upper slurry portion was removed similarly at the time when the interface appeared. Said washing operation was repeated 5 times. Further, 3 l of hexane was added thereto, and the mixture was stirred, and thereafter allowed to stand, thereby precipitating a solid component, and then the upper slurry portion was removed similarly at the time when the interface appeared. Using a glass filter, the liquid component was removed, and thereafter, the residue was dried for 8 hours at 120°C under reduced pressure, thereby obtaining 422 g of a component (A). An elementary analysis revealed Zn = 2.4 mmol/g, and F = 3.8 mmol/g.

(3) Pre-polymerization

A 0.4 l-volume autoclave equipped with a stirrer was made vacuum, hydrogen was fed therein to obtain a pressure of 0.003 MPa, 90 g of butane was fed therein as a solvent, and then a temperature of the autoclave was raised to 50°C. Further, ethylene was fed therein to obtain a partial pressure of 0.2 MPa, and after stabilizing the system, 1.2 mmol of triisobutylaluminum, 45 μmol of racemic ethylenebis(1-indenyl)zirconium dichloride, and successively 0.66 g of the component (A) obtained in the above Example 1 (2) were introduced therein to initiate polymerization. During the polymerization, a mixed gas of ethylene and hydrogen (hydrogen concentration = 0.27 mol%) was continuously supplied while adjusting so as to keep the gas phase pressure in the autoclave to 0.65 MPa. After 240 minutes, ethylene, butane and hydrogen gas were released, and a solid remaining in the autoclave was dried for 30

minutes at ambient temperature under reduced pressure. As a result, a polyethylene-pre-polymerized catalyst component for addition polymerization was obtained in a yield of 57 g per g of the component (A). Intrinsic viscosity [ η ] and MFR of said polyethylene were 1.65 dl/g and 2.4 g/10 min., respectively.

(4) Real polymerization

A 5 l-volume autoclave equipped with a stirrer, which had been dried under reduced pressure and thereafter purged with argon, was made vacuum, hydrogen was fed therein to obtain a partial pressure of 0.018 MPa, 1066 g of butane and 200 ml of 1-hexene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 1.06 mol%. To the resultant was added 1.5 ml of a heptane solution of triisobutylaluminum adjusted to a concentration of 1 mmol/ml. Successively, 1.13 g of the pre-polymerized catalyst component for addition polymerization obtained in the above Example 1 (3) was added thereto. Polymerization was continued for 60 minutes at 70°C while feeding an ethylene/hydrogen mixed gas (hydrogen = 0.76 mol%) so as to keep the whole pressure constant. As a result, 90 g of an olefin polymer having a good particle property was obtained. Polymerization activity per the solid catalyst component (the component (A) obtained in the above Example 1 (2)) was found to be 4500 g/g-solid catalyst component/hour. Further, the obtained olefin polymer showed, SCB = 15.5, MFR = 1.02, MFRR = 86, SR = 1.36 and MT = 3.7.

(5) Formation of film

Using the ethylene/1-hexene copolymer obtained in the above (4), the formation of film was conducted, thereby obtaining a film having a little fish eye and a good appearance.

[Example 2]

(1) Pre-polymerization

In a 210 l-volume autoclave equipped with a stirrer, which had been purged with nitrogen, 68 l of butane containing isobutylaluminum in a concentration of 3.7 mmol/l and 25 l of hydrogen of ordinary temperature and pressure were fed, and then a temperature of the autoclave was raised to 40°C. Further, ethylene was fed therein to make a gas phase pressure in the autoclave 0.6 MPa, and after stabilizing the system, 89.3 mmol of triisobutylaluminum, 12.8 mmol of racemic ethylenebis(1-indenyl)zirconium dichloride, and successively 170 g of the component (A) obtained in the above Example 1 (2) were introduced therein to initiate polymerization. During the polymerization, 3.0 kg/hour of ethylene and 7.5 l/hour of hydrogen of ordinary temperature and pressure were supplied while keeping the temperature to 50°C, and polymerization was continued for 2.8 hours. After completion of the polymerization, ethylene, butane and hydrogen gas were released, and a remaining solid was dried in vacuo at ambient temperature under a nitrogen stream, thereby obtaining a polyethylene-pre-polymerized catalyst component for addition polymerization in a yield of 47 g per g of the component (A). Intrinsic viscosity [η] and MFR of said polyethylene were 1.14 dl/g and 5.15 g/10 min., respectively.

(2) Real polymerization

Using the pre-polymerized catalyst component for addition polymerization obtained in the above (1) and a continuous type fluidized gas phase polymerization apparatus, copolymerization of ethylene and 1-hexene was carried out at 70°C under the whole pressure of 2.0 MPa. The pre-polymerized catalyst component for addition polymerization obtained in the above (1) and triisobutylaluminum were continuously supplied in rates of 192 g/hour and 40 mmol/hour, respectively, while continuously feeding ethylene, 1-hexene, hydrogen, nitrogen and butane so as to keep the gas composition constant. As a result, an ethylene/1-hexene copolymer having a good particle property was obtained in 15.4 kg/hour. The obtained ethylene/1-hexene copolymer showed, SCB = 21.4, MFR = 3.00, MFRR = 80, SR = 1.56 and MT = 2.7.

(3) Formation of film

Using the ethylene/1-hexene copolymer obtained in the above (2), the formation of film was conducted, thereby obtaining a film having a little fish eye and a good appearance.

[Comparative Example 1]

(1)

To a 5 l four necked flask purged with nitrogen, a stirrer, a dropping funnel and a thermometer were equipped. In the flask, 382 g of silica (Sylopol 948, manufactured by Davison Co., Ltd.; average particle diameter = 64 μm; pore volume =1.62 ml/g; specific surface area = 312 $m^2$/g), which had been heat-treated at 300°C under a nitrogen stream, was get. To the silica, 3.3 l of toluene was added to form a slurry, and the slurry was cooled to 5°C using an ice bath, and 375 ml of a toluene solution of trimethylaluminum having a concentration of 2.1 mmol/ml was gradually dropped thereto. At this moment, generation of a gas was observed. The mixture was stirred for 30 minutes at 5°C, and stirred for 2 hours at 80°C, and thereafter, a supernatant was removed. The remaining solid product was washed 4 times with each 3.3 l of toluene. Thereafter, 3.3 l of toluene was again added thereto to form a slurry.

(2) The slurry obtained in the above Comparative Example 1 (1) was cooled to 5°C using an ice bath, and thereafter 420 ml of a toluene solution of pentafluorophenol adjusted to a concentration of 2 mmol/ml was gradually dropped thereto. At this moment, generation of a gas was observed. The mixture was stirred for 30 minutes at 5°C, and stirred for 2 hours at 80°C, and thereafter, a supernatant was removed by filtration. The remaining solid product was washed 4 times with each 3.3 l of toluene, and washed 2 times with each 3.3 l of hexane. Thereafter, the solid product was dried under reduced pressure to obtain 434 g of a solid product having flowability. Elementary analysis revealed, Al = 1.2 mmol/g and F = 4.6 mmol/g.

(3) Polymerization A 5 l-volume autoclave equipped with a stirrer, which had been dried under reduced pressure and thereafter purged with argon, was made vacuum, hydrogen was fed therein to obtain a partial pressure of 0.007 MPa, 1145 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.37 mol% and 1-butene = 1.55 mol%. To the resultant was added 1.5 ml of a heptane solution of triisobutylaluminum adjusted to a concentration of 1 mmol/ml. Next, 0.5 ml of a toluene solution of racemic ethylenebis(1-indenyl)zirconium dichloride adjusted to a concentration of 2 μmol/ml was introduced therein, and successively, 36 mg of the solid product obtained in the above Comparative Example 1 (2) was added therein as a solid catalyst component. Polymerization was continued for 60 minutes at 70°C while feeding an ethylene/hydrogen mixed gas (hydrogen = 0.22 mol%) so as to keep the whole pressure constant. As a result, 135 g of an olefin polymer was obtained. Polymerization activity per the zirconium atom was found to be $1.4 \times 10^8$ g/mol-Zr/hour, and polymerization activity per the solid catalyst component was found to be 3720 g/ g-solid catalyst component/hour. Further, the obtained olefin polymer showed, SCB = 12.4, MFR = 2.55. MFRR = 48, and SR = 1.35.

(4) Formation of film

Using the ethylene/1-hexene copolymer obtained in the above (3), the formation of film was conducted, thereby obtaining a film having many fish eyes and a poor appearance.

[Example 3]

(1) Production of contact product (e)

In a 300 ml four necked flask, which had been dried under reduced pressure and thereafter purged with argon, 20 ml (20 mmol) of a hexane solution of diethylzinc (1.02 mol/l) and 100 ml of tetrahydrofuran were introduced, cooled to -78°C and stirred. To the mixture was dropped 4.4 ml (5.1 mmol) of a hexane solution of pentafluorophenol (1.17 mol/l). After completion of dropping, the mixture was gradually heated to raise the temperature to ambient temperature and stirred for 2 hours. Thereafter, 321 μl (17.8 mmol) of $H_2O$ was dropped thereto. After completion of dropping, the mixture was stirred for 14 hours at ambient temperature. Under reduced pressure, a volatile component was removed by distillation, and thereafter, the resulting solid was dried under reduced pressure for 8 hours at 120°C. As a result, a solid product was obtained.

(2) Production of component (A)

In a 50 ml four necked flask, which had been dried under reduced pressure and thereafter purged with argon, 0.73 g of silica (Sylopol 948, manufactured by Davison Co., Ltd.; average particle diameter = 55 μm; pore volume =1.66 ml/g; specific surface area = 309 $m^2$/g), which had been heat-treated at 300°C under a nitrogen stream and 40 ml of tetrahydrofuran were introduced and stirred. To the mixture, 1.01 g of the solid product obtained in the above Example 3 (1) was added. The mixture was heated to 40°C and stirred for 2 hours. Thereafter, the liquid

component was removed using a glass filter, and the solid component was washed 4 times with each 20 ml of tetrahydrofuran. The residue was dried for 8 hours at 120°C under reduced pressure, thereby obtaining a component (A).

(3) Polymerization

A 3 l-volume autoclave equipped with a stirrer, which had been dried under reduced pressure and thereafter purged with argon, was made vacuum, hydrogen was fed therein to obtain a partial pressure of 0.012 MPa, 700 g of butane was fed therein, 50 g of 1-butene was fed therein, and then a temperature was raised to 70°C. Thereafter, ethylene was fed therein to obtain a partial pressure of 1.6 MPa, and the system was stabilized. As a result of gas chromatography, a gas composition in the system was found to be hydrogen = 0.477 mol%, and 1-butene = 2.29 mol%. To there, 0.9 ml of a heptane solution of triisobutylaluminum adjusted to a concentration of 1 mmol/ml was added. Successively, 0.25 ml of a toluene solution of racemic ethylenebis(1-indenyl)zirconium dichloride adjusted to a concentration of 2 μmol/ml was added thereto, and further 15.3 mg of the component (A) obtained in the above Example 3 (2) was added thereto. Polymerization was carried out for 60 minutes at 70°C while feeding a mixed gas of ethylene and hydrogen (hydrogen concentration = 0.199 mol%) so as to keep the whole pressure constant. As a result, 46.5 g of an olefin polymer having a good particle property was obtained. Polymerization activity per zirconium atom was found to be $9.3 \times 10^7$ g/mol-Zr/hour, and polymerization activity per the solid catalyst component was found to be 3040 g/g-solid catalyst component/hour. Further, the obtained olefin polymer showed, SCB = 14.9, Mw = 169000, Mw/Mn = 10.2, MFR = 0.070. MFRR = 192 and SR = 1.05.

[Example 4]

(1) Production of contact product (e) In a 300 ml four necked flask, which had been dried under reduced pressure and thereafter purged with argon, 20 ml (20 mmol) of a hexane solution of diethylzinc (1.02 mol/l) and 100 ml of tetrahydrofuran were introduced, cooled to -78°C and stirred. To the mixture was dropped 8.7 ml (10 mmol) of a hexane solution of pentafluorophenol (1.17 mol/l). After completion of dropping, the mixture was gradually heated to raise the temperature to ambient temperature and stirred for 2 hours. Thereafter, 275 μl (15.3 mmol) of $H_2O$ was dropped thereto. After completion of dropping, the mixture was stirred all night at ambient temperature. Under reduced pressure, a volatile component was removed by distillation, and thereafter, the resulting solid was dried under reduced pressure for 8 hours at 120°C. As a result, a solid product was obtained.

(2) Production of component (A)

In a 50 ml four necked flask, which had been dried under reduced pressure and thereafter purged with argon, 0.93 g of the same lot heat-treated silica as that used in Example 3 (2) and 40 ml of tetrahydrofuran were introduced and stirred. To the mixture, 1.34 g of the solid product obtained in the above Example 4 (1) was added. The mixture was heated to 40°C and stirred for 2 hours. Thereafter, the liquid component was removed using a glass filter, and the solid component was washed 4 times with each 20 ml of tetrahydrofuran and once with 20 ml of hexane. The residue was dried for 8 hours at 120°C under reduced pressure, thereby obtaining a component (A). Elementary analysis revealed Zn = 2.6 mmol/g, and F = 3.9 mmol/g.

(3) Polymerization

Polymerization of Example 3 (3) was repeated, except that 21.0 mg of the component (A) obtained in Example 4 (2) was used as a solid catalyst component, a gas composition in the system found by gas chromatography was composed of hydrogen = 0.494 mol% and 1-butene = 2.74 mol%, and a hydrogen concentration of the ethylene/hydrogen mixed gas was 0.192 mol%. As a result, 70.2 g of an olefin polymer having a good particle property was obtained. Polymerization activity per zirconium atom was found to be $1.4 \times 10^8$ g/mol-Zr/hour, and polymerization activity per the solid catalyst component was found to be 3340 g/g-solid catalyst component/hour. Further, the obtained olefin polymer showed, SCB = 14.8, Mw = 143000, Mw/Mn = 5.28, MFR = 0.158, MFRR = 138 and SR = 1.06.

[Example 5]

(1) Production of contact product (e)

In a 200 ml four necked flask, which had been dried under reduced pressure and thereafter purged with argon, 10 ml (10 mmol) of a hexane solution of diethylzinc (1.02 mol/l) and 50 ml of tetrahydrofuran were introduced, cooled to -78°C and stirred. To the mixture was dropped 6.9 ml (10 mmol) of a hexane solution of pentafluorophenol (1.48 mol/l). After completion of dropping, the mixture was gradually heated to raise the temperature to ambient

temperature and stirred for 2 hours. Thereafter, 93.7 mg (5.20 mmol) of $H_2O$ was dropped thereto. After completion of dropping, the mixture was stirred for 20 hours at ambient temperature. Under reduced pressure, a volatile component was removed by distillation, and thereafter, the resulting solid was dried under reduced pressure for 8 hours at 120°C. As a result, 2.34 g of a solid product was obtained.

(2) Production of component (A)

In a 50 ml four necked flask, which had been dried under reduced pressure and thereafter purged with argon, 0.38 g of the same lot heat-treated silica as that used in Example 3 (2) and 40 ml of tetrahydrofuran were introduced and stirred. To the mixture, 0.877 g of the solid product obtained in the above. Example 5 (1) was added. The mixture was heated to 40°C and stirred for 2 hours. Thereafter, the liquid component was removed using a glass filter, and the solid component was washed 4 times with each 20 ml of tetrahydrofuran. The residue was dried for 8 hours at 120°C under reduced pressure, thereby obtaining a component (A).

(3) Polymerization

Polymerization of Example 3 (3) was repeated, except that 12.6 mg of the component (A) obtained in Example 5 (2) was used as a solid catalyst component, and a gas composition in the system found by gas chromatography was composed of hydrogen = 0.530 mol% and 1-butene = 2.38 mol%. As a result, 6.2 g of an olefin polymer having a good particle property was obtained. Polymerization activity per zirconium atom was found to be $1.2 \times 10^7$ g/mol-Zr/hour, and polymerization activity per the solid catalyst component was found to be 492 g/g-solid catalyst component/hour. Further, the obtained olefin polymer showed, SCB = 14.0, Mw = 112000, Mw/Mn = 6.93, MFR = 0.428, MFRR = 84.1 and SR = 1.30.

[Example 6]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture was dropped 8.6 ml (20 mmol) of a tetrahydrofuran solution of pentafluorophenol (2.33 mol/l) at a rate of 17.9 ml/hour. After completion of dropping, the mixture was gradually heated to raise the temperature to ambient temperature and stirred for 125 minutes. Thereafter, 1.26 ml (69.9 mmol) of $H_2O$ was dropped thereto at 20°C at a rate of 0.54 ml/hour. After completion of dropping, the mixture was stirred for 65 minutes at ambient temperature and thereafter allowed to stand for 11.3 hours. Under reduced pressure, a volatile component was removed by distillation, and thereafter, the resulting solid was dried under reduced pressure for 8 hours at 120°C. As a result, a solid product was obtained.

(2) Production of component (A)

In a 50 ml four necked flask, which had been dried under reduced pressure and thereafter purged with nitrogen, 3.21 g of the solid product obtained in the above Example 6 (1) and 30 ml of tetrahydrofuran were introduced and stirred. To the mixture, 3.02 g of the same lot heat-treated silica as that used in Example 3 (2) was added. The mixture was heated to 40°C and stirred for 2 hours. Thereafter, the mixture was allowed to stand, thereby precipitating a solid component. At the time when an interface between a layer of the precipitated solid component and an upper layer of a slurry portion appeared, the upper slurry portion was removed. Thereafter, filtration was carried out using a filter. For completing washing, 30 ml of tetrahydrofuran was added to the remainder, and the mixture was stirred, and thereafter allowed to stand, thereby precipitating a solid component, and then the upper slurry portion was removed similarly at the time when the interface appeared. Thereafter, filtration was carried out using a filter. The above washing operation was repeated 5 times. The residue was dried for 8 hours at 120°C under reduced pressure, thereby obtaining 4.16 g of a component (A). Elementary analysis revealed Zn = 2.6 mmol/g, and F = 2.2 mmol/g. Accordingly, F/Zn = 0.85 (molar ratio). As a result of extended X-ray measurement, A/B = 0.212. As a result of EXAFS, peak intensity C = 13.1, peak intensity D = 5.74, and peak intensity ratio D/C = 0.44.

(3) Polymerization

Polymerization of Example 3 (3) was repeated, except that 16.3 mg of the component (A) obtained in the above Example 6 (2) was used as a solid catalyst component, a gas composition in the system found by gas chromatography was composed of hydrogen = 0.466 mol% and 1-butene = 2.82mol%, and a hydrogen concentration of the ethylene/hydrogen mixed gas was 0.187 mol%.

As a result, 20.5 g of an olefin polymer having a good particle property was obtained. Polymerization activity per zirconium atom was found to be $4.1 \times 10^7$ g/mol-Zr/hour, and polymerization activity per the solid catalyst component was found to be 1260 g/g-solid catalyst component/hour. Further, the obtained olefin polymer showed, SCB = 12.7, Mw = 123000, Mw/Mn = 4.47, MFR = 0.167, MFRR = 108 and SR = 1.11.

[Example 7]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture was dropped 17.2 ml (40 mmol) of a tetrahydrofuran solution of pentafluorophenol (2.33 mol/l) at a rate of 17.9 ml/hour. After completion of dropping, the mixture was gradually heated to raise the temperature to ambient temperature and stirred for 2.6 hours. Thereafter, 1.08 ml (60.0 mmol) of $H_2O$ was dropped thereto at 20°C at a rate of 0.54 ml/hour. After completion of dropping, the mixture was stirred for 3.2 hours at ambient temperature and thereafter allowed to stand for 11 hours. Under reduced pressure, a volatile component was removed by distillation, and thereafter, the resulting solid was dried under reduced pressure for 8 hours at 120°C, thereby obtaining a solid product.

(2) Production of component (A)

In a 50 ml four necked flask, which had been dried under reduced pressure and thereafter purged with nitrogen, 4.34 g of the solid product obtained in the above Example 7 (1) and 30 ml of tetrahydrofuran were introduced and stirred. To the mixture, 2.87 g of the same lot heat-treated silica as that used in Example 3 (2) was added. The mixture was heated to 40°C and stirred for 2 hours. Thereafter, the liquid component was removed, and thereafter the remaining solid component was washed 5 times with each 30 ml of tetrahydrofuran. The residue was dried for 8 hours at 120°C under reduced pressure, thereby obtaining 3.21 g of a component (A). Elementary analysis revealed Zn = 1.5 mmol/g and F = 2.5 mmol/g. Accordingly, F/Zn = 1.7 (molar ratio). As a result of extended X-ray measurement, A/B = 0.034. As a result of EXAFS, peak intensity C = 13.2, peak intensity D = 4.76, and peak intensity ratio D/C = 0.36.

(3) Polymerization

Polymerization of Example 3 (3) was repeated, except that 15.1 mg of the component (A) obtained in the above Example 7 (2) was used as a solid catalyst component, a gas composition in the system found by gas chromatography was composed of hydrogen = 0.441 mol% and 1-butene = 2.69 mol%, and a hydrogen concentration of the ethylene/hydrogen mixed gas was 0.187 mol%.

As a result, 25.7 g of an olefin polymer having a good particle property was obtained. Polymerization activity per zirconium atom was found to be $5.1 \times 10^7$ g/mol-Zr/hour, and polymerization activity per the solid catalyst component was found to be 1700 g/g-solid catalyst component/hour. Further, the obtained olefin polymer showed, SCB = 14.6, Mw = 124000, Mw/Mn = 4.32, MFR = 0.166, MFRR = 116 and SR = 1.12.

[Example 8]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture was dropped 34.3 ml (80 mmol) of a tetrahydrofuran solution of pentafluorophenol (2.33 mol/l) at a rate of 17.9 ml/hour. After completion of dropping, the mixture was gradually heated to raise the temperature to ambient temperature and stirred for 2.7 hours. Thereafter, 0.72 ml (40 mmol) of $H_2O$ was dropped thereto at 20°C at a rate of 0.54 ml/hour. After completion of dropping, the mixture was stirred for 2.4 hours at ambient temperature and thereafter allowed to stand for 12 hours. Under reduced pressure, a volatile component was removed by distillation, and thereafter, the resulting solid was dried under reduced pressure for 8 hours at 120°C, thereby obtaining a solid product.

(2) Production of component (A) In a 50 ml four necked flask, which had been dried under reduced pressure and thereafter purged with nitrogen, 6.47 g of the solid product obtained in the above Example 8 (1) and 30 ml of tetrahydrofuran were introduced and stirred. To the mixture, 3.05 g of the same lot heat-treated silica as that used in Example 3 (2) was added. The mixture was heated to 40°C and stirred for 2 hours. Thereafter, the mixture was allowed to stand, thereby precipitating a solid component. At the time when an interface between a layer of the precipitated solid component and an upper layer of a slurry portion appeared, the upper slurry portion was removed. Thereafter, filtration was carried out using a filter. For completing washing, 30 ml of tetrahydrofuran was added to the residue, and the mixture was stirred, and thereafter allowed to stand, thereby precipitating a solid component, and then the upper slurry portion was removed similarly at the time when the interface appeared. Thereafter, filtration was carried out using a filter. The above washing operation was repeated 2 times. (Operated by dip tube.

Ogane)Thereafter, the liquid component was removed using a filter, and the resulting solid component was washed 2 times with each 30 ml of tetrahydrofuran. The residue was dried for 8 hours at 120°C under reduced pressure, thereby obtaining 3.35 g of a component (A). Elementary analysis revealed Zn = 1.2 mmol/g, and F = 2.4 mmol/g.

(3) Polymerization

Polymerization of Example 3 (3) was repeated, except that 15.5 mg of the component (A) obtained in the above Example 8 (2) was used as a solid catalyst component, a gas composition in the system found by gas chromatography was composed of hydrogen = 0.475 mol% and 1-butene = 2.71 mol%, and a hydrogen concentration of the ethylene/hydrogen mixed gas was 0.187 mol%.

As a result, 36.7 g of an olefin polymer having a good particle property was obtained. Polymerization activity per zirconium atom was found to be $7.3 \times 10^7$ g/mol-Zr/hour, and polymerization activity per the solid catalyst component was found to be 2370 g/g-solid catalyst component/hour. Further, the obtained olefin polymer showed, SCB = 13.5, Mw = 122000, Mw/Mn = 4.06, MFR = 0.170, MFRR = 106 and SR = 1.15.

[Example 9]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture was dropped 51.3 ml (120 mmol) of a tetrahydrofuran solution of pentafluorophenol (2.34 mol/l) at a rate of 17.9 ml/hour. After completion of dropping, the mixture was gradually heated to raise the temperature to ambient temperature and stirred for 2.4 hours. Thereafter, 0.36 ml (20 mmol) of $H_2O$ was dropped thereto at 20°C at a rate of 0.54 ml/hour. After completion of dropping, the mixture was stirred for 3.4 hours at ambient temperature and thereafter allowed to stand for 13.5 hours. Under reduced pressure, a volatile component was removed by distillation, and thereafter, the resulting solid was dried under reduced pressure for 8 hours at 120°C, thereby obtaining 26.2 g of a solid product.

(2) Production of component (A)

In a 50 ml four necked flask, which had been dried under reduced pressure and thereafter purged with argon, 9.28 g of the solid product obtained in the above Example 9 (1) and 30 ml of tetrahydrofuran were introduced and stirred. To the mixture, 2.97 g of the same lot heat-treated silica as that used in Example 3 (2) was added. The mixture was heated to 40°C and stirred for 2 hours. Thereafter, the liquid component was removed, and thereafter the remaining solid component was washed 5 times with each 30 ml of tetrahydrofuran. The residue was dried for 8 hours at 120°C under reduced pressure, thereby obtaining a component (A). Elementary analysis revealed Zn = 1.0 mmol/g and F = 2.8 mmol/g.

(3) Polymerization

Polymerization of Example 3 (3) was repeated, except that 15.7 mg of the component (A) obtained in the above Example 9 (2) was used as a solid catalyst component, a gas composition in the system found by gas chromatography was composed of hydrogen = 0.469 mol% and 1-butene = 2.48 mol%, and a hydrogen concentration of the ethylene/hydrogen mixed gas was 0.192 mol%.

As a result, 12.9 g of an olefin polymer having a good particle property was obtained. Polymerization activity per zirconium atom was found to be $2.6 \times 10^7$ g/mol-Zr/hour, and polymerization activity per the solid catalyst component was found to be 822 g/g-solid catalyst component/hour. Further, the obtained olefin polymer showed, SCB = 7.91, Mw = 99200, Mw/Mn = 2.81, MFR = 0.582, MFRR = 48.4 and SR = 1.39.

[Example 10]

(3) Polymerization

Polymerization of Example 3 (3) was repeated, except that 20.1 mg of the component (A) obtained in the above Example 1 (2) was used as a solid catalyst component, a gas composition in the system found by gas chromatography was composed of hydrogen = 0.480 mol% and 1-butene = 3.11 mol%, and the polymerization time was 15 minutes.

As a result, 20.0 g of an olefin polymer having a good particle property was obtained. Polymerization activity per zirconium atom was found to be $1.6 \times 10^8$ g/mol-Zr/hour, and polymerization activity per the solid catalyst component was found to be 4000 g/g-solid catalyst component/hour. Further, the obtained olefin polymer showed, SCB = 14.7, Mw = 150000, Mw/Mn = 3.77, MFR = 0.06, MFRR = 233 and SR = 1.05.

[Example 11]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture was dropped 13.7 ml (31.9 mmol) of a tetrahydrofuran solution of pentafluorophenol (2.33 mol/l) at a rate of 17.9 ml/hour. After completion of dropping, the mixture was gradually heated to raise the temperature to ambient temperature and stirred for 2.2 hours. Thereafter, 1.01 ml (56.1 mmol) of $H_2O$ was dropped thereto at 20°C at a rate of 0.54 ml/hour. After completion of dropping, the mixture was allowed to stand for 19.4 hours. Under reduced pressure, a volatile component was removed by distillation, and thereafter, the resulting solid was dried under reduced pressure for 8 hours at 120°C, thereby obtaining a solid product.

(2) Production of component (A)

In a 50 ml four necked flask, which had been dried under reduced pressure and thereafter purged with argon, 4.05 g of the solid product obtained in the above Example 11 (1) and 30 ml of tetrahydrofuran were introduced and stirred. To the mixture, 2.79 g of the same lot heat-treated silica as that used in Example 3 (2) was added. The mixture was heated to 40°C and stirred for 2 hours. Thereafter, the liquid component was removed, and thereafter the remaining solid component was washed 5 times with each 30 ml of tetrahydrofuran. The residue was dried for 8 hours at 120°C under reduced pressure, thereby obtaining a component (A). Elementary analysis revealed Zn = 1.5 mmol/g and F = 2.0 mmol/g.

(3) Polymerization

Polymerization of Example 3 (3) was repeated, except that 17.3 mg of the component (A) obtained in the above Example 11 (2) was used as a solid catalyst component, a gas composition in the system found by gas chromatography was composed of hydrogen = 0.479mol% and 1-butene=2.83mol%, and a hydrogen concentration of the ethylene/hydrogen mixed gas was 0.185 mol%.

As a result, 9.8 g of an olefin polymer having a good particle property was obtained. Polymerization activity per zirconium atom was found to be $2.0 \times 10^7$ g/mol-Zr/hour, and polymerization activity per the solid catalyst component was found to be 566 g/g-solid catalyst component/hour. Further, the obtained olefin polymer showed, SCB = 8.64, Mw = 90800, Mw/Mn = 2.83, MFR = 0.302. MFRR = 119 and SR = 1.35.

[Example 12]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture was dropped 6.9 ml (16.1 mmol) of a tetrahydrofuran solution of pentafluorophenol (2.33 mol/l) at a rate of 17.9 ml/hour. After completion of dropping, the mixture was gradually heated to raise the temperature to ambient temperature and stirred for 2 hours. Thereafter, 1.44 ml (79.9 mmol) of $H_2O$ was dropped thereto at 20°C at a rate of 0.54 ml/hour. After completion of dropping, the mixture was allowed to stand for 16.8 hours. Under reduced pressure, a volatile component was removed by distillation, and thereafter, the resulting solid was dried under reduced pressure for 8 hours at 120°C, thereby obtaining a solid product.

(2) Production of component (A)

In a 50 ml four necked flask, which had been dried under reduced pressure and thereafter purged with argon, 3.02 g of the solid product obtained in the above Example 12 (1) and 30 ml of tetrahydrofuran were introduced and stirred. To the mixture, 2.92 g of the same lot heat-treated silica as that used in Example 3 (2) was added. The mixture was heated to 40°C and stirred for 2 hours. Thereafter, the liquid component was removed, and then the remaining solid component was washed 5 times with each 30 ml of tetrahydrofuran. The residue was dried for 8 hours at 120°C under reduced pressure, thereby obtaining a component (A). Elementary analysis revealed Zn = 3.1 mmol/g and F = 2.2 mmol/g.

(3) Polymerization

Polymerization of Example 3 (3) was repeated, except that 12.9 mg of the component (A) obtained in the above Example 12 (2) was used as a solid catalyst component, a gas composition in the system found by gas chromatography was composed of hydrogen = 0.450mol% and 1-butene = 2.72 mol%, and a hydrogen concentration of the ethylene/hydrogen mixed gas was 0.185 mol%.

As a result, 12.6 g of an olefin polymer having a good particle property was obtained. Polymerization activity

per zirconium atom was found to be 2.5 × $10^7$ g/mol-Zr/hour, and polymerization activity per the solid catalyst component was found to be 980 g/g-solid catalyst component/hour. Further, the obtained olefin polymer showed, SCB = 8.46, Mw = 106000, Mw/Mn = 3.45, MFR = 0.346, MFRR = 64.0 and SR = 1.28.

[Example 13]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture, 1.01ml (56.1 mmol) of $H_2O$ was dropped thereto at a rate of 0.54 ml/hour. After completion of dropping, the mixture was gradually heated to raise the temperature to ambient temperature and stirred for 2 hours, and further stirred at 40°C for 1.5 hours. After cooling to 25°C, 13.7 ml (31.9 mmol) of a tetrahydrofuran solution of pentafluorophenol (2.33 mol/l) was dropped thereto at a rate of 17.9 ml/hour. After completion of dropping, the mixture was stirred at 40°C for 2 hours and allowed to stand for 60.5 hours. Under reduced pressure, a volatile component was removed by distillation, and thereafter, the resulting solid was dried under reduced pressure for 8 hours at 120°C, thereby obtaining a solid product.

(2) Production of component (A) In a 50 ml four necked flask, which had been dried under reduced pressure and thereafter purged with argon, 3.80 g of the solid product obtained in the above Example 13 (1) and 30 ml of tetrahydrofuran were introduced and stirred. To the mixture, 3.07 g of the same lot heat-treated silica as that used in Example 3 (2) was added. The mixture was heated to 40°C and stirred for 2 hours. Thereafter, the liquid component was removed, and thereafter the remaining solid component was washed 5 times with each 30 ml of tetrahydrofuran. The residuewas dried for 10 hours at 120°C under reduced pressure, thereby obtaining a component (A). Elementary analysis revealed Zn = 1.4 mmol/g and F = 1.9 mmol/g.

(3) Polymerization

Polymerization of Example 3 (3) was repeated, except that 16.6 mg of the component (A) obtained in the above Example 13 (2) was used as a solid catalyst component, a gas composition in the system found by gas chromatography was composed of hydrogen = 0.457mol% and 1-butene = 2.61mol%, and a hydrogen concentration of the ethylene/hydrogen mixed gas was 0.193 mol%.

As a result, 8.2 g of an olefin polymer having a good particle property was obtained. Polymerization activity per zirconium atom was found to be 1.6 × $10^7$ g/mol-Zr/hour, and polymerization activity per the solid catalyst component was found to be 494 g/g-solid catalyst component/hour. Further, the obtained olefin polymer showed, SCB = 6.37, Mw = 84700, Mw/Mn = 2.82, MFR = 1.35, MFRR = 38.0 and SR = 1.51.

[Example 14]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture, 1.15 ml (63.8 mmol) of $H_2O$ was dropped thereto at a rate of 0.54ml/hour. After completion of dropping, the mixture was gradually heated to raise the temperature to ambient temperature and stirred for 2 hours, and further stirred at 40°C for 1.8 hours. After cooling to 24°C, 6.9 ml (16.1 mmol) of a tetrahydrofuran solution of pentafluorophenol (2.33 mol/l) was dropped thereto at a rate of 17.9 ml/hour. After completion of dropping, the mixture was stirred at 40°C for 2 hours and allowed to stand for 15.3 hours. Under reduced pressure, a volatile component was removed by distillation, and thereafter, the resulting solid was dried under reduced pressure for 8 hours at 120°C, thereby obtaining a solid product.

(2) Production of component (A)

In a 50 ml four necked flask, which had been dried under reduced pressure and thereafter purged with nitrogen, 2.92 g of the solid product obtained in the above Example 14 (1) and 30 ml of tetrahydrofuran were introduced and stirred. To the mixture, 2.84 g of the same lot heat-treated silica as that used in Example 3 (2) was added. The mixture was heated to 40°C and stirred for 2 hours. Thereafter, the liquid component was removed, and thereafter the remaining solid component was washed 5 times with each 30 ml of tetrahydrofuran. The residue was dried for 8 hours at 120°C under reduced pressure, thereby obtaining 3.16 g of a component (A). Elementary analysis revealed Zn = 1.5 mmol/g and F = 1.2 mmol/g.

(3) Polymerization

Polymerization of Example 3 (3) was repeated, except that 16.7 mg of the component (A) obtained in the above Example 14 (2) was used as a solid catalyst component, a gas composition in the system found by gas chromatography was composed of hydrogen = 0.516 mol% and 1-butene = 2.49 mol%, and ahydrogen concentration of the ethylene/hydrogen mixed gas was 0.198 mol%.

As a result, 5.5 g of an olefin polymer having a good particle property was obtained. Polymerization activity per zirconium atom was found to be 1.1 $\times$ $10^7$ g/mol-Zr/hour, and polymerization activity per the solid catalyst component was found to be 329 g/g-solid catalyst component/hour. Further, the obtained olefin polymer showed, SCB = 4.35, Mw = 69600, Mw/Mn = 2.30, MFR = 2.00, MFRR = 30.6 and SR = 1.64.

[Example 15]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture, 1.26 ml (69.9 mmol) of $H_2O$ was dropped thereto at a rate of 0.54 ml/hour. After completion of dropping, the mixture was gradually heated to raise the temperature to ambient temperature and stirred for 2.2 hours, and further stirred at 40°C for 1.5 hours. After cooling to 25°C, 8.6 ml (20.0 mmol) of a tetrahydrofuran solution of pentafluorophenol (2.33 mol/l) was dropped thereto at a rate of 17.2 ml/hour. After completion of dropping, the mixture was stirred at 40°C for 2 hours and allowed to stand for 84 hours. Under reduced pressure, a volatile component was removed by distillation, and thereafter, the resulting solid was dried under reduced pressure for 8 hours at 120°C, thereby obtaining a solid product.

(2) Production of component (A)

In a 50 ml four necked flask, which had been dried under reduced pressure and thereafter purged with argon, 3.08 g of the solid product obtained in the above Example 15 (1) and 30 ml of tetrahydrofuran were introduced and stirred. To the mixture, 2.90 g of the same lot heat-treated silica as that used in Example 3 (2) was added. The mixture was heated to 40°C and stirred for 2 hours. Thereafter, the liquid component was removed, and thereafter the remaining solid component was washed 5 times with each 30 ml of tetrahydrofuran. The residue was dried for 8.5 hours at 120°C under reduced pressure, thereby obtaining a component (A). Elementary analysis revealed Zn = 2.4 mmol/g and F = 3.1 mmol/g.

(3) Polymerization

Polymerization of Example 3 (3) was repeated, except that 16.6 mg of the component (A) obtained in the above Example 15 (2) was used as a solid catalyst component, a gas composition in the system found by gas chromatography was composed of hydrogen = 0.560 mol% and 1-butane = 2.80 mol%, and a hydrogen concentration of the ethylene/hydrogen mixed gas was 0.193 mol%.

As a result, 12.6 g of an olefin polymer having a good particle property was obtained. Polymerization activity per zirconium atom was found to be 2.5 $\times$ $10^7$ g/mol-Zr/hour, and polymerization activity per the solid catalyst component was found to be 759 g/g-solid catalyst component/hour. Further, the obtained olefin polymer showed, SCB = 12.1, Mw = 108000, Mw/Mn = 4.76, MFR = 0.415, MFRR = 74.4 and SR = 1.22.

[Example 16]

(1) Production of contact product (e)

In a 200 ml four necked flask, which had been dried under reduced pressure and thereafter purged with argon, 40 ml (80 mmol) of a hexane solution of diethylzinc (2 mol/l) and 40 ml of tetrahydrofuran were introduced, cooled to 3°C and stirred. To the mixture, 1.44 ml (79.9 mmol) of $H_2O$ was dropped thereto at a rate of 0.54 ml/hour. After completion of dropping, the mixture was gradually heated to raise the temperature to ambient temperature and stirred for 2 hours, and further stirred at 40°C for 1.5 hours. After cooling to 26°C, 6.9 ml (16.1 mmol) of a tetrahydrofuran solution of pentafluorophenol (2.33 mol/l) was dropped thereto at a rate of 17.9 ml/hour. After completion of dropping, the mixture was stirred at 40°C for 2 hours and allowed to stand for 10 hours. Under reduced pressure, a volatile component was removed by distillation, and thereafter, the resulting solid was dried under reduced pressure for 8 hours at 120°C, thereby obtaining a solid product.

(2) Production of component (A)

In a 50 ml four necked flask, which had been dried under reduced pressure and thereafter purged with nitrogen, 3.04 g of the solid product obtained in the above Example 16 (1) and 30 ml of tetrahydrofuran were introduced

and stirred. To the mixture, 3.07 g of the same lot heat-treated silica as that used in Example 3 (2) was added. The mixture was heated to 40°C and stirred for 2 hours. Thereafter, the liquid component was removed, and thereafter the remaining solid component was washed 5 times with each 30 ml of tetrahydrofuran. The residue was dried for 8 hours at 120°C under reduced pressure, thereby obtaining 3.15 g of a component (A). Elementary analysis revealed Zn = 3.5 mmol/g and F = 2.8 mmol/g.

(3) Polymerization

Polymerization of Example 3 (3) was repeated, except that 18.4 mg of the component (A) obtained in the above Example 16 (2) was used as a solid catalyst component, a gas composition in the system found by gas chromatography was composed of hydrogen = 0.473 mol% and 1-butene = 2.48 mol%, and a hydrogen concentration of the ethylene/hydrogen mixed gas was 0.198 mol%.

As a result, 15.7 g of an olefin polymer having a good particle property was obtained. Polymerization activity per zirconium atom was found to be $3.1 \times 10^7$ g/mol-Zr/hour, and polymerization activity per the solid catalyst component was found to be 853 g/g-solid catalyst component/hour. Further, the obtained olefin polymer showed, SCB = 11.7, Mw = 108000, Mw/Mn = 4.69, MFR = 1.04, MFRR = 31.9 and SR = 1.23.

[Example 17]

(1) Production of contact product (e)

In a 200 ml four necked flask, which had been dried under reduced pressure and thereafter purged with argon, 40 ml (80 mmol) of a hexane solution of diethylzinc (2 mol/l) and 53.6 ml of tetrahydrofuran were introduced, cooled to -53°C and stirred. To the mixture was dropped 17.2 ml (40.1 mmol) of a tetrahydrofuran solution of pentafluorophenol (2.33mol/l) at a rate of 41.3 ml/hour. After completion of dropping, the mixture was gradually heated to raise the temperature to ambient temperature and stirred for 2 hours, and further stirred at 40°C for 0.5 hour. After cooling to 17°C, 1.08 ml (60.0 mmol) of $H_2O$ was dropped thereto at a rate of 0.81 ml/hour. After completion of dropping, the mixture was gradually heated to ambient temperature, stirred for 2 hours, further stirred at 50°C for 1 hour, and thereafter allowed to stand at ambient temperature for 12 hours. As a result, a content of the flask was separated into a yellow transparent liquid product and a brown gel product. Then, 72% by volume of the yellow transparent liquid product and the whole of the brown gel product were separated from each other and placed into different flasks purged with nitrogen, respectively. Both were treated to remove a volatile component by distillation and dried for 11 hours at 120°C. Thereafter, the solid product originated from the yellow transparent liquid product was mixed with 80 ml of tetrahydrofuran to be dissolved, and the resulting solution was added to the solid product originated from the brown gel product. The mixture was stirred at ambient temperature for 48 hours. Thereby, a content of the flask turned into an orange turbid product and a small amount of a powdery product having a skin color. Under reduced pressure, a volatile component was removed by distillation, and thereafter, the residue was dried under reduced pressure for 8 hours at 120°C, thereby obtaining a solid product.

(2) Production of component (A)

In a 50 ml four necked flask, which had been dried under reduced pressure and thereafter purged with nitrogen, 4.25 g of the solid product obtained in the above Example 17 (1) and 30 ml of tetrahydrofuran were introduced and stirred. To the mixture, 2.89 g of the same lot heat-treated silica as that used in Example 3 (2) was added. The mixture was heated to 40°C and stirred for 2 hours. Thereafter, the mixture was allowed to stand, thereby precipitating a solid component. At the time when an interface between a layer of the precipitated solid component and an upper layer of a slurry portion appeared, the upper slurry portion was removed. Thereafter, filtration was carried out using a filter. For completing washing, 30 ml of tetrahydrofuran was added to the residue, and the mixture was stirred, and thereafter allowed to stand, thereby precipitating a solid component, and then the upper slurry portion was removed similarly at the time when the interface appeared. Thereafter, filtration was carried out using a filter. The above washing operation was repeated 5 times. The residue was dried for 8 hours at 120°C under reduced pressure, thereby obtaining 3.75 g of a component (A). Elementary analysis revealed Zn = 2.1 mmol/g, and F = 2.7 mmol/g.

(3) Polymerization

Polymerization of Example 3 (3) was repeated, except that 17.6 mg of the component (A) obtained in the above Example 17 (2) was used as a solid catalyst component, a gas composition in the system found by gas chromatography was composed of hydrogen = 0.516 mol% and 1-butene = 2.89mol%, and ahydrogen concentration of the ethylene/hydrogen mixed gas was 0.195 mol%.

As a result, 60.4 g of an olefin polymer having a good particle property was obtained. Polymerization activity per zirconium atom was found to be $1.2 \times 10^8$ g/mol-Zr/hour, and polymerization activity per the solid catalyst component was found to be 3430 g/g-solid catalyst component/hour. Further, the obtained olefin polymer showed,

SCB = 16.0, Mw = 112000, Mw/Mn = 4.11, MFR = 0.463, MFRR = 69.7 and SR = 1.21.

[Example 18]

(1) Production of contact product (e)

In a 200 ml four necked flask, which had been dried under reduced pressure and thereafter purged with argon, 40 ml (80 mmol) of a hexane solution of diethylzinc (2 mol/l) and 53.6 ml of tetrahydrofuran were introduced, cooled to -60°C and stirred. To the mixture was dropped 17.2 ml (40.2 mmol) of a tetrahydrofuran solution of pentafluorophenol (2.34 mol/l) at a rate of 41.3 ml/hour. After completion of dropping, the mixture was gradually heated to raise the temperature to ambient temperature and stirred for 3.2 hours, and further stirred at 40°C for 0.5 hour. After cooling to 20°C, 1.08 ml (60.0 mmol) of $H_2O$ was dropped thereto at a rate of 0.81 ml/hour. After completion of dropping, the mixture was gradually heated to ambient temperature, stirred for 2.3 hours, further stirred at 50°C for 1 hour, and thereafter allowed to stand all night at ambient temperature. As a result, a content of the flask was separated into a yellow transparent liquid product and a brown gel product. Then, the whole amount of the yellow transparent liquid product and the whole amount of the brown gel product were separated from each other and placed into different flasks purged with nitrogen, respectively. Both were treated to remove a volatile component by distillation and dried for 8 hours at 120°C. Thereafter, the solid product originated from the yellow transparent liquid product was mixed with 80 ml of tetrahydrofuran to be dissolved, and the resulting solution was added to the solid product originated from the brown gel product. The mixture was stirred at ambient temperature for 67 hours. Thereby, a content of the flask turned into an orange turbid product and a small amount of a powdery product having a cream color. Under reduced pressure, a volatile component was removed by distillation, and thereafter, the residue was dried under reduced pressure for 8 hours at 120°C, thereby obtaining 13.8 g of a solid product.

(2) Production of component (A)

In a 50 ml four necked flask, which had been dried under reduced pressure and thereafter purged with argon, 4.44 g of the solid product obtained in the above Example 18 (1) and 30 ml of tetrahydrofuran were introduced and stirred. To the mixture, 3.24 g of the same lot heat-treated silica as that used in Example 3 (2) was added. The mixture was heated to 40°C and stirred for 2 hours. Then, after removing the liquid component, the solid component was washed 5 times with each 30 ml of tetrahydrofuran. The residue was dried for 8 hours at 120°C under reduced pressure, thereby obtaining a component (A). Elementary analysis revealed Zn = 1.8 mmol/g and F = 3.1 mmol/g.

(3) Polymerization

Polymerization of Example 3 (3) was repeated, except that 16.0 mg of the component (A) obtained in the above Example 18 (2) was used as a solid catalyst component, a gas composition in the system found by gas chromatography was composed of hydrogen = 0.533 mol% and 1-butene = 2.66 mol%, and a hydrogen concentration of the ethylene/hydrogen mixed gas was 0.184 mol%.

As a result, 31.3 g of an olefin polymer having a good particle property was obtained. Polymerization activity per zirconium atom was found to be $6.3 \times 10^7$ g/mol-Zr/hour, and polymerization activity per the solid catalyst component was found to be 1960 g/g-solid catalyst component/hour. Further, the obtained olefin polymer showed, SCB = 12.9, MFR = 0.296, MFRR = 76.0 and SR = 1.23.

[Example 19]

(1) Production of contact product (e)

In a 200 ml four necked flask, which had been dried under reduced pressure and thereafter purged with argon, 40 ml (80 mmol) of a hexane solution of diethylzinc (2 mol/l) and 53.6 ml of tetrahydrofuran were introduced, cooled to -65°C and stirred. To the mixture was dropped 17.2 ml (40.2 mmol) of a tetrahydrofuran solution of pentafluorophenol (2.34 mol/l) at a rate of 41.3 ml/hour. After completion of dropping, the mixture was gradually heated to raise the temperature to ambient temperature and stirred for 3.2 hours, and further stirred at 40°C for 0.5 hour. After cooling to 20°C, 1.08 ml (60.0 mmol) of $H_2O$ was dropped thereto at a rate of 0.81 ml/hour. After completion of dropping, the mixture was gradually heated to ambient temperature, stirred for 2.3 hours, further stirred at 50°C for 1 hour, and thereafter allowed to stand all night at ambient temperature. As a result, a content of the flask was separated into a yellow transparent liquid product and an orange oily product. Then, 28% by volume of the yellow transparent liquid product was taken out of the flask, and a mixture of the yellow transparent liquid product and the orange oily product was treated to remove a volatile component by distillation and dried under reduced pressure

for 8 hours at 120°C. Thereafter, the solid product was mixed with 80 ml of tetrahydrofuran to be dissolved, and the resulting solution was stirred at ambient temperature for 67 hours. Thereby, a content of the flask turned into an orange transparent liquid product and a small amount of a cream-colored powdery product. Under reduced pressure, a volatile component was removed by distillation, and thereafter, the residue was dried under reduced pressure for 8 hours at 120°C. As a result, 10.5 g of a solid product was obtained.

(2) Production of component (A)

In a 50 ml four necked flask, which had been dried under reduced pressure and thereafter purged with argon, 4.30 g of the solid product obtained in the above Example 19 (1) and 30 ml of tetrahydrofuran were introduced and stirred. To the mixture, 2.96 g of the same lot heat-treated silica as that used in Example 3 (2) was added. The mixture was heated to 40°C and stirred for 2 hours. Thereafter, the liquid component was removed, and then the solid component was washed 5 times with each 30 ml of tetrahydrofuran. The residue was dried for 8 hours at 120°C under reduced pressure, thereby obtaining a component (A). Elementary analysis revealed Zn = 2.4 mmol/g, and F = 3.3 mmol/g.

(3) Polymerization

Polymerization of Example 3 (3) was repeated, except that 11.4 mg of the component (A) obtained in the above Example 19 (2) was used as a solid catalyst component, a gas composition in the system found by gas chromatography was composed of hydrogen = 0.541 mol% and 1-butene = 2.73 mol%, and a hydrogen concentration of the ethylene/hydrogen mixed gas was 0.184 mol%.

As a result, 61.0 g of an olefin polymer having a good particle property was obtained. Polymerization activity per zirconium atom was found to be 1.2 $\times$ $10^8$ g/mol-Zr/hour, and polymerization activity per the solid catalyst component was found to be 5350 g/g-solid catalyst component/hour. Further, the obtained olefin polymer showed, SCB = 15.9, MFR = 0.866, MFRR = 62.5 and SR = 1.25.

[Example 20]

(1) Production of contact product (e)

In a 200 ml four necked flask, which had been dried under reduced pressure and thereafter purged with argon, 40 ml (80 mmol) of a hexane solution of diethylzinc (2 mol/l) and 53.6 ml of tetrahydrofuran were introduced, cooled to -68°C and stirred. To the mixture was dropped 17.2 ml (40.2 mmol) of a tetrahydrofuran solution of pentafluorophenol (2.34 mol/l) at a rate of 41.3 ml/hour. After completion of dropping, the mixture was gradually heated to raise the temperature to ambient temperature and stirred for 3.2 hours, and further stirred at 40°C for 0.5 hour. After cooling to 20°C, 1.08 ml (60.0 mmol) of $H_2O$ was dropped thereto at a rate of 0.81 ml/hour. After completion of dropping, the mixture was gradually heated to ambient temperature, stirred for 2 hours, further stirred at 50°C for 1 hour, and thereafter allowed to stand all night at ambient temperature. As a result, a content of the flask was separated into a yellow transparent liquid product and an orange oily product. Then, 28% by volume of the yellow transparent liquid product was taken out of the flask, and a mixture of the yellow transparent liquid product and the orange oily product was treated to remove a volatile component by distillation, and dried under reduced pressure for 8 hours at 120°C. As a result, 10.6 g of a solid product was obtained.

(2) Production of component (A)

In a 50 ml four necked flask, which had been dried under reduced pressure and thereafter purged with argon, 4.40 g of the solid product obtained in the above Example 20 (1) and 30 ml of tetrahydrofuran were introduced and stirred. To the mixture, 2.81 g of the same lot heat-treated silica as that used in Example 3 (2) was added. The mixture was heated to 40°C and stirred for 2 hours. Thereafter, the liquid component was removed, and then the solid component was washed 5 times with each 30 ml of tetrahydrofuran. The residue was dried for 8 hours at 120°C under reduced pressure, thereby obtaining a component (A).

(3) Polymerization

Polymerization of Example 3 (3) was repeated, except that 14.7 mg of the component (A) obtained in the above Example 20 (2) was used as a solid catalyst component, a gas composition in the system found by gas chromatography was composed of hydrogen = 0.564mol% and 1-butene = 2.57mol%, and a hydrogen concentration of the ethylene/hydrogen mixed gas was 0.193 mol%.

As a result, 53.6 g of an olefin polymer having a good particle property was obtained. Polymerization activity per zirconium atom was found to be 1.1 $\times$ $10^8$ g/mol-Zr/hour, and polymerization activity per the solid catalyst component was found to be 3650 g/g-solid catalyst component/hour. Further, the obtained olefin polymer showed, SCB = 15.7, MFR = 0.396, MFRR = 86.6 and SR = 1.21.

[Example 21]

(1) Production of contact product (e)

In a 5 l four necked flask purged with nitrogen, 1.28 l of tetrahydrofuran and 1.28 l (2.55 mol) of a hexane solution of diethylzinc (1.99 mol/l) were introduced and cooled to -50°C. To the mixture was dropped a solution prepared by dissolving 233.6 g (1.27 mol) of pentafluorophenol in 427 ml of tetrahydrofuran over 25 minutes. After completion of dropping, the mixture was gradually heated to ambient temperature, and 500 ml of tetrahydrofuran was further added thereto. A solution prepared by dissolving 34.69 g (1.93 mol) of $H_2O$ in 50 ml of tetrahydrofuran was dropped thereto at ambient temperature. After completion of dropping, the mixture was stirred all night. Under reduced pressure, a volatile component was removed by distillation and the residue was dried under reduced pressure for 8 hours at 120°C and further for 8 hours at 130°C. As a result, 403 g of a solid product was obtained.

(2) Production of component (A) (i)

In a 5 l four necked flask purged with nitrogen, 201.7 g of the solid product obtained in the above Example 21 (1) and 3 l of tetrahydrofuran were introduced and stirred. To the mixture, 136.1 g of the same lot heat-treated silica as in that used in Example 1 (2) was added. The mixture was heated to 40°C and stirred for 2 hours.

(3) Production of component (A) (ii)

In a 5 l four necked flask purged with nitrogen, 201.7 g of the solid product obtained in the above Example 21 (1) and 3.1 l of tetrahydrofuran were introduced and stirred. To the mixture, 140.4 g of the same lot heat-treated silica as that used in Example 1 (2) was added. The mixture was heated to 40°C and stirred for 2 hours. Thereafter, the solid product was allowed to precipitate, and a slurry portion of the upper layer was removed. To the residue was added the whole amount of that obtained in the above Example 21 (2) in a slurry state. The mixture was stirred, thereafter, the solid component was allowed to precipitate, and a slurry potion of the upper layer was removed. For completing washing, 3 l of tetrahydrofuran was added thereto, the mixture was stirred, the solid product was allowed to precipitate, and a slurry portion of the upper layer was removed. The above-mentioned washing operation was repeated 5 times. Further, 31 of tetrahydrofuran was added thereto, the mixture was stirred, the solid product was allowed to precipitate, and a slurry portion of the upper layer was removed. After removing the liquid component using a glass filter, the residue was dried for 8 hours at 120°C under reduced pressure. As a result, 372 g of a component (A) was obtained. Elementary analysis revealed, Zn = 1.8 mmol/g and F = 2.9 mmol/g.

(3) Polymerization

Polymerization of Example 3 (3) was repeated, except that 18.4 mg of the component (A) obtained in the above Example 21 (3) was used as a solid catalyst component, a gas composition in the system found by gas chromatography was composed of hydrogen = 0.515 mol% and 1-butene= 2.01mol%, and ahydrogen concentration of the ethylene/hydrogen mixed gas was 0.195 mol%.

As a result, 54.5 g of an olefin polymer having a good particle property was obtained. Polymerization activity per zirconium atom was found to be $1.1 \times 10^8$ g/mol-Zr/hour, and polymerization activity per the solid catalyst component was found to be 2960 g/g-solid catalyst component/hour. Further, the obtained olefin polymer showed, SCB = 13.9, Mw = 110000, Mw/Mn = 4.35, MFR = 0.194, MFRR = 117 and SR = 1.18.

[Example 22]

(1) Polymerization

Polymerization of Example 3 (3) was repeated, except that 15.3 mg of the component (A) obtained in the above Example 21 (3) was used as a solid catalyst component, the amount of the toluene solution of racemic ethylenebis(1-indenyl)zirconium dichloride adjusted to a concentration of 2 μmol/ml was changed to 1.25 ml, a gas composition in the system found by gas chromatography was composed of hydrogen = 0.513 mol% and 1-butene = 3.03 mol%, and a hydrogen concentration of the ethylene/hydrogen mixed gas was 0.197 mol%.

As a result, 72.9 g of an olefin polymer was obtained. Polymerization activity per zirconium atom was found to be $2.9 \times 10^7$ g/mol-Zr/hour, and polymerization activity per the solid catalyst component was found to be 4770 g/g-solid catalyst component/hour. Further, the obtained olefin polymer showed, SCB = 13.4, Mw = 120000, Mw/Mn = 4.26, MFR = 0.326, MFRR = 93.8 and SR = 1.16.

[Example 23]

(1) Polymerization

Polymerization of Example 3 (3) was repeated, except that 14.6 mg of the component (A) obtained in the above Example 21 (3) was used as a solid catalyst component, the amount of the toluene solution of racemic ethylenebis(1-indenyl)zirconium dichloride adjusted to a concentration of 2 μmol/ml was changed to 0.05 ml, a gas composition in the system found by gas chromatography was composed of hydrogen = 0.498 mol% and 1-butene = 3.02 mol%, and a hydrogen concentration of the ethylene/hydrogen mixed gas was 0.196 mol%.

As a result, 8. 2 g of an olefin polymer having a good particle property was obtained. Polymerization activity per zirconium atom was found to be $8.2 \times 10^7$ g/mol-Zr/hour, and polymerization activity per the solid catalyst component was found to be 560 g/g-solid catalyst component/hour. Further, the obtained olefin polymer showed, SCB = 15.7, Mw = 110000, Mw/Mn = 3.62, MFR = 0.649, MFRR = 58.7 and SR = 1.26.

[Example 24]

(1) Polymerization

Polymerization of Example 3 (3) was repeated, except that 15.0 mg of the component (A) obtained in the above Example 21 (3) was used as a solid catalyst component, the amount of the heptane solution of triisobutylaluminum adjusted to a concentration of 1mmol/ml was changed to 4.5 ml, a gas composition in the system found by gas chromatography was composed of hydrogen = 0.509 mol% and 1-butene = 2.84 mol%, and a hydrogen concentration of the ethylene/hydrogen mixed gas was 0.196 mol%.

As a result, 31.7 g of an olefin polymer having a good particle property was obtained. Polymerization activity per zirconium atom was found to be $6.3 \times 10^7$ g/mol-Zr/hour, and polymerization activity per the solid catalyst component was found to be 2110 g/g-solid catalyst component/hour. Further, the obtained olefin polymer showed, SCB = 15.0, Mw = 124000, Mw/Mn = 3.79, MFR = 0.183, MFRR = 125 and SR = 1.13.

[Example 25]

(1) Polymerization

Polymerization of Example 3 (3) was repeated, except that 16.0 mg of the component (A) obtained in the above Example 21 (3) was used as a solid catalyst component, the amount of 1-butene was changed to 30 g, a gas composition in the system found by gas chromatography was composed of hydrogen = 0.500 mol% and 1-butene = 1.60 mol%, and a hydrogen concentration of the ethylene/hydrogen mixed gas was 0.25 mol%.

As a result, 40.0 g of an olefin polymer having a good particle property was obtained. Polymerization activity per zirconium atom was found to be $8.0 \times 10^7$ g/mol-Zr/hour, and polymerization activity per the solid catalyst component was found to be 2500 g/g-solid catalyst component/hour. Further, the obtained olefin polymer showed, SCB = 21.0, Mw = 120000, Mw/Mn = 3.61, MFR = 0.150, MFRR = 134 and SR = 1.20.

[Example 26]

(1) Polymerization

Polymerization of Example 3 (3) was repeated, except that 16.1 mg of the component (A) obtained in the above Example 1 (2) was used as a solid catalyst component, a gas composition in the system found by gas chromatography was composed of hydrogen = 0.468mol% and 1-butene = 2.62mol%, and ahydrogen concentration of the ethylene/hydrogen mixed gas was 0.189 mol%.

As a result, 83.4 g of an olefin polymer having a good particle property was obtained. Polymerization activity per zirconium atom was found to be $1.7 \times 10^8$ g/mol-Zr/hour, and polymerization activity per the solid catalyst component was found to be 5180 g/g-solid catalyst component/hour. Further, the obtained olefin polymer showed, SCB = 15.6, MFR = 0.917, MFRR = 50.6 and SR = 1.32.

[Example 27]

(1) Production of contact product (e)

In a 5 1 four necked flask purged with nitrogen, 2 1 of tetrahydrofuran and 1.35 1 (2.7 mol) of a hexane solution of diethylzinc (2 mol/l) were introduced and cooled to -50°C. To the mixture was dropped a solution prepared by dissolving 248.7 g (1.35 mol) of pentafluorophenol in 390 ml of tetrahydrofuran over 25 minutes. After completion of dropping, the mixture was gradually heated to ambient temperature and stirred for 2.9 hours, and further stirred at 40°C for 1 hour. After cooling to 21°C using an ice bath, 37.3 g (2.1 mol) of $H_2O$ was dropped thereto over 1.4 hours. After completion of dropping, the mixture was stirred at ambient temperature for 2 hours, and further stirred at 50°C for 1 hour. As a result, a content was separated into a yellow transparent liquid product and a yellow gel product. Thereafter, the mixture was cooled to ambient temperature and allowed to stand all night. Then, 72% by weight of the yellow transparent liquid product and the whole amount of the yellow gel product were separated from each other and placed into different flasks purged with nitrogen, respectively. Both were treated to remove a volatile component by distillation and dried under reduced pressure for 8 hours at 120°C. Thereafter, both the solid product originated from the yellow transparent liquid product and the solid product originated from the yellow gel product were introduced in a 5 l four necked flask purged with nitrogen, and 3 l of tetrahydrofuran was added thereto. The mixture was allowed to stand for 3 days. Under reduced pressure, a volatile component was removed by distillation, and the residue was dried under reduced pressure for 8 hours at 120°C. As a result, 376 g of a solid product was obtained.

(2) Production of component (A)

In a 5 l four necked flask purged with nitrogen, 376 g of the solid product obtained in the above Example 27 (1) and 3 l of tetrahydrofuran were introduced and stirred. To the mixture, 272.3 g of the same lot heat-treated silica as that used in Example 1, (2) was added. The mixture was heated to 40°C and stirred for 2 hours. Thereafter, the solid component was allowed to precipitate, and a slurry portion of the upper layer was removed. For the completion of washing, 3 l of tetrahydrofuran was added thereto, the mixture was stirred, the solid component was allowed to precipitate, and a slurry portion of the upper layer was removed. The above-mentionedwashing operationwas repeated 5 times. After removing the liquid component using a glass filter, the residue was dried for 9 hours at 120°C under reduced pressure, thereby obtaining 419 g of a component (A). Elementary analysis revealed Zn = 2.4 mmol/g, and F = 3.6 mmol/g.

(3) Polymerization

Polymerization of Example 3 (3) was repeated, except that 16.1 mg of the component (A) obtained in the above Example 27 (2) was used as a solid catalyst component, a gas composition in the system found by gas chromatography was composed of hydrogen = 0.470 mol% and 1-butene = 2.72 mol%, and a hydrogen concentration of the ethylene/hydrogen mixed gas was 0.188 mol%.

As a result, 78.5 g of an olefin polymer having a good particle property was obtained. Polymerization activity per zirconium atom was found to be $1.6 \times 10^8$ g/mol-Zr/hour, and polymerization activity per the solid catalyst component was found to be 4880 g/g-solid catalyst component/hour. Further, the obtained olefin polymer showed, SCB = 15.8, MFR = 0.783, MFRR = 66.1 and SR = 1.44.

[Example 28]

(1) Production of contact product (e)

In a 5 l four necked flask purged with nitrogen, 2 l of tetrahydrofuran and 1.35 1 (2.7 mol) of a hexane solution of diethylzinc (2 mol/l) were introduced and cooled to -50°C. To the mixture was dropped a solution prepared by dissolving 251.5 g (1.37 mol) of pentafluorophenol in 390 ml of tetrahydrofuran over 25 minutes. After completion of dropping, the mixture was gradually heated to ambient temperature and stirred for 3 hours, and thereafter further stirred at 45°C for 1 hour. After cooling to 20°C using an ice bath, 37.72 g (2.09 mol) of $H_2O$ was dropped thereto over 1.4 hours. As a result, a content was separated into a yellow transparent liquid product and a yellow gel product. After completion of dropping, the mixture was stirred for 2 hours, and further stirred at 40°C for 1 hour. The mixture was allowed to stand all night at ambient temperature. Then, 72% by weight of the yellow transparent liquid product and the whole amount of the yellow gel product were separated from each other and placed into different flasks purged with nitrogen, respectively. Both were treated to remove a volatile component by distillation and dried under reduced pressure for 8 hours at 120°C. Thereafter, the solid product originated from the yellow transparent liquid product was dissolved in 3 1 of tetrahydrofuran, and the resulting solution was transferred into

a 5 1 flask, in which the solid product originated from the yellow gel product had been placed. The mixture was allowed to stand for 69 hours at ambient temperature, and thereafter dried under reduced pressure for 8 hours at 120°C. As a result, 374 g of a solid product was obtained.

(2) Production of component (A)

In a 5 l four necked flask purged with nitrogen, 374 g of the solid product obtained in the above Example 28 (1) and 3 l of tetrahydrofuran were introduced and stirred. To the mixture, 282 g of the same lot heat-treated silica as that used in Example 1 (2) was added. The mixture was heated to 40°C and stirred for 2 hours. Thereafter, the solid component was allowed to precipitate, and a slurry portion of the upper layer was removed. For the completion of washing, 3 l of tetrahydrofuran was added thereto, the mixture was stirred, the solid component was allowed to precipitate, and a slurry portion of the upper layer was removed. The above-mentioned washing operation was repeated 5 times. After removing the liquid component using a glass filter, the residue was dried for 8 hours at 120°C under reduced pressure, thereby obtaining 452 g of a component (A). Elementary analysis revealed Zn = 2.8 mmol/g, and F = 3.6 mmol/g.

(3) Polymerization

Polymerization of Example 3 (3) was repeated, except that 14.0 mg of the component (A) obtained in the above Example 28 (2) was used as a solid catalyst component, and a gas composition in the system found by gas chromatography was composed of hydrogen = 0.571 mol% and 1-butene = 2.69 mol%.

As a result, 75.8 g of an olefin polymer having a good particle property was obtained. Polymerization activity per zirconium atom was found to be $1.5 \times 10^8$ g/mol-Zr/hour, and polymerization activity per the solid catalyst component was found to be 5410 g/g-solid catalyst component/hour. Further, the obtained olefin polymer showed, SCB = 16.1, MFR = 0.965, MFRR = 66.2 and SR = 1.38.

[Example 29]

(1)

In a 5 l four necked flask purged with nitrogen, 2 l of tetrahydrofuran and 1.35 1 (2.7 mol) of a hexane solution of diethylzinc (2 mol/l) were introduced and cooled to -58°C. To the mixture was dropped a solution prepared by dissolving 251.5 g (1.37 mol) of pentafluorophenol in 390 ml of tetrahydrofuran over 25 minutes. After completion of dropping, the mixture was gradually heated to ambient temperature and stirred for 3 hours, and thereafter further stirred at 38°C for 1 hour. After cooling to 18°C using an ice bath, 37.74 g (2.09 mol) of $H_2O$ was dropped thereto over 1.4 hours. As a result, a content in the flask turned to a yellowish white slurry. After completion of dropping, the mixture was stirred for 2 hours, and further stirred at 40°C for 1 hour. The mixture was allowed to stand all night at ambient temperature. Then, 72% by weight of the liquid product and the whole amount of the solid product were separated from each other and placed into different flasks purged with nitrogen, respectively. Both were treated to remove a volatile component by distillation and dried under reduced pressure for 8 hours at 120°C. Thereafter, the solid product originated from the liquid product was dissolved in 3 l of tetrahydrofuran, and the resulting solution was transferred in a 5 l flask, in which the solid product originated from the solid product had been placed. The mixture was allowed to stand for 69 hours at ambient temperature, and dried under reduced pressure for 8 hours at 120°C. As a result, 387 g of a solid product was obtained.

(2) Production of component (A)

In a 5 l four necked flask purged with nitrogen, 387 g of the solid product obtained in the above Example 29 (1) and 3 l of tetrahydrofuran were introduced and stirred. To the mixture, 281 g of the same lot heat-treated silica as that used in Example 1 (2) was added. The mixture was heated to 40°C and stirred for 2 hours. Thereafter, the solid component was allowed to precipitate, and a slurry portion of the upper layer was removed. For the completion of washing, 3 l of tetrahydrofuran was added thereto, the mixture was stirred, the solid component was allowed to precipitate, and a slurry portion of the upper layer was removed. The above-mentioned washing operation was repeated 5 times. After removing the liquid component using a glass filter, the residue was dried for 8 hours at 120°C under reduced pressure, thereby obtaining 403 g of a component (A). Elementary analysis revealed Zn = 2.3 mmol/g, and F = 3.2 mmol/g.

(3) Polymerization

Polymerization of Example 3 (3) was repeated, except that 14.3 mg of the component (A) obtained in the above Example 29 (2) was used as a solid catalyst component, a gas composition in the system found by gas chromatography was composed of hydrogen = 0.523 mol% and 1-butene = 2.78 mol%, and ahydrogen concentration of the ethylene/hydrogen mixed gas was 0.183 mol%.

As a result, 51.2 g of an olefin polymer having a good particle property was obtained. Polymerization activity per zirconium atom was found to be $1.0 \times 10^8$ g/mol-Zr/hour, and polymerization activity per the solid catalyst

component was found to be 3580 g/g-solid catalyst component/hour. Further, the obtained olefin polymer showed, SCB = 15.8, MFR = 0.600, MFRR = 92.0 and SR = 1.26.

[Example 30]

(1) Production of contact product (e)

In a 1 l four necked flask purged with nitrogen, 238 ml of tetrahydrofuran and 180.5 ml (361 mmol) of a hexane solution of diethylzinc (2 mol/l) were introduced and cooled to -65°C. To the mixture was dropped 81.7 ml (181 mmol) of a terahydrofuran solution of pentafluorophenol (2.21 mol/l) over 25 minutes. After completion of dropping, the mixture was gradually heated to ambient temperature and stirred for 3.2 hours, and thereafter further stirred at 40°C for 1 hour. After cooling to 20°C using an ice bath, 4.9 ml (272 mmol) of $H_2O$ was dropped thereto over 1.3 hours. As a result, a content in the flask turned to a yellowish white slurry. After completion of dropping, the mixture was stirred for 2 hours, and further stirred at 50°C for 1 hour. The mixture was allowed to stand all night at ambient temperature. Thereafter, the liquid product and the solid product were separated from each other and placed into different flasks purged with nitrogen, respectively. Both were treated to remove a volatile component by distillation and dried under reduced pressure for 8 hours at 120°C. As a result, 48.2 g of a solid product originated from the liquid product and 16.5 g of a solid product originated from the solid product were obtained.

(2) Production of component (A)

In a 50 ml four necked flask purged with nitrogen. 4.41 g of the solid product originated from the solid product obtained in the above Example 30 (1), 2.90 g of the same lot heat-treated silica as that used in Example 1 (2) and 30 ml of tetrahydrofuran were introduced and stirred for 2 hours at 40°C. The solid component was allowed to precipitate, and a slurry portion of the upper layer was removed. For the completion of washing, 30 ml of tetrahydrofuran was added thereto, the mixture was stirred, the solid component was allowed to precipitate, and a slurry portion of the upper layer was removed. The above-mentioned washing operation was repeated 5 times. After removing the liquid component using a glass filter, the residue was dried for 8 hours at 120°C under reduced pressure, thereby obtaining 5.19 g of a component (A). Elementary analysis revealed Zn = 1.5 mmol/g, and F = 4.4 mmol/g.

(3) Polymerization

Polymerization of Example 3 (3) was repeated, except that 13.5 mg of the component (A) obtained in the above Example 30 (2) was used as a solid catalyst component, a gas composition in the system found by gas chromatography was composed of hydrogen = 0.493mol% and 1-butene= 2.75mol%, and a hydrogen concentration of the ethylene/hydrogen mixed gas was 0.188 mol%.

As a result, 106.2 g of an olefin polymer having a good particle property was obtained. Polymerization activity per zirconium atom was found to be $2.1 \times 10^8$ g/mol-Zr/hour, and polymerization activity per the solid catalyst component was found to be 7870 g/g-solid catalyst component/hour. Further, the obtained olefin polymer showed, SCB = 14.3, MFR = 0.550, MFRR = 64.0 and SR = 1.20.

[Example 31]

(1) Production of contact product (e)

In a 300 ml four necked flask purged with nitrogen, 106 ml of tetrahydrofuran and 40 ml (80 mmol) of a hexane solution of diethylzinc (2 mol/l) were introduced and cooled to 4°C. To the mixture was dropped 14.5 ml (32 mmol) of a terahydrofuran solution of pentafluorophenol (2.21 mol/l) over 50 minutes. After completion of dropping, the mixture was further stirred for 1 hour at 5°C. After cooling to 20°C using an ice bath, 7.3 ml (72.3 mmol) of a tetrahydrofuran solution of $H_2O$ (9.9 mol/l) was dropped thereto over 1 hour. After completion of dropping, the mixture was stirred for 2 hours, and allowed to stand all night at ambient temperature. Thereafter, the mixture was stirred under reflux condition (63°C) for 8 hours. As a result, 146 ml of a yellow transparent solution was obtained.

(2) Production of component (A)

In a 50 ml four necked flask purged with nitrogen, 2.93 g of the same lot heat-treated silica as that used in Example 1 (2) and 47 ml of the yellow transparent liquid obtained in the above Example 31 (1) were introduced and stirred for 2 hours at 40°C. After removing the liquid component using a glass filter, the residue was washed 5 times with each 30 ml of tetrahydrofuran, and dried for 8 hours at 120°C under reduced pressure, thereby obtaining 3.89 g of a component (A). Elementary analysis revealed Zn = 2.0 mmol/g, and F = 2.0 mmol/g.

(3) Polymerization

Polymerization of Example 3 (3) was repeated, except that 14.6 mg of the component (A) obtained in the above Example 31 (2) was used as a solid catalyst component, and a gas composition in the system found by gas chromatography was composed of hydrogen = 0.561 mol% and 1-butene = 2.70 mol%.

As a result, 65.1 g of an olefin polymer having a good particle property was obtained. Polymerization activity per zirconium atom was found to be $1.3 \times 10^8$ g/mol-Zr/hour, and polymerization activity per the solid catalyst component was found to be 4460 g/g-solid catalyst component/hour. Further, the obtained olefin polymer showed, SCB = 13.8, MFR = 0.14, MFRR = 138 and SR = 1.10.

[Example 32]

(1) Production of contact product (e)

In a 200 ml four necked flask purged with nitrogen, 40 ml of tetrahydrofuran and 40 ml (80 mmol) of a hexane solution of diethylzinc (2.0mol/l) were introduced and cooled to -5°C. To the mixture was dropped 34.3 ml (80 mmol) of a terahydrofuran solution of 3,5-difluorophenol (2.33mol/l) over 120 minutes. After completion of dropping, the mixture was stirred for 90 minutes at 5°C and further stirred for 70 minutes at40°C. After cooling to 20°C using an ice bath, 0.72 ml (40 mmol) of $H_2O$ was dropped thereto over 80 minutes. After completion of dropping, the mixture was stirred for 60 minutes at 20°C, and further stirred for 120 minutes at 40°C. As a result, a white yellow slurry product was obtained. It was allowed to stand all night at ambient temperature. Thereafter, a volatile component was removed by distillation and the residue was dried for 8 hours at 120°C under reduced pressure. As a result, 14.7 g of a yellow solid product was obtained.

(2) Production of component (A)

In a 50 ml four necked flask purged with nitrogen, 5.33 g of the yellow solid product obtained in the above Example 32 (1), 30 ml of tetrahydrofuran, and 3.03 g of the same lot heat-treated silica as that used in Example 1 (2) were introduced and stirred for 2 hours at 40°C. After removing the liquid component using a glass filter, the residue was washed 5 times with each 30 ml of tetrahydrofuran, and thereafter dried for 8 hours at 120°C under reduced pressure, thereby obtaining 3.00 g of a component (A). Elementary analysis revealed Zn = 1.1mmol/g, and F = 1.3 mmol/g.

(3) Polymerization

A 3 l-volume autoclave equipped with a stirrer, which had been dried under reduced pressure and thereafter purged with argon, was made vacuum, hydrogen was fed therein to obtain a partial pressure of 0.012 MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.50 mol% and 1-butene = 2.62mol%. To the resultant was added 0.9 ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 19.0 mg of the component (A) obtained in the above Example 32 (2) as a solid catalyst component were added thereto. Polymerization was carried out for 60 minutes at 70°C while feeding an ethylene/hydrogen mixed gas (hydrogen = 0.25mol%) so as to keep the whole pressure constant. As a result, 7 g of an olefin polymer having a good particle property was obtained. Polymerization activity per zirconium atom was found to be $1.4 \times 10^7$ g/mol-Zr/hour, and polymerization activity per the solid catalyst component was found to be 370 g/g-solid catalyst component/hour. Further, the obtained olefin polymer showed, Mw = $8.44 \times 10^4$, Mw/Mn = 2.16, and [η] = 1.35.

[Example 33]

(1) Production of contact product (e)

In a 200 ml four necked flask purged with nitrogen, 40 ml of tetrahydrofuran and 40 ml (80 mmol) of a hexane solution of diethylzinc (2.0 mol/l) were introduced and cooled to -5°C. To the mixture was dropped 34.3 ml (80 mmol) of a terahydrofuran solution of perfluoro-tert-butanol (2.33 mol/l) over 120 minutes. After completion of dropping, the mixture was stirred for 90 minutes at 5°C and further stirred for 70 minutes at 40°C. After cooling to 20°C using an ice bath, 0.72 ml (40 mmol) of $H_2O$ was dropped thereto over 80 minutes. After completion of dropping, the mixture was stirred for 60 minutes at 20°C, and further stirred for 120 minutes at 40°C. As a result, a white yellow solution was obtained. It was allowed to stand all night at ambient temperature. Thereafter, a volatile component was removed by distillation and the residue was dried for 8 hours at 120°C under reduced pressure.

As a result, 26.35 g of a yellow solid product was obtained.

(2) Production of component (A)

In a 50 ml four necked flask purged with nitrogen, 8.29 g of the yellow solid product obtained in the above Example 33 (1), 30 ml of tetrahydrofuran, and 3.09 g of the same lot heat-treated silica as that used in Example 1 (2) were introduced and stirred for 2 hours at 40°C. After removing the liquid component using a glass filter, the residue was washed 5 times with each 30 ml of tetrahydrofuran, and thereafter dried for 8 hours at 120°C under reduced pressure, thereby obtaining 4.39 g of a component (A). Elementary analysis revealed Zn = 2.8mmol/g, and F = 3.4 mmol/g.

(3) Polymerization

A 3 l-volume autoclave equipped with a stirrer, which had been dried under reduced pressure and thereafter purged with argon, was made vacuum, hydrogen was fed therein to obtain a partial pressure of 0.012 MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.51 mol% and 1-butene = 2.47 mol%. To the resultant was added 0.9 ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 20.0 mg of the component (A) obtained in the above Example 33 (2) as a solid catalyst component were added thereto. Polymerization was carried out for 60 minutes at 70°C while feeding an ethylene/hydrogen mixed gas (hydrogen = 0.25 mol%) so as to keep the whole pressure constant. As a result, 13 g of an olefin polymer having a good particle property was obtained. Polymerization activity per zirconium atom was found to be $2.6 \times 10^7$ g/mol-Zr/hour, and polymerization activity per the solid catalyst component was found to be 650 g/g-solid catalyst component/hour. Further, the obtained olefin polymer showed, SCB = 14.3, MFR = 0.96, MFRR = 44.5, SR = 1.40, Mw = $8.98 \times 10^4$, Mw/Mn = 2.65, and [η] = 1.33.

[Example 34]

(1) Production of contact product (e)

In a 200 ml four necked flask purged with nitrogen, 40 ml of tetrahydrofuran and 40 ml (80 mmol) of a hexane solution of diethylzinc (2.0 mol/l) were introduced and cooled to -5°C. To the mixture was dropped 34.3 ml (80 mmol) of a terahydrofuran solution of 1,1,1,3,3,3-hexafluoro-2-propanol (2.33 mol/l) over 120 minutes. After completion of dropping, the mixture was stirred for 90 minutes at 5°C and further stirred for 70 minutes at40°C. After cooling to 20°C using an ice bath, 0.72 ml (40 mmol) of $H_2O$ was dropped thereto over 80 minutes. After completion of dropping, the mixture was stirred for 60 minutes at 20°C, and further stirred for 120 minutes at 40°C. As a result, a white yellow solution was obtained. It was allowed to stand all night at ambient temperature. Thereafter, a volatile component was removed by distillation and the residue was dried for 8 hours at 120°C under reduced pressure. As a result, 15.47 g of a yellow solid product was obtained.

(2) Production of component (A)

In a 50 ml four necked flask purged with nitrogen, 6.53 g of the yellow solid product obtained in the above Example 34 (1), 30 ml of tetrahydrofuran, and 3.11 g of the same lot heat-treated silica as that used in Example 1 (2) were introduced and stirred for 2 hours at 40°C. After removing the liquid component using a glass filter, the residue was washed 5 times with each 30 ml of tetrahydrofuran, and thereafter dried for 8 hours at 120°C under reduced pressure, thereby obtaining 4.44 g of a component (A). Elementary analysis revealed Zn = 2.9 mmol/g. and F = 3.0 mmol/g.

(3) Polymerization

A 3 l-volume autoclave equipped with a stirrer, which had been dried under reduced pressure and thereafter purged with argon, was made vacuum, hydrogen was fed therein to obtain a partial pressure of 0.012 MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.51 mol% and 1-butene = 2.35mol%. To the resultant was added 0.9 ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 16.0 mg of the component (A) obtained in the above Example 34 (2) as a solid catalyst component were added thereto. Polymerization was carried out for 60 minutes at 70°C while feeding an ethylene/hydrogen mixed gas (hydrogen = 0.25 mol%) so as to keep the whole pressure constant. As a result, 8 g of an olefin polymer having a good particle property was obtained.

Polymerization activity per zirconium atom was found to be $1.6 \times 10^7$ g/mol-Zr/hour, and polymerization activity per the solid catalyst component was found to be 500 g/g-solid catalyst component/hour. Further, the obtained olefin polymer showed, MFR = 0.77, MFRR = 48.4, SR = 1.38, Mw = $8.28 \times 10^4$, Mw/Mn = 2.46, and [η] = 1.32.

[Example 35]

(1) Production of contact product (e)

In a 2 l four necked flask purged with nitrogen, 535 ml of tetrahydrofuran and 361 ml (722 mol) of a hexane solution of diethylzinc (2 mol/l) were introduced and cooled to -53°C. To the mixture was dropped a solution prepared by dissolving 68.13 g (370 mmol) of pentafluorophenol in 104 ml of terahydrofuran over 20 minutes. After completion of dropping, the mixture was gradually heated to ambient temperature and stirred for 1 hour, and further stirred at 47°C for 1 hour. After cooling to 20°C using an ice bath, 10.5 g (583 mmol) of $H_2O$ was dropped thereto over 100 minutes. As a result, a content was separated into a yellow transparent liquid product and a white crystal. The mixture was stirred at ambient temperature for 2 hours, and further stirred at 50°C for 1 hour. Thereby, the content turned into a yellow transparent liquid product and a yellow oil product. Then, 71% by volume of the yellow transparent liquid product and the whole amount of the yellow gel product were separated from each other and placed into different flasks purged with nitrogen, respectively. Both were treated to remove a volatile component by distillation and dried under reduced pressure for 8 hours at 120°C. Thereafter, the solid product originated from the yellow transparent liquid product was dissolved in 803 ml of tetrahydrofuran, and the resuting solution was combined with the solid product originated from the yellow oil product. The mixture was allowed to stand for 59.5 hours. Thereby, the content turned into a yellow transparent liquid product and a small amount of a white powder. After removing a volatile component by distillation, the residue was dried under reduced pressure for 8 hours at 120°C. As a result, 124 g of a solid product was obtained. Elementary analysis revealed Zn = 6.0 mmol/g, and F = 13 mmol/g.

(2) Production of component (A)

In a 50 ml four necked flask, which had been dried under reduced pressure and thereafter purged with nitrogen, 4.30 g of the solid product obtained in the above Example 35 (1), 30 ml of tetrahydrofuran, and 2.95 g of silica (Sylopol 948, manufactured by Davison Co., Ltd.; average particle diameter = 52.0 μm; pore volume =1.58 ml/g; specific surface area = 302 $m^2/g$), which had been heat-treated at 300°C under a nitrogen stream, were introduced and stirred for 2 hours at 40°C. After removing the liquid component, the residue was washed 5 times with each 30 ml of tetrahydrofuran, and thereafter dried for 8 hours at 120°C under reduced pressure, thereby obtaining 4.35 g of a component (A). Elementary analysis revealed Zn = 2.6mmol/g. and F = 3.5 mmol/g.

(3) Polymerization

A 3 l-volume autoclave equipped with a stirrer, which had been dried under reduced pressure and thereafter purged with argon, was made vacuum, hydrogen was fed therein to obtain a partial pressure of 0.012MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.481 mol% and 1-butene = 2.92 mol%. To the resultant was added 0.9 ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 16.3 mg of the component (A) obtained in the above Example 35 (2) as a solid catalyst component were added thereto. Polymerization was carried out for 60 minutes at 70°C while feeding an ethylene/hydrogen mixed gas (hydrogen = 0.181 mol%) so as to keep the whole pressure constant. As a result, 54.1 g of an olefin polymer having a good particle property was obtained. Polymerization activity per zirconium atom was found to be $1.1 \times 10^8$ g/mol-Zr/hour, and polymerization activity per the solid catalyst component was found to be 3320 g/g-solid catalyst component/hour. Further, the obtained olefin polymer showed, SCB = 16.0, Mw = 108000, Mw/Mn = 4.40, MFR = 0.846, MFRR = 58.9, and SR = 1.31.

[Example 36]

(1) Production of component (A)

In a 50 ml four necked flask, which had been dried under reduced pressure and thereafter purged with nitrogen, 4.41 g of the solid product obtained in the above Example 35 (1) and 30 ml of tetrahydrofuran were introduced and stirred. To the mixture, 3.02 g of silica (Sylopol 948, manufactured by Davison Co., Ltd.; average particle

diameter = 45.6 μm; pore volume =1.63 ml/g; specific surface area = 527 $m^2/g$), which had been heat-treated at 300°C under a nitrogen stream, wad added and the resulting mixture was stirred for 2 hours at 40°C. After removing the liquid component, the solid component was washed 5 times with each 30 ml of tetrahydrofuran, and thereafter dried for 8 hours at 120°C under reduced pressure, thereby obtaining 3.98 g of a component (A). Elementary analysis revealed Zn = 2.6 mmol/g, and F = 4.2 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.012MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.452 mol% and 1-butene = 2.82 mol%. To the resultant was added 0.9 ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 13.3 mg of the component (A) obtained in the above Example 36 (1) as a solid catalyst component were added thereto. Polymerization was carried out for 60 minutes at 70°C while feeding an ethylene/hydrogen mixed gas (hydrogen = 0.194 mol%) so as to keep the whole pressure constant. As a result, 46.5 g of an olefin polymer having a good particle property was obtained. Polymerization activity per zirconium atom was found to be $9.3 \times 10^7$ g/mol-Zr/hour, and polymerization activity per the solid catalyst component was found to be 3500 g/g-solid catalyst component/hour. Further, the obtained olefin polymer showed, SCB = 14.1, Mw = 118000, Mw/Mn = 7.44, MFR = 0.180, MFRR = 144, and SR = 1.13.

[Example 37]

(1) Production of component (A)

In a 50 ml four necked flask, which had been dried under reduced pressure and thereafter purged with nitrogen, 4.45 g of the solid product obtained in the above Example 35 (1) and 30 ml of tetrahydrofuran were introduced and stirred. To the mixture was added 3.09 g of an organic polymer carrier, an acrylonitrile-amine cross-linking product (KA-892, manufactured by Sumitomo Chemical Co., Ltd.; specific surface area = 34.4 $m^2/g$; amine-functional group content = 7 mmol/g). The resulting mixture was heated to 40°C, and stirred for 2 hours. After removing the liquid component, the solid component was washed 5 times with each 30 ml of tetrahydrofuran, and thereafter dried for 8 hours at 120°C under reduced pressure, thereby obtaining a component (A). Elementary analysis revealed Zn = 0.58 mmol/g, and F = 1.1 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.012 MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.528 mol% and 1-butene = 3.00 mol%. To the resultant was added 0.9ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 13.8 mg of the component (A) obtained in the above Example 37 (1) as a solid catalyst component were added thereto. Polymerization was carried out for 60 minutes at 70°C while feeding an ethylene/hydrogen mixed gas (hydrogen = 0.184 mol%) so as to keep the whole pressure constant. As a result, 11.4 g of an olefin polymer having a good particle property was obtained. Polymerization activity per zirconium atom was found to be $2.3 \times 10^8$ g/mol-Zr/hour, and polymerization activity per the solid catalyst component was found to be 826 g/g-solid catalyst component/hour. Further, the obtained olefin polymer showed, SCB = 5.39, Mw = 80900, Mw/Mn = 2.40, MFR = 1.41, MFRR = 34.7, and SR = 1.47.

[Example 38]

(1) Production of component (A)

In a 50 ml four necked flask, which had been dried under reduced pressure and thereafter purged with nitrogen, 4.34 g of the solid product obtained in the above Example 35 (1) and 30 ml of tetrahydrofuran were introduced and stirred. To the mixture was added 3.07 g of an organic polymer carrier, a 4-vinylpyridine polymer (4VP, manufactured by Koie Chemical Co., Ltd.; specific surface area = 35.8 $m^2$/g; pyridine-functional group content = 3.6 mmol/g). The resulting mixture was heated to 40°C, and stirred for 2 hours. After removing the liquid component, the solid component was washed 5 times with each 30 ml of tetrahydrofuran, and thereafter dried for 8 hours at 120°C under reduced pressure, thereby obtaining a component (A). Elementary analysis revealed Zn = 1.4 mmol/g, and F = 3.3 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.012MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.577 mol% and 1-butene = 3.00mol%. To the resultant was added 0.9 ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 11.4 mg of the component (A) obtained in the above Example 38 (1) as a solid catalyst component were added thereto. Polymerization was carried out for 60 minutes at 70°C while feeding an ethylene/hydrogen mixed gas (hydrogen = 0.184 mol%) so as to keep the whole pressure constant. As a result, 13.8 g of an olefin polymer having a good particle property was obtained. Polymerization activity per zirconium atom was found to be $2.8 \times 10^7$ g/mol-Zr/hour, and polymerization activity per the solid catalyst component was found to be 1210 g/g-solid catalyst component/hour. Further, the obtained olefin polymer showed, SCB = 6.17, Mw = 87200, Mw/Mn = 2.44, MFR = 0.679, MFRR = 54.8, and SR = 1.48.

[Example 39]

(1) Production of component (A)

In a 50 ml four necked flask, which had been dried under reduced pressure and thereafter purged with nitrogen, 4.37 g of the solid product obtained in the above Example 35 (1) and 30 ml of tetrahydrofuran were introduced and stirred. To the mixture was added 3.07 g of an organic polymer carrier, a styrene-divinylbenzene copolymer (CS-1, manufactured by Sumitomo Chemical Co., Ltd.; divinylbenzene unit content = 39.5% by weight; average particle diameter = 33.0 μm; pore volume = 1.05 ml/g). The resulting mixture was heated to 40°C, and stirred for 2 hours. After removing tetrahydrofuran by distillation under reduced pressure, 40 ml of tetrahydrofuran was again added to the residue, and the mixture was heated to 40°C. Thereafter, the liquid component was removed using a glass filter, and the resulting solid component was washed 5 times with each 30 ml of tetrahydrofuran. The residue was dried for 8 hours at 120°C under reduced pressure, thereby obtaining a component (A). Elementary analysis revealed Zn=0.077 mmol/g, and F = 1.3 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.012MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.54 mol% and 1-butene = 2.78 mol%. To the resultant was added 0.9ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 15.3 mg of the component (A) obtained in the above Example 39 (1) as a solid catalyst component were added thereto. Polymerization was carried out for 60 minutes at 70°C while feeding an ethylene/hydrogen mixed gas (hydrogen = 0.184 mol%) so as to keep the whole pressure constant. As a result, 8.3 g of an olefin polymer having a good particle property was obtained. Polymerization activity per zirconium atom was found to be $1.7 \times 10^7$ g/mol-Zr/hour, and polymerization activity per the solid catalyst component was found to be 542 g/g-solid catalyst component/hour. Further, the obtained olefin polymer showed, SCB = 7.20, MFR = 2.54, MFRR = 28.7, SR = 1.61.

[Example 40]

(1) Production of contact product (e)

In a 300 ml four necked flask purged with nitrogen, 100 ml of toluene and 40 ml (80 mmol) of a hexane solution

of diethylzinc (2 mol/l) were introduced and cooled to -5°C. To the mixture was dropped 11.6 ml (32.1 mmol) of a toluene solution of pentafluorophenol (2.77 mol/l) over 40 minutes. After completion of dropping, the mixture was gradually heated to 20°C. Thereafter, 1.58 ml (87.7 mmol) of $H_2O$ was dropped thereto over 60 minutes at 20°C. After completion of dropping, the mixture was stirred for 6 hours under reflux condition (91°C). As a result, 140 ml of a slurry of a contact product (e) was obtained. According to calculations based on the amounts of reagents used, a slurry concentration was found to be 0.57 mmol (in terms of Zn atom)/ml (slurry).

(2) Production of component (A)

In a 50 ml four necked flask purged with nitrogen, 45 ml (25.7 mmol-Zn) of the slurry of the contact product (e) obtained in the above Example 40 (1) was introduced. After removing the solvent using a glass filter, 40 ml of methyl-tert-butyl ether and 2.99 g of silica (Sylopol 948, manufactured by Davison Co., Ltd.; average particle diameter = 59 μm; pore volume =1.61 ml/g; specific surface area = 306 $m^2$/g), which had been heat-treated at 300°C under a nitrogen stream, were introduced, heated to 40°C and stirred for 2 hours. After removing the liquid component using a glass filter, the residue was washed 4 times with each 30 ml of toluene and washed once with 30 ml of hexane, and thereafter dried for 8 hours at 120°C under reduced pressure, thereby obtaining 5.98 g of a component (A). Elementary analysis revealed Zn = 3.2 mmol/g, and F = 5.1 mmol/g.

(3) Polymerization A 3 l-volume autoclave equipped with a stirrer, which had been dried under reduced pressure and thereafter purged with argon, was made vacuum, hydrogen was fed therein to obtain a partial pressure of 0.017 MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.759 mol% and 1-butene = 2.62 mol%. To the resultant was added 0.9 ml of aheptane solution of triisobutylaluminum adjusted to a concentration of 1 mmol/ml. Successively, 0.75 ml of a toluene solution of racemic ethylenebis(1-indenyl)zirconiumdichloride adjusted to a concentration of 2 μmol/ml, and then 8.1 mg of the component (A) obtained in the above Example 40 (2) as a solid catalyst component were added thereto. Polymerization was carried out for 60 minutes at 70 °C while feeding an ethylene/hydrogen mixed gas (hydrogen = 0.203 mol%) so as to keep the whole pressure constant. As a result, 28.6 g of an olefin polymer having a good particle property was obtained. Polymerization activity per zirconium atom was found to be $1.9 \times 10^7$ g/mol-Zr/hour, and polymerization activity per the solid catalyst component was found to be 3530 g/g-solid catalyst component/hour. Further, the obtained olefin polymer showed, SCB = 14.3, MFR = 1.90, MFRR = 43.4 and SR = 1.32.

[Example 41]

(1) Production of component (A)

In a 50 ml four necked flask purged with nitrogen, 45 ml (25.7 mmol-Zn) of the slurry of the contact product (e) obtained in the above Example 40 (1) was introduced. After removing the solvent using a glass filter, 40 ml of ethanol was introduced therein. Thus, a proportion of ethanol was 100% by volume. Then, 3.10 g of the same lot heat-treated silica as that used in Example 40 (2) was introduced therein. The mixture was heated to 40°C and stirred for 2 hours. After removing the liquid component using a glass filter, the residue was washed 4 times with each 30 ml of toluene and washed once with 30 ml of hexane, and thereafter dried for 8 hours at 120°C under reduced pressure, thereby obtaining 3.82 g of a component (A). Elementary analysis revealed Zn = 2.4 mmol/g, and F = 2.5 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.017 MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.752 mol% and 1-butene = 2.62 mol%. To the resultant was added 0.9 ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 8.4 mg of the component (A) obtained in the above Example 41 (1) as a solid catalyst component were added thereto. Polymerization was carried out for 60 minutes at 70°C while feeding an ethylene/hydrogen mixed gas (hydrogen = 0.203 mol%) so as to keep the whole pressure constant. As a result, 11.9 g of an olefin polymer having a good particle property was obtained. Polymerization activity per zirconium atom was found to be $7.9 \times 10^6$ g/mol-Zr/hour, and polymerization activity per the solid catalyst component was found to be 1420 g/g-solid catalyst component/hour. Further, the obtained olefin polymer showed, SCB = 14.6, MFR = 2.03, MFRR = 48.8 and SR = 1.53.

[Example 42]

(1) Production of contact product (e)

In a 1000 ml four necked flask purged with nitrogen, 300 ml of toluene and 120 ml (240 mmol) of a hexane solution of diethylzinc (2 mol/l) were introduced and cooled to -5°C. To the mixture was dropped 34.8 ml (96.3 mmol) of a toluene solution of pentafluorophenol (2.77 mol/l) over 40 minutes. After completion of dropping, the mixture was gradually heated to 20°C. Thereafter, 4.74 ml (263 mmol) of $H_2O$ was dropped thereto over 60 minutes at 20°C. After completion of the drop, the mixture was stirred for 6 hours under reflux condition (91°C). As aresult, 420 ml of a slurry of a contact product (e) was obtained. According to calculations based on the amounts of reagents used, a slurry concentration was found to be 0.57 mmol (in terms of Zn atom)/ml (slurry).

(2) Production of component (A)

In a 50 ml four necked flask purged with nitrogen, 45 ml (25.7 mmol-Zn) of the slurry of the contact product (e) obtained in the above Example 42 (1) was introduced. After removing the solvent using a glass filter, 2 ml of ethanol and 38 ml of toluene were introduced therein. Thus, a proportion of ethanol was 5% by volume. Then, 3.03 g of the same lot heat-treated silica as that used in Example-40 (3) was-introduced therein. The mixture was heated to 40°C and stirred for 2 hours. The resulting solid component was allowed to precipitate, and a slurry portion of the upper layer was removed. For completing washing, 30 ml of toluene was added to the residue, the mixture was stirred, thereafter, the solid component was allowed to precipitate, and a slurry portion of the upper layer was removed. The above-mentioned washing operation was repeated 4 times. A similar washing operation was repeated 2 times using 30 ml of hexane. After removing the liquid component using a glass filter, the residue was dried for 8 hours at 120°C under reduced pressure, thereby obtaining 3.51 g of a component (A). Elementary analysis revealed Zn = 2.4 mmol/g, and F = 3.8 mmol/g.

(3) Polymerization

A 3 l-volume autoclave equipped with a stirrer, which had been dried under reduced pressure and thereafter purged with argon, was made vacuum, hydrogen was fed therein to obtain a partial pressure of 0.017 MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.713 mol% and 1-butene = 2.55mol%. To the resultant was added 0.9 ml of a heptane solution of triisobutylaluminum adjusted to a concentration of 1 mmol/ml. Successively, 0.75 ml of a toluene solution of racemic ethylenebis(1-indenyl)-zirconium dichloride adjusted to a concentration of 2 μmol/ml, and then 8.0 mg of the component (A) obtained in the above Example 42 (2) as a solid catalyst component were added thereto. Polymerization was carried out for 60 minutes at 70°C while feeding an ethylene/hydrogen mixed gas (hydrogen = 0.200 mol%) so as to keep the whole pressure constant. As a result, 28.7 g of an olefin polymer having a good particle property was obtained. Polymerization activity per zirconium atom was found to be $1.9 \times 10^7$ g/mol-Zr/hour, and polymerization activity per the solid catalyst component was found to be 3590 g/g-solid catalyst component/hour. Further, the obtained olefin polymer showed, SCB = 13.2, MFR = 0.780, MFRR = 58.6 and SR = 1.25.

[Example 43]

(1) Production of component (A)

In a 50 ml four necked flask purged with nitrogen, 45 ml (25.7 mmol-Zn) of the slurry of the contact product (e) obtained in the above Example 42 (1) was introduced. After removing the solvent using a glass filter, 8 ml of ethanol and 32 ml of toluene were introduced therein. Thus, a proportion of ethanol was 20% by volume. Then, 2.65 g of the same lot heat-treated silica as that used in Example 40 (3) was introduced therein. The mixture was heated to 40°C and stirred for 2 hours. The resulting solid component was allowed to precipitate, and a slurry portion of the upper layer was removed. For completing washing, 30 ml of toluene was added to the residue, the mixture was stirred, thereafter, the solid component was allowed to precipitate, and a slurry portion of the upper layer was removed. The above-mentioned washing operation was repeated 4 times. A similar washing operation was carried out 1 time using 30 ml of hexane. After removing the liquid component using a glass filter, the residue was dried for 8 hours at 120°C under reduced pressure, thereby obtaining 4.17 g of a component (A). Elementary analysis revealed Zn = 3.7 mmol/g, and F = 3.8 mmol/g.

(2) Polymerization

A 3 l-volume autoclave equipped with a stirrer, which had been dried under reduced pressure and thereafter

purged with argon, was made vacuum, hydrogen was fed therein to obtain a partial pressure of 0.017 MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.693 mol% and 1-butene = 2.79 mol%. To the resultant was added 0.9 ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 9.3 mg of the component (A) obtained in the above Example 43 (2) as a solid catalyst component were added thereto. Polymerization was carried out for 60 minutes at 70°C while feeding an ethylene/hydrogen mixed gas (hydrogen = 0.200 mol%) so as to keep the whole pressure constant. As a result, 60.6 g of an olefin polymer having a good particle property was obtained. Polymerization activity per zirconium atom was found to be $4.0 \times 10^7$ g/mol-Zr/hour, and polymerization activity per the solid catalyst component was found to be 6520 g/g-solid catalyst component/hour. Further, the obtained olefin polymer showed, SCB = 17.1, MFR = 4.61, MFRR = 41.2 and SR = 1.42.

[Example 44]

(1) Production of component (A)

In a 50 ml four necked flask purged with nitrogen, 45 ml (25.7 mmol-Zn) of the slurry of the contact product (e) obtained in the above Example 42 (1) was introduced. After removing the solvent using a glass filter, 16 ml of ethanol and 24 ml of toluene were introduced therein. Thus, a proportion of ethanol was 40% by volume. Then, 3.15 g of the same lot heat-treated silica as that used in Example 40 (3) was introduced therein. The mixture was heated to 40°C and stirred for 2 hours. The resulting solid component was allowed to precipitate, and a slurry portion of the upper layer was removed. For completing washing, 30 ml of toluene was added to the residue, the mixture was stirred, thereafter, the solid component was allowed to precipitate, and a slurry portion of the upper layer was removed. The above-mentioned washing operation was repeated 4 times. A similar washing operation was carried out 1 time using 30 ml of hexane. After removing the liquid component using a glass filter, the residue was dried for 8 hours at 120°C under reduced pressure, thereby obtaining 4.98 g of a component (A). Elementary analysis revealed Zn = 3.8 mmol/g, and F = 3.7 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.017MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.680 mol% and 1-butene = 2.87 mol%. To the resultant was added 0.9ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 9.2 mg of the component (A) obtained in the above Example 44 (1) as a solid catalyst component were added thereto. Polymerization was carried out for 60 minutes at 70°C while feeding an ethylene/hydrogen mixed gas (hydrogen = 0.200 mol%) so as to keep the whole pressure constant. As a result, 44.9 g of an olefin polymer having a good particle property was obtained. Polymerization activity per zirconium atom was found to be $3.0 \times 10^7$ g/mol-Zr/hour, and polymerization activity per the solid catalyst component was found to be 4880 g/g-solid catalyst component/hour. Further, the obtained olefin polymer showed, SCB = 12.5, MFR = 1.23, MFRR = 54.6 and SR = 1.41.

[Example 45]

(1) Production of component (A)

In a 50 ml four necked flask purged with nitrogen, 20 ml of toluene and 12.8 ml (25.6 mmol) of a hexane solution of diethylzinc (2 mol/l) were introduced and cooled to 2°C. To the mixture was dropped 3.7 ml (10.2 mmol) of a toluene solution of pentafluorophenol (2.77 mol/l) over 40 minutes. After completion of dropping, the mixture was stirred at 2°C for 20 minutes. Thereafter, 0.51 ml (28.3 mmol) of $H_2O$ was dropped thereto over 60 minutes at 2°C. Immediately thereafter, 2.98 g of the same lot heat-treated silica as that used in Example 40 (2) was introduced therein at 2°C. The mixture was stirred at 2°C for 1 hour, thereafter heated to 60°C and stirred for 2 hours. The resulting solid component was allowed to precipitate, and a slurry portion of the upper layer was removed. For completing washing, 30 ml of toluene was added to the residue, the mixture was stirred, thereafter, the solid component was allowed to precipitate, and a slurry portion of the upper layer was removed. The above-mentioned washing operation was repeated 4 times. A similar washing operation was carried out 1 time using 30 ml of hexane. After removing the liquid component using a glass filter, the residue was dried at ambient temperature under reduced pressure, thereby obtaining 5.88 g of a component (A). Elementary analysis revealed Zn = 3.5 mmol/g, and F = 6.3 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.017 MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.707 mol% and 1-butene = 2.82 mol%. To the resultant was added 0.9 ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 8.8 mg of the component (A) obtained in the above Example 45 (1) as a solid catalyst component were added thereto. Polymerization was carried out for 60 minutes at 70°C while feeding an ethylene/hydrogen mixed gas (hydrogen = 0.200 mol%) so as to keep the whole pressure constant. As a result, 94.9 g of an olefin polymer having a good particle property was obtained. Polymerization activity per zirconium atom was found to be $6.3 \times 10^7$ g/mol-Zr/hour, and polymerization activity per the solid catalyst component was found to be 10800 g/g-solid catalyst component/hour. Further, the obtained olefin polymer showed, SCB = 15.8, MFR = 3.15, MFRR = 41.9 and SR = 1.38.

[Example 46]

(1) Production of component (A)

In a 50 ml four necked flask purged with nitrogen, 20 ml of toluene and 12.8 ml (25.6 mmol) of a hexane solution of diethylzinc (2 mol/l) were introduced and cooled to 5°C. To the mixture was dropped 3.7 ml (10.2 mmol) of a toluene solution of pentafluorophenol (2.77 mol/l) over 40 minutes. After completion of dropping, the mixture was stirred at 5°C for 20 minutes. Thereafter, 0.51 ml (28.3 mmol) of $H_2O$ was dropped thereto over 60 minutes at 5°C. After completion of dropping, the mixture was stirred at 5°C for 1 hour, and then 2.93 g of the same lot heat-treated silica as that used in Example 40 (2) was introduced therein at 2°C. The mixture was stirred at 2°C for 1 hour, thereafter heated to 40°C and stirred for 2 hours. The resulting solid component was allowed to precipitate, and a slurry portion of the upper layer was removed. For completion of washing, 30 ml of toluene was added to the residue, the mixture was stirred, thereafter, the solid component was allowed to precipitate, and a slurry portion of the upper layer was removed. The above-mentioned washing operation was repeated 4 times. A similar washing operation was carried out 1 time using 30 ml of hexane. After removing the liquid component using a glass filter, the residue was dried at ambient temperature under reduced pressure, thereby obtaining 5.84 g of a component (A). Elementary analysis revealed Zn = 3.4 mmol/g, and F = 5.3 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.017 MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.748 mol% and 1-butene = 2.59 mol%. To the resultant was added 0.9 ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 8.8 mg of the component (A) obtained in the above Example 46 (1) as a solid catalyst component were added thereto. Polymerization was carried out for 60 minutes at 70°C while feeding an ethylene/hydrogen mixed gas (hydrogen = 0.200 mol%) so as to keep the whole pressure constant. As a result, 57.4 g of an olefin polymer having a good particle property was obtained. Polymerization activity per zirconium atom was found to be $3.8 \times 10^7$ g/mol-Zr/hour, and polymerization activity per the solid catalyst component was found to be 6520 g/g-solid catalyst component/hour. Further, the obtained olefin polymer showed, SCB = 15.4, MFR = 0.453, MFRR = 40.2 and SR = 1.16.

[Example 47]

(1) Production of component (A)

In a 50 ml four necked flask purged with nitrogen, 20 ml of toluene and 12.8 ml (25.6 mmol) of a hexane solution of diethylzinc (2 mol/l) were introduced and cooled to 5°C. To the mixture was dropped 3.7 ml (10.2 mmol) of a toluene solution of pentafluorophenol (2.77 mol/l) over 40 minutes. After completion of dropping, the mixture was stirred at 5°C for 20 minutes. Thereafter, 0.51 ml (28.3 mmol) of $H_2O$ was dropped thereto over 60 minutes at 5°C. After completion of dropping, the mixture was stirred at 5°C for 3 hours, and then 3.01 g of the same lot heat-treated silica as that used in Example 40 (2) was introduced therein at 4°C. The mixture was stirred at 4°C for 1 hour, thereafter heated to 60°C and stirred for 2 hours. The resulting solid component was allowed to precipitate, and a slurry portion of the upper layer was removed. For completion of washing, 30 ml of toluene was added to the residue, the mixture was stirred, thereafter, the solid component was allowed to precipitate, and a slurry portion of the upper layer was removed. The above-mentioned washing operation was repeated 4 times. A similar washing operation was carried out 1 time using 30 ml of hexane. After removing the liquid component using a glass filter, the residue was dried at ambient temperature under reduced pressure, thereby obtaining 4.31 g of a component (A). Elementary analysis revealed Zn = 2.4 mmol/g, and F = 3.9 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.017MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.624 mol% and 1-butene = 2.67 mol%. To the resultant was added 0.9ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 8.3 mg of the component (A) obtained in the above Example 47 (1) as a solid catalyst component were added thereto. Polymerization was carried out for 60 minutes at 70°C while feeding an ethylene/hydrogen mixed gas (hydrogen = 0.200 mol%) so as to keep the whole pressure constant. As a result, 42.6 g of an olefin polymer having a good particle property was obtained. Polymerization activity per zirconium atom was found to be $2.8 \times 10^7$ g/mol-Zr/hour, and polymerization activity per the solid catalyst component was found to be 5130 g/g-solid catalyst component/hour. Further, the obtained olefin polymer showed, SCB = 14.3, MFR = 0.135, MFRR = 141 and SR = 1.12.

[Example 48]

(1) Production of component (A)

In a 50 ml four necked flask purged with nitrogen, 3.00 g of the same lot heat-treated silica as that used in Example 40 (2), 30 ml of toluene and 0.149 g (8.25 mmol) of $H_2O$ were introduced. The mixture was stirred at ambient temperature for 30 minutes, during which $H_2O$ existing in toluene in the form of a liquid drop visually disappeared, thereby forming a uniform slurry (it seems that the silica absorbed it). To the mixture was added 1.8 ml (3.6 mmol) of a toluene solution of pentafluorophenol (2.0 mol/l), and the resulting mixture was cooled to 5°C using an ice bath. Then, 4.5 ml (9.0 mmol) of a hexane solution of diethylzinc (2 mol/l) was dropped thereto over 1 hour. After completion of dropping, the mixture was stirred at 5°C for 1 hour, heated to 40°C, stirred at 40°C for 1 hour, further heated to 60°C and stirred at 60°C for 1 hour. After filtration using a filter, the residue was washed 3 times with 30 ml of toluene at 40°C and 2 times with 30 ml of hexane at ambient temperature with use of a filter. Successively, the remaining solid component was dried at 40°C for 1 hour and at 120°C for 8 hours under reduced pressure, thereby obtaining a component (A). Elementary analysis of the component (A) dried at 120°C revealed Zn = 2.1 mmol/g, and F = 3.4 mmol/g.

(2) Polymerization A 3 l-volume autoclave equipped with a stirrer, which had been dried under reduced pressure and thereafter purged with argon, was made vacuum, hydrogen was fed therein to obtain a partial pressure of 0.017 MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.738 mol% and 1-butene = 2.93 mol%. To the resultant was added 0.9 ml of a heptane solution of triisobutylaluminum adjusted to a concentration of 1mmol/ml. Successively, 0.75ml of a toluene solution of racemic

ethylenebis(1-indenyl)zirconium dichloride adjusted to a concentration of 2 μmol/ml, and then 7.3 mg of the component (A) obtained in the above Example 48 (1) as a solid catalyst component were added thereto. Polymerization was carried out for 60 minutes at 70 °C while feeding an ethylene/hydrogen mixed gas (hydrogen = 0.203 mol%) so as to keep the whole pressure constant. As a result, 44.5 g of an olefin polymer having a good particle property was obtained. Polymerization activity per zirconium atom was found to be $3.0 \times 10^7$ g/mol-Zr/hour, and polymerization activity per the solid catalyst component was found to be 6100 g/g-solid catalyst component/hour. Further, the obtained olefin polymer showed, SCB = 13.0, MFR = 1.32, MFRR = 42.7 and SR = 1.44.

[Example 49]

(1) Production of component (A)

In a 50 ml four necked flask purged with nitrogen, 2.99 g of the same lot heat-treated silica as that used in Example 40 (2), 30 ml of hexane and 0.149 g (8.29 mmol) of $H_2O$ were introduced. The mixture was stirred at ambient temperature for 30 minutes, during which $H_2O$ existing in toluene in the form of a liquid drop visually disappeared, thereby forming a uniform slurry (it seems that the silica absorbed it). To the mixture was added 1.8 ml (3.6 mmol) of a toluene solution of pentafluorophenol (2.0 mol/l), and the resulting mixture was cooled to 5°C using an ice bath. Then, 4.5 ml (9.0 mmol) of a hexane solution of diethylzinc (2 mol/l) was dropped thereto over 1 hour. After completion of dropping, the mixture was stirred at 5°C for 1 hour, heated to 40°C , and stirred at 40°C for 2 hours. After filtration using a filter, the residue was washed 3 times with 30 ml of toluene at 40°C and 2 times with 30 ml of hexane at ambient temperature with use of a filter. Successively, the remaining solid component was dried at 40°C for 1 hour and at 120°C for 8 hours under reduced pressure, thereby obtaining a component (A). Elementary analysis of the component (A) dried at 120°C revealed Zn = 2.1 mmol/g, and F = 4.0 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.017MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.789 mol% and 1-butene = 2.78 mol %. To the resultant was added 0.9ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 7.8 mg of the component (A) obtained in the above Example 49 (1) as a solid catalyst component were added thereto. Polymerization was carried out for 60 minutes at 70°C while feeding an ethylene/hydrogen mixed gas (hydrogen = 0.200 mol%) so as to keep the whole pressure constant. As a result, 53.9 g of an olefin polymer having a good particle property was obtained. Polymerization activity per zirconium atom was found to be $3.6 \times 10^7$ g/mol-Zr/hour, and polymerization activity per the solid catalyst component was found to be 6910 g/g-solid catalyst component/hour. Further, the obtained olefin polymer showed, SCB = 15.0, MFR = 3.00, MFRR = 42.0 and SR = 1.48.

[Example 50]

(1) Production of component (A)

In a 50 ml four necked flask purged with nitrogen, 2.98 g of the same lot heat-treated silica as that used in Example 40 (2), 30 ml of tetrahydrofuran, 5.4 ml (10.8 mmol) of a tetrahydrofuran solution of pentafluorophenol (2.0 mol/l) and 0.458 g (25.4 mmol) of $H_2O$ were introduced and cooled to 5°C using an ice bath. Then, 13.4 ml (27 mmol) of a hexane solution of diethylzinc (2 mol/l) was dropped thereto over 1 hour. After completion of dropping, the mixture was stirred at 5°C for 1 hour, heated to 40°C, and stirred at 40°C for 2 hours. The resulting solid component was allowed to precipitate, a slurry portion of the upper layer was removed, and further the liquid component was removed using a glass filter. As a washing operation, 30 ml of tetrahydrofuran was added thereto, stirring was carried out until the temperature reached 40°C, thereafter the solid component was allowed to precipitate, a slurry portion of the upper layer was removed, and the remaining liquid component was removed using a glass filter. Said washing operation was repeated 5 times. Successively, the remaining solid component was dried under reduced pressure at 120°C for 8 hours, thereby obtaining 4.92 g of a component (A). Elementary analysis revealed Zn = 3.5 mmol/g, and F = 4.4 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.012MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.574 mol% and 1-butene = 2.40 mol%. To the resultant was added 0.9 ml of aheptane solution of triisobutylaluminum adjusted to a concentration of 1 mmol/ml. Successively. 0.25 ml of a toluene solution of racemic ethylenebis(1-indenyl) zirconium dichloride adjusted to a concentration of 2 µmol/ml, and then 13.4 mg of the component (A) obtained in the above Example 50 (1) as a solid catalyst component were added thereto. Polymerization was carried out for 60 minutes at 70°C while feeding an ethylene/hydrogen mixed gas (hydrogen = 0.193 mol%) so as to keep the whole pressure constant. As a result, 42.1 g of an olefin polymer having a good particle property was obtained. Polymerization activity per zirconium atom was found to be 8.4 × $10^7$ g/mol-Zr/hour, and polymerization activity per the solid catalyst component was found to be 3140 g/g-solid catalyst component/hour. Further, the obtained olefin polymer showed, SCB = 17.8, MFR = 22.0 and SR = 1.54.

[Example 51]

(1) Production of component (A)

In a 50 ml four necked flask purged with nitrogen, 3.05 g of the same lot heat-treated silica as that used in Example 40(2), 30 ml of hexane and 0.081 g (4.5 mmol) of $H_2O$ were introduced. The mixture was stirred at ambient temperature for 30 minutes, during which $H_2O$ existing in hexane in the form of a liquid drop visually disappeared, thereby forming a uniform slurry (it seems that the silica absorbed it). After cooling to 5°C using an ice bath, 4.48 ml (9 mmol) of a hexane solution of diethylzing (2.01 mol/l) was dropped over 1 hour. After completion of dropping, the mixture was stirred at 5°C for 30 minutes, heated to 60°C, and stirred at 60°C for 1 hour. Successively, After cooling to 5°C using an ice bath, 4.5 ml (9.0 mmol) of a toluene solution of pentafluorophenol (2.00 mol/l) was dropped thereto over 1 hour. After completion of dropping, the mixture was stirred at 5°C for 30 minutes, heated to 60°C , and stirred at 60°C for 1 hour. After filtration using a filter, the residue was washed with 30 ml of hexane at 60°C 4 times using a filter. Successively, the remaining solid component was dried at 40°C for 1 hour and at 120°C for 8 hours under reduced pressure, thereby obtaining a component (A). Elementary analysis of the component (A) revealed Zn = 1.8 mmol/g, and F = 6.4 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.015MPa, 695 g of butane and 55 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.802 mol% and 1-butene = 2.32 mol%. To the resultant was added 0.9 ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 µmol/ml, and then 10.3 mg of the component (A) obtained in the above Example 51 (1) as a solid catalyst component were added thereto. Polymerization was carried out for 60 minutes at 70°C while feeding an ethylene/hydrogen mixed gas (hydrogen = 0.212 mol%) so as to keep the whole pressure constant. As a result, 58 g of an olefin polymer having a good particle property was obtained. Polymerization activity per zirconium atom was found to be 3.9 × $10^7$ g/mol-Zr/hour, and polymerization activity per the solid catalyst component was found to be 5630 g/g-solid catalyst component/hour. Further, the obtained olefin polymer showed, SCB = 11.7, MFR = 1.54, MFRR = 43.6 and SR = 1.40.

[Example 52]

(1) Production of component (A)

In a 5 l four necked flask purged with nitrogen, 1.5 l of hexane and 1.49 l (3.0 mol) of a hexane solution of diethylzinc (2.01 mol/l) were introduced and cooled to 5°C. To the mixture, a solution prepared by dissolving 198.8 g (1.07 mol) of pentafluorophenol in a mixed solvent of 342 ml of hexane and 194 ml of toluene was dropped over 85 minutes. After completion of dropping, the mixture was stirred for 1 hour at 5°C, thereafter heated to 40°C, stirred for 1 hour, and thereafter allowed to stand over night at ambient temperature. After cooling to 20°C using

an ice bath, 359 g of the same lot heat-treated silica as that used in Example 40 (2) was introduced thereto, and then 0.3 1 of hexane was poured therein so as to wash away the silica adhering to a wall of the flask. After stirring the mixture for 5 minutes, 44.2 g (2.46 mol) of $H_2O$ was added thereto over 1 hour. After completion of the dropping, the mixture was stirred at 20°C for 1 hour, at 40°C for 2 hours and at 60°C for 2 hours. Thereafter, the mixture was allowed to stand, thereby precipitating a solid component. At the time when an interface between a layer of the precipitated solid component and an upper layer of a slurry portion appeared, the upper slurry portion was removed. Thereafter, the remaining liquid component was removed by filtration. For completing washing, 3 l of hexane was added to the residue, and the mixture was stirred, and thereafter allowed to stand, thereby precipitating a solid component, and then the upper slurry portion was removed similarly at the time when the interface appeared. Thereafter, the remaining liquid component was removed by filtration. The above washing operation was repeated 3 times. Thereafter, the solid component was dried for 4 hours at 60°C under reduced pressure, thereby obtaining 814 g of a component (A). Elementary analysis revealed Zn = 3.7 mmol/g, and F = 6.3 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.015MPa, 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.76 mol% and 1-butene = 2.42 mo1%. To the resultant was added 0.9 ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 9.4 mg of the component (A) obtained in the above Example 52 (1) as a solid catalyst component were added thereto. Polymerization was carried out for 60 minutes at 70°C while feeding an ethylene/hydrogen mixed gas (hydrogen 0.23 mol%) so as to keep the whole pressure constant. As a result, 83 g of an olefin polymer having a good particle property was obtained. Polymerization activity per zirconium atom was found to be $5.5 \times 10^7$ g/mol-Zr/hour, and polymerization activity per the solid catalyst component was found to be 8830 g/g-solid catalyst component/hour. Further, the obtained olefin polymer showed, SCB = 15.2, MFR = 0.09, MFRR = 127 and SR = 1.05.

[Example 53]

(1) Production of component (A)

In a 5 l four necked flask purged with nitrogen, 1.5l of hexane and 1.49 l (3.0 mol) of a hexane solution of diethylzinc (2.01 mol/l) were introduced and cooled to 5°C. To the mixture, a solution prepared by dissolving 277.1 g (1.51 mol) of pentafluorophenol in 585 ml of toluene was dropped over 100 minutes. After completion of dropping, the mixture was stirred for 1 hour at 5°C, thereafter heated to 40°C, and stirred for 1 hour. After cooling to 5°C using an ice bath, 355 g of the same lot heat-treated silica as that used in Example 40 (2) was introduced thereto, and then 0.3 1 of toluene was poured therein so as to wash away the silica adhering to a wall of the flask. After stirring the mixture for 5 minutes, 41.0 g (2.28 mol) of $H_2O$ was added thereto over 1 hour. After completion of the dropping, the mixture was stirred at 5°C for 2.5 hours, and at 80°C for 2 hours. Thereafter, the mixture was allowed to stand, thereby precipitating a solid component. At the time when an interface between a layer of the precipitated solid component and an upper layer of a slurry portion appeared, the upper slurry portion was removed. The remaining liquid component was removed by filtration. Thereafter, 3 l of toluene was added thereto, and the mixture was allowed to stand over night at ambient temperature. After that, washing of the solid component was repeated 4 times with each 3 l of toluene at 80°C and 2 times with each 3 l of hexane at ambient temperature, in a manner such that the mixture was allowed to stand to precipitate a solid component, the upper slurry portion was removed at the time when the interface between a layer of the precipitated solid component and an upper layer of a slurry portion appeared, and then, the remaining liquid component was removed by filtration. Thereafter, the solid component was dried for 2 hours at 60°C under reduced pressure, thereby obtaining 864 g of a component (A). Elementary analysis revealed Zn = 3.5 mmol/g, and F = 6.8 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.015 MPa, 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.70 mol% and 1-butene = 3.01 mol%. To the resultant was added 0.9 ml of a heptane solution of triisobutylaluminum adjusted

to a concentration of 1 mmol/ml. Successively, 0.75 ml of a toluene solution of racemic ethylenebis(1-indenyl) zirconium dichloride adjusted to a concentration of 2 μmol/ml, and then 8.7 mg of the component (A) obtained in the above Example 53 (1) as a solid catalyst component were added thereto. Polymerization was carried out for 60 minutes at 70°C while feeding an ethylene/hydrogen mixed gas (hydrogen = 0.26 mol%) so as to keep the whole pressure constant. As a result, 85 g of an olefin polymer having a good particle property was obtained. Polymerization activity per zirconium atom was found to be $5.7 \times 10^7$ g/mol-Zr/hour, and polymerization activity per the solid catalyst component was found to be 9770 g/g-solid catalyst component/hour. Further, the obtained olefin polymer showed, SCB = 16.8.

[Example 54]

(1) Production of component (A)

In a 5 l four necked flask purged with nitrogen, 2.5 l of toluene, 71 ml of tetrahydrofuran and 0.871 l (1.75 mol) of a hexane solution of diethylzinc (2.01 mol/l) were introduced and cooled to 5°C. To the mixture, a solution prepared by dissolving 164.8 g (0.90 mol) of pentafluorophenol in 277 ml of toluene was dropped over 80 minutes. After completion of dropping, the mixture was stirred for 1 hour at 5°C, thereafter heated to 40°C, and stirred for 1 hour. After cooling to 5°C using an ice bath, 350 g of the same lot heat-treated silica as that used in Example 40 (2) was introduced therein, and then 0.1 l of toluene was poured therein so as to wash away the silica adhering to a wall of the flask. After stirring the mixture for 5 minutes, 23.8 g (1.32 mol) of $H_2O$ was added thereto over 1.5 hours. After completion of the dropping, the mixture was stirred at 5°C for 85 minutes, and at 40°C for 2 hours. Thereafter, the mixture was allowed to stand over night at ambient temperature. Thereafter, the mixture was stirred for 2 hours at 80°C, and then allowed to stand, thereby precipitating a solid component. At the time when an interface between a layer of the precipitated solid component and an upper layer of a slurry portion appeared, the upper slurry portion was removed. The remaining liquid component was removed by filtration. Thereafter, 3.5 l of toluene was added thereto, and the mixture was stirred for 2 hours at 95°C. After that, washing of the solid component was repeated 4 times with each 3.5 l of toluene at 95°C and 2 times with each 3.5 l of hexane at ambient temperature, in a manner such that the mixture was allowed to stand, thereby precipitating a solid component, the upper slurry portion was removed at the time when the interface between a layer of the precipitated solid component and an upper layer of a slurry portion appeared, and then the remaining liquid component was removed by filtration. Thereafter, the solid component was dried for 4 hours at 120°C under reduced pressure, thereby obtaining 571 g of a component (A). Elementary analysis revealed Zn = 2.6 mmol/g, and F = 4.9 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.015 MPa, 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.74 mol% and 1-butene = 2.75 mol%. To the resultant was added 0.9 ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 8.4 mg of the component (A) obtained in the above Example 54 (1) as a solid catalyst component were added thereto. Polymerization was carried out for 60 minutes at 70°C while feeding an ethylene/hydrogen mixed gas (hydrogen = 0.26 mol%) so as to keep the whole pressure constant. As a result, 116 g of an olefin polymer having a good particle property was obtained. Polymerization activity per zirconium atom was found to be $7.7 \times 10^7$ g/mol-Zr/hour, and polymerization activity per the solid catalyst component was found to be 13800 g/g-solid catalyst component/hour. Further, the obtained olefin polymer showed, SCB = 16.9, MFR = 1.70, MFRR = 46.0 and SR = 1.29.

[Example 55]

(1) Production of component (A)

In a 50 ml four necked flask purged with nitrogen, 12.5 ml (25 mmol) of a hexane solution of diethylzinc (2.01 mol/l) and 12.5 ml of tetrahydrofuran were introduced and cooled to 5°C. To the mixture, 6.25 ml of a tetrahydrofuran solution of pentafluorophenol adjusted to a concentration of 2 mmol/ml was dropped over 21 minutes. After completion of dropping, the mixture was stirred for 1 hour at 5°C and for 1 hour at 40°C. After cooling to 5°C using an

ice bath, 2.98 g of the same lot heat-treated silica as that used in Example 40 (2) was introduced thereto, and then 8 ml of tetrahydrofuran was poured therein so as to wash away the silica adhering to a wall of the flask. After stirring the mixture for 5 minutes, 0.34 g (18.8 mmol) of $H_2O$ was added thereto over 38 minutes. After completion of dropping, the mixture was stirred at 5°C for 2.5 hours, and at 60°C for 2 hours. Thereafter, washing was carried out using a filter 4 times with each 25 ml of toluene at 80°C, and 2 times with 25 ml of hexane at ambient temperature. Thereafter, the solid component was dried for 2 hours at 120°C under reduced pressure, thereby obtaining 4.80 g of a component (A). Elementary analysis revealed Zn = 2.9 mmol/g, and F = 5.3 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.015MPa, 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.74 mol% and 1-butene = 3.19 mol%. To the resultant was added 0.9ml of a heptane solution of triisobutylaluminum adjusted to a concentration of 1 mmol/ml. Successively, 0.75 ml of a toluene solution of racemic ethylenebis(1-indenyl) zirconium dichloride adjusted to a concentration of 2 μmol/ml, and then 8.0 mg of the component (A) obtained in the above Example 55 (1) as a solid catalyst component were added thereto. Polymerization was carried out for 60 minutes at 70°C while feeding an ethylene/hydrogen mixed gas (hydrogen=0.25mol%) so as to keep the whole pressure constant. As a result, 174 g of an olefin polymer having a good particle property was obtained. Polymerization activity per zirconium atom was found to be $1.2 \times 10^8$ g/mol-Zr/hour, and polymerization activity per the solid catalyst component was found to be 21800 g/g-solid catalyst component/hour. Further, the obtained olefin polymer showed, SCB = 14.7, MFR = 0.89, MFRR = 63.3 and SR = 1.29.

[Example 56]

(1) Production of contact product (e)

In a 200 ml four necked flask purged with nitrogen, 40 ml of tetrahydrofuran and 40 ml (80 mmol) of a hexane solution of diethylzinc (2 mol/l) were introduced and cooled to 5°C. To the mixture was dropped 34.3 ml (80 mmol) of a tetrahydrofuran solution of 3,4,5-trifluorophenol (2.33mol/l) over 120 minutes . After completion of dropping, the mixture was stirred at 5°C for 90 minutes and further at 40°C for 70 minutes. Thereafter, the temperature was lowered to 20°C using an ice bath, 0.72 ml (40 mmol) of $H_2O$ was dropped thereto over 80 minutes. After completion of dropping, the mixture was stirred at 20°C for 60 minutes and further stirred at 40°C for 120 minutes. As a result, the mixture was separated into a transparent liquid product and a yellow gel product. After allowing to stand all night at ambient temperature, a volatile component was removed by distillation, and the residue was dried at 120°C for 8 hours under reduced pressure. As a result, 17.05 g of a yellow solid product was obtained.

(2) Production of component (A)

In a 50 ml four necked flask purged with nitrogen, 5.98 g of the yellow solid product obtained in the above Example 56 (1), 30 ml of tetrahydrofuran and 3.15 g of same lot heat-treated silica as that used in Example 1(2) were introduced and stirred at 40°C for 2 hours. After removing the liquid component using a glass filter, the residue was washed 5 times with each 30 ml of tetrahydrofuran and dried for 8 hours at 120°C under reduced pressure, thereby obtaining 4.45 g of a component (A). Elementary analysis revealed Zn = 2.1 mmol/g, and F = 2.4 mmol/g.

(3) Polymerization

A 3 l-volume autoclave equipped with a stirrer, which had been dried under reduced pressure and thereafter purged with argon, was made vacuum, hydrogen was fed therein to obtain a partial pressure of 0.009 MPa. 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.36 mol% and 1-butene = 2.67 mol%. To the resultant was added 0.9 ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 16.6 mg of the component (A) obtained in the above Example 56 (2) as a solid catalyst component were added thereto. Polymerization was carried out for 60 minutes at 70°C while feeding an ethylene/hydrogen mixed gas (hydrogen = 0.25mol%) so as to keep the whole pressure constant. As a result, 78 g of an olefin polymer was obtained. Polymerization activity per zirconium atom was found to be $1.6 \times 10^8$ g/mol-Zr/hour, and polymerization activity per the solid catalyst component was found to be 4700 g/g-solid catalyst component/hour. Further, the obtained olefin polymer showed, SCB = 16.3, MFR = 1.99, MFRR = 50.4, SR = 1.36, Mw = $9.51 \times 10^4$, Mw/Mn = 8.99, and [η] = 1.26.

[Example 57]

(1) Polymerization

A 3 l-volume autoclave equipped with a stirrer, which had been dried under reduced pressure and thereafter purged with argon, was made vacuum, hydrogen was fed therein to obtain a partial pressure of 0.012MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.51 mol% and 1-butene = 2.91mol%. To the resultant was added 0.9ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 18.0 mg of the component (A) obtained in the above Example 56 (2) as a solid catalyst component were added thereto. Polymerization was carried out for 60 minutes at 70°C while feeding an ethylene/hydrogen mixed gas (hydrogen = 0.25mol%) so as to keep the whole pressure constant. As a result, 75 g of an olefin polymer was obtained. Polymerization activity per zirconium atom was found to be $1.5 \times 10^8$ g/mol-Zr/hour, and polymerization activity per the solid catalyst component was found to be 4170 g/g-solid catalyst component/hour. Further, the obtained olefin polymer showed, SCB = 17.2, MFR = 7.03, MFRR = 39.9, SR = 1.45, Mw = $6.83 \times 10^4$. Mw/Mn = 7.32, and [η] = 1.04.

[Example 58]

(1) Production of contact product (e)

In a 200 ml four necked flask purged with nitrogen, 40 ml of tetrahydrofuran and 40 ml (80 mmol) of a hexane solution of diethylzinc (2 mol/l) were introduced and cooled to 5°C. To the mixture was dropped 13.7 ml (32 mmol) of a tetrahydrofuran solution of 3,4, 5-trifluorophenol (2.33 mol/l) over 45 minutes. After completion of dropping, the mixture was stirred at 5°C for 90 minutes and further at 40°C for 70 minutes. Thereafter, the temperature was lowered to 20°C using an ice bath, 1.30 ml (72 mmol) of $H_2O$ was dropped thereto over 145 minutes. After completion of dropping, the mixture was stirred at 20°C for 60 minutes and further stirred at 40°C for 120 minutes. As a result, the mixture was separated into a transparent liquid product and a yellow gel product. After allowing to stand over night at ambient temperature, a volatile component was removed by distillation, and the residue was dried at 120°C for 8 hours under reduced pressure. As a result, 10.39 g of a yellow solid product was obtained.

(2) Production of component (A)

In a 50 ml four necked flask purged with nitrogen, 3.65 g of the yellow solid product obtained in the above Example 56 (1), 30 ml of tetrahydrofuran and 3.08 g of same lot heat-treated silica as that used in Example 1 (2) were introduced and stirred at 40°C for 2 hours. After removing the liquid component using a glass filter, the residue was washed 5 times with each 30 ml of tetrahydrofuran and dried for 8 hours at 120°C under reduced pressure, thereby obtaining 4.76 g of a component (A). Elementary analysis revealed Zn = 3.1 mmol/g, and F = 2.4 mmol/g.

(3) Polymerization

A 3 l-volume autoclave equipped with a stirrer, which had been dried under reduced pressure and thereafter purged with argon, was made vacuum, hydrogen was fed therein to obtain a partial pressure of 0.004 MPa, 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.17 mol% and 1-butene = 2.85 mol%. To the resultant was added 0.9ml of a heptane solution of triisobutylaluminum adjusted to a concentration of 1 mmol/ml. Successively, 0.25 ml of a toluene solution of racemic ethylenebis(1-indenyl) zirconium dichloride adjusted to a concentration of 2 μmol/ml, and then 9.8 mg of the component (A) obtained in the above Example 58 (2) as a solid catalyst component were added thereto. Polymerization was carried out for 60 minutes at 70°C while feeding an ethylene/hydrogen mixed gas (hydrogen = 0.22mol%) so as to keep the whole pressure constant. As a result, 87 g of an olefin polymer was obtained. Polymerization activity per zirconium atom was found to be $1.7 \times 10^8$ g/mol-Zr/hour, and polymerization activity per the solid catalyst component was found to be 8880 g/g-solid catalyst component/hour. Further, the obtained olefin polymer showed, SCB = 17.6, MFR = 2.62, MFRR = 45.4, SR = 1.36, Mw = $9.93 \times 10^4$, Mw/Mn = 4.53, and [η] = 1.32.

[Example 59]

(1) Pre-polymerization

A 0.4 l-volume autoclave equipped with a stirrer was made vacuum, hydrogen was fed therein to obtain a pressure of 0.002 MPa, 90 g of butane was fed therein as a solvent, and then a temperature of the autoclave was raised to 50°C. Further, ethylene was fed therein to obtain a partial pressure of 0.15 MPa, and the system was stabilized. As a result of gas chromatography analysis, a gas composition in the system was found to be hydrogen = 0.02 mol%. Then, 0.5 ml of a hexane solution of triisobutylaluminum adjusted to a concentration of 1 mmol/ml was introduced therein. Successively, 0.2 ml of ahexane solution of racemic ethylenebis(1-indenyl)zirconium dichloride and triisobutylaluminum adjusted to a zirconium concentration and an aluminum concentration to 150 μmol/ml and 1.0 mmol/ml, respectively, was added thereto, and then 0. 42 g of the component (A) obtained in the above Example 56 (2) was introduced therein to initiate polymerization. During the polymerization, a mixed gas of ethylene and hydrogen (hydrogen concentration = 0.24 mol%) was continuously supplied while adjusting so as to keep the gas phase pressure in the autoclave to 0.68 MPa. After 72 minutes, ethylene, butane and hydrogen gas were released, and a solid remaining in the autoclave was dried for 30 minutes at ambient temperature under reduced pressure. As a result, a polyethylene-pre-polymerized catalyst component for addition polymerization was obtained in a yield of 51 g per g of the component (A). Intrinsic viscosity [ η ] and MFR of said polyethylene were 1.16 dl/g and 4.2 g/10 min., respectively.

(2) Real polymerization

A 3 l-volume autoclave equipped with a stirrer, which had been dried under reduced pressure and thereafter purged with argon, was made vacuum, hydrogen was fed therein to obtain a partial pressure of 0.008 MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.32 mol% and 1-butene = 2.75mol%. To the resultant was added 0 . 9 ml of a heptane solution of triisobutylaluminum adjusted to a concentration of 1 mmol/ml. Successively, 0.427 g of the pre-polymerized catalyst, component for addition polymerization obtained in the above Example 59(1) was added thereto. Polymerization was continued for 60 minutes at 70°C while feeding an ethylene/hydrogen mixed gas(hydrogen = 0.25 mol%) so as to keep the whole pressure constant. As a result, 48 g of an olefin polymer was obtained. Polymerization activity per the solid catalyst component (the component (A) obtained in the above Example 56 (2)) was found to be 5750 g/g-solid catalyst component/hour. Further, the obtained olefin polymer showed, SCB = 17.8, MFR = 22.8 and [η] =0.89.

[Example 60]

(1) Production of solid product

In a 5 1 four necked flask purged with nitrogen, 1.65 l of tetrahydrofuran and 1.50 l (2.98 mol) of a hexane solution of diethylzinc (1.99 mol/l) were introduced and cooled to 5°C. To the mixture, a solution prepared by dissolving 223.36 g (1.21 mol) of pentafluorophenol in 370 ml of tetrahydrofuran was dropped over 70 minutes. During the dropping, temperature in the flask was kept from 4 to 6°C. After completion of dropping, the mixture was stirred at that temperature for 1 hour, thereafter, gradually heated to 45°C and stirred for 1 hour. Thereafter, the temperature was lowered to 20°C using an ice bath, and 48.2 g (2.67 mol) of $H_2O$ was dropped thereto over 1.5 hours at that temperature. As a result, the mixture was separated into a yellow transparent liquid product and a yellow gel product. After stirring at 20°C for 1 hour, the mixture was heated to 45°C, stirred for 1 hour at that temperature, and thereafter allowed to stand for 12 hours at ambient temperature. A volatile component was removed by distillation under reduced pressure, and the residue was dried at 120°C for 8 hours under reduced pressure. As a result, 472.6 g of a solid product was obtained.

In a 200 ml four necked flask purged with nitrogen, 19.7 g of the above-mentioned solid product and 139 ml of tetrahydrofuran were introduced and heated to 40°C. After stirring for 1 hour at that temperature, the mixture was cooled to ambient temperature, and allowed to stand for 2 days. Filtration gave 0.20 g of an insoluble matter. The filtrate was transferred to a 300 ml four necked flask purged with nitrogen, and 48.5 ml of hexane was added to the filtrate, thereby precipitating a solid. Thus, VH/(VT + VH) = 0.26. The mixture was heated to 40°C, stirred for 1 hour at that temperature, thereafter cooled to ambient temperature and filtered. The solid separated by filtration was dried at 120°C for 2 hours under reduced pressure. As a result, 1.35 g of a solid product was obtained.

(2) Production of component (A)

In a 50 ml four necked flask purged with nitrogen, 928.4 mg of the solid product obtained in the above Example 60 (1) and 7 ml of tetrahydrofuran were introduced and stirred for 1 hour at ambient temperature. To the mixture, 721 mg of the same lot heat-treated silica as that used in Example 1 (2) was added thereto. The resulting mixture was heated to 40°C, stirred for 2 hours, and thereafter filtered. To the residue, 7 ml of tetrahydrofuran was added, and the mixture was stirred at ambient temperature and thereafter filtered. This operation was repeated 5 times. The residue was dried for 8 hours at 120°C under reduced pressure, thereby obtaining 834.2 mg of a component (A).

(3) Polymerization

A 3 l-volume autoclave equipped with a stirrer, which had been dried under reduced pressure and thereafter purged with argon, was made vacuum, hydrogen was fed therein below 10°C to obtain a partial pressure of 0.01 MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. To the resultant was added 0.9ml of a heptane solution of triisobutylaluminum adjusted to a concentration of 1 mmol/ml. Successively, 0.25 ml of a toluene solution of racemic ethylenebis(1-indenyl)zirconium dichloride adjusted to a concentration of 2 μmol/ml, and then 11.9 mg of the component (A) obtained in the above Example 60 (2) as a solid catalyst component were added thereto. Polymerization was carried out for 60 minutes at 70°C while feeding an ethylene so as to keep the whole pressure constant. As a result, 63.6 g of an olefin polymer having a good particle property was obtained. Polymerization activity per the solid catalyst component (the component (A) obtained in the above-mentioned (2)) was found to be 5,340 g/g-solid catalyst component/hour. Further, the obtained olefin polymer showed, SCB = 13.5, MFR = 0.08, MFRR = 171 and SR = 1.09.

[Example 61]

(1) Production of solid product

To the filtrate obtained in Example 60 (1), 15 ml of hexane was further added to precipitate a solid. Thus, VH/(VT + VH) = 0.31. The mixture was heated to 40°C, stirred for 1 hour at that temperature, thereafter cooled to ambient temperature and then filtered. The solid separated by filtration was dried for 2 hours at 120°C under reduced pressure. As a result, 3.71 g of a solid product was obtained.

(2) Production of component (A)

Example 60 (2) was repeated, except that the solid product was changed to 2.60 g of the solid product obtained in the above Example 61 (1), and the amounts of tetrahydrofuran and the silica were changed to 17.6 ml and 1.82 g, respectively. As a result, 3.36 g of a component (A) was obtained.

(3) Polymerization

Polymerization of Example 60 (3) was repeated, except that the solid catalyst component was changed to 9.3 mg of the component (A) obtained in the above Example 61 (2). As a result, 108.8 g of a polymer having a good particle property was obtained. Polymerization activity per the solid catalyst component was found to be 11,700 g/solid catalyst component-g/hour. The value of VH/(VT + VH) was larger than 0.3, and the activity was found to be high. Further, the olefin polymer obtained showed, SCB = 14.1, MFR = 0.018, MFRR = 292 and SR = 1.00.

[Example 62]

(1) Production of solid product

To the filtrate obtained in Example 61 (1), 30 ml of hexane was further added to precipitate a solid. Thus, VH/(VT + VH) = 0.40. The mixture was heated to 40°C, stirred for 1 hour at that temperature, thereafter cooled to ambient temperature and then filtered. The solid separated by filtration was dried for 2 hours at 120°C under reduced pressure. As a result, 4.01 g of a solid product was obtained.

(2) Production of component (A)

Example 60 (2) was repeated, except that the solid product was changed to 1.70 g of the solid product obtained in the above Example 62 (1), and the amounts of tetrahydrofuran and the silica were changed to 10.5 ml and 1.29 g, respectively. As a result, 2.22 g of a component (A) was obtained.

(3) Polymerization

Polymerization of Example 60 (3) was repeated, except that the solid catalyst component was changed to 10.5 mg of the component (A) obtained in the above Example 62 (2). As a result, 87.8 g of a polymer having a good particle property was obtained. Polymerization activity per the solid catalyst component was found to be

8,360 g/solid catalyst component-g/hour. The value of VH/(VT + VH) was larger than 0.3, and the activity was found to be high. Further, the olefin polymer obtained showed, SCB = 14.3, MFR = 0.04, MFRR = 158 and SR = 1.04.

[Reference Example 1]

(1) Production of solid product

To the filtrate obtained in Example 62 (1), 60 ml of hexane was further added to precipitate a solid. Thus, VH/(VT + VH) = 0.52. The mixture was heated to 40°C, stirred for 1 hour at that temperature, thereafter cooled to ambient temperature and then filtered. The solid separated by filtration was dried for 2 hours at 120°C under reduced pressure. As a result, 2.26 g of a solid product was obtained.

(2) Production of component (A)

Example 60 (2) was repeated, except that the solid product was changed to 1.63 g of the solid product obtained in the above Reference Example 1(1), and the amount of the silica was changed to 1.27 g. As a result, 1.86 g of a component (A) was obtained.

(3) Polymerization

Polymerization of Example 60 (3) was repeated, except that the solid catalyst component was changed to 10.2 mg of the component (A) obtained in the above Reference Example 1 (2). As a result, 40.1 g of a polymer having a good particle property was obtained. Polymerization activity per the solid catalyst component was found to be 3,930 g/solid catalyst component-g/hour. The value of VH/(VT + VH) was larger than 0.5, and the activity was found to be somewhat low. Further, the olefin polymer obtained showed, SCB = 14.1, MFR = 0.08, MFRR = 138 and SR = 1.07.

[Example 63]

(1) Production of contact product (e)

In a 5 l four necked flask purged with nitrogen, 1.5 l of tetrahydrofuran and 1.35 1 (2.70 mol) of a hexane solution of diethylzinc (2.00 mol/l) were introduced and cooled using an ice bath. To the mixture, a solution prepared by dissolving 199.8 g (1.09 mol) of pentafluorophenol in 340 ml of tetrahydrofuran was added over 65 minutes. After completion of dropping, the mixture was stirred for 1 hour. The temperature was raised to 45°C over 0.5 hour, and the mixture was stirred for 1 hour at that temperature. The temperature was lowered to 20°C using an ice bath, 45.09 g (2.51 mol) of $H_2O$ was dropped thereto over 1.5 hours. Thereafter, the mixture was stirred at 20°C for 1 hour, heated to 45°C and stirred for 1 hour at that temperature. After cooling to ambient temperature, a volatile component was removed by distillation, and the residue was dried at 120°C for 8 hours under reduced pressure. As a result, 425.5 g of a solid product was obtained.

(2) Production of component (A)

In the flask of the above (1), 3 l of tetrahydrofuran was introduced and stirred. To the mixture, 327.4 g of the same lot heat-treated silica as that used in Example 1 (2) was introduced. The mixture was heated to 40°C, and stirred for 2 hours. Thereafter, the solid component was allowed to precipitate, and the mixture was filtered. As a washing operation, 3 l of tetrahydrofuran was added thereto, the mixture was stirred, and after allowing the solid component to precipitate, the mixture was filtered. Said washing operation was repeated 5 times. The residue was dried for 8 hours at 120°C under reduced pressure, thereby obtaining 510.0 g of a component (A). Elementary analysis revealed Zn = 2.5 mmol/g, and F = 2.4 mmol/g. Thus, F/Zn = 0.96 (molar ratio). As a result of an extended X-ray measurement, A/B was calculated to be 0.274, provided that A is an integral intensity of halo showing a peak at Bragg angle (2θ) 33° to 37° in a diffraction intensity profile and B is an integral intensity of halo showing a peak at Bragg angle (2θ) 18° to 22° in said diffraction intensity profile.

(3) Polymerization

A 3 l-volume autoclave equipped with a stirrer, which had been dried under reduced pressure and thereafter purged with argon, was made vacuum, hydrogen was fed therein to obtain a partial pressure of 0.012MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.45mol%. To the resultant was added 0.9 ml of a heptane solution of triisobutylaluminum adjusted to a concentration of 1 mmol/ml. Successively, 14.3 mg of the component (A) obtained in the above Example 63 (2) as a solid catalyst component was added thereto. Polymerization was carried out for 60 minutes at 70°C while feeding an ethylene/hydrogen mixed gas (hydrogen = 0.200 vol%) so as to keep the whole pressure constant. As a result, 77.4 g of an olefin polymer was obtained. Polymerization activity per the solid catalyst component (the component (A) obtained in the above Example 63 (2)) was found to be 5,410 g/g-solid catalyst component/hour. Further, the obtained olefin polymer showed, SCB = 15.5, MFR = 0.35, MFRR = 118 and SR = 1.15.

[Example 64]

(1) Production of contact product (e)

In a 300 ml four necked flask purged with nitrogen, 106 ml of tetrahydrofuran and 40 ml (80.0 mmol) of a hexane solution of diethylzinc (2.00 mol/l) were introduced and cooled using an ice bath. To the mixture, a 14.5 ml (32.0 mmol) of a tetrahydrofuran solution of pentafluorophenol (2.21 mol/l) was added over 50 minutes. After completion of dropping, the mixture was stirred at 5°C for 1 hour. The temperature was raised to 20°C, and 8.9 ml (88.1 mmol) of a tetrahydrofuran solution of $H_2O$ (9.90 mol/l) was dropped thereto over 1 hour. Thereafter, the mixture was stirred for 2 hours, and then allowed to stand at ambient temperature for 15.3 hours. The resulting mixture was refluxed at 63°C and cooled to ambient temperature, thereby obtaining 146 ml of a yellow solution.

(2) Production of component (A)

In a 50 ml four necked flask purged with nitrogen, 3.12 g of the same lot heat-treated silica as that used in Example 3 (2) (Sylopol 948, manufactured by Davison Co., Ltd.; average particle diameter = 55 μm; pore volume =1.66 ml/g; specific surface area = 309 $m^2$/g) was introduced, and then 50 ml of the yellow solution obtained in the above Example 64 (1) was added thereto. The mixture was heated to 40°C, and stirred for 2 hours. Thereafter, the solid component was allowed to precipitate, and the mixture was filtered. As a washing operation, 30 ml of tetrahydrofuran was added thereto, the mixture was stirred, and after allowing the solid component to precipitate, the mixture was filtered. Said washing operation was repeated 5 times. The residue was dried for 8 hours at 120°C under reduced pressure, thereby obtaining 5.60 g of a component (A). Elementary analysis revealed Zn = 3.7 mmol/g, and F = 4.1 mmol/g. Thus, F/Zn = 1.1 (molar ratio). As a result of an extended X-ray measurement, A/B was calculated to be 0.696, provided that A is an integral intensity of halo showing a peak at Bragg angle (2θ) 33° to 37° in a diffraction intensity profile and B is an integral intensity of halo showing a peak at Bragg angle (2θ) 18° to 22° in said diffraction intensity profile. Further, as a result of EXAFS, the peak intensity C of the maximum peak present within a range of 1 to 2 nm in a radial distribution function obtained according to a Fourier transform was 14.2, and the peak intensity D of the maximum peak present within a range of 2.5 to 3.5 nm in said radial distribution function was 10.1, and thus, a peak intensity ratio, D/C = 0.71.

(3) Polymerization

Example 63 (3) was repeated, except that the solid catalyst component was changed to 13.6 mg of the component (A) obtained in Example 64 (2), and a hydrogen concentration of the ethylene/hydrogen mixed gas to keep the whole pressure of the autoclave constant was changed to 0.199 vol%. As a result, 72.3 g of an olefin polymer was obtained. Polymerization activity per the solid catalyst component (the component (A) obtained in the above Example 64 (2)) was found to be 5,320 g/g-solid catalyst component/hour. Further, the obtained olefin polymer showed, SCB = 15.5, MFR = 1.57, MFRR = 58.2 and SR = 1.30.

[Example 65]

(1) Production of contact product (e)

In a 5 l four necked flask purged with nitrogen, 1.5 l of tetrahydrofuran and 1.35 l (2.70 mol) of a hexane solution of diethylzinc (2.00 mol/l) were introduced and cooled using an ice bath. To the mixture, a solution prepared by dissolving 197.3 g (1.07 mol) of pentafluorophenol in 380 ml of tetrahydrofuran was added over 65 minutes. After completion of dropping, the mixture was stirred for 1 hour. The temperature was raised to 45°C over 0.5 hour, and the mixture was stirred for 1 hour at that temperature. After lowering the temperature to 20°C using an ice bath, 44.0 g (2.44 mol) of $H_2O$ was dropped thereto over 1.5 hours. Thereafter, the mixture was stirred for 1 hour at 20°C, thereafter heated to 45°C and then stirred for 1 hour at that temperature. After cooling to ambient temperature, a volatile component was removed by distillation, and the residue was dried for 8 hours at 120°C under reduced pressure. As a result, 423.3 g of a solid product was obtained.

(2) Production of component (A)

In the flask of the above Example 65 (1), 3 l of tetrahydrofuran was introduced and stirred, and 324.6 g of the same lot heat-treated silica as that used in Example 1 (2) was introduced. The mixture was heated to 40°C, and

stirred for 2 hours. Thereafter, the solid component was allowed to precipitate, and the mixture was filtered. As a washing operation, 3 l of tetrahydrofuran was added thereto, the mixture was stirred, and after allowing the solid component to precipitate, the mixture was filtered. Said washing operation was repeated 5 times. The residue was dried for 8 hours at 120°C under reduced pressure, thereby obtaining 515.6 g of a component (A). Elementary analysis revealed Zn = 2.6 mmol/g, and F = 3.2 mmol/g. Thus, F/Zn = 1.2 (molar ratio). As a result of EXAFS, the peak intensity C of the maximum peak present within a range of 1 to 2 nm in a radial distribution function obtained according to a Fourier transform was 13.3, and the peak intensity D of the maximum peak present within arange of 2.5 to 3.5 nm in said radial distribution function was 8.51, and thus, a peak intensity ratio, D/C = 0.64.

(3) Polymerization

Example 63 (3) was repeated, except that the solid catalyst component was changed to 13.1 mg of the component (A) obtained in Example 65 (2), and a hydrogen concentration of the ethylene/hydrogen mixed gas to keep the whole pressure of the autoclave constant was changed to 0.199 vol%. As a result, 71.5 g of an olefin polymer was obtained. Polymerization activity per the solid catalyst component (the component (A) obtained in the above Example 65 (2)) was found to be 5,460 g/g-solid catalyst component/hour. Further, the obtained olefin polymer showed, SCB = 14.3, MFR = 0.13, MFRR = 126 and SR = 1.10.

[Example 66]

(1) Production of contact product (e)

In a 300 ml four necked flask purged with nitrogen, 100 ml of tetrahydrofuran and 39.6 ml (80.0 mmol) of a hexane solution of diethylzinc (2.02 mol/l) were introduced and cooled using an ice bath. To the mixture, a 14.5 ml (32.0 mmol) of a tetrahydrofuran solution of pentafluorophenol (2.21 mol/l) was added over 50 minutes. After completion of dropping, the mixture was stirred at 5°C for 1 hour. The temperature was raised to 20°C, and 9.7 ml (96.0 mmol) of a tetrahydrofuran solution of $H_2O$ (9.90 mol/l) was dropped thereto over 1 hour. Thereafter, the mixture was stirred for 2 hours, and then allowed to stand at ambient temperature for 15.3 hours. The resulting mixture was refluxed at 63°C and cooled to ambient temperature, thereby obtaining a yellowish white slurry.

(2) Production of component (A)

In a 50 ml four necked flask purged with nitrogen, 2.88 g of the same lot heat-treated silica as that used in Example 3 (2) was introduced, and then 50 ml of the yellowish white slurry obtained in the above Example 66 (1) was added thereto. The mixture was heated to 40°C, and stirred for 2 hours. Thereafter, the solid component was allowed to precipitate, and the mixture was filtered. As a washing operation, 30 ml of tetrahydrofuran was added thereto, the mixture was stirred, and after allowing the solid component to precipitate, the mixture was filtered. Said washing operation was repeated 5 times. The residue was dried for 8 hours at 120°C under reduced pressure, thereby obtaining 3.00 g of a component (A). Elementary analysis revealed Zn = 2.8 mmol/g, and F = 1.9 mmol/g. Thus, F/Zn 0.68 (molar ratio). As a result of an extended X-ray measurement, A/B was calculated to be 0.472. Further, as a result of EXAFS, the peak intensity C was 14.0, and the peak intensity D was 14.4, and thus, a peak intensity ratio, D/C = 1.03.

(3) Polymerization

Example 63 (3) was repeated, except that the solid catalyst component was changed to 12.4 mg of the component (A) obtained in Example 66 (2), and a hydrogen concentration of the ethylene/hydrogen mixed gas to keep the whole pressure of the autoclave constant was changed to 0.186 vol%. As a result, 29.4 g of an olefin polymer was obtained. Polymerization activity per the solid catalyst component (the component (A) obtained in the above Comparative Example 4 (2)) was found to be 2,370 g/g-solid catalyst component/hour. Further, the obtained olefin polymer showed, SCB = 14.7, MFR = 1.63, MFRR = 52.1 and SR = 1.26.

[Example 67]

(1) Polymerization of propylene

In a 3 l-volume stainless steel autoclave equipped with a stirrer, which had been dried under reduced pressure and thereafter purged with argon, 780 g of propylene was fed and heated to 40°C. In a different vessel, 145.5 mg of the modified particle obtained in the above Example 1 (2) as the catalyst component (A), 1.5 ml of a toluene solution of triisobutylaluminum adjusted to a concentration of 1 mmol/ml as the catalyst component (C), and 5 ml of a toluene solution of racemic dimethylsilylenebis(2-methyl-1-indenyl)zirconium dichloride adjusted to a concentration of 2μmol/ml as the catalyst component (B) had been collectively mixed. The resulting mixture was fed into

the above-mentioned autoclave, and polymerization was carried out at 40°C. After 60 minutes, the unreacted monomer was released to stop the polymerization. The resulting polymer was dried at 60°C for 5 hours under reduced pressure, thereby obtaining 282 g of a polypropylene powder.

Accordingly, yield of the polypropylene per mol of the transition metal compound and per hour of the polymerization time (hereinafter referred to as g-PP/mol-Zr·Hr) was $2.7 \times 10^7$. a bulk density of the obtained propylene polymer was 0.44 (g/ml), and stereoregularity thereof mmmm% was 0.941. Polymerization results were as shown in Table 1.

[Example 68]

(1) Polymerization of propylene

Example 67 (1) was repeated to carry out the polymerization of propylene, except that the amounts of the modified particle (catalyst component (A)) and the toluene solution as the catalyst component (B) were changed to 155.3 mg and 0.9 ml, respectively, and the polymerization time was changed to 30 minutes. Polymerization results were as shown in Table 1.

[Example 69]

(1) Polymerization of propylene

In a 3 l-volume stainless steel autoclave equipped with a stirrer, which had been dried under reduced pressure and thereafter purged with argon, 500 g of butane was fed and heated to 40°C. In a different vessel, 304.7 mg of the modified particle obtained in the above Example 1 (2) as the catalyst component (A), 1.5 ml of a toluene solution of triisobutylaluminum adjusted to a concentration of 1 mmol/ml as the catalyst component (C), and 12 ml of a toluene solution of racemic dimethylsilylenebis(2-methyl-1-indenyl)zirconium dichloride adjusted to a concentration of 2 µmol/ml as the catalyst component (B) had been collectively mixed. The resulting mixture was fed into the above-mentioned autoclave, and polymerization was carried out at 40°C while keeping inner pressure 0.7 MPa using propylene. After 60 minutes, the unreacted monomer was released. The resulting polymer was dried at 60°C for 5 hours under reduced pressure, thereby obtaining 49 g of a polypropylene powder. Polymerization results were as shown in Table 1.

[Reference Example 2]

(1) Polymerization of propylene

In a 3 l-volume stainless steel autoclave equipped with a stirrer, which had been dried under reduced pressure and thereafter purged with argon, a toluene slurry prepared by adding 304.4 mg of the modified particle obtained in the above Example 1 (2) as the catalyst component (A) to 10 ml of toluene was introduced, thereafter 780 g of propylene was fed, and a temperature was raised to 40°C. While, 2.0 ml of a toluene solution of triisobutylaluminum adjusted to a concentration of 1 mmol/ml as the catalyst component (C) and 8.9 ml of a toluene solution of dimethylsilylenebis(2-methyl-1-indenyl)zirconium dichloride adjusted to a concentration of 2µmol/ml as the catalyst component (B) had been contacted with each other in a different stainless steel vessel. The resultant was introduced in the foregoing autoclave, and polymerization was carried out at 40°C. After 60 minutes, the unreacted monomer was released to stop the polymerization. The resulting polymer was dried at 60°C for 5 hours under reduced pressure, thereby obtaining 0.6 g of a polypropylene powder. Polymerization results were as shown in Table 1.

Table 1

| | Polymerization activity (g-PP/mol-Zr·hr) | Bulk density (g/ml) | [mmmm] | Mw | Mw/Mn |
|---|---|---|---|---|---|
| Example 67 | $2.7 \times 10^7$ | 0.44 | 0.942 | 214,000 | 1.9 |
| Example 68 | $5.1 \times 10^8$ | 0.42 | 0.931 | 186,000 | 1.9 |

Table 1 (continued)

| | Polymerization activity (g-PP/ mol-Zr·hr) | Bulk density (g/ml) | [mmmm] | Mw | Mw/Mn |
|---|---|---|---|---|---|
| Example 69 | $2.7 \times 10^6$ | 0.41 | 0.925 | 173,000 | 2.0 |
| Reference Example 2 | $3.4 \times 10^4$ | | | | |

[Example 70]

(1) Production of transition metal compound

In a 3 l four necked flask purged with argon, 55.3 g (588 mmol) of phenol and 1200 ml of toluene were introduced and stirred. After cooling to 5°C, 377 ml (588 mmol) of a hexane solution of n-BuLi (1.56 mol/l) was gradually dropped thereto. The content turned to white slurry. After completion of dropping, 700 ml of toluene was added thereto. Then, 110 g (263 mmol) of racemic ethylenebis(1-indenyl)zirconium dichloride was gradually added thereto, and the mixture was stirred at 5°C for 1 hour. Thereafter, the mixture was stirred for 3 hours under a reflux condition. It was observed that a white solid was precipitated. After allowing the mixture to stand over night, it was observed that a white solid was precipitated downward. Using a syringe, a supernatant yellow transparent liquid was transferred to a flask purged with argon and concentrated, thereby precipitating a yellow solid. Hexane was added thereto, thereby further precipitating the yellow solid. After allowing the mixture to stand in a refrigerator, the yellow solid was separated out, thereby obtaining 46.8 g of racemic ethylenebis(indenyl)zirconium diphenoxide as a first crystal.

After completion of the reaction, dichloromethane was added to the white solid precipitated and separated. The mixture was filtered using sellaite. The filtrate was concentrated, thereby precipitating a yellow solid. Hexane was added thereto, thereby further precipitating the yellow solid. After allowing the mixture to stand in a refrigerator, the yellow solid was separated out, thereby obtaining 59.3 g of racemic ethylenebis(1-indenyl)zirconium diphenoxide as a second crystal. A total amount combined with the first crystal was 106 g (199 mmol). Yield 76%.

(1) Polymerization

A 3 l-volume autoclave equipped with a stirrer, which had been dried under reduced pressure and thereafter purged with argon, was made vacuum, hydrogen was fed therein to obtain a partial pressure of 0.018 MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.67 mol% and 1-butene = 2.37 mol%. To the resultant was added 0.9 ml of a heptane solution of triisobutylaluminum adjusted to a concentration of 1 mmol/ml. Successively, 0.25 ml of a toluene solution of racemic ethylenebis(1-indenyl) zirconium diphenoxide adjusted to a concentration of 2 μmol/ml, and then 15.6 mg of the component (A) obtained in the above Example 28 (2) as a solid catalyst component were added thereto. Polymerization was carried out for 60 minutes at 70°C while feeding an ethylene/hydrogen mixed gas (hydrogen = 0.31mol%) so as to keep the whole pressure constant. As a result, 75 g of an olefin polymer having a good particle property was obtained. Polymerization activity per zirconium atom was found to be $1.5 \times 10^8$ g/mol-Zr/hour, and polymerization activity per the solid catalyst component was found to be 4810 g/g-solid catalyst component/hour. Further, the obtained olefin polymer showed, SCB = 13.2, MFR = 0.43, MFRR = 109, SR = 1.21, Mw = $1.12 \times 10^5$, Mw/Mn = 10.4, and [η] = 1.35.

[Example 71]

(1) Polymerization A 3 l-volume autoclave equipped with a stirrer, which had been dried under reduced pressure and thereafter purged with argon, was made vacuum, hydrogen was fed therein to obtain a partial pressure of 0.028 MPa, 700 g of butane and 50 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.90 mol% and 1-butene = 2.80 mol%. To the resultant was added 0.9 ml of a heptane solution of triisobutylaluminum adjusted to a concentration of 1 mmol/ml. Successively, 0.25 ml of a toluene solution of racemic ethylenebis(1-indenyl)zirconium diphenoxide adjusted to a concentration of 2 μmol/ml, and then 15.8 mg of the

component (A) obtained in the above Example 28 (2) as a solid catalyst component were added thereto. Polymerization was carried out for 60 minutes at 70°C while feeding an ethylene/hydrogen mixed gas (hydrogen = 0.31 mol%) so as to keep the whole pressure constant. As a result, 67 g of an olefin polymer having a good particle property was obtained. Polymerization activity per zirconium atom was found to be $1.3 \times 10^8$ g/mol-Zr/hour, and polymerization activity per the solid catalyst component was found to be 4240 g/g-solid catalyst component/hour. Further, the obtained olefin polymer showed, SCB = 16.1, MFR = 1.54, MFRR = 76.9, SR = 1.34, Mw = $8.90 \times 10^4$, Mw/Mn = 9.5, and [η] = 1.16.

[Example 72]

(1) Production of contact product (e)

In a 5 l four necked flask purged with nitrogen, 1.5 l of tetrahydrofuran and 1.35 l (2.7 mol) of a hexane solution of diethylzinc (2.01 mol/l) were introduced and cooled to 5°C. To the mixture, a solution prepared by dissolving 197.3 g (1.07 mol) of pentafluorophenol in 380 ml of tetrahydrofuran was added over 55 minutes. After completion of dropping, the mixture was stirred at 5°C for 1 hour. Thereafter, the temperature was raised to 45°C, and the mixture was stirred for 1 hour. After lowering the temperature to 20°C using an ice bath, 44.0 g (2.44 mol) of $H_2O$ was dropped thereto over 1.5 hours. As a result, the mixture turned to yellowish white slurry. After completion of dropping, the mixture was stirred for 1 hour, thereafter heated to 45°C and then stirred for 1 hour. After allowing the mixture to stand over night at ambient temperature, a volatile component was removed by distillation, and the residue was dried for 8 hours at 120°C under reduced pressure. As a result, 423 g of a solid product was obtained.

(2) Production of component (A)

In a 5 l four necked flask purged with nitrogen, 423 g of the solid product obtained in the above Example 72 (1), and 3 l of tetrahydrofuran were introduced and stirred. To the mixture, 325 g of the same lot heat-treated silica as that used in Example 1 (2) was introduced. The mixture was heated to 40°C, and stirred for 2 hours. Thereafter, the solid component was allowed to precipitate, and a slurry component of the upper layer was removed. The remaining liquid component was filtered using a glass filter. As a washing operation, 3 l of tetrahydrofuran was added thereto, the mixture was stirred, after allowing the solid-component to precipitate, a slurry component of the upper layer was removed, and the remaining liquid component was filtered using a glass filter. Said washing operation was repeated 5 times. The residue was dried for 8 hours at 120°C under reduced pressure, thereby obtaining 516 g of a component (A). Elementary analysis revealed Zn = 2.6 mmol/g, and F = 3.2 mmol/g.

(3) Pre-polymerization

A 0.4 l-volume autoclave equipped with a stirrer was made vacuum, hydrogen was fed therein to obtain a pressure of 0.005 MPa at ambient temperature, 90 g of butane was fed therein as a solvent, and then a temperature of the autoclave was raised to 50°C. Further, ethylene was fed therein to obtain a partial pressure of 0.5 MPa, and the system was stabilized. As a result of gas chromatography, a gas composition in the system was found to be hydrogen = 0.12 mol%. Then, 0.2 ml of a hexane solution of triisobutylaluminum adjusted to a concentration of 1 mmol/ml was introduced therein. Successively, 1 ml of a hexane solution of racemic ethylenebis(1-indenyl)zirconium diphenoxide and triisobutylaluminum adjusted to a zirconium concentration and an aluminum concentration to 50 μmol/ml and 0.5 mmol/ml, respectively, was added thereto, and then 0.42 g of the component (A) obtained in the above Example 72 (2) was introduced therein to initiate polymerization. During the polymerization, a mixed gas of ethylene and hydrogen (hydrogen concentration = 0.28 mol%) was continuously supplied while adjusting so as to keep the gas phase pressure in the autoclave to 1.0 MPa. After 6.3 hours, ethylene, butane and hydrogen gas were released, and a solid remaining in the autoclave was dried for 30 minutes at ambient temperature under reduced pressure. As a result, a polyethylene-pre-polymerized catalyst component for addition polymerization was obtained in a yield of 102 g per g of the component (A). MFR of said polyethylene was 2.0 g/10 min.

(4) Real polymerization

A 5 l-volume autoclave equipped with a stirrer, which had been dried under reduced pressure and thereafter purged with argon, was made vacuum, hydrogen was fed at 10°C therein to obtain a partial pressure of 0.018 MPa, 1066 g of butane and 200 ml of 1-hexene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.98 mol%. To the resultant was added 1.5 ml of a heptane solution of triisobutylaluminum adjusted to a concentration of 1 mmol/ml. Successively, 2.17 g of the pre-polymerized catalyst component for addition polymerization obtained in the above Example 72(3) was added thereto. Polymerization was continued for 60 minutes at 70°C while feeding an ethylene/hydrogen mixed gas(hydrogen = 0.69 mol%) so as to keep the whole pressure constant. As a result, 129 g of an olefin polymer having a good particle property was obtained. Polymerization activity per

the solid catalyst component (the component (A) obtained in the above Example 72 (2)) was found to be 6100 g/g-solid catalyst component/hour. Further, the obtained olefin polymer showed, MFR = 3.52, MFRR = 53, and SR = 1.52.

[Example 73]

(1) Polymerization

A 3 l-volume autoclave equipped with a stirrer, which had been dried under reduced pressure and thereafter purged with argon, was made vacuum, hydrogen was fed therein to obtain a partial pressure of 0.015 MPa, 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.75 mol% and 1-butene = 2.76mol%. To the resultant was added 0.9 ml of a heptane solution of triisobutylaluminum adjusted to a concentration of 1 mmol/ml. Successively, 0.75 ml of a toluene solution of racemic ethylenebis(1-indenyl) zirconium diphenoxide adjusted to a concentration of 2 μmol/ml, and then 10.0 mg of the component (A) obtained in the above Example 52 (1) as a solid catalyst component were added thereto. Polymerization was carried out for 60 minutes at 70°C while feeding an ethylene/hydrogen mixed gas (hydrogen = 0.23mol%) so as to keep the whole pressure constant. As a result, 89 g of an olefin polymer having a good particle property was obtained. Polymerization activity per zirconium atom was found to be 5 .9 $\times 10^7$ g/mol-Zr/hour, and polymerization activity per the solid catalyst component was found to be 8900 g/g-solid catalyst component/hour. Further, the obtained olefin polymer showed, SCB = 15.7, MFR = 0.14, MFRR = 118 and SR = 1.05.

[Example 74]

(1) Polymerization

A 3 l-volume autoclave equipped with a stirrer, which had been dried under reduced pressure and thereafter purged with argon, was made vacuum, hydrogen was fed therein to obtain a partial pressure of 0.015 MPa, 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.67 mol% and 1-butene = 3.29 mol%. To the resultant was added 0.9ml of a heptane solution of triisobutylaluminum adjusted to a concentration of 1 mmol/ml. Successively, 0.75 ml of a toluene solution of racemic ethylenebis(1-indenyl) zirconium diphenoxide adjusted to a concentration of 2 μmol/ml, and then 8.3 mg of the component (A) obtained in the above Example 54 (1) as a solid catalyst component were added thereto. Polymerization was carried out for 60 minutes at 70°C while feeding an ethylene/hydrogen mixed gas (hydrogen = 0.25mol%) so as to keep thewhole pressure constant. As a result, 133 g of an olefin polymer having a good particle property was obtained. Polymerization activity per zirconium atom was found to be 8.9 $\times 10^7$ g/mol-Zr/hour, and polymerization activity per the solid catalyst component was found to be 16000 g/g-solid catalyst component/hour. Further, the obtained olefin polymer showed, SCB = 17.7, MFR = 2.50, MFRR = 45.9 and SR = 1.33.

[Example 75]

(3) Pre-polymerization

A 0.4 l-volume autoclave equipped with a stirrer was made vacuum, hydrogen was fed therein under pressure at ambient temperature to obtain a pressure of 0.004 MPa, 90 g of butane was fed therein as a solvent, and then a temperature of the autoclave was raised to 50°C. Further, ethylene was fed therein to obtain a partial pressure of 0.15 MPa, and the system was stabilized. As a result of gas chromatography, a gas composition in the system was found to be hydrogen = 0.15 mol%. Then, 0.2 ml of a hexane solution of triisobutylaluminum adjusted to a concentration of 1 mmol/ml was introduced therein. Successively, 2 ml of a hexane solution of racemic ethylenebis (1-indenyl)zirconium diphenoxide and triisobutylaluminum adjusted to a zirconium concentration and an aluminum concentration to 150 μmol/ml and 1.0 mmol/ml, respectively, was added thereto, and then 2.12 g of the component (A) obtained in the above Example 54 (1) was introduced therein to initiate polymerization. During the polymerization, a mixed gas of ethylene and hydrogen (hydrogen concentration = 0.19 mol%) was continuously supplied while adjusting so as to keep the gas phase pressure in the autoclave to 0.8 MPa. After 3.4 hours, ethylene, butane and hydrogen gas were released, and a solid remaining in the autoclave was dried for 30 minutes at ambient temperature under reduced pressure. As a result, a polyethylene-pre-polymerized catalyst component for addition polymerization was obtained in a yield of 20.8 g per g of the component (A).

(4) Real polymerization

A 3 l-volume autoclave equipped with a stirrer, which had been dried under reduced pressure and thereafter purged with argon, was made vacuum, hydrogen was fed therein to obtain a partial pressure of 0.015 MPa, 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.72 mol% and 1-butene = 3.09 mol%. To the resultant was added 0.9 ml of a heptane solution of triisobutylaluminum adjusted to a concentration of 1 mmol/ml. Successively, 227 mg of the pre-polymerized catalyst component for addition polymerization obtained in the above Example 75(1) was added thereto. Polymerization was continued for 60 minutes at 70°C while feeding an ethylene/hydrogen mixed gas(hydrogen = 0.26 mol%) so as to keep the whole pressure constant. As a result, 100 g of an olefin polymer having a good particle property was obtained. Polymerization activity per the solid catalyst component (the component (A) obtained in the above Example 54 (1)) was found to be 9170 g/g-solid catalyst component/hour. Further, the obtained olefin polymer showed, SCB = 19.3, MFR = 5.37, MFRR = 33.8 and SR = 1.47.

[Example 76]

(1) Production of component (A)

In a 5 l four necked flask purged with nitrogen, 3.0 l of toluene, 43 ml of tetrahydrofuran and 0.522 l (1.05 mol) of a hexane solution of diethylzinc (2.00 mol/l) were introduced and cooled to 5°C. To the mixture, a solution prepared by dissolving 98.1 g (0.53 mol) of pentafluorophenol in 160 ml of toluene was dropped over 60 minutes. After completion of dropping, the mixture was stirred for 1 hour at 5°C, thereafter heated to 40°C, and stirred for 1 hour. After cooling to 5°C using an ice bath, 350 g of the same lot heat-treated silica as that used in Example 40 (2) was introduced thereto, and then 0.1 l of toluene was poured therein so as to wash away the silica adhering to a wall of the flask. After stirring the mixture for 5 minutes, 14.4 g (0.80 mol) of $H_2O$ was added thereto over 1.5 hours. After completion of the dropping, the mixture was stirred at 5°C for 1.5 hours, and at 40°C for 2 hours. Thereafter, the mixture was allowed to stand over night at ambient temperature. Then, the mixture was stirred for 2 hours at 80°C, and thereafter allowed to stand, thereby precipitating a solid component. At the time when an interface between a layer of the precipitated solid component and an upper layer of a slurry portion appeared, the upper slurry portion was removed. The remaining liquid component was removed by filtration. Thereafter, 3.5 l of toluene was added thereto, and the mixture was stirred for 2 hours at 95°C. After that, washing of the solid component was repeated 4 times with each 3.5 l of toluene at 95°C and 2 times with each 3.5 l of hexane at ambient temperature in a manner such that the mixture was allowed to stand, thereby precipitating a solid component, and the upper slurry portion was removed at the time when the interface between a layer of the precipitated solid component and an upper layer of a slurry portion appeared. Thereafter, the remaining liquid component was removed by filtration. Thereafter, the solid component was dried for 4 hours at 120°C under reduced pressure, thereby obtaining 516 g of a component (A). Elementary analysis revealed Zn = 2.0 mmol/g and F = 4.3 mmol/g.

(2) Polymerization

A 3 l-volume autoclave equipped with a stirrer, which had been dried under reduced pressure and thereafter purged with argon, was made vacuum, hydrogen was fed therein to obtain a partial pressure of 0.015 MPa. 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.72 mol% and 1-butene = 3.21mol%. To the resultant was added 0.9ml of a heptane solution of triisobutylaluminum adjusted to a concentration of 1 mmol/ml. Successively, 0.75 ml of a toluene solution of racemic ethylenebis(1-indenyl) zirconium diphenoxide adjusted to a concentration of 2 μmol/ml, and then 6.2 mg of the component (A) obtained in the above Example 76 (1) as a solid catalyst component were added thereto. Polymerization was carried out for 60 minutes at 70°C while feeding an ethylene/hydrogen mixed gas (hydrogen = 0.25 mol%) so as to keep the whole pressure constant. As a result, 81 g of an olefin polymer having a good particle property was obtained. Polymerization activity per zirconium atom was found to be $5.4 \times 10^7$ g/mol-Zr/hour, and polymerization activity per the solid catalyst component was found to be 13100 g/g-solid catalyst component/hour. Further, the obtained

olefin polymer showed, SCB = 16.1, MFR = 0.92, MFRR = 63.0 and SR = 1.23.

[Example 77]

(1) Polymerization

A 3 l-volume autoclave equipped with a stirrer, which had been dried under reduced pressure and thereafter purged with argon, was made vacuum, hydrogen was fed therein to obtain a partial pressure of 0.015MPa, 690 g of butane and 60 g of 1-butene were fed therein, and then a temperature of the autoclave was raised to 70°C. Thereafter, ethylene was fed therein to obtain a partial pressure of 1.6 MPa, and the system was stabilized. As a result of a gas chromatography analysis, a gas composition in the system was found to be hydrogen = 0.73 mol% and 1-butene = 3.38 mol%. To the resultant was added 0.9 ml of a heptane solution of triisobutylaluminum adjusted to a concentration of 1 mmol/ml. Successively, 0.75 ml of a toluene solution of racemic ethylenebis(1-indenyl) zirconium diphenoxide adjusted to a concentration of 2 μmol/ml, and then 8.2 mg of the component (A) obtained in the above Example 55 (1) as a solid catalyst component were added thereto. Polymerization was carried out for 60 minutes at 70°C while feeding an ethylene/hydrogen mixed gas (hydrogen = 0.25mol%) so as to keep the whole pressure constant. As a result, 163 g of an olefin polymer having a good particle property was obtained. Polymerization activity per zirconium atom was found to be $1.1 \times 10^8$ g/mol-Zr/hour, and polymerization activity per the solid catalyst component was found to be 19900 g/g-solid catalyst component/hour. Further, the obtained olefin polymer showed, SCB = 16.2, MFR = 1.37, MFRR = 51.8 and SR = 1.29.

Industrial Applicability

As mentioned above in detail, according to the present invention, there are provided a particle, a carrier and a catalyst component for addition polymerization, which are used for addition polymerization in combination with a transition metal compound capable of forming a single site catalyst, thereby obtaining a film having a good appearance, a process for producing said particle, a pre-polymerized catalyst component for addition polymerization prepared by using said particle, an addition polymerization catalyst prepared by using said particle, and a process for producing an addition polymer comprising using said addition polymerization catalyst. Further, according to the present invention, there are provided a particle, a carrier and a catalyst component for addition polymerization, which are useful for the production of an addition polymerization catalyst, which can afford an addition polymer superior in its shape and particle property when used for polymerization accompanied by the formation of addition polymer particles (for example, slurry polymerization, gas phase polymerization or bulk polymerization), a process for producing said particle, a pre-polymerized catalyst component for addition polymerization prepared by using said particle, an addition polymerization catalyst prepared by using said particle, and a process for producing an addition polymer superior in its particle property, which comprises using said addition polymerization catalyst for polymerization accompanied by the formation of addition polymer particles (for example, slurry polymerization, gas phase polymerization or bulk polymerization). Still further, according to the present invention, there are provided an addition polymerization catalyst having a high activity and a process for producing an addition polymer efficiently. Furthermore, there is provided a process for producing a stereoregular α-olefin polymer much more efficiently.

Incidentally, the single site catalyst mentioned here is conceptually distinguished from a multiple site solid catalyst. The catalyst includes not only a single site catalyst of a restricted sense capable of affording an addition polymer having a narrow molecular weight distribution or an addition polymer having a narrow composition distribution in the case of a copolymer, but also a catalyst capable of affording an addition polymer having a wide molecular weight distribution or an addition polymer having a wide composition distribution in the case of a copolymer, as far as the latter catalyst can be obtained according to a process similar to a process for producing the single site catalyst of the restricted sense.

## Claims

**1.** A modified particle obtained by contacting the following (a), the following (b), the following (c) and a particle (d) with one another,

(a): a compound represented by the following general formula [1],

$$M^1L^1{}_m \qquad [1],$$

(b): a compound represented by the following general formula [2],

$$R^1{}_{t-1}TH \qquad [2],$$

and
(c): a compound represented by the following general formula [3],

$$R^2{}_{t-2}TH_2 \qquad [3],$$

in which general formulas [1] to [3], $M^1$ is a typical metal atom of the Group 1, 2, 12, 14 or 15 of the periodic table, m is a valence of $M^1$, $L^1$ is a hydrogen atom, a halogen atom or a hydrocarbon group, when more than one $L^1$ exists, they may be the same or different from one another, $R^1$ is an electron-withdrawing group or an electron-withdrawing group-containing group, when more than one $R^1$ exists, they may be the same or different from one another, $R^2$ is a hydrocarbon group or a halogenated hydrocarbon group, T in each compound is independently of each other a non-metal atom of the Group 15 or 16 of the periodic table, and t is a valence of T in each compound.

**2.** The modified particle according to Claim 1, wherein the compound of (b) is a compound represented by the following general formula [4],

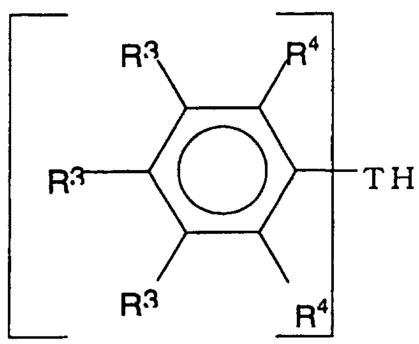

[4]

wherein $R^3$ is an electron-withdrawing group or an electron-withdrawing group-containing group, three $R^3$s may be the same or different form one another, optional two of $R^3$ may be combined with each other at adjacent positions of the benzene ring to form a condensed ring structure, $R^4$ is a hydrogen atom or a hydrocarbon group, and T is as defined above.

**3.** The modified particle according to Claim 1 or 2, wherein the particle (d) is a porous substance.

**4.** The modified particle according to any of Claims 1 to 3, wherein the particle (d) is an inorganic substance heat-treated at 100 to 1500°C for 10 minutes to 50 hours.

**5.** The modified particle according to Claims 4, wherein the particle (d) is silica heat-treated at 200 to 800°C for 1 to 30 hours.

**6.** The modified particle according to any of Claims 1 to 5, which satisfies the following conditions of [5] and [6],

$$N/M > 0.9 \qquad [5]$$

wherein N is a substance amount of a halogen atom contained in the modified particle, and M is a substance amount of a typical metal atom $M^1$ contained in the modified particle, and

$$A/B \geqq 0.1 \quad [6]$$

wherein A is an integral intensity of halo showing a peak at Bragg angle (2θ) 33° to 37° in a diffraction intensity profile obtained by an extended X-ray measurement, and B is an integral intensity of halo showing a peak at Bragg angle (2θ) 18° to 22° in said diffraction intensity profile.

**7.** The modified particle according to any of Claims 1 to 6, which satisfies the following conditions of [5] and [7].

$$N/M > 0.9 \quad [5]$$

wherein N is a substance amount of a halogen atom contained in the modified particle, and M is a substance amount of a typical metal atom $M^1$ contained in the modified particle, and

$$D/C \geqq 0.5 \quad [7]$$

wherein C is a peak intensity of the maximum peak present within a range of 1 to 2 nm in a radial distribution function obtained by measuring the modified particle according to an X-ray absorption fine structure analysis, and D is a peak intensity of the maximum peak present within a range of 2.5 to 3.5 nm in said radial distribution function, provided that the radial distribution function is obtained in a manner such that the modified particle is measured according to an X-ray absorption fine structure analysis (XAFS) to obtain X-ray absorption spectra, from which extended X-ray absorption fine structure (EXAFS) spectra of the typical metal atom $M^1$ in a K absorption edge are found and processed according to a Fourier transform.

**8.** The modified particle according to any of Claims 1 to 7, which is obtained by contacting (a), (b) and (c) with one another to obtain a contact product (e) and contacting the contact product (e) and the particle (d) with each other.

**9.** The modified particle according to any of Claims 1 to 8, wherein the contact product (e) is obtained by contacting (a) and (b) with each other and contacting the resulting contact product and (c) with each other, or by contacting (a) and (c) with each other and contacting the resulting contact product and (b) with each other.

**10.** The modified particle according to any of Claims 1 to 9, which is obtained by contacting a typical metal component and (d) with each other, wherein the typical metal component is selected from the contact product (e) obtained by contacting (a), (b) and (c) with one another, and is insoluble in the following solvent (f),
solvent (f): a mixed solvent or tetrahydrofuran, wherein the mixed solvent is a mixture of tetrahydrofuran and hexane and satisfies the following expression [8],

$$0.5 \geqq VH/(VT + VH) \quad [8]$$

wherein VT is a volume of tetrahydrofuran, and VH is a volume of hexane.

**11.** The modified particle according to any of Claims 1 to 10, wherein respective amounts to be used of the compounds (a), (b) and (c) satisfy the following expressions (1) and (2),

$$|m-y-2z| \leqq 1 \quad (1)$$

$$2 \leqq z/y < 3 \quad (2)$$

wherein m in the above expression (1) is a valence of $M^1$, and y and z in the above expressions (1) and (2) are defined, so that a molar ratio of the amounts of respective compounds is expressed by (a): (b): (c) = 1: y: z.

**12.** A carrier comprising the modified particle according to any of Claims 1 to 11.

**13.** A catalyst component for addition polymerization, which comprises the modified particle according to any of Claims 1 to 11.

**14.** A catalyst for addition polymerization, which is obtained by contacting the modified particle (A) according to any of Claims 1 to 11 and a transition metal compound (B) of the Groups 3 to 11 or a lanthanoide series with each other.

**15.** A catalyst for addition polymerization, which is obtained by contacting the modified particle (A) according to any of Claims 1 to 11, a transition metal compound (B) of the Groups 3 to 11 or a lanthanoide series and an organoaluminum compound (C) with one another.

**16.** The catalyst for addition polymerization according to Claim 14 or 15, wherein the transition metal compound (B) of the Groups 3 to 11 or a lanthanoide series is a transition metal compound having at least one cyclopentadiene type anion skeleton-carrying group.

**17.** The catalyst for addition polymerization according to Claim 16, wherein the transition metal compound (B) of the Groups 3 to 11 or a lanthanoide series is a transition metal compound represented by a general formula [10] or its μ-oxo type transition metal compound dimer,

$$L^2{}_aM^2X_b \qquad [10]$$

wherein $M^2$ is a transition metal atom of the Groups 3 to 11 or lanthanoide series, $L^2$ is a cyclopentadienyl type anion skeleton-carrying group or a hetero atom-containing group, and more than one $L^2$ may be linked directly or through a residual group containing a carbon atom, a silicone atom, a nitrogen atom, an oxygen atom, a sulfur atom or a phosphorus atom, X is a halogen atom, a hydrocarbon group (excluding the cyclopentadienyl type anion skeleton-carrying group) or $-OR^{11}$, in which $R^{11}$ is a hydrocarbon group or a halogenated hydrocarbon group, and more than one $R^{11}$ may be the same or different from each other, a is a number satisfying $0 < a \leqq 8$, and b is a number satisfying $0 < b \leqq 8$.

**18.** The catalyst for addition polymerization according to Claim 17, wherein X is $OR^{11}$.

**19.** The catalyst for addition polymerization according to Claim 14 or 15, wherein the transition metal compound (B) of the Groups 3 to 11 or a lanthanoide series is a transition metal compound (B) having a stereoregular polymerization ability of an α-olefin.

**20.** The catalyst for addition polymerization according to Claim 19, wherein the transition metal compound (B) having a stereoregular polymerization ability of an α-olefin is a transition metal compound represented by the following general formula [13] or [14],

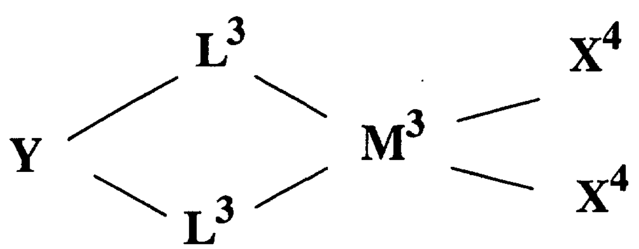

[13]

wherein $M^3$ is a transition metal atom of the Groups 3 to 11 or lanthanoide series, $L^3$ is an $\eta^5$-indenyl group or a substituted $\eta^5$-indenyl group, and both of $L^3$s may be the same or different from each other, Y is a bridging group for linking both of $L^3$s, and both of $X^4$s are independently of each other a hydrogen atom, a halogen atom, an alkyl group, an aralkyl group, an aryl group, a substituted silyl group, an alkoxy group, an aralkyloxy group, an aryloxy group or a heterocyclic group,

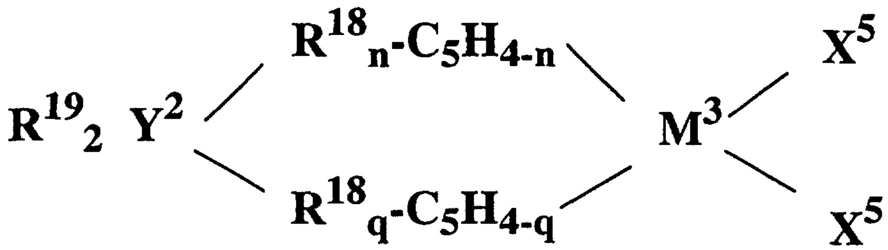

[14]

wherein $M^3$ is a transition metal atom of the Groups 3 toll or lanthanoide series, $Y^2$ is a silicon atom, a germanium atom or a tin atom, the ($R^{18}{}_n$-$C_5H_{4-n}$) and ($R^{18}{}_q$-$C_5H_{4-q}$) are each a substituted $\eta^5$- cyclopentadienyl group, n and q are each an integer of 1 to 3, and both of $R^{18}$s may be the same or different from each other and are independently of each other a halogen atom, an alkyl group, an aralkyl group, an aryl group, a substituted silyl group, an alkoxy group, an aralkyloxy group, an aryloxy group or a heterocyclic group, the position and/or kind of each $R^{18}$ in each substituted $\eta^5$-cyclopentadienyl group are (is) selected, so that a symmetry plane containing $M^3$ does not exist, $R^{19}$ and $X^5$ are independently of each other a hydrogen atom, a halogen atom, an alkyl group, an aralkyl group, an aryl group, a substituted silyl group, an alkoxy group, an aralkyloxy group, an aryloxy group or a heterocyclic group, and $R^{19}$ and $X^5$ may be all the same or different from each other.

**21.** A pre-polymerized catalyst component for addition polymerization, which is obtained by pre-polymerizing an olefin in the presence of a catalyst for addition polymerization, wherein the catalyst is obtained-by contacting the modified particle (A) according to any of Claims 1 to 11, a transition metal compound (B) of the Groups 3 to 11 or a lanthanoide series and an organoaluminum compound (C) with one another.

**22.** The pre-polymerized catalyst component for addition polymerization according to Claim 21, wherein the transitionmetal compound (B) of the Groups 3 to 11 or a lanthanoide series is a transition metal compound having at least one cyclopentadiene type anion skeleton-carrying group.

**23.** The pre-polymerized catalyst component for addition polymerization according to Claim 21, wherein the transitionmetal compound (B) of the Groups 3 to 11 or alanthanoide series is a transition metal compound represented by a general formula [10] or its μ-oxo type transition metal compound dimer,

$$L^2{}_aM^2X_b \qquad [10]$$

wherein $M^2$ is a transition metal atom of the Groups 3 to 11 or lanthanide series, $L^2$ is a cyclopentadienyl type anion skeleton-carrying group or a hetero atom-containing group, and more than one $L^2$ may be linked directly or through a residual group containing a carbon atom, a silicone atom, a nitrogen atom, an oxygen atom, a sulfur atom or a phosphorus atom, X is a halogen atom, a hydrocarbon group (excluding the cyclopentadienyl type anion skeleton-carrying group) or $-OR^{11}$, in which $R^{11}$ is a hydrocarbon group or a halogenated hydrocarbon group, and more than one $R^{11}$ may be the same or different from each other, a is a number satisfying $0 < a \leqq 8$, and b is a number satisfying $0 < b \leqq 8$.

**24.** The pre-polymerized catalyst component for addition polymerization according to Claim 22, wherein X is $OR^{11}$.

**25.** The pre-polymerized catalyst component for addition polymerization according to Claim 21, wherein the transition metal compound (B) of the Groups 3 to 11 or a lanthanoide series is a transition metal compound (B) having a stereoregular polymerization ability of an α-olefin.

**26.** The pre-polymerized catalyst component for addition polymerization according to Claim 25, wherein the transition metal compound (B) having a stereoregular polymerization ability of an α-olefin is a transition metal compound represented by the following general formula [13] or [14],

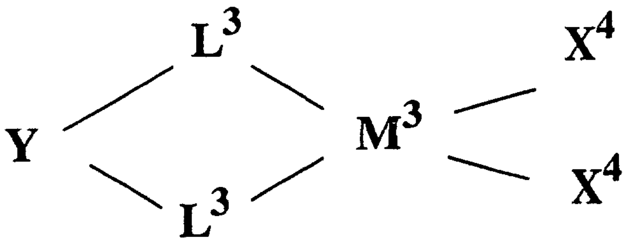

[13]

wherein $M^3$ is a transition metal atom of the Groups 3 to 11 or lanthanide series, $L^3$ is an $\eta^5$-indenyl group or a substituted $\eta^5$-indenyl group, and both of $L^3$s may be the same or different from each other, Y is a bridging group for linking both of $L^3$s, and both of $X^4$s are independently of each other a hydrogen atom, a halogen atom, an alkyl group, an aralkyl group, an aryl group, a substituted silyl group, an alkoxy group, an aralkyloxy group, an aryloxy group or a heterocyclic group,

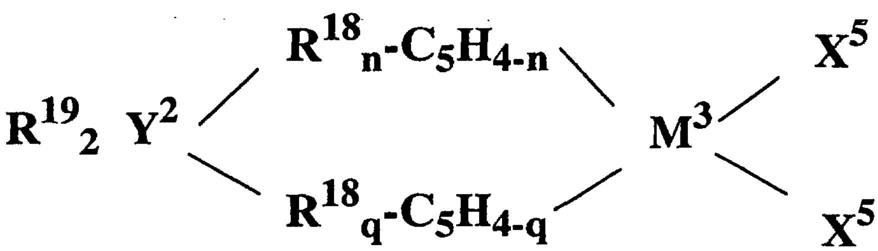

[14]

wherein $M^3$ is a transition metal atom of the Groups 3 toll or lanthanide series, $Y^2$ is a silicon atom, a germanium atom or a tin atom, the ($R^{18}_n$-$C_5H_{4-n}$) and ($R^{18}_q$-$C_5H_{4-q}$) are each a substituted $\eta^5$- cyclopentadienyl group, n and q are each an integer of 1 to 3, and both of $R^{18}$s may be the same or different from each other and are independently of each other a halogen atom, an alkyl group, an aralkyl group, an aryl group, a substituted silyl group, an alkoxy group, an aralkyloxy group, an aryloxy group or a heterocyclic group, the position and/or kind of each $R^{18}$ in each substituted $\eta^5$-cyclopentadienyl group are (is) selected, so that a symmetry plane containing $M^3$ does not exist, $R^{19}$ and $X^5$ are independently of each other a hydrogen atom, a halogen atom, an alkyl group, an aralkyl group, an aryl group, a substituted silyl group, an alkoxy group, an aralkyloxy group, an aryloxy group or a heterocyclic group, and $R^{19}$ and $X^5$ may be all the same or different from each other.

**27.** A catalyst for addition polymerization, which is obtained by contacting the pre-polymerized catalyst component for addition polymerization according to any of Claims 21 to 26 and an organoaluminum compound (C) with each other.

**28.** A pre-polymerized catalyst for addition polymerization, which is obtained by pre-polymerizing an olefin in the presence of a catalyst for addition polymerization, wherein the catalyst is obtained by contacting the modified particle (A) according to any of Claims 1 to 11 and a transition metal compound (B) of the Groups 3 to 11 or a lanthanoide series with each other.

**29.** A pre-polymerized catalyst for addition polymerization, which is obtained by pre-polymerizing an olefin in the presence of a catalyst for addition polymerization, wherein the catalyst is obtained by contacting the modified particle (A) according to any of Claims 1 to 11, a transition metal compound (B) of the Groups 3 to 11 or a lanthanoide series and an organoaluminum compound (C) with one another.

**30.** A process for producing an addition polymer, which comprises polymerizing an addition polymerizable monomer in the presence of the catalyst for addition polymerization according to any of Claims 14 to 17 and 27 to 29.

**31.** The process for producing an addition polymer according to Claim 30, wherein the addition polymerizable monomer is an $\alpha$-olefin polymer.

**32.** The process for producing an addition polymer according to Claim 31, wherein the addition polymerizable monomer is a mixture of ethylene and an α-olefin.

**33.** A process for producing a stereoregular α-olefin polymer, which comprises polymerizing an α-olefin having 3 to 20 carbon atoms in the presence of the catalyst for addition polymerization according to Claim 19 or 20.

**34.** A process for producing a stereoregular α-olefin polymer, which comprises polymerizing an α-olefin having 3 to 20 carbon atoms in the presence of the catalyst for addition polymerization, wherein the catalyst is obtained by contacting the pre-polymerized catalyst component for addition polymerization according to Claim 25 or 26 and an organoaluminum compound (C) with each other.

**35.** The process for producing a stereoregular α-olefin polymer according to Claim 33 or 34, wherein the α-olefin is propylene.

## INTERNATIONAL SEARCH REPORT

International application No. PCT/JP01/11309

A. CLASSIFICATION OF SUBJECT MATTER
Int.Cl$^7$ C08F 4/02, C08F 4/60, C08F 10/00

According to International Patent Classification (IPC) or to both national classification and IPC

B. FIELDS SEARCHED

Minimum documentation searched (classification system followed by classification symbols)
Int.Cl$^7$ C08F 4/00-4/82

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| Y | JP 11-269213 A (Sumitomo Chemical Company, Limited), 05 October, 1999 (05.10.1999), entire description & US 6284699 B1 | 1-35 |
| PY | JP 2001-181320 A (Sumitomo Chemical Company, Limited), 03 July, 2001 (03.07.2001), entire description (Family: none) | 1-35 |
| PY | EP 1114832 A1 (Sumitomo Chemical Company, Limited), 11 July, 2001 (11.07.2001), entire description & US 20010007007 A1 & SG 83223 A1 & JP 2001-181318 A & JP 2001-181319 A & JP 2001-181329 A & JP 2001-247613 A & KR 2001057589 A & CN 1302820 A | 1-35 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 February, 2002 (04.02.02) | 12 February, 2002 (12.02.02) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP01/11309

C (Continuation). DOCUMENTS CONSIDERED TO BE RELEVANT

| Category* | Citation of document, with indication, where appropriate, of the relevant passages | Relevant to claim No. |
|---|---|---|
| PY | EP 1113026 A2 (Sumitomo Chemical Company, Limited), 04 July, 2001 (04.07.2001), entire description & JP 2001-181323 A & JP 2001-181324 A & JP 2001-181327 A & JP 2001-247612 A & JP 2001-261729 A & US 20010020075 A1 & CN 1306011 A | 1-35 |
| Y | EP 949273 A1 (Sumitomo Chemical Company, Limited), 13 October, 1999 (13.10.1999), entire description & WO 99/10389 A1 & JP 11-193306 A & CN 1242779 A & KR 2000068804 A | 1-35 |
| A | EP 324587 A2 (Mobil Oil Corporation), 19 July, 1989 (19.07.1989), Claims & JP 1-308407 A & US 4849389 A | 1-35 |
| A | EP 171200 A2 (Toa Nenryo Kogyo Kabushiki Kaisha), 12 February, 1986 (12.02.1986), entire description & JP 61-21109 A & US 4727049 A | 1-35 |

Form PCT/ISA/210 (continuation of second sheet) (July 1992)